(19) Europäisches Patentamt
European Patent Office
Office européen des brevets

(11) EP 1 434 171 A2

(12) EUROPEAN PATENT APPLICATION

(43) Date of publication:
30.06.2004 Bulletin 2004/27

(51) Int Cl.7: G06T 15/00

(21) Application number: 04007134.2

(22) Date of filing: 02.08.1996

(84) Designated Contracting States:
DE FR GB IE

(30) Priority: 04.08.1995 US 511553
17.11.1995 US 560114
27.06.1996 US 671412
27.06.1996 US 671506
27.06.1996 US 672347
27.06.1996 US 672425
27.06.1996 US 672694

(62) Document number(s) of the earlier application(s) in accordance with Art. 76 EPC:
96928062.7 / 0 850 462

(71) Applicant: MICROSOFT CORPORATION
Redmond, WA 98052-6399 (US)

(72) Inventors:
- Myhrvold, Nathan, P.
Bellevue WA 98005 (US)
- Kajiya, James, T.
Duvall WS 98019 (US)
- Torborg, John, G. jr.
Redmond WA 98052 (US)
- Kenworth, Mark, L.
Duvall WA 98019-7806 (US)
- Toelle, Michael, Allen
Bellevue WA 98008 (US)
- Griffin, Kent, E.
Bellevue WA 98008 (US)
- Lengyel, Jerome, Edward
Seattle WA 98108 (US)
- Gabriel, Steven, A.
Redmond WA 98052-3256 (US)
- Veres, James, E.
Woodinville WA 98072 (US)
- Chauvin, Joseph, W.
Issaquah WA 98029 (US)
- Good, Howard
Seattle WA 98105 (US)
- Powell, William, Chambers, III
Seattle WA 98122 (US)

(74) Representative: Meddle, Alan Leonard
FORRESTER & BOEHMERT,
Pettenkoferstrasse 20-22
80336 München (DE)

Remarks:
This application was filed on 24 - 03 - 2004 as a divisional application to the application mentioned under INID code 62.

# (54) Method and system for texture mapping a source image to a destination image

(57) A method for texture mapping a source image to a destination image, in an image processing system where a mapping of a point from the destination image to the source image is described by an inverse transform, comprises: mapping a filter footprint into the source image using the inverse transform to compute a mapped filter footprint; determining a line of anisotropy from the mapped filter footprint; repetitively applying a filter along the line of anisotropy to sample texel values from the source image; and filtering outputs of the repetitive filtering step to compute a pixel value for the destination image.

FIG. 37

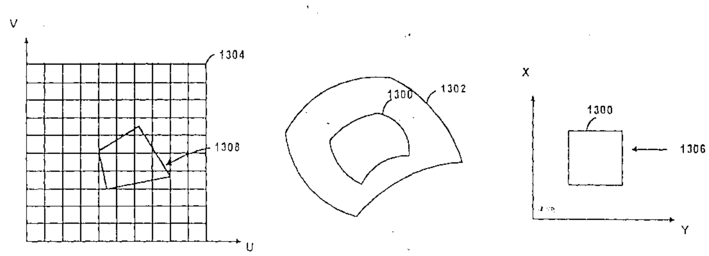




Printed by Jouve, 75001 PARIS (FR)

## Description

## TECHNICAL FIELD

The invention relates generally to graphics rendering, and more specifically relates to improved methods and systems for rendering graphical objects.

## BACKGROUND

With the widespread use of computers in all aspects of modern life, there is an increasing demand to improve the human-machine interface through the use of visual information. Advances in graphical software and hardware have already improved the human-machine interface drastically. Interactive graphics such as windowing environments for desk-top computers, for example, have improved the ease of use and interactivity of computers drastically and are common place today. As the price-performance ratio of hardware drops, the use of computer generated graphics and animation will become even more pervasive. Unfortunately, the cost of producing truly interactive and realistic effects has limited its application. There is a need, therefore, for new graphics processing techniques and architectures that provide more interactive and realistic effects at a lower cost.

Although there are numerous ways to categorize graphics processing, one common approach is to describe an image in terms of the dimensions of the objects that it seeks to represent. For example, a graphics system may represent objects in two dimensions (e.g., having x and y coordinates); in which case the graphics are said to be "two-dimensional", and three dimensions (e.g., having x, y, and z coordinates), in which case the graphics are said to be "three-dimensional" ("3-D").

Since display devices such as cathode ray tubes (CRTs) are two-dimensional ("2-D"), the images displayed by computer graphic systems are generally 2-D. As discussed in greater detail below, however, if the computer maintains a graphical model representing the imaged object in three-dimensional space, the computer can alter the displayed image to illustrate a different perspective of the object in 3-D space. In contrast, although a 2-D graphic image can be transformed prior to display (e.g., scaled, translated, or rotated), the computer can not readily depict the object's appearance from a different perspective in 3-D space.

The increasing ability of modem computers to efficiently handle 2-D and, particularly, 3-D graphics has resulted in a growing variety of applications for computers, as well as fundamental changes in the interface (UI) between computers and their users. The availability of 3-D graphics is becoming increasingly important to the growth of entertainment related applications including production quality film animation tools, as well as lower resolution games and multimedia products for the home. A few of the many other areas touched by 3-D graphics include education, video conferencing, video editing, interactive user interfaces, computer-aided design and computer-aided manufacturing (CAD/CAM), scientific and medical imaging, business applications, and electronic publishing.

A graphics processing system may be thought of as including an application model, application program, graphics sub-system, as well as the conventional hardware and software components of a computer and its peripherals.

The application model represents the data or objects to be displayed, assuming of course that the image processing is based upon a model. The model includes information concerning primitives such as points, lines, and polygons that define the objects' shapes, as well as the attributes of the objects (e.g., color). The application program controls inputs to, and outputs from, the application model-effectively acting as a translator between the application model and graphics sub-system. Finally, the graphics sub-system is responsible for passing user inputs to the application model and is responsible for producing the image from the detailed descriptions stored by the application model.

The typical graphics processing system includes a physical output device which is responsible for the output or display of the images. Although other forms of display devices have been developed, the predominant technology today is referred to as raster graphics. A raster display device includes an array of individual points or picture elements (i.e., pixels), arranged in rows and columns, to produce the image. In a CRT, these pixels correspond to a phosphor array provided on the glass faceplate of the CRT. The emission of light from each phosphor in the array is independently controlled by an electron beam that "scans" the array sequentially, one row at a time, in response to stored information representative of each pixel in the image. Interleaved scanning of alternate rows of the array is also a common technique in, for example, the television environment. The array of pixel values that map to the screen is often referred to as a bitmap or pixmap.

One problem associated with raster graphics devices is the memory required to store the bitmap for even a single image. For example, the system may require 3.75 megabytes (Mb) of random access memory to support a display resolution of 1280 x 1024 (i.e., number of pixel columns and rows) and 24 bits of color information per pixel. This information, which again represents the image of a single screen, is stored in a portion of the computer's display memory known as a frame buffer.

Another problem with conventional raster graphics devices such as CRTs is the relatively quick decay of light emitted by the device. As a result, the display must typically be "refreshed" (i.e., the raster rescanned) at a rate approaching 60 Hz or more to avoid "flickering" of the image. This places a rigorous demand on the image generation system to supply image data at a fixed rate. Some systems address this problem by employing two frame buffers, with one of the buffers being updated with pixmap information corresponding to subsequent image frame, while the other buffer is being used to refresh the screen with the pixmap for the current image frame.

The demands placed upon the system are further exacerbated by the complexity of the information that often must be processed to render an image from the object stored by the application model. For example, the modeling of a three-dimensional surface is, in itself, a complex task. Surface modeling is performed by the application model and may involve the use of polygon meshes, parametric surfaces, or quadric surfaces. While a curved surface can be represented by a mesh of planar polygons, the "smoothness" of its appearance in the rendered image will depend both upon the resolution of the display and the number of individual polygons that are used to model the surface. The computations associated with high resolution modeling of complex surfaces based upon polygon meshes can be extremely resource intensive.

As intimated above, there is a demand to produce more realistic and interactive images. The term, "real-time," is commonly used to describe interactive and realistic image processing systems. In a "real-time" system, the user should perceive a continuous motion of objects in a scene. In a video game having real-time capabilities, the active characters and view point should respond with minimal delay to a user's inputs, and should move smoothly.

To produce such real-time effects. an image rendering system has to generate a new image at a sufficiently high rate such that the user perceives continuous motion of objects in a scene. The rate at which a new image is computed for display is referred to as the "computational" rate or the "computational frame" rate. The computational rate needed to achieve realistic effects can vary depending on how quickly objects move about the scene and how rapidly the viewing perspective changes. For a typical application, a real-time graphics system recomputes a new image at least twelve times a second to generate a series of images that simulate continuous motion. For high-quality animation applications, however, the computational rate must be significantly higher.

Another critical issue for real-time systems is transport delay. Transport delay is the time required to compute and display an image in response to input from the user, i.e. motion of a joystick to move a character in a scene. To the extent transport delay time is noticeable to a user, "real-time" interactivity is impaired. Ideally, the user should not perceive any transport delay. However, in practice there is always some delay attributed to rendering objects in a scene in response to new inputs and generating a display image. Improvements in real-time interactivity are highly desirable without discarding data, which can interfere with image quality.

As introduced above, conventional graphics systems typically include a frame buffer. To generate an image, the graphic system renders all of the objects in a scene and stores the resulting image in this frame buffer. The system then transfers the rendered image data to a display. In a conventional graphics architecture, the entire frame buffer is erased and the scene is re-rendered to create a next frame's image. In this type of system, every object must be redrawn for each frame because the frame buffer is cleared between frames. Every object therefore is updated at the same rate, regardless of its actual motion in the scene or its importance to the particular application.

This conventional architecture presents several hurdles to producing highly realistic and interactive graphics. First, every object in a scene for a particular frame is rendered with the same priority at the same update rate. As such, objects in the background that have little detail and are not moving are re-rendered at the same rate as objects in the foreground that are moving more rapidly and have more surface detail. As a result, processing and memory resources are consumed in re-rendering background objects even though these background objects do not change significantly from frame to frame.

Another drawback in this conventional architecture is that every object in the scene is rendered at the same resolution. In effect, the rendering resources consumed in this type of approach are related to the size of the screen area that the object occupies rather than the importance of the object to the overall scene. An example will help illustrate this problem. In a typical video game. there are active characters in the foreground that can change every frame, and a background that rarely changes from frame to frame. The cost in terms of memory usage for generating the background is much greater than generating the active characters because the background takes up more area on the screen. Image data must be stored for each pixel location that the background objects cover. For the smaller, active characters however, pixel data is generated and saved for only the pixels covered by the smaller characters. As a result, the background occupies more memory even though it has lesser importance in the scene. Moreover, in a conventional architecture the entire background has to be re-rendered for every frame, consuming valuable processing resources.

One principal strength of the frame buffer approach is that it can be used to build an arbitrary image on an output device with an arbitrary number of primitive objects, subject only to the limit of spatial and intensity resolution of the output device. However, there are several weakness for a graphics system using a frame buffer.

A frame buffer uses a large amount (e.g. 64-128 Mb) of expensive memory. Normal random access memory (RAM) is not adequate for frame buffers because of its slow access speeds. For example, clearing the million pixels on a 1024 x 1024 screen takes 1/4 of a second assuming each memory cycle requires 250 nanoseconds. Therefore, higher speed, and more expensive video RAM (VRAM), or dynamic RAM (DRAM) is typically used for frame buffers. High-performance systems often contain two expensive frame buffers: one frame buffer is used to display the current frame, while the other is used to render the next frame. This large amount of specialized memory dramatically increases the cost of the graphics system.

Memory bandwidth for frame buffers is also a problem. To support processing a graphics image with texturing, color, and depth information stored for each pixel requires a bandwidth of about 1.7 Gigabytes-per-second for processing an image at 30 Hz. Since a typical DRAM is only has a bandwidth of 50 Mb-per-second, a frame buffer must be built from a large number of DRAMs which are processed with parallel processing techniques to accomplish the desired bandwidth.

To achieve real-time, interactive effects, high-end graphics systems use parallel rendering engines. Three basic parallel strategies have been developed to handle the problems with large frame buffer:

> (1) pipelining the rendering process over multiple processors; (2) dividing frame buffer memory into groups of memory chips each with its own processor; and (3) combining processing circuitry on the frame buffer memory chips with dense memory circuits. These techniques have improved the processing of graphics systems using large frame buffers, but have also dramatically increased the cost of these systems.

Even with expensive parallel processing techniques, it is very difficult to support sophisticated anti-aliasing technique. Anti-aliasing refers to processes for reducing artifacts in a rendered image caused by representing continuous surfaces with discrete pixels. In typical frame buffer architectures, pixel values for an entire frame are computed in arbitrary order. Therefore, to perform sophisticated anti-aliasing, pixel data must be generated for the entire frame before anti-aliasing can begin. In a real-time system, there is not enough time to perform anti-aliasing on the pixel data without incurring additional transport delay. Moreover, anti-aliasing requires additional memory to store pixel fragments. Since a frame buffer already includes a large amount of expensive memory, the additional specialized memory needed to support anti-aliasing makes the frame buffer system even more expensive.

Image compression techniques also cannot be easily used on a graphic system using a frame buffer during image processing. The parallel processing techniques used to accelerate processing in a graphics system with a frame buffer cause hurdles for incorporating compression techniques. During parallel processing, any portion of the frame buffer can be accessed at random at any instance of time. Most image compression techniques require that image data not change during the compression processing so the image data can be decompressed at a later time.

In frame buffer architectures the expensive memory and parallel processing hardware is always under-utilized because only a small fraction of the frame buffer memory or parallel processing units are actively being used at any point in time. Thus, even though a frame buffer architecture includes a large amount of expensive memory and processing hardware, this hardware is not fully utilized.

## SUMMARY OF THE INVENTION

The invention provides a method and system for rendering graphical data such as geometric primitives to generate display images. The invention is particularly well suited for rendering 3D graphics in real-time, but can be applied to other graphics and image processing applications as well.

In one implementation of the graphics rendering system, the system separately renders graphical objects to image layers called gsprites and then composites the gsprites into a display image. More specifically, the system allocates gsprites to objects, and then renders each object or objects to a corresponding gsprite. To render a gsprite, the system serially renders image regions or chunks of the gsprite. The system divides gsprites into chunks, sorts the object geometry among these chunks, and then renders the chunks in a serial fashion. The system composites gsprites into a display image.

One aspect of the invention is the way in which gsprites can be transformed to simulate motion of a 3D object and reduce rendering overhead. In one implementation, the system renders objects in a scene to separate gsprites. After rendering an object to a gsprite, the system can re-use the gsprite for subsequent frames rather than re-rendering the object. To accomplish this, the system computes an affine transform that simulates the motion of the 3D object that the gsprite represents. The system performs an affine transformation on the gsprite and composites this gsprite with other gsprites to generate a display image.

Another aspect of the invention is the manner in which the system processes pixel fragments for chunks of image data. The system rasterizes primitives for a chunk to generate pixel data for pixel locations that are either fully covered or partially covered by a primitive. In cases where a primitive partially covers a pixel location or has translucency, the system generates a pixel fragment and stores the fragment in a fragment buffer. In cases where a primitive fully covers a pixel location and is opaque, the system stores its color data in a pixel buffer. The system rasterizes primitives for a chunk, and then resolves the pixel data for the chunk in a post processing step. The architecture for rendering chunks enables sophisticated anti-aliasing to be performed on the pixel data while still generating display images at real time rates.

Another aspect of the invention is the manner in which the rasterizer in the system can save fragment memory by attempting to merge a generated pixel fragment with a fragment stored in the fragment buffer. If a stored fragment is within a predefined depth and color tolerance of the generated fragment, a pixel engine in the system merges the fragments. The pixel engine merges the fragments in part by combining the coverage data (e.g., a coverage mask) of the generated and stored fragments. If the merged pixel fragment is fully covered and opaque, the pixel engine can move it to a corresponding pixel buffer entry and free the fragment record from the fragment memory.

Yet another aspect of the invention is the manner in which the fragment resolve subsystem resolves lists of fragment records. In one approach, a fragment resolve subsystem has separate color and alpha accumulators for each subpixel location of a pixel, and it accumulates the color at each sub-pixel location separately. The subsystem includes logic to combine the accumulated color from each sub-pixel location to compute a final, output pixel. In another approach, the fragment resolve subsystem keeps track of the sub-pixel regions that have a common accumulated alpha value as each fragment record in a depth sorted list of fragments is resolved. This fragment resolve subsystem computes the accumulated color for the regions within a pixel (pixel regions) that have a common accumulated alpha. After resolving each fragment in a list, the output of both approaches is an output pixel having a single set of color values (RGB) and possibly an alpha value. For each pixel location, the fragment resolve subsystem combines the color values in the pixel buffer with any fragment records in an associated fragment list to compute a resolved pixel value including, for example, RGB color values, and an alpha value.

Yet another aspect of the invention is a method for performing anisotropic filtering. In texture mapping generally, a graphics rendering system maps a texture map to the surface of a geometric primitive. In this particular method, the system begins by determining how a point at a pixel location in view space maps into the texture map. Conceptually, the system determines how a filter footprint maps into the texture map. For a perspective mapping, an isotropic filter footprint mapped into the texture map has a distorted shape in the direction of anisotropy. Therefore, filtering the texture with an isotropic filter is not sufficient to achieve high quality results. In one specific implementation, the system determines how a filter footprint maps into the texture by computing the inverse Jacobian matrix for a pixel location in view space coordinates (e.g., screen coordinates) mapped to texture coordinates.

The system then determines a line of anisotropy from the mapped filter footprint, and specifically in one this implementation, determines the line of anistropy from the inverse Jacobian matrix. The line of anisotropy conceptually is a line that passes through the coordinates of the point mapped from view space to texture space and is oriented in the direction of maximum elongation of the mapped filter footprint. The system repetitively applies a filter along the line of anisotropy to sample values from the texture map. The outputs of this repetitive filtering step are filtered and accumulated to compute final texture values. There are a number of variations to this approach. In one specific implementation, the system performs tri-linear interpolation along the line of anisotropy. The output of the tri-linear filter are then combined to compute a single set of color values for a pixel location. In this implementation, a texture filter engine applies a one dimensional filter, in the shape of triangle or trapezoid for example, to the outputs of the tri-linear interpolation along the line of anisotropy. However, a number of variations to the filters applied along the line of anisotropy are possible using this method.

Another aspect of the invention is the manner in which the system can render smaller portions of an image in the event that it overflows the fragment memory. In one implementation, the system tracks the use of fragment memory and can sub-divide an image region into smaller portions, if the number of fragment entries used reaches a predetermined value. As the system generates pixel fragments, it keeps track of the number of entries in the fragment buffer. If the number of entries attain a predetermined value, the image region is sub-divided into smaller regions and renders the smaller regions one at a time so that there is sufficient fragment memory to render each sub-region. The system can sub-divide a sub-region into even smaller image regions if the number of fragment entries reaches the predetermined value. As a result, the system can sub-divide the image region being rendered to ensure that the fragment memory will not be exceeded. This enables the system to employ a smaller fragment memory without throwing away fragments in cases where the fragment memory would otherwise overflow.

Another aspect of the invention is manner in which the system performs texture fetch operations in environments with high latency. For example for texture mapping, shadowing, or multi-pass rendering operations, there is often high latency in fetching texture data to perform the operation. This latency can arise because of the delay incurred in reading data from memory, the delay incurred in decompressing texture data, or both.

In one implementation, geometric primitives in an input data stream are stored in a primitive queue long enough to absorb the latency of fetching a block of texture data from memory. A pre-rasterizer converts the geometric primitives in the primitive queue into texture block references, which are stored in a second queue. The texture blocks referenced in this second queue are fetched from memory and placed in a texture cache. One by one, a post-rasterizer rasterizers each primitive in the queue. As each primitive is rasterized, texture data is retrieved from the texture cache as necessary to compute the output pixels for the current primitive. Primitives are removed from the queue after they are rasterized.

In second implementation, primitives are rasterized and the resulting pixel data is placed in a queue long enough to absorb the latency of a texture block fetch. In one specific implementation, the entries in the queue include a pixel address, color data for that address, and a texture request comprised of the center point of a texture sample in the coordinates of a texture map. The texture requests are converted into texture block addresses, and the texture blocks are fetched and placed in a texture cache. The entries in the queue are retrieved from the queue, and associated texture data now in the texture cache is used to compute output pixels. Both approaches generate two sets of texture requests, with each set delayed from the other. The first set is used to actually fetch and possibly decompress the texture data and the second set is used to retrieve texture data from a texture cache.

Further features and advantages of the invention will become apparent with reference to the following detailed description and accompanying drawings.

## BRIEF DESCRIPTION OF THE DRAWINGS

FIG. 1 is a block diagram of an image processing system.

FIG. 2 is a block diagram of the system environment for an embodiment of the invention.

FIG. 3 is a block diagram of system architecture for an embodiment.

FIG. 4A is a block diagram of image processing hardware for an embodiment.

FIG. 4B is a block diagram illustrating portions of an image processor for rendering geometric primitives in an embodiment.

FIGS. 5A and 5B are flow diagrams illustrating an overview of the rendering process in an embodiment.

FIG. 6 is a flow diagram illustrating an overview of the display generation process of an embodiment.

FIG. 7 is a diagram illustrating one aspect of display generation in terms of frame periods in an embodiment.

FIG. 8 is a block diagram of a Digital Signal Processor (DSP) in an embodiment.

FIGS. 9A-C are block diagrams illustrating alternative embodiments of a tiler.

FIG. 10 is a block diagram illustrating a system for accessing texture data from memory.

FIG. 11 is a block diagram illustrating a system for accessing texture data from memory.

FIG. 12A-B are block diagrams of alternative implementations of a gsprite engine.

FIG. 13 is a block diagram of a compositing buffer in an embodiment.

FIG. 14 is a block diagram of a Digital to Analog Converter (DAC) in an embodiment.

FIGS. 15A-C are diagrams of an example illustrating one aspect of chunking.

FIGS. 16A-B are diagrams illustrating aspects of chunking in an embodiment.

FIGS. 17A-B are flow diagrams illustrating aspects of chunking in an embodiment.

FIGS. 18A-B are diagrams illustrating aspects of chunking in an embodiment.

FIGS. 19A-B are diagrams illustrating aspects chunking in an embodiment.

FIG. 20 is a block diagram illustrating image compression in an embodiment.

FIGS. 21A-B are flow diagrams illustrating the processing of gsprites in an embodiment.

FIG. 22 is a flow diagram illustrating one aspect of a method for performing gsprite transforms in an embodiment.

FIG. 23 is a diagram illustrating how gsprite transforms can reduce transport delay in an embodiment.

FIG. 24 is a block diagram of gsprite data structures in an embodiment.

FIG. 25 is a diagram illustrating an example of a gsprite mapped to output device coordinates in an embodiment.

FIG. 26 is a flow diagram illustrating one aspect of display generation in an embodiment.

FIG. 27 is a flow diagram illustrating display generation of FIG. 26 in terms of band periods.

FIGS. 28A-F are a flow diagrams illustrating aspects of pixel and fragment generation in three alternative embodiments.

FIG. 29 is a flow diagram of a method for merging pixel fragments in an embodiment of the invention.

FIG. 30 is a block diagram illustrating an implementation of fragment merge circuitry in an embodiment of the invention.

FIG. 31 is a block diagram illustrating an implementation of a merge test module in the fragment merge circuitry shown in Fig. 30.

FIG. 32 is a diagram illustrating a portion of the pixel and fragment buffers.

FIG. 33 is a diagram depicting this hierarchical decomposition.

FIG. 34A-B is flow diagram illustrating a method for buffer decomposition in the tiler.

FIG. 35 is a block diagram illustrating one implementation of a fragment resolution subsystem.

FIG. 36 is a block diagram illustrating another implementation of a fragment resolution subsystem.

FIG. 37 is a diagram illustrating texture mapping.
FIGS. 38A-D are diagrams illustrating a method for anisotropic filtering in an embodiment.
FIG. 39 is a block diagram illustrating an implementation of a texture and shadow filter.
FIG. 40 is a block diagram illustrating an implementation of the key generator in Fig. 39.
FIG. 41 is a block diagram illustrating an implementation of the color interpolators in Fig. 39.
FIG. 42 is a block diagram illustrating an implementation of the shadow filter accumulator in Fig. 39.
FIG. 43 is a block diagram illustrating an implementation of the accumulator and post processor in Fig. 39.

## DETAILED DESCRIPTION

### System Overview

In the following detailed description, we describe several embodiments with reference to an image processing system.

The image processing system supports real time image rendering and generation for both graphics and video processing. Due to the novel architecture and image processing techniques employed in the system, it can produce sophisticated real time 3-D animation at a significant cost savings over present graphics systems. In addition to graphics processing, the system supports video processing such as video editing applications, and can also combine video and graphics. For instance, the system can be used to apply video to graphical objects, or conversely, can be used to add graphical objects to video data.

The system supports a wide range of interactive applications. Its ability to support advanced real time animation makes it well-suited for games, educational applications. and a host of interactive applications. The system supports sophisticated user interfaces including 3-D graphics or combined graphics and video. Improving upon the limited graphics capabilities of today's windowing environments for personal computers, the system can support improved 3-D graphical user interfaces for applications ranging from office information processing on desktop computers to interactive television applications in a set-top box. The system makes very efficient use of memory and processor time and therefore can provide impressive image processing and display without unduly hindering performance of the application or responsiveness of the user interface to user actions.

FIG. 1 is a block diagram of the image processing system 100. The image processing system comprises an image data source and store 102, an image preprocessor 104, an image processor 106, and a display device 108, if immediate display of rendered images is desired. The elements in the system communicate through a system interface 110. The image data source and store 102 supplies image data to the system, and stores image data and commands. The image preprocessor 104 is responsible for manipulating the image data to prepare it for rendering. Examples of preprocessing functions include: defining objects in terms of geometric models, defining lighting and shadowing models, determining object locations, determining the location of a viewpoint and light sources, and geometry processing.

The image processor 106 renders the images, and generates a display image to be displayed on the display device 108. Rendering refers to the process of creating images from models and includes such functions as geometry processing (note that geometry processing can also be a preprocessing function), visible-surface determination, scan conversion, and lighting, to name a few. After rendering an image or parts of an image, the image processor 106 transfers rendered image data to the display device for display.

Below, we describe several features of the image processing system 100 in detail with reference to specific hardware and software architectures. However, it is important to note that the image processing described below can be implemented in a variety of alternative architectures.

The image processing system 100 achieves a vast price-performance improvement over existing high quality 3-D graphics systems known to the inventors. A number of advances in computer graphics contribute to this improvement. These advances include: composited image layers, image compression, chunking, and multi-pass rendering. We introduce these advances here, and describe these and other advances in more detail below.

### Composited Image Layers (Gsprites)

In our system, multiple independent image layers may be composited together at video rates to create the output video signal. These image layers, which we refer to as generalized sprites, or *gsprites*, can be rendered into and manipulated independently. The system will generally use an independent gsprite for each non-interpenetrating object in the scene. This allows each object to be updated independently, so that object update rate can be optimized based on scene priorities. For example, an object that is moving in the distant background may not need to, be updated as often, or with as much accuracy, as a foreground object.

Gsprites can be of arbitrary size and shape. In one implementation, we use rectangular gsprites. Pixels in the gsprite have color and alpha (opacity) information associated with them, so that multiple gsprites can be composited together to create the overall scene.

Several different operations may be performed on gsprites at video rates, including scaling, rotation, subpixel positioning, and transformations to mimic motion, such as affine warps. So, while gsprite update rates are variable, gsprite transformations (motion, etc.) may occur at full video rates, resulting in much more fluid dynamics than could be achieved by a conventional 3-D graphics system that has no update rate guarantees.

Many 3-D transformations can be simulated by 2-D imaging operations. For example, a receding object can be simulated by scaling the size of the gsprite. By utilizing 2-D transformations on previously rendered images for intermediate frames. overall processing requirements are significantly reduced. and 3-D rendering power can be applied where it is needed to yield the highest quality results. This is a form of temporal level of detail management.

By using gsprite scaling, the level of spatial detail can also be adjusted to match scene priorities. For example, background objects, cloudy sky, etc., can be rendered into a small gsprite (low resolution) which is then scaled to the appropriate size for display. By utilizing high quality filtering, the typical low resolution artifacts are not as noticeable.

A typical 3-D graphics application (particularly an interactive game) trades off geometric level of detail to achieve higher animation rates. Gsprites allow the system to utilize two additional scene parameters-temporal level of detail and spatial level of detail- to optimize the effective performance as seen by the user. The spatial resolution at which the image of an object is rendered does not have to match the screen resolution at which it will be rendered. Further, the system can manage these trade-offs automatically without requiring application support.

### Image Compression

Perhaps the most significant factor in determining system cost and performance is memory. A traditional high-end 3-D graphics system, for example, has over 30 Mbytes of memory, including frame buffers (double buffered), a depth buffer, a texture buffer, and an anti-aliasing buffer. And most of this is specialized memory which is significantly more expensive than DRAM. Memory bandwidth is always a critical bottleneck. The cost of high performance systems are often driven by the need to provide numerous banks of interleaved memory to provide adequate bandwidth for pixel and texture data accesses.

The system broadly applies image compression technology to solve these problems. Image compression has traditionally not been used in graphics systems because of the computational complexity required for high quality, and because it does not easily fit into a conventional graphics architecture. By using a concept we call chunking (described below), we are able to effectively apply compression to images and textures, achieving a significant improvement in price-performance.

In one respect, graphics systems *have* employed compression to frame buffer memory. High end systems utilize eight bits for each of three color components, and often also include an eight bit alpha value. Low end systems *compress* these 32 bits per pixel to as few as four bits by discarding information and/or using a color palette to reduce the number of simultaneously displayable colors. This compression results in very noticeable artifacts, does not achieve a significant reduction in data requirements, and forces applications and/or drivers to deal with a broad range of pixel formats.

The compression used in our system can achieve very high image quality yet still provide compression ratios of 10:1 or better. Another benefit of our approach is that a single high quality image format can be used for all applications, as distinguished from the standard PC graphics architecture which requires a trade-off between spatial resolution and color depth.

### Chunking

Another significant advance in our system is referred to as chunking. A traditional 3-D graphics system (or any frame buffer for that matter), can be (and is) accessed randomly. Arbitrary pixels on the screen can be accessed in random order. Since compression algorithms rely on having access to a fairly large number of neighboring pixels (in order to take advantage of spatial coherence), compression can only be applied after all pixel updates have been made, due to the random access patterns utilized by graphics algorithms. This makes the application of compression technology to display buffers impractical.

This random access pattern also means that per-pixel hidden surface removal and anti-aliasing algorithms must maintain additional information for every pixel on the screen. This dramatically increases the memory size requirements, and adds another performance bottleneck.

Our system takes a different approach. A scene, or portions of a scene, can be divided into pixel regions (32 x 32 pixels in one specific implementation), called chunks. In one implementation, the system divides the geometry assigned to gsprites into chunks, but an alternative implementation could perform chunking without gsprites. The geometry is presorted into bins based on which chunk the geometry will be rendered into. This process is referred to as chunking. Geometry that overlaps a chunk boundary is preferably referenced in each chunk it is visible in. As the scene is animated, the data structure is modified to adjust for geometry that moves from one chunk to another.

Chunking provides several significant advantages. The use of chunking provides an effective form of compression. Since all the geometry in one chunk is rendered before proceeding to the next, the depth buffer need only be as large as a single chunk. By using a relatively small chunk size such as 32 x 32 pixels, the depth buffer can be implemented directly on the graphics rendering chip. This eliminates a considerable amount of memory, and also allows the depth buffer to be implemented using a specialized memory architecture which can be accessed with very high bandwidth and cleared during double buffer operations, eliminating the traditional frame buffer memory clearing overhead between frames.

Anti-aliasing is also considerably easier since each chunk can be dealt with independently. Most high-end Z-buffered graphics systems which implement anti-aliasing utilize a great deal of additional memory, and still perform relatively simplistic filtering. With chunking however, the amount of data required is considerably reduced (by a factor of 1000), allowing practical implementation of a much more sophisticated anti-aliasing algorithm.

In addition to Z-buffering and anti-aliasing, the system can also simultaneously support translucency in a correct and seamless manner. While a chunk is being built, the system can perform both anti-aliasing and translucency computations on another chunk. In other words, in the time required to build a chunk, the system can perform anti-aliasing and translucency processing on another chunk. The system can "ping-pong" between chunks, and thus perform sophisticated processing without adding delay in processing an image for real time applications.

Yet another advantage is that chunking enables block oriented image compression. Once a chunk has been rendered (and anti-aliased), it can then be compressed with a block transform based compression algorithm. Therefore, in addition to the compression achieved from rendering chunks separately, chunking supports more sophisticated and adaptable compression schemes.

**Multi-Pass Rendering**

Another advantage of the architecture of our system is the opportunity for 3-D interactive applications to break out of the late 1970's look of CAD graphics systems: boring lambertian Gouraud-shaded polygons with Phong highlights. Texture mapping of color improves this look but imposes another characteristic appearance on applications. In the 1980's, the idea of programmable shaders and procedural texture maps opened a new versatility to the rendering process. These ideas swept the off-line rendering world to create the high-quality images that we see today in film special effects.

The rigid rendering pipelines and fixed rendering modes of today's typical high-end 3-D graphics workstations make it impossible to implement such effects without drastic reductions in real-time performance. As a result, users who require real-time display must put up with the limited rendering flexibility.

By reducing the bandwidth requirements using the techniques outlined above, the system of the present invention can use a single shared memory system for all memory requirements including compressed texture storage and compressed gsprite storage. This architecture allows data created by the rendering process to be fed back through the texture processor to use as data in the rendering of a new gsprite. Because of this support for feedback, the system can perform efficient multi-pass rendering.

By coupling efficient multi-pass rendering with a variety of compositing modes and a flexible shading language, the system can provide a variety of rendering effects in real- time that have previously been the domain of off-line software renderers. This includes support of functions such as shadows (including shadows from multiple light sources), environment mapped reflective objects, spot lights, ground fog, realistic underwater simulation, etc.

In one embodiment, the image processing system (100) includes a combination of software and hardware. In the following section, we describe the system environment below with reference to a hardware and software architecture. Where possible, we describe alternative architectures. However, the software and hardware architectures can vary, and therefore are not limited to the specific examples provided below.

The image processing system, or portions of it, can be implemented in a number of different platforms including desktop computers, set-top boxes, and game systems.

FIG. 2 is a block diagram of a computer system 130 in which the image processing system can be implemented. The computer system 130 includes a processor 132, main memory 134, memory control 136, secondary storage 138, input device(s) 140, display device 142, and image processing hardware 144. Memory control 136 serves as an interface between the processor 132 and main memory 134; it also acts as an interface for the processor 132 and main memory 134 to the bus 146.

A variety of computer systems have the same or similar architecture as illustrated in FIG. 2. The processor within such systems can vary. In addition, some computer systems include more than one processing unit. To name a few, the processor can be a Pentium or Pentium Pro processor from Intel Corporation, a microprocessor from the MIPS family from Silicon Graphics, Inc., or the PowerPC from Motorola.

Main memory 134 is high speed memory, and in most conventional computer systems is implemented with random access memory (RAM). Main memory can interface with the processor and bus in any of variety of known techniques. Main memory stores 134 programs such as a computer's operating system and currently running application programs. Below we describe aspects of an embodiment with reference to symbolic representations of instructions that are performed by the computer system. These instructions are sometimes referred to as being computer-executed. These aspects of the embodiment can be implemented in a program or programs, comprising a series of instructions stored on a computer-readable medium. The computer-readable medium can be any of the devices, or a combination of the devices described herein, in connection with main memory or secondary storage.

The bus 146 interconnects the memory control 136, secondary storage 138, and the image processing hardware 144. In one implementation for example, the bus is a PCI bus. The PCI standard is well-known, and several computer system boards are designed to support this standard. Computer systems having other bus architectures can also support the image processing system. Examples include an ISA bus, EISA bus, VESA local bus, and the NuBus.

The display device 142 is a color display, with continuous refresh to display an image. The display device in one embodiment is a cathode ray tube (CRT) device, but it can also be a liquid crystal display (LCD) device, or some other form of display device.

The secondary storage device 138 can include a variety of storage media. For example, the secondary storage device can include floppy disks, hard disks, tape, CD-ROM, etc. and other devices that use electrical, magnetic, optical or other recording material.

The input device(s) 140 can include a keyboard, cursor positioning device such as a mouse, joysticks, as well as a variety of other commercially available input devices.

In one implementation detailed below, the image processing hardware 144 is implemented on board that couples with the computer system through a PCI bus. In an alternative implementation, the image processing hardware can be located on a system board along with a processor or other image processing hardware and memory. For example, in a game system, image processing hardware is typically located on the mother board. Similarly, image processing hardware in a set-top box can also be located on the mother board.

While we have outlined the architecture of a computer system, we do not intend to limit our invention to the system architecture illustrated in FIG. 2. Our image processing system can be implemented in game systems, set-top boxes, video editing devices, etc. Below we describe an embodiment of an image processing system in the environment of the system architecture shown in FIG. 2. We describe alternative implementations throughout the following description, but we do not intend our description of alternatives to be a complete listing of other possible implementations. Based on our detailed description below, those having ordinary skill in the art can implement our the image processing system, or aspects of it, on alternative platforms.

FIG. 3 is a block diagram illustrating the relationship between the software and hardware in one embodiment. In this embodiment, the image processing system is implemented using processing resources of the processor of the host computer and the image processing hardware 144. The image processing hardware 144 is implemented on an expansion board 164 which includes a processor (e.g. a Digital Signal Processor) 166 and image processing circuitry 168. The processors of the host computer 130 and the image processing board 164 share image processing tasks. Below we outline generally the functions performed by the host computer 130 and the image processing board 174.

Graphics support software 160 executes on the host computer system 130 and communicates with the image processing board 164 through the hardware abstraction layer (HAL) 162. The image processing board 164 includes a programmable digital signal processor called the DSP 166 and additional image processing hardware 168 detailed below.

The graphics support software 160 can include functions to support memory management, view volume culling, depth sorting, chunking, as well as gsprite allocation, transformation, and level of detail. The graphics support software can include a library of graphics functions, accessible by graphics applications, to perform the functions enumerated here.

The graphics support software 160 includes functions that support the gsprite paradigm introduced above. As indicated above, gsprites are rendered independently, and do not need to be rendered on every frame. Instead, changes in position of a gsprite can be approximated with affine or other transformations. The graphics support software 160 provides functions to help assign an object or objects to a gsprite and to track motion data describing the position and motion of the gsprite. The graphics support software also provides functions to determine when a rendered gsprite needs to be updated. The need to update a gsprite can vary depending on object movement, viewpoint movement, lighting changes, and object collisions.

We provide further detail with respect to the functions of the graphic support software below. The image processing board 164 performs low level geometry processing, including transforms, lighting and shading, texturing, anti-aliasing, translucency, etc. In one embodiment, the DSP 166 is responsible for front end geometry processing and lighting computations, but a number of these functions can be performed by the processor 132 of the host.

## Overview of the Image Processing Board

Figure 4A is a block diagram illustrating the image processing board 174. The image processing board 174 communicates with the host computer through the bus 146. It includes a DSP 176, tiler 200, shared memory 216, the gsprite engine 204, compositing buffer 210, and a digital-to-analog converter (DAC) 212. The bus 146 (FIG. 2) transfers commands and data between the host and the DSP 176. In response to commands from the host, the image processing board 174 renders images and transfers display images to a display device 142 (FIG. 2) through the DAC 212.

In the embodiment illustrated in FIGS. 2-4A, the host processor and the DSP share the functions of the image preprocessor of FIG. 1. The image processor comprises the tiler 200, gsprite engine 204, compositing buffer 210, and DAC 212. Below, we provide more detail regarding these elements. It should be kept in mind, however, that the implementation of the image processing system can vary.

The shared memory 202 stores image data and image processing commands on the image processing board 174. In one embodiment, the shared memory is used to store gsprite and texture data in compressed form, DSP code and data, and various buffers used to transfer data between processing subsystems.

The DSP 176 is responsible for video compression/decompression and front-end graphics processing (transformations, lighting, etc.). Preferably, the DSP should support floating point and integer computations greater than 1000 MFLOPS/MOPS.

The tiler 200 is a VLSI chip which performs scan-conversion. shading, texturing, hidden-surface removal, anti-aliasing, translucency, shadowing, and blending for multi-pass rendering. The resulting rendered gsprite chunks are then compressed and stored in compressed form in the shared memory. The tiler additionally performs decompression and recompression of gsprite data in support of video and windowing operations.

The gsprite engine 204 operates at video rates to address and decompress the gsprite chunk data and perform the necessary image processing for general affine transformations (which include scaling, translation with subpixel accuracy, rotation, reflection and shearing). After filtering, the resulting pixels (with alpha) are sent to the compositing buffers where display pixel data is calculated.

Gsprite chunk data is processed a number of scan lines at a time for display. In one implementation, chunk data is processed 32 scan lines at a time. The compositing buffer (210) includes two 32 scan line color buffers which are toggled between display and compositing activities. The compositing buffer also includes a 32 scan line alpha buffer which is used to accumulate alpha for each pixel.

The DAC 212 includes a R G B video DAC and corresponding video port 214, to video editing devices. Individual components can be used to implement the functionality of the DAC.

## System Operation

FIGS. 5A and 5B are flow diagrams illustrating steps in rendering an image in the image processing system. Before the image processor 106 begins rendering an image for the view space, the image preprocessor 104 determines object and viewpoint locations (240). In the embodiment illustrated in FIGS. 2 and 3, the graphics support software 160, running in the host computer system 132, determines the object and viewpoint locations from data provided by a graphics application. The graphics application, running on the host processor, defines models representing the relevant objects, and supplies a modeling transform, which is used to place the object with other objects in "world" coordinates.

Next, the image preprocessor 104 selects potentially visible objects (242). It determines potentially visible objects based on the view volume. The view volume is a three-dimensional space in world coordinates that provides the boundaries for a scene. The preprocessor selects potentially visible objects by traversing objects and determining whether their boundaries intersect the view volume. Objects that intersect the view volume are potentially visible in the geometric or spatial sense.

In some cases, it is useful to determine "temporally" potentially visible objects outside the current view volume, to account for future changes in the scene. This enables the system to adjust for rapid changes in the view volume. In typical 3-D graphics systems, the only way to respond to this rapid change is to completely generate a new scene based on the changed input, interposing significant transport delay. Such a long delay has negative effects on the user, creating problems such as over-control and nausea. To reduce this delay, the image preprocessor of the present invention can calculate the location of objects positioned in an extended range outside the visible range, and the image processor can render and store images within this extended range. Using the affine transform capability of the system, viewpoint input for a subsequent frame can be used to reposition the gsprites from this extended range reducing system transport delay to less than 2 computational frames. Such a short transport delay is unachievable with current 3-D graphics hardware systems known to the inventors, and will enable much higher quality simulations with much better user immersion.

The image preprocessor determines the configuration of gsprites for the image (244). This step involves finding how to map potentially visible objects to gsprites. As part of this process, the image preprocessor 104 allocates gsprites, which includes creating a gsprite data structure to store image data corresponding to one or more potentially visible objects. If processing resources allow, each non-interpenetrating object in the scene is assigned to an independent gsprite. Interpenetrating or self-occluding objects may be processed as a single gsprite.

The image preprocessor 104 can aggregate gsprites when the image processor does not have the capacity to composite the gsprites at the desired computational frame rate or there is insufficient system memory to store the gsprites. Rendering to separate gsprites will always be more computationally efficient, so if the system has the memory and compositing capacity, non-intersecting objects should be rendered into separate gsprites. If the system is incapable of storing or generating a display image based on a current assignment of gsprites, some gsprites can be aggregated to alleviate this problem.

After an object or objects are assigned to gsprites, the image processor divides the gsprites into image regions called "chunks" (248). The image preprocessor loops on gsprites and divides the gsprites into chunks (246, 248). In one embodiment, this process includes transforming bounding volumes of objects to the view space and finding rectangular image regions that enclose the transformed bounding volumes. These image regions define the dimensions of the gsprite in terms of the two-dimensional space to which the gsprite's object or objects are rendered. The gsprite is divided into chunks by dividing the rectangular image region into chunks and associating these chunks with the gsprite data structure.

As an optimization, the transformed bounding volume can be scaled and/or rotated so that the number of chunks required to render the gsprite is minimized. Because of this added transformation (scaling or rotating), the space to which the objects assigned to the gsprite are rendered is not necessarily screen space. This space is referred to as gsprite space. In the process of generating a display image, the gsprite should be transformed back to screen space.

The next step is determine how to divide the object geometry among the chunks (250). The image preprocessor determines how the geometric primitives (e.g. polygons) should be divided among the chunks by transforms the polygons to 2-D space (252) and determining which chunk or chunks the polygons project into. Due to the expense of clipping polygons, the preferred approach is to not clip the polygons lying at the edge of a chunk. Instead, a chunk includes polygons that overlap its edge. If a polygon extends over the border of two chunks, for example, in this approach the vertices of the polygon are included in each chunk.

The image preprocessor then queues the chunk data for tiling. Tiling refers to the process of determining pixel values such as color and alpha for pixel locations covered or partially covered by one or more polygons.

Decision step (254) (FIG. 5B) and the step (256) following it represents the process of tiling the polygons within the chunk. While the image processor has included polygons that overlap the boundaries of the current chunk, it only produces pixels that lie within the chunk. The produced pixels include information for antialiasing (fragment records), which are stored until all pixels have been generated.

After completing the tiling of polygons in a chunk, the image processor resolves the anti-aliasing data (such as fragment records) for the pixels (258). In one embodiment, the tiler 200 uses double buffering to resolve a previous chunk while the next is tiled. Alternatively, the tiler can use a common buffer with a free list. The free list represents free memory in the common buffer that is allocated as new fragment records are generated and added to when fragment records are resolved. A combination of double buffering and common memory can be used as well.

The image processor compresses the resolved chunk using a compression scheme described further below (260). As the image processor resolves a block of pixels, it can compress another block. The image processor stores the compressed chunk in shared memory (262).

FIG. 6 is a flow diagram illustrating the steps executed to display an image. On the image processing board 174 described above, images are read from shared memory 216, transformed to physical output device coordinates by the gsprite engine 204, composited in the compositing buffer 210, transferred to the DAC 212, and then transferred to an output device.

During the display process, the image processor accesses a list of gsprites to be displayed for the current frame. In the process of determining the gsprite configuration, the image preprocessor determines the depth order of gsprites (280). As noted above, one object is preferably assigned to a gsprite. However, the image preprocessor can assign more than one object to a gsprite, for example, to accommodate processing constraints of a particular image processor being used in the system. The image preprocessor sons objects in Z-order, i.e. in distance from the viewpoint. In addition to sorting objects, it sorts gsprites in depth order as well and stores this depth data in the gsprite data structures.

The decision step (282) in FIG. 6 represents a loop on gsprites in the display process. The steps within this loop can include 1) calculating a transform for a rendered gsprite; and 2) building a gsprite display list to control how gsprites are displayed. These steps are described below.

For gsprites in the potentially visible range, the image processor calculates gsprite transforms. A gsprite transform refers to a transformation on a rendered 2-D gsprite. In one embodiment, the image processor can perform a transformation on a gsprite to reduce rendering overhead. Rather than rendering each object for every frame, the image processor reduces rendering overhead by re-using a rendered gsprite.

It is not necessary to compute a gsprite transform for every frame of image data. For instance, if a gsprite is rendered for the current frame of image data, it may not need to be transformed, unless e.g. the gsprite has been transformed to better match the bounding box for the object. In addition, some gsprites may not need to be re-rendered or transformed because the object or objects assigned to them have not changed and are not moving. As such, the step of transforming a gsprite is optional.

The gsprite may be multiplied by the unity matrix in cases where the position of the gsprite has not changed. This may apply, for example, in cases where the image processor has rendered the gsprite for the current frame, or where the gsprite position has not changed since it was originally rendered.

To specify how gsprites are to be displayed, the image processor creates a gsprite display list. The display list refers to a list or lists that define which gsprites are to be displayed on the display screen. This concept of display list can also apply to other output devices for presenting a frame of image data. The image processor uses the display list in mapping and compositing rendered gsprites to the physical device coordinates. While the step of building the display list is illustrated as part of a loop on gsprites, it is not necessary that the list or lists be generated specifically within this loop.

The display list can refer to a list of gsprites or a list of gsprites per band. A "band" is a horizontal scanline region of a display screen. For instance, in one embodiment a band is 32 scanlines high by 1344 pixels wide. The display list can include a separate list of gsprites for each band, in which case the band lists describe the gsprites impinging on the respective bands. Alternatively, the display list can be comprised of a single list implemented by tagging gsprites to identify which bands the gsprites impinge upon.

The display list in the illustrated embodiment is double-buffered. Double buffering enables the system to generate one display list while it reads another. As the system calculates the gsprite transforms and build the display list for one frame, it reads the display list for another frame and displays the image data in this list.

Because of the double buffering, the steps shown in FIG. 6 are over-lapped: the image preprocessor performs steps (280-286) for one frame while the image processor performs steps (290-298) for another frame.

FIG. 7 is a block diagram illustrating the timing of these steps. After the system completes steps (280-286) (FIG. 6) for a frame 310, it waits for a frame sync signal (vertical retrace) and then performs the buffer swap. The display list it has just created is then used to determine the gsprites to be displayed in the current frame 312. While that display list is processed 312, gsprite transforms are computed and a display list is constructed for a next frame 314. In the next frame, the gsprite transforms and display list that were generated in the previous frame 3 14 are then used to generate the display image 316.

The image processor converts gsprites to output device coordinated based on the list of gsprites in the display list. The image processor reads gsprite data from shared memory, including color, alpha, and data identifying the gsprite's position. Based on this data, the image processor determines the color and alpha for pixels covered by the gsprite.

In one embodiment, the image processor loops on each band, transforming gsprites that impinge upon that band according to the gsprite display list. We will describe this display process in more detail below.

After transforming gsprite data, the image processor composites the resulting pixel data. This includes computing the color and alpha for pixels in output device coordinates based on the gsprite transforms. The image processor transforms the pixel data for gsprites in the display list and then composites the transformed pixel data. The process involves determining the color and alpha at a pixel location based on the contribution of one or more pixel values from gsprites that cover that pixel location.

In one embodiment, the image processor loops on bands and composites pixel data for each band. The image processor double buffers pixel data: it transforms and composites gsprite data for a band in one buffer while it displays composited pixel data for another band.

After compositing pixel data, the image processor then transfers composited pixel data to an output device. The most typical output device used in connection with this system is, of course, a display. To display the pixel data, it is converted to a format compatible with the display.

Having described system operation of an embodiment. we now provide more detail regarding the image processing board.

### The Image Processing Board

In the one embodiment, the shared memory 216 comprises 4 Mbytes of RAM. It is implemented using two 8-bit Ram bus channels. The amount and type of memory can vary, however.

FIG. 8 is a block diagram illustrating the DSP 336 on the image processing board 174. The DSP 336 is responsible for parsing the command stream from the host processor and performing some video processing, and front end geometry processing. The DSP performs front end geometry and lighting calculations used for 3-D graphics.

This includes model and viewing transformations, clipping, and lighting. Portions of the gsprite animation management are also handled in the DSP such as gsprite motion extrapolation.

Rendering commands are stored in main memory buffers and DMAed to the image processing board 174 over the PCI bus and through the PCI bus controller 342. These commands are then buffered in the shared memory 216 on the board until needed by the DSP 336 (FIG. 8).

The DSP core 338 includes a processor for performing the image processing computations described above. In addition the DSP core performs scheduling, and resource management.

The Memory interface 340 supports high speed data transfers, e.g. 64 bits at 80 MHz. It is designed to interface with conventional DRAM and SDRAM devices. The tiler 200 is designed to directly connect to this bus, simulating the memory timing required by the DSP.

The data formatter and convener 346 in the DSP formats rendering instructions for the tiler. This block converts floating point color components into integer and packs them into the tiler specific data structures. It also buffers up a complete command and DMAs it directly to a memory buffer in shared memory. These rendering instructions are later read by the tiler when it is ready to perform the operations.

Among its formatting tasks, the data formatter and converter 346 formats triangle command data for the tiler. R G B $\propto$ (alpha) data which is calculated by the DSP (336) in floating point is converted to 8 bit integer. Coordinate information is converted from floating point to 12.4 fixed point. The data is packed into 64 bit words and transferred in a contiguous block to the shared memory to optimize bandwidth.

The display memory management unit (MMU) 344 is used for desktop display memory. It traps PCI accesses within a linear address range that is allocated as the desktop display memory. It then maps these accesses to image blocks stored in shared memory.

The architecture of the image processing board (Fig. 4A, 174) is relatively independent of the specific DSP. However, the DSP should preferably have significant floating point performance. Suitable DSPs include the MSP-1 from Samsung Semiconductor and TriMedia from Phillips Semiconductor. These specific DSPs are two examples of DSPs that provide sufficient floating point performance.

FIG. 9A is a block diagram of the tiler 200 on the image processing board 174. The tiler is responsible for 2-D and 3-D graphics acceleration, and for shared memory control. As shown in the block diagram of the image procession board, the tiler connects directly to the DSP (176, FIG. 4), the gsprite engine 204, and the shared memory system 216.

The functional blocks shown in the block diagram above are described in this section.

The tiler 378 includes a number of components for primitive rendering. The command and memory control 380 includes an interface to shared memory 216, the gsprite engine 204, and the DSP 176. Accesses to memory from the tiler, DSP, and gsprite engine are arbitrated by this block. A queue is provided to buffer read accesses.

The setup block 382 calculates the linear equations which determine the edge, color, and texture coordinate interpolation across the surface of the triangle. These equations are also used to determine which texture blocks will be required to render the triangle. The edge equations are also passed to the scan conversion block 394 and are stored in the primitive registers 396 until required by the scan convert engine 398.

The setup block 382 includes three components: the vertex input processor 384, vertex and control registers 386, and the setup engine 388. The vertex input processor 384 parses the command stream from the DSP. The vertex and control registers 386 store the information necessary for processing polygons or other geometric primitives. Triangle processing is used in this specific embodiment, and the tiler 200 includes registers for six vertices (three for each triangle) to allow double buffering of triangle processing. The setup engine 388 calculates the differentials for color, depth, edges, and texture coordinate interpolation across the surface of the triangle. These equations are also used to determine which texture blocks are used to render the triangle. The setup engine also pre-fetches texture chunks so that they are available when needed by the scan convert engine 398.

The setup engine 388 also communicates with the texture read queue 390, and a texture address generator 392. The texture read queue 390 buffers read requests for texture blocks from shared memory. While we use the term "texture" in referring to the portions of the tiler used to retrieve image data blocks from memory, it should be understood that this term can refer to texture maps, shadow maps, and other image data used in multi-pass rendering operations. The texture address generator 392 determines the address in memory of the requested chunks and sends texture read requests to the command and memory control 380. The texture address generator 392 includes a memory management unit that controls the writing of image data to the texture cache.

The scan convert block 394 receives differentials and other vertex data from the setup block and generates pixel data. The scan convert block 394 includes primitive registers 396, and the scan convert engine 398. The primitive registers 396 store the equation parameters for each triangle parameter. The primitive registers include registers to store multiple sets of equations so that the scan convert engine does not stall waiting for texture data.

The scan convert engine 398 scan converts polygons, which in this case are triangles. The scan convert block 394 includes the interpolators for walking edges and evaluating colors, depths, etc. The pixel address along with color and depth, and anti-aliasing coverage information is passed to the pixel engine for processing.

The scan convert engine 398 passes texture addresses to the texture filter engine 400, which calculates the texture data. The texture filter engine 400 calculates pixel color and alpha data for polygons that are being rendered. The illustrated texture filter engine computes a filter kernel based on the Z-slope and orientation of the triangle being rendered, and on the center of the texture request (the S and T coordinates of a point mapped into the texture). Filtering is performed in two passes in a pipelined fashion so that a new pixel is generated every cycle. The filter kernel can be an anisotropic filter or an isotropic filter. Where anisotropy is not required, the filter kernel can use negative lobes allowing much sharper textures than is possible with tri-linear interpolation. The texture filter engine 400 also handles Z-comparison operations for computing effects on shadows.

The texture cache 402 stores blocks of decompressed image data. In one implementation, the texture cache 402 stores texture data for sixteen 8 x 8 pixel blocks. The data is organized so that 16 texture elements can be accessed every clock cycle.

The decompression engine 404 decompresses texture data and transfers it to the texture cache 402. In this embodiment, the decompression engine includes two decompressors, one which implements a discrete cosine transformation (DCT) based algorithm for continuous tone images such as textures, and the other which implements a lossless algorithm for desktop pixel data. The DCT based algorithm is implemented by two parallel decompression blocks, each of which can generate eight pixel elements (i.e. two pixels) per clock cycle.

The compressed cache 416 can be used to buffer compressed data before the decompression engine 404 decompresses and transfers it to the texture cache 402.

The scan convert engine 398 transfers pixel data to the pixel engine 406. The pixel engine 406 performs pixel level calculations including blending, and depth buffering. The pixel engine also handles Z-comparison operations required for shadows. To achieve optimal performance, the pixel engine should preferably operate at one pixel per clock cycle.

The pixel engine 406 controls transfers of pixel data to a rasterization buffer. The rasterization buffer includes pixel buffers 408, and fragment buffers 410 in the illustrated embodiment. The pixel buffers 408 include two buffers to support double buffering. In this implementation of the pixel buffers, each pixel entry stores eight bits per color component (R G B), eight bits for the alpha component, 24 bits for the Z-buffer, 8 bits for the stencil buffer, and a nine bit pointer into the fragment buffer. This is a total of 73 bits per pixel. One pixel buffer is used by the pixel engine 406 while the other is used by the anti-aliasing engine 412. The buffers are then swapped.

The fragment buffers 410 store fragments for partially covered pixels called pixel fragments, which result from pixels of polygons whose edges cross a given pixel, or are translucent. The fragment buffer is single buffered in the implementation shown in Fig. 9A. A free list of fragments is maintained, such that as fragments are resolved, they are added to the free list, and as fragments are generated, they use entries from the free list. Alternatively, the fragment buffer could be double buffered, so that one fragment buffer could be resolved by the anti-aliasing engine while the other was filled by the pixel engine in parallel.

In one embodiment, a fragment record includes the same data as in the pixel buffer entries plus a 4 x 4 mask. The nine bit pointer is used to form a linked list of entries, with a reserved value indicating the end of the list. In this embodiment, the fragment buffers 410 includes a total of 512 entries, but the size can vary.

The anti-aliasing engine 412 calculates the color and alpha component for pixels which are affected by more than one polygon, which occurs when polygons only partially cover the pixel area (i.e. the polygon edges cross the pixel) or when polygons have translucency. The anti-aliasing engine 412 transfers resolved pixel data to the compression engine 414. In this embodiment, the compression engine 414 includes two compressors, one DCT based for continuous tone images, and one lossless for desktop pixel data. The DCT based algorithm is implemented using a compressor capable of compressing eight pixel elements per clock cycle. The compression engine 414 compresses the resulting rendered gsprites and sends the compressed data to the command memory and control 380 for storage in shared memory 216 (FIG. 4). The tiler also has a compressed cache 416 for caching compressed data.

FIGS. 10 and 11 illustrate two alternative implementations for accessing image data from memory during the pixel generation process. There are a number of instances when image data has to be accessed from memory during pixel generation. These include for example, accessing a texture map during a texture mapping operation, accessing a shadow map during a shadowing operation, and accessing color and/or alpha data during multi-pass blending operations. For simplicity, we refer to the image data in memory as "textures" or "texture data". However, it should be understood that the methods and systems described here can also be applied to other types of image data accessed from memory during pixel generation.

The implementations illustrated in FIGS. 10 and 11 provide alternative approaches to efficiently load and utilize a texture cache on the tiler. A significant advantage of these approaches is that texture data can be stored in memories with high latency and even in a compressed format without unduly hampering performance. As a result, less specialized and lower cost memory can be used to implement high performance rendering hardware.

Texture data from the memory is accessed and cached in units called "blocks" which are typically a small rectangular region appropriate for efficient fetching and catching. A typical block size is about 8 x 8 samples in size.

For instance, for texture maps, a typical block is 8 x 8 texels.

FIG. 10 is a functional block diagram illustrating one embodiment for accessing these blocks of texture data. This embodiment solves the latency problem by buffering pixel data from the rasterizer 417, including texture data requests, in a texture reference data queue 418. The queue includes enough entries to absorb the latency which would otherwise be incurred in accessing (and possibly decompressing) a texture block so that the rendering process can run at full speed. For example, if it takes 100 cycles to fetch a texture block, and the tiler is capable of producing one pixel per clock cycle, then the texture reference data queue includes at least 100 entries.

Data flow in the system illustrated in FIG. 10 proceeds as follows. First, geometric primitives are set-up for rasterization as shown in block 416. Set-up processing includes. for example, reading vertices for a geometric primitive such as a triangle, and calculating the differentials for color, depth, and edges across the surface of the triangle. The parameters resulting from these computations are then fed to the rasterizer 417.

The rasterizer 417 reads the equation parameter data for each primitive and generates pixel data. The rasterizer generates pixel data, including texture coordinates and filter data, and buffers this data in the texture reference data queue 418. The texture fetch block 420 reads texture reference data stored in the queue 418 and fetches the appropriate texture blocks from memory 419.

The pixel data stored in the texture reference data queue 418 in this implementation includes: an address of destination for the pixel (X, Y) being computed; depth data (Z); a coverage mask: color and translucency data; the coordinates of the center for the texture request (S, T); and texture filter data. The depth and coverage data is only needed in the texture reference data queue if high-quality anti-aliasing of pixels is desired. Alternatively, hidden surface removal and antialiasing can be performed in the rasterizer 417. If hidden surface removal and anti-aliasing are performed in the rasterizer, depth data and coverage data does not need to be stored in the data queue 418. The texture filter data may include a level of detail parameter for MIP-mapping, for example, or may include anisotropic filter data for higher quality texture filtering.

The texture block fetch 420 reads the texture reference data buffered in the data queue and retrieves the corresponding texture data from memory 419. In the case of texture map accesses. the texture block fetch unit converts the (S, T) center of the texture request and the texture filter data into the addresses of the blocks required to satisfy the texture filtering operation. The blocks identified in this process are then fetched into the cache, replacing other blocks as needed. Image data blocks can be fetched using a least recently used (LRU) or other suitable cache replacement algorithm. To reduce memory accesses, the texture block fetch unit keeps track of the texture blocks already stored in the texture cache 421 and avoids requesting the same block more than once. This capability significantly reduces the memory bandwidth required to perform high quality texture filtering because the latency in retrieving a texture block is incurred only once in computing an image.

The texture block fetch unit includes a hold-off mechanism to prevent from overwriting texture blocks still needed in the texture filter unit in the tiler. One way to implement such a hold-off mechanism is to associate a reference count with each texture block to keep track of whether the texture filter has used a particular texture block. This reference count is incremented on receipt of a texture request to a block by the texture fetch unit, and decremented in response to its use by the texture filter unit. The texture block fetch unit then only replaces blocks that have a corresponding reference count of zero.

An alternative way to implement the hold-off mechanism is to allocate a buffer for temporary storage of texture blocks output by the texture fetch unit. In this approach, the image block is first written to temporary storage buffer. After the texture fetch unit has completed writing the image block to the temporary storage buffer, it can then be transferred to the texture cache. Image blocks are swapped to the texture cache when first needed by the texture filter unit 422.

In the case of texture mapping operations, the texture filter block 422 reads texture samples from the texture cache 421 and the pixel data stored in the texture reference data queue 418, and computes pixel color and possibly alpha values from the texture sample data.

In addition to texture mapping operations, this approach can also be applied to shadowing and multi-pass blending operations as well. For instance, texture reference data queue can be used to retrieve a shadow depth map residing in memory. Alternatively, the texture reference data queue can be used to retrieve color and/or alpha data used in multi-pass lighting and shading operations. More detail regarding texture mapping, shadowing, and multi-pass operations is provided below.

There are a number of advantages to buffering pixel data in the manner described above. One significant advantage is that the image data can be stored in less specialized memory (with higher access time), which reduces the cost of the overall system. In addition, image data including textures can be stored in compressed format and can still be accessed at fast enough rates to perform sophisticated pixel operation such as texture filtering. As a result, the system is able to achieve improved performance at a lower cost relative to known methods for accessing texture data.

Another advantage to this approach is that the texture reference data queue is able to predict accurately which image blocks need to be accessed from memory. As a result, the system incurs latency for memory accesses no more than necessary. Once the image data blocks are in the texture cache, the texture filter unit can run at the full speed of the rasterizer, as long as there is sufficient memory bandwidth and texture fetch throughput to write the requested image blocks to the texture cache.

Queuing texture references with the texture request center and filtering the data allows the queue to be much smaller than if texels with their corresponding texture filter weights were queued.

FIG. 11 is a functional block diagram illustrating an alternative embodiment for accessing image data from memory. In this approach, geometric primitives are queued and then processed in a pre-rasterizer to hide the latency of the texture block fetch during the pixel generation process. An example will help illustrate the concept. If an average primitive takes 25 cycles to rasterize, and it requires 100 clock cycles to fetch a texture block from memory, the primitive queue should be at least four primitives long. A simplified version of the post-rasterizer, the pre-rasterizer includes circuitry to determine the image data blocks that need to be accessed from memory. Once the texture data is fetched, the post-rasterizer can generate pixel data using texture data without being exposed to the delay involved in fetching blocks from memory.

The data flow through this implementation occurs as follows. As in the implementation described above, geometric primitives are processed in a set-up block 425 for rasterization. In this particular implementation, however, the set-up block 425 includes a larger primitive queue to buffer more primitives. The pre-rasterizer 426 quickly converts the primitives into a list of texture blocks needed to satisfy the texture filtering needs for all of the pixels covered by the primitive in the order that the blocks will be needed by the post-rasterizer 427. The pre-rasterizer is a simplified version of the post-rasterizer 427, or the rasterizer 417 in the alternative implementation. In this approach, the pre-rasterizer only needs to compute texture data addresses and determine texture requests.

The pre-rasterizer also keeps a model of the texture block cache and performs the cache replacement algorithm, such as least recently used (LRU) to keep from exceeding the size of the texture block cache. As part of the cache replacement algorithm, the pre-rasterizer compresses repetitive requests to a single texture block to only one request to the texture block fetch unit 429.

The texture block fetch queue 428 includes entries for storing texture block requests. The texture block fetch unit 429 reads texture requests from the texture block fetch queue and retrieves the appropriate blocks from memory 430.

The post-rasterizer rasterizes primitives queued in the set-up block 425 to generate pixel data for a pixel location. If image data needs to be accessed from memory during the pixel generation process, the post-rasterizer rasterizes the primitives as quickly as the necessary texture blocks can be transferred to the texture block cache 431. When the post-rasterizer completes rasterizing a primitive queued in the set-up block, the primitive is removed and replaced with another primitive from the input data stream. The set-up block is responsible for keeping the queue filled with primitives so that the pre-rasterizer and post-rasterizer are not stalled in the pixel generation process.

Like the alternative embodiment described above, the texture block fetch should preferably include a hold-off mechanism to prevent it from overriding the texture blocks that are still needed by the post-rasterizer. The two hold-off mechanisms described above can also be used in this implementation. Specifically, a reference count can be used to keep track of when an image block has been requested and then used. In this case, the reference account would be incremented on receipt of a texture request for a block by the pre-rasterizer, and decremented upon use by the post-rasterizer. The texture block fetch unit then only replaces blocks in the texture cache when their corresponding reference count is zero.

Alternatively, a buffer can be allocated for temporary storage of texture blocks output by the texture fetch block. When the texture fetch block has completed writing a block to this temporary buffer, it can then be transferred to the texture block cache 431 when requested by the post-rasterizer 427. When the post-rasterizer 427 first request data in a texture block in the temporary buffer, the block is then transferred to the texture block cache 431.

There are a number of advantages to this approach. First. texture data can be stored in less specialized memory and can still be accessed at rates required to support sophisticated texture filtering. An important related advantage is that texture data can be stored in a compressed format and then decompressed for use in the pixel generation process.

Another advantage of this approach is that requests to memory can be predicted so that the latency for memory access is incurred only once for each texture block to render a scene. Once the initial texture blocks are in the texture cache, the post-rasterizer can run at full speed, as long as there is memory bandwidth and texture fetch throughput to keep the cache current.

FIG. 9B illustrates a more detailed implementation of the system illustrated in FIG. 10. The set-up block 381 in FIG. 9B corresponds to the set-up block 416 in FIG. 10. Unlike the set-up block 382 of FIG. 9A, the set-up block 381 in this alternative implementation does not generate texture read requests. Instead, the scan convert block 395 generates pixel data, including texture reference data, which is buffered in the texture reference data queue 399.

The scan convert block 395 of FIG. 9B is a specific implementation of the rasterizer 417 in FIG. 10. It computes a Z-value, a coverage mask, color and translucency data, and the center of the texture request in texture coordinates.

For some texture mapping operations, it also computes level detail data or anisotropic filter data. The texture filter engine 401 reads the texture request and possibly texture filter data buffered in the texture reference data queue 399 and accesses the appropriate texture samples in the texture cache. From this texture data, the texture filter engine computes the contribution of the texture to the pixel color and alpha values. The texture filter engine combines the color and alpha in the texture reference data queue 399 with the contribution from the texture to generate pixel values sent to the pixel engine 406.

The texture cache control 391, texture read queue 393, command and memory control 380 are specific implementations of the texture block fetch 420 in FIG. 10. In addition, for compressed texture blocks, the compressed cache 416 and the decompression engine 404 are also part of the texture block fetch 420.

FIG. 9C illustrates a more detailed implementation of the system illustrated in FIG. 11. In this implementation, the functionality described in connection with blocks 425 and 426 of FIG. 11 is implemented within the set-up block 383. Specifically, the set-up block 383 includes the pre-rasterizer 426. The set-up block 383 also includes additional vertex control registers 387 to buffer additional primitives so that the pre-rasterizer can quickly convert the primitives to initiate texture data requests. The set-up engine and pre-rasterizer 383 sends requests for texture blocks to the texture cache control 391 shown in Fig. 9C.

The texture cache control 391 ensures that the required texture blocks will be in the texture cache 402 when needed. The texture read queue buffers read requests for texture data blocks to the shared memory system. The command and memory control 380 arbitrates access to the shared memory system, and it includes a buffer for buffering data from memory. The texture cache control 391, texture read queue 393, and the command and memory control 380 are specific implementations of the texture block fetch 429 in FIG. 11. For compressed texture blocks, the compressed cache 416 and the decompression engine 404 are also part of the texture block fetch 429. The texture cache control 391 manages the flow of texture blocks from the compressed cache 416, through the decompression engine 404, into the texture cache 402.

The scan convert block 397 and the texture filter engine 403 are a specific implementation of the post-rasterizer 427 in FIG. 11. The scan-convert block 397 and the texture filter engine 403 operate similarly to their counterparts illustrated in FIG. 9A and described above.

## Texture Cache Control

Above, we described two approaches for rasterizing in environments with high latency for texture fetch operations. We now describe aspects of the texture cache control in more detail.

The texture cache control scheme allows a rasterizer to function at full speed during texture mapping in spite of a high latency for texture map fetch operations. In the tiler, this latency is the result of the time required to read uncompressed texture data from shared memory (e.g., RAMBUS) plus the time required to decompress blocks of the texture map. The scheme also applies to the gsprite engine, which fetches gsprite blocks from shared memory, possibly decompresses them. and converts pixel data in gsprite space to view space (or more specifically, to screen coordinates).

The basic premise of the texture cache control scheme is to produce two identical streams of texel (or gsprite pixel) requests which are offset in time. The first (earlier) stream is a pre-fetch request for which no texture data is returned, while the second (later) stream is an actual request which does return texel data. The time difference between these two streams is used to hide the latency of reading and decompressing texture data.

Two approaches for generating these time-separated requests described above are: (1) duplicate rasterizers which both read from a single primitive FIFO (Fig. 11 and 9C); and (2) a single rasterizer followed by a pixel FIFO (Fig. 10 and 9B).

In approach (1), the first rasterizer peeks at primitives from positions at or near the input side of the primitive FIFO and rasterizes the primitives, making texture requests but not receiving any texels back and not producing any pixels. The second rasterizer removes primitives from the FIFO output and makes the identical requests at a later time, receives the texels from the texture cache controller, and produces the pixels. The depth of the primitive queue combined with the number of pixels per primitive determines the potential time difference between the two request streams.

In approach (2), the single rasterizer processes primitives and makes texture requests and outputs partially complete pixel data into a pixel FIFO. This partial pixel data includes all data that is necessary to finish computing the pixel once the texture requests are honored. At the output side of the pixel FIFO, the partial pixel is completed, which produces the identical stream of texture requests, receives the texels, and produces completed pixels. The depth of the pixel queue determines the potential time difference between the two request streams.

### *The Texture Cache Control*

The texture cache control has two conceptual caches: the virtual cache, and the physical cache. The virtual cache is associated with the first (pre-fetch) request stream, and has no data directly accompanying the cache entries (requests to this cache do not return any data). The physical cache is associated with the second (actual) request stream, and has real texture data accompanying each cache entry (and thus returns data to the requester). These caches have the same number of entries.

The virtual cache controls and tracks the future contents of the physical cache, thus at any position in its request stream it has a set of cache key and entry associations which the physical cache will have at the same relative position in its request stream (at a future time).

Upon receiving a request (a new 'key'), the virtual cache performs the comparison against its current set of keys. If the requested key is not in the virtual cache, then a cache replacement operation is performed. The virtual cache replacement includes 1) selecting an entry for replacement (via LRU or some other algorithm), 2) replacing the key for that entry, and 3) invoking the (memory and) decompression subsystem to begin the process of fetching and decompressing the data associated with that key. The particular implementations shown in Figs. 9B and 9C, the decompression subsystem includes the command and memory control 380, compressed cache 416, and decompression engine 404.

The output of the decompression subsystem is a block of texture data which is then placed into an entry in the physical cache (the texture cache 402, for example). In the tiler shown in Figs. 9B and C, processing performed by the decompression subsystem is performed in a multi-entry pipeline in which serial order is maintained.

Note that if the requested key was already in the virtual cache, then no action is required because the associated data will be in the physical cache at the time it is requested from the second request stream.

Requests to the physical cache result in a similar key comparison to see if the requested data is already in the cache. If a matching key is found, then the associated data is returned. If a match is not found, then the next data output by the decompression subsystem is guaranteed to be the desired data. Note that the physical cache does not perform any replacement entry selection processing - the entry in the physical cache replaced by this new data is dictated by the virtual cache via a cache entry 'target' index computed by the virtual cache controller and passed through the decompression subsystem with the requested data.

Correct functioning of the scheme requires that flow control be applied to the interface between the decompression subsystem and the physical cache. If decompressed data is allowed to overwrite its targeted entry in the physical cache immediately upon being available, it is possible that all of the references to the previous contents of that cache entry may not have been completed. (Note that the physical cache controller also may have to wait for data to be output by the decompression subsystem.)

This flow control is accomplished by waiting until the new entry is requested before overwriting the previous entry's contents. Placing new data into the texture cache is thus always deferred until the last moment until it is needed.

Since this replacement is deferred until it is needed, any time required to place the data into the physical cache can introduce latency into the process driving the second request stream. Two schemes for alleviating this latency are as follows.

The first scheme is to double buffer data in the physical cache. This allows the decompression subsystem to immediately write each entry's data into its side of the double buffer, and the physical cache controller can do a (presumably fast) buffer swap to map the data into its side of the cache. The decompression subsystem only has to wait if the entry to be filled is already full and has not been swapped yet. Note that the cache replacement algorithm used by the virtual cache controller will tend to not repeatedly overwrite the same entry, thus 'spreading out' the writes to the cache entries.

The second scheme is for the physical cache to have one or more 'extra' entries in addition to the number of 'keyed' entries. The number of keyed entries is the number for which cache keys exist, and matches the number of entries in the virtual cache. The number of extra entries represents the number of entries which are unmapped (i.e. not currently keyed). The sum of these is the total number of data entries in the physical cache.

In the second scheme, all cache entries can transition between unmapped to mapped (associated with a key). The set of unmapped entries forms a FIFO of entries into which the decompression subsystem writes completed blocks of data. A separate FIFO structure is maintained for the target indices associated with these unmapped entries. When a request to the physical cache is made for which a matching key is not present, the first entry in the queue of unmapped of entries is mapped in to the targeted index and associated with that key. The replaced entry is unmapped and placed (empty) at the end of the unmapped queue.

Cache Key Generation

The basic premise of the scheme is that two identical streams of requests are generated. It is not a requirement, however, that the specific keys which are associated with these requests be identical.

The cache keys which form the first (early) stream of requests are used to control the reading and subsequent decompression of texture data. These keys must have some direct relevance to the requested data (such as a memory address).

The cache keys which form the second (later) stream of requests do not need to precisely match the content of the first stream - it is only a requirement that there be a unique one-to-one mapping between the two. This is due to the fact that the keys for the second stream are used only for matching existing cache entries, not for any data fetching operation. The critical fact here is that the association between the physical cache's key and a cache entry is made when the new data is mapped in to the physical cache, and the index of the associated entry is computed by the virtual cache and passed through the decompression subsystem.

This fact can be exploited to simplify the controls for the process which is generating the keys for the second request stream, since the keys for the stream need only be unique and not precisely 'correct'.

FIG. 12A is a block diagram illustrating the gsprite engine 436 on the image processing board 174. The gsprite engine 436 is responsible for generating the graphics output from a collection of gsprites. It interfaces with the tiler memory interface unit to access the gsprite data structures in shared memory. Gsprites are transformed (rotated, scaled, etc.) by the gsprite engine and passed to the compositing buffer where they are composited with pixels covered by other gsprites.

Interface control 438 is used to interface the gsprite engine with the shared memory system via the tiler. This block includes a FIFO to buffer accesses from the memory before they are distributed through the gsprite engine.

The display control 440 processor is used to control the video display updates. It includes a video timing generator which controls video display refresh, and generates the timing signals necessary to control gsprite accesses. This block also traverses the gsprite display data structures to determine which gsprites need to be read for any given 32-scanline band.

The gsprite header 442 registers store gsprite header data which is used by the image processor address generator 454 and gsprite filter engine 456 to determine the transformations on each gsprite. It is also used by the gsprite header decoder 444 to determine the blocks ( in this case, the 8 x 8 compression blocks) required to render the gsprite in each band.

The gsprite header decoder 444 determines which blocks from each gsprite are visible in the 32-scanline band and generates block read requests which are transferred to the gsprite read queue 446. This block also clips the gsprite to the current band using the gsprite edge equation parameters. This process is described in more detail below.

The gsprite read queue 446 buffers read requests for gsprite blocks. This queue stores requests for sixteen blocks, in this embodiment.

The gsprite data address generator determines the address in memory of the requested gsprite blocks and sends gsprite read requests to the interface control block. The gsprite data address generator 448 includes a memory management unit.

Compressed data retrieved from shared memory 216 (FIG. 4A) can be temporarily stored in the compressed cache 458.

The decompression engine 450 includes two decompressors, one which implements a DCT based algorithm for continuous tone images such as 3-D gsprites and images, and the other which implements a lossless algorithm for desktop pixel data. The DCT based algorithm is implemented by two parallel decompression blocks, each of which can generate eight pixel elements (i.e. 2 pixels) per clock cycle.

The gsprite cache 452 stores decompressed, gsprite data (R G B∝) for sixteen 8 x 8 blocks. The data is organized so that 16 gsprite pixels can be accessed every clock cycle.

The image processor address generator 454 is used to scan across each gsprite based on the specified affine transformation and calculate the filter parameters for each pixel. Gsprite cache addresses are generated to access gsprite data in the gsprite cache 452 and feed it to the gsprite filter engine 456. The image processor address generator 454 also controls the compositing buffer.

The gsprite filter engine 456 calculates the pixel color and alpha for pixel locations based on the filter parameters. This data is transferred to the compositing buffers for compositing. This block 456 computes a 4 or 16 pixel filter kernel based on the gsprite s and t coordinates at a pixel location. The filter may, for example, either be bilinear or a more sophisticated sum-of-cosines function. The 16 pixel filter kernel can have negative lobes allowing much sharper filtering than is possible with bi-linear interpolation. The gsprite filter engine 456 generates four new pixels to be composited every clock cycle. These pixels are aligned in a two by two pattern.

The gsprite engine 436 interfaces to the tiler 200 and the compositing buffer 210. Control signals control video timing and data transfer to the DAC 212.

Fig. 12B is a block diagram of an alternative implementation of the gsprite engine 437. This particular implementation includes both a pre-rasterizer 449 and rasterizer 454 so that the gsprite engine can convert gsprite pixel data from gsprite space to screen space without incurring the latency in retrieving and decompressing blocks of gsprite pixel data. The dual rasterizer approach used in this implementation is described above in connection with Fig. 11 and 9C.

The operation of the blocks in the gsprite engine 437 is generally the same as described above for Fig. 12A except that this implementation uses the dual rasterizer method for fetching blocks of texture data. In this implementation (Fig. 12B), the gsprite header decoder 444 reads the gsprite header register 442, clips the gsprite to the current display band, and places the gsprite in the gsprite queue 447 for rasterization. The data address generator or "pre-rasterizer" 449 scans each gsprite based on the specified affine transform in the gsprite header and generates read requests to the gsprite cache control 451. Using a method described above in connection with the texture cache control, the sprite cache control 451 ensures that the required gsprite data blocks are in the gsprite engine 437 and specifically in the gsprite cache 452 when the image processor block 455 needs them. It manages the flow of gsprite data blocks from the compressed cache 458, through the decompression engine 450, and into the gsprite cache 452. The read queue 453 buffers requests for gsprite data blocks to the shared memory system, and the interface control 438 reads the requests in the read queue 453, controls accesses to shared memory, and places blocks of gsprite data in the compressed cache 458.

The decompression subsystem in the gsprite engine includes the compressed cache 458 and decompression engine 450. The cache control 451 controls the flow of gsprite blocks through this decompression subsystem as described above in connection with the texture cache control.

The image processor address generator (rasterizer) 454 scans each gsprite based on the specified affine transform in the gsprite header and calculates the filter parameters for each pixel. It also generates gsprite cache addresses of gsprite data, which it sends to a cache address map in the gsprite cache for use by the gsprite filter engine 456. In one specific implementation of the cache, the cache address map selects which 14 pixel blocks are active and which two blocks are filled from the decompression engine.

The gsprite filter engine 456 maps color and alpha data at pixel locations in gsprite space to screen space. In this implementation, it applies either a 2x2 or 4 by 4 filter kernel to compute pixel values (color or both color and alpha) at pixel locations in screen space. The compositing buffer control 457 passes pixel values, in this case four pixels per clock tycle, to the compositing buffer. The compositing buffer control 457 monitors the ready line from the compositing buffer to ensure that the gsprite engine 437 does not overrun the compositing buffer. The rasterizer 454 controls the compositing buffer control 457.

FIG. 13 is a block diagram illustrating the compositing buffer 480 on the image processing board 174. The compositing buffer 480 is a specialized memory device that is used to composite gsprite data from the gsprite engine and generate digital video data to transfer to the DAC 212. The compositing buffer operates on 32 scanlines at a time - compositing gsprites for one 32 scanline band while the previous 32 scanlines are displayed.

The compositing logic 482 is responsible for calculating the pixel values as they are written into the scanline buffer. This is accomplished by performing a blending operation between the pixel value that is currently stored in the scanline buffer and the one that is being written to the compositing buffer. This operation is described in more detail below. In one implementation, the compositing logic performs four parallel pixel operations per clock cycle.

The memory control 484 is used to control the address and cycling of the memory banks. Address information is passed in a row column format as with normal DRAMs.

The alpha buffers 486 include an eight bit value for each of 1344 x 32 pixels. The memory is organized such that four contiguous pixels can be read and written each clock cycle. The alpha buffer also has a fast clear mechanism to quickly clear the buffer between 32-scanline band switching.

Two independent scanline butters 488 are provided. The scanline buffers include three eight bit color values for each of 1344 x 32 pixels. The memory is organized such that four contiguous pixels can be read and written each clock cycle. One buffer is used to transfer the pixel data for a band to the DAC while the other is used to composite the pixels for the next band. Once the band has been completed, their functions swap.

A multiplexer is used to select data from one of the two scanline buffers 488 and sends the pixel display data to the DAC. The multiplexer switches between buffers every 32 scanlines.

The compositing buffer 480 interfaces to the gsprite engine 204, and transfers image data to the DAC 212.

FIG. 14 is a block diagram illustrating the DAC 514 on the image processing board 174. The DAC 514 implements the basic functions that are common to most RAMDACs on the market today. The DAC includes logic for reading and writing internal control registers, and for pipelining the video control signals. Additional functional blocks are described below.

The pixel data routing block 516 is used to control the routing of pixel data from the compositing buffers. In the normal operating mode, this data is passed at pixel rates to the Color LUTs 518 for each of the three channels. This block also allows the data to be read back to the DSP for diagnostic purposes.

The stereo image splitter 520 supports two separate video signals for stereoscopic display using a head mounted display system. In this mode, the two video channels (522, 524) are interleaved from the compositing buffer, and must be split out by the DAC 514. The stereo image splitter 520 performs this function on the DAC 514. In the normal single channel mode, the LUT data is passed directly to the Primary DACs.

Alternatively, the DAC 514 can be designed to generate a single video output. With a single video output, the DAC can generate a stereoscopic display using a line interleaved format, where one scanline for one eye is followed by the scanline for the other eye. The resulting video stream has a format such as 640x960, for example, which represents two 640x480 images.

The clock generator 526 is used to generate the video and audio clocks. These clocks are generated by two phase locked clock generators to eliminate synchronization drift. The clock generator can also be slaved to a control signal from the Media Channel, allowing the image processing board to sync to an external sync source.

Having described the structure and operation of the image processing system above, we now describe various components and features of the system in more detail. We begin with an introduction to the data structures that can be used in the system to implement concepts introduced above.

**Chunking**

Unlike conventional graphics systems which use a large frame buffer and Z-buffer in RAM to store color, depth, and other information for every pixel, our system divides objects in a scene among image regions called "chunks" and separately renders object geometries to these chunks. In one embodiment, objects are rendered to gsprites. The gsprites are sub-divided into chunks, and the chunks are rendered separately. While our description refers to several specific embodiments, it should be understood that chunking can be applied in a variety of ways without departing from the scope of the invention.

A few examples will help illustrate the concept of chunking. As shown in FIG. 15A an object 546 in a graphics scene is enclosed by a box called a bounding box 548. Turning to FIG. 15B, an object 550 in the graphics scene enclosed by a bounding box can be rendered to an image region called a gsprite 552. The bounding box may be rotated, scaled, expanded or otherwise transformed (e.g. affine transformed) to create a gsprite in screen space. Once the bounding box has been generated. if the bounding box does not fall on a 32 pixel boundary (i.e. the chunk boundary) 554, the bounding box is expanded in both the X and Y directions around the object to become an integer multiple of the 32 pixel chunk size. As can be seen from the object 550 in FIG. 15B, a bounding box drawn around the object 546 that was shown in FIG. 15A, is expanded to 32 x 32 pixel boundaries in FIG. 15B. The gsprite is then subdivided into 32 x 32 pixel "chunks" 556 before rendering. However, other smaller or larger chunk sizes and alternatively shaped chunks could also be used. However, rectangular and most preferably square shaped chunks are illustrated.

As is shown in FIG. 15C, a graphics scene 558 will contain a number of overlapping objects (560, 562). These objects are enclosed in bounding boxes and are assigned to gsprites (564, 566). The bounding boxes shown in FIG. 15C have already been expanded (and rotated, scaled, and otherwise transformed) to 32 pixel multiples to allow 32 x 32 chunks 568 to be generated. However, as can also be seen from FIG. 15C, the gsprites and their corresponding 32 x 32 pixel chunks boundaries 570 typically will not line up exactly on 32 pixel screen boundaries 572 so additional gsprite manipulation is required during chunking so the gsprite can be translated into screen space.

One approach to creating gsprites which will be rendered using chunking is to combine a number of objects to create a larger composite gsprite instead of creating and rendering a number of smaller individual gsprites that contain the geometries of the individual objects. This combination of gsprites saves processing time during rendering and is often desirable if the objects combined do not change very often within a graphics scene. Another approach to create gsprites is to target components of an object with complex geometries, and then sub-divide these complex geometry components into a number of gsprites. This sub-division may require extra processing time, but is used to improve the output resolution of a particular complex object that changes frequently. A combination of both of these techniques may also be used on some objects.

Consider for example a character in a video game whose arms are covered by a number of spikes of different sizes, and the arms move frequently. The body and head and other parts of the character may be combined to form a larger composite gsprite since these parts of the object don't change frequently. However, the characters arms, which are covered with spikes and represent complex geometries and change frequently, are sub-divided into a number of gsprites to improve the output resolution. Both the combination and the sub-division are used in this case. Since it is not easy or practical to draw such a character, for the purposes of illustration, a much simpler object, a "coffee cup" is used instead to illustrate the combination and sub-division.

FIG. 16A shows a "coffee cup." This "coffee cup" is actually is composed of a number of separate objects. For example "coffee cup" can be look at to actually consist of a cup container, a cup handle, a saucer, and fumes coming out of the cup. One approach would be to combine this individual objects into a large gsprite (i.e. a "coffee cup") as is shown in FIG. 16A. Another approach would be to sub-divide the "coffee-cup" into a number of smaller objects (e.g. cup container, cup handle, saucer, and fumes) and create smaller individual gsprites as is shown in FIG. 16B. FIG. 16B also illustrates how an object with complex geometries might be sub-divided.

Treating the "coffee cup" 574 as one simple object as is shown in FIG. 16A, the individual components (e.g. cup container, cup handle, saucer, fumes) of the object can be combined to create one large gsprite. In this case, a bounding box 576 would be drawn around the object to transform the object to screen space and create one large gsprite. The bounding box may be rotated, scaled, expanded or otherwise manipulated to create a gsprite which falls on 32 x 32 pixel boundaries in screen space. The gsprite is then divided into a number of 32 x 32 pixels chunks 578.

One way to divide a gsprite into chunks is to loop through all the geometry contained in the objects, and place the geometries into chunks. Another approach loops through the chunks recording all geometries which touch the chunk being considered. The illustrated embodiment uses the second approach, however the first and other approaches can also be used. As can be seen from FIG. 16A, a number of chunks will be empty (i.e. not be touched by any object geometries). These chunks can be ignored during rendering as will be explained below.

Now, treating the "coffee cup" as a complex object, the object is sub-divided into smaller object components which are processed to create a number of smaller gsprites as is shown in FIG. 16B. For example, the "coffee cup" object includes the cup container without the handle 579, the cup handle 580, the saucer 581 and the fumes 582 sub-objects. Each of these sub-objects would be enclosed by bounding boxes shown by 583-586 respectively to create four individual gsprites. The "coffee cup" including the four individual gsprites would also be enclosed by a enclosing bounding box as is shown by 587. Each of these bounding boxes may be rotated, scaled. expanded or otherwise transformed (e.g. affine transformed) to create a gsprite which falls on 32 x 32 pixel boundaries in screen space. Each individual gsprite is then divided into a number of 32 x 32 pixels chunks. The enclosing bounding box 587 is also divided into chunks and contains areas of empty chunks 588 which are ignored during rendering. However, chunks of the enclosing bounding box are not illustrated in FIG. 16B.

As a result of chunking, the graphics image is not rendered as a single frame, but is rendered as a sequence of chunks that are later aggregated to a frame or view space. Only objects within a single gsprite that intersect the 32 x 32 pixel chunk of the image currently being drawn are rendered. Chunking permits the frame and Z-buffer to of be a small physical size in memory (i.e. occupy significantly less memory than in the traditional graphics systems described above), and achieve a high degree of utilization of the memory that is occupied, as well as increasing memory bandwidth. The small chunk size also allows more sophisticated rendering techniques to be used, techniques that could not be applied efficiently on large frame and Z-buffers.

Rendering of chunks is performed on the tiler. However, rendering could also be performed on other hardware components or using software. VLSI memory on the tiler chip is used to store the small chunks (32 x 32 pixel) of the frame currently being rendered. The on-chip VLSI memory is much faster and has a much larger memory bandwidth than external RAM. However, because of the chunking process, a large amount of memory to store the whole frame buffer and Z-buffer for the rendering process is no longer required. The internal memory within the tiler is used only to process the current chunk, and then it is re-used over and over for each subsequent chunk that is processed. As a result, the available internal memory is well utilized during the graphics rendering.

Using internal VLSI memory also eliminates pin driver delays that normally occur due to off chip communications as well as overhead associated with performing READ and WRITE operations to the large external memory required for conventional frame and Z-buffers. In addition, the small chunk size allows more sophisticated anti-aliasing (e.g. fragment buffers) and texturing schemes to be performed on the chunk than could be performed on a full frame and Z-buffer stored in a large amount of external memory because an entire 32 x 32 pixel chunk can be completely rendered in the illustrated embodiment before the next chunk is computed. The small chunk size also lends itself well to image compression techniques that will be described in more detail below.

After all intersecting polygons have been drawn into the chunk and the fragments resolved, the pixel data including color and opacity are compressed in the tiler chip and then moved to external memory.

The flowchart in FIGS. 17A and 17B show a high level overview of how a graphics scene is partitioned into chunks. First, one or more bounding boxes are generated for each object. (592) (FIG. 17A). If the object has complex geometry (e.g. finely tessellated, etc.) (594), then a number of bounding boxes are generated to enclose each of the object's complex components (to create a plurality of gsprites) (596). If the object geometry is not complex, then a single bounding box can be used to enclose the object and create a gsprite (598). However, if the object is complex, then the single bounding box will also enclose the plurality of bounding boxes that were created to enclose the object's complex components. If the bounding box or boxes are not an integer multiple of 32 pixels (600), then the bounding box(es) is/are expanded symmetrically in the X or Y directions (or both directions) to become an integer multiple of 32 pixels. The object (and object components if the geometry is complex) is/are then centered in the bounding box (602). This is illustrated by the gsprites shown in FIGS. 15B and 15C. The symmetric expansion is preferable, though not required, as it provides the best balance of processing between chunks in a single gsprite.

Returning again to FIG. 17, the gsprites are then divided into 32 x 32 pixel chunks (604) (FIG. 17B). As is apparent, these chunks are not at fixed locations in the view space, but are at addressable and variable locations depending upon the location of the chunked object. After dividing the gsprites into chunks, the chunks are processed. If the rendering of chunks is complete (606), the process ends. If the rendering of chunks is not complete, processing of the next chunk is started, after first examining to see if it is empty (608). If the chunk is empty, then it is not processed, and the next chunk is examined. If the chunk is not empty, then rendering (610) of the chunk continues in the tiler until all objects impinging on the chunk have been processed. This process continues until all chunks in each gsprite and all gsprites have been processed.

Gsprite sizes may be expressed as a percentage of the total screen area. Background gsprites will be quite large, but other components of the scene are usually quite a bit smaller than the total screen area. The performance of any chunking scheme used is sensitive to the screen space size of the primitives in the gsprites. As a result, it is necessary to properly regulate (e.g. queue) the object data input stream that is used to create the gsprites. Proper regulation of the object data input stream allows object processing to be completed at a higher bandwidth, and increases system throughput.

Our system uses a command stream cache to cache the object data input stream. The command stream cache can be used to cache the entire contents of a gsprite, and then iterate over every chunk and its associated geometries in the gsprite stored in the cache.

The cache can be also used for selective caching. For example, defining a threshold so that geometric primitives are automatically cached if they touch a certain number of chunks. If a cache is available, then virtual chunking can be done. In virtual chunking, a chunk bucket is created which corresponds to regions of N x M chunks with each region being a virtual chunk. Virtual chunking allows for adaptive sizing of the virtual chunks appropriate to the contents and the size of the geometry being processed.

Another use for the cache is modified scene graph caching. Instead of caching and referring to static portions of the scene, caching is done and dynamic portions of the scene are referred to through indirection. For example, suppose a gsprite contained a cuckoo clock with fairly complex geometries. The clock itself is quite complex, but the only moving parts are a bird, two doors, and two clock hands. Further, each of these geometries is rigid and unchanging. Thus, the rendering of the clock involves six static trees and six transformations (i.e. one for the clock, bird, 2 doors, and 2 clock hands). If the cache is large enough, the entire scene graph is transformed into a command stream. On rendering, the current transformations are patched over the cached command stream, and the resulting command stream is launched against all of the chunks in the gsprite. The patched portions of the command stream are the same size across all renderings. A more flexible approach is to insert a call command in the cached static scene graph. On rendering, the dynamic portions are written and cached to memory of varying sizes. Addresses of these dynamic portions are then patched into the associated call command in the static command stream. This approach is more flexible since the size of the dynamic command can vary from rendering to rendering. Thus, the effect of this approach is a memory-cached callback approach. In the case of the cuckoo clock, it would mean writing six transformations, and possibly a callback for the bird geometry so that it could be empty if the doors are closed. This approach is extremely compact with respect to bus bandwidth and lends itself to quick, directed traversal of the scene graph.

Even though the cache memory is limited, some geometries or attributes may remain cached across many renderings. For example, in a car racing game, caching a car body geometry would result in a significant overall savings across renderings. Likewise, common attribute states (or sub-states) could be reused across many gsprites or rendering of a single gsprite. As was just described, using a cache within a chunking scheme can result in some significant time savings. However, adequate chunking performance might also achieved without the command stream cache by generating a command stream on the fly for each touched chunk in the gsprite.

In the implementation of the tiler shown in Figs. 9A-9C, chunks are used sequentially to render an entire frame on one processor, rather than using multiple simultaneous chunks on parallel processors to share the computational load. Although less preferred, a combination of serial and parallel processing of chunks could also be used. Using a completely parallel processing implementation of chunks, an object moving across the screen would necessarily require constant chunking operations as it moved across the screen. However, in the illustrated embodiment of the invention, because of the serial processing of chunks, an object can be fixed at the chunk boundaries in a gsprite and thus NOT require chunking as the object moved across the screen. The parallel processing rendering of chunks also does not allow sophisticated anti-aliasing and texturing schemes to be applied to individual chunks as is the case for serial rendering of chunks. The chunk size and sequential rendering is very valuable for image compression techniques since an entire 32 x 32 pixel chunk is rendered before the next chunk is computed, and thus can be compressed immediately.

The purpose of image compression is to represent images with less data in order to save storage costs and/or transmission time and costs. The less data required to represent an image the better, provided the image can be reconstructed in an adequate manner. The most effective compression is achieved by approximating the original image rather than reproducing it exactly. The greater the compression, the more of an approximation ("lossy compression") the final image is going to be.

The process of chunking is itself a compression technique. Objects are approximated with one or more gsprites which in turn are created from number of 32 x 32 pixel chunks. The actual object is approximated with gsprites and reconstructed from rendered gsprites. The reconstruction of the original object depends on how effectively the object was approximated by dividing it into gsprites and then chunking it (e.g. using the complex object geometry division techniques described above).

The individual 32 x 32 chunks are also compressed using image compression techniques. A compressed 32 x 32 pixel chunk takes up less space in the small amount of internal memory available. The 32 x 32 pixel chunks can be broken down into sixteen 8 x 8 pixel chunks which is the size commonly used in image compression techniques that employ discrete cosine transformations (DCT).

In one implementation, the compression and decompression engines on the tiler and the decompression engine on the gsprite engine support both lossy and lossless forms of compression/decompression. The lossy form includes a lossless color transform from RGB to YUV, a DCT, uniform or perceptual quantization, and entropy coding (Run length and Huffman coding). The lossless form includes a color transform from RGB to YUV, a prediction stage, and entropy coding as performed in the lossy form.

In order to dramatically reduce memory requirements to process graphics images using chunking, a small Z-buffer (e.g. about 4 kilobytes (kb) is used in the illustrated embodiment. Specifically, the z-buffer in this implementation is slightly less than 4 kb (1024x26), but the number of bits of precision can vary. However, a Z-buffer of other larger or smaller sizes could also be used. Using a small 4 kb Z-buffer allows only 1024 pixels to be Z-buffer rendered at any one time. In order to render scenes (e.g. scenes composed of gsprites) of arbitrary size using a 4 kb Z-buffer, the scene is broken up into chunks of 32 x 32 pixels in size (there are usually several gsprites in a scene, but each gsprite is broken into chunks). In this scheme, the image pre-processor sends the appropriate geometry to each chunk in a gsprite to be Z-buffer rendered.

As an example of how chunking works. consider the eight objects and their associated geometries shown in FIG. 18A. For simplicity the eight objects 612-619 are defined by a single attribute 620 (e.g. color) which can have one of four values A-D. The eight objects are then overlapped in a graphics scene as is shown in FIG. 18B. Ignoring individual gsprites and their creation, but concentrating instead on four isolated chunks for the purposes of illustration, the four isolated chunks 621-624 are shown in FIG. 18B. The four isolated chunks 621-624 (FIG. 18B) are touched by geometries 1-8, and attributes A-D as is illustrated in FIG. 19A. Chunk 1 630 (FIG. 19A) is touched by geometries 1, 2, and 5 and attribute B, chunk 2 639 is touched by no geometries and attributes A-D, chunk 3 632 is touched by geometries 2, 4, 7, and 8, and attributes A, B, D, and chunk 4 634 is touched by geometries 4 and 6 and attributes A, C. An example of a partial scene graph built by image pre-processing (using the chunks shown in FIGS. 18B and 19A) is shown in FIG. 19B. The attributes (e.g. color, etc. shown by A-D, X) of each chunk are shown as circles 638, and the geometry (e.g. of the various shapes, shown by 1-8) is shown as squares 640. The letter X denotes the default value for an attribute. The intermediate nodes contain attribute operations to apply to the primitive geometry. The leaf nodes in the scene graph contain primitive geometry which are to be applied to the chunks, and may also contain bounding volumes around the geometry the chunks describe (leaf nodes with bounding volumes will be described below).

One approach for a chunking scheme is to iterate over every chunk and send the full geometry each time. Another more optimal approach is to send only geometry that is visible in the current chunk (note that the optimal case also skips geometry that is obscured or otherwise invisible). The actual method used in our system to chunk a gsprite in 32 x 32 pixel block falls between these two extremes and is called Bucket-Chunking. However, other schemes which fall at or between the two extremes may also be used to create chunks for a chunking scheme.

The Bucket Chunking scheme consists of two passes. The first pass traverses the scene graph while maintaining the current transform to view space with the goal of building up a descriptive command stream for each chunk in the view space. The view space is broken up into N x M chunk buckets, which in the end will each contain a list of the geometries that fall across the corresponding chunk. When a geometry-primitive node is encountered the current transform is applied to the bounding volume to yield a 2-D "footprint" on the view space. For each chunk touched by the footprint, the geometry (and accumulated attribute state) is added to the corresponding bucket. At the completion of this first pass. each bucket will contain the necessary data to render the corresponding chunk. Note that this chunking scheme is sensitive to the quality of the calculated footprint - a loose bound on the object will yield a larger footprint, and hence will hit chunks not touched by the enclosed geometry. A tight bound on the object will yield a smaller footprint, and will hit most chunks touched by the enclosed geometry.

As an example of the first pass, consider a sub-set of four chunks which contain overlapping objects described by geometries 1-8, and attributes A-D, X shown in FIG. 19A. One approach for traversing the scene graph in pass one is to maintain the current state for each chunk, and then skip the geometry that does not fall inside a given chunk. This ensures that the attribute context for every geometry in every chunk is up to date. Using this approach on the scene graph in FIG. 19B gives the following command streams in the chunk buckets after pass one:

Chunk 1 Bucket: X, A, B, 1, 2, 5, A, X, C, D, C, X
Chunk 2 Bucket: X, A, B, A, X, C, D, C, X
Chunk 3 Bucket: X, A, B, 2, 7, 8, A, 4, X, D, 3, C, X
Chunk 4 Bucket: X, A, B, A, 4, X, C, 6, D, C, X

Another approach is to retain the current attribute state, and send the state prior to sending each accepted geometry. This results in the following command streams in the chunk buckets:

Chunk 1 Bucket: B, 1, B, 2, B, 5

Chunk 2 Bucket: <empty>
Chunk 3 Bucket: B, 2, B, 7, B, 8, A, 4, D, 3
Chunk 4 Bucket: A, 4, C, 6

The second approach is an improvement over the first approach. Note that the attribute B is specified a second and third unnecessary time before geometries 2 and 5. This behavior is also manifested in chunk 3 for B for geometries 7 and 8. In reality, the situation is worse than portrayed here, because a dump of the current attribute state means that each and every attribute will be re-specified for each geometry. In other words, even if the texture transformation matrix is invariant for the whole scene graph, it will still be sent prior to each and every geometry in every chunk.

Therefore, this particular approach addresses attribute maintenance for overriding attributes and for composing attributes instead. Diffuse color is an overriding attribute. As is defined by the image pre-processor (e.g. image pre-processing software e.g. running on the image preprocessor 24, etc.) which produces the scene graph, attributes applied to red(blue(cube)) will result in a red cube. This is in contrast to other image pre-processor graphics interfaces that bind the closest attribute to the object. Binding the closest attribute to the object for red(blue(cube)) would result in a blue cube.

Using the outermost attribute as an overriding attribute greatly simplifies attribute maintenance for attributes. During scene graph traversal, once you hit an attribute node, you can ignore all nodes of that attribute type below it in the scene graph, since the top most attribute overrides them all.

A local transformation is a composing attribute. Thus, the current value is defined by the previous value and the new value. The composing attribute requires some sort of stack as the scene graph is traversed to store previous values.

The Bucket Chunking scheme uses the following structures:

- The attribute node, which contains the current value.
- The traversal context. This is a structure that contains, for every overriding attribute, a pointer to the current attribute value.
- A grid of buckets, each of which contains a command-stream buffer and a bucket context structure of the same type as the global traversal context.
- A list of default attribute values, each of which can be referred to by the traversal context.

For initialization, the context is placed in the default state, so that all attributes refer to the default context. Default values are loaded lazily, rather than dumped *en masse* prior to sending the rendering commands for each chunk.

```
Initialize Attribute Maintenance:
for each attribute: attr
        for each bucket: bucket
                bucket.context(attr) ⇦ nil // Clear context for each bucket
        end
        context[attr] ⇦ default[attr]  // Initialize to default values
end
```

The following dictates how to process a given attribute node:

```
Process Attribute:
if context[attr] ≠ default[attr]
        ProcessGeom()   // Attr already set, ignore subsequent value.
else
        context[attr] ⇦ SetAttr (attr,value) // Set to new value.
        ProcessGeom()
        context[attr] ⇦ SetAttr (attr,default[attr])
endif
```

The process for handling geometry nodes synchronizes the current traversal state with the attribute states of each bucket:

```
Process Geometry:
geomCommand ⇦ ConvertGeometry (geom)   // Convert to Command Stream.
for each touched bucket: bucket
        for each attribute: attr
                if (bucket.context(attr) ≠ context(attr)
                        bucket.context(attr) ⇦ context(attr)
                        append (bucket, context(attr))
                endif
        end
        append (bucket, geomCommand)
        end
```

Composing attributes work in a similar manner to the overriding ones. with the exception that a stack is maintained during traversal. This is accomplished by using the nodes for the storage of the stack values. This method requires the following structures:

- The current attribute node, which contains the composition of the previous values with the new value.
- The traversal context. This is a structure that contains, for every composing attribute, a pointer to the current attribute node.
- A list of default attribute values, each of which can be referred to by the traversal context.
- A grid of buckets, each of which contains a command-stream buffer and a bucket context structure of the same type as the global traversal context.

The initialization for composing attributes looks the same as for overriding attributes:

```
Initialize Attribute Maintenance:
for each attribute: attr
        for each bucket: bucket
```

```
            bucket.context(attr) ⇦ nil   // Clear context for each bucket
        end
        context[attr] ⇦ default[attr]   // Initialize to default values
    end
```

Processing a composing attribute node involves the composition of the new value with all values prior to the current node in the traversal. Note that in order to implement a stack of values, the prior value must be saved and restored.

```
Process Attribute:
node.ComposedValue ⇦ Compose (context[attr], node.Value)
SavePtr ⇦ context[attr]   // Save previous composed value.
context[attr] ⇦ node
ProcessGeom()
context[attr] ⇦ SavePtr   // Restore the previous composed value.
```

The geometry-handler is identical to the overriding attribute case:

```
Process Geometry:
geomCommand ⇦ ConvertGeometry (geom)   // Convert to Command Stream.
for each touched bucket: bucket
    for each attribute: attr
        if (bucket.context(attr) ≠ context(attr)
            bucket.context(attr) ⇦ context(attr)
            append (bucket, context(attr))
        endif
    end
    append (bucket, geomCommand)
    end
```

The second pass of the Bucket Chunking scheme iterates over the grid of buckets and spits out the corresponding command stream. For every non-empty bucket, the corresponding chunk is rendered from the information stored in that bucket. Note that there may be empty buckets in the scene, which means that not every chunk in the gsprite must be rendered. For most active gsprites. which will consist of an opaque object on a transparent background, a good number of chunks should be empty.

The approach to maintaining attribute state described above is particularly well suited for rendering geometry in a chunked fashion. Chunking causes sets of geometry to be rendered in a different order than was originally specified. For instance, in rendering a chunk, the rendering system skips geometric sets that do not intersect with the chunk. Therefore, at the lower level of chunked geometric rendering, at most two levels of state should be maintained: 1) a global state in a format compatible with the tiler or alternative rendering hardware to allow rendering of the geometry; and 2) small state overlays within a set of geometry that apply only to that set of geometry. With this approach, each set of geometry can be rendered independently of any other, and rendering a set of geometry can be considered side-effect free.

## Image Compression

As was described above, the chunk size and sequential rendering is very valuable for image compression techniques since an entire 32 x 32 pixel chunk is completely rendered before the next chunk is computed, and thus can be compressed immediately. The tiler supports a lossy and lossless form of compression to compress chunks. Both the lossy and lossless form of compression compress chunks in independent blocks of 8 x 8 pixels, so each compressed 32 x 32 pixel chunk would consist of 16 such compressed blocks.

Compression of images allows much smaller memory size requirements and vastly reduced memory bandwidth requirements. The design uses a combination of caching, pre-fetch strategies, as well as chunking to reduce the latencies and overhead due to compression and block access. Since the entire image is computed in a 32 x 32 pixel buffer, gsprite image compression is achieved with minimal overhead. The overall conceptual design of the compression architecture is shown in FIG. 20.

The transformation engine 660 (FIG. 20) calculates model and viewing transformations, clipping, lighting, etc. and passes this information to the tiler 662. As the tiler processes transformation information, it reads texture data from texture memory 664. The texture data is stored in a compressed format, so as the texture blocks are needed, they are decompressed by the tiler decompression engine 666 and cached in an on-chip texture cache on the tiler. As the tiler resolves pixel data it transfers the resolved data to the tiler compression engine 668 which compresses the resolved data and stores the compressed data in gsprite memory 670. When the gsprite engine 672 needs the compressed gsprite data, it uses the gsprite decompression engine 674 to decompress the gsprite data from gsprite memory 664 and cache the data on an on-chip gsprite cache. In the actual hardware, the texture memory 664 and gsprite memory 670 are identical (i.e. the compressed data is stored in one memory shared by the various engines). Common shared memory is not required as long as the compression and decompression methods used are compatible. The gsprite data can also be taken from a data base or some other image source 676 and saved in the texture memory 664 and the gsprite memory 670.

One implementation of the invention supports both lossy and lossless compression and decompression of pixel blocks.

The lossy form of image compression has two stages: a lossy first stage, and a lossless second stage. The lossy form of compression begins with an optional color space conversion from red, green, blue (R, G, B) intensity values to luminance (Y) and chrominance (U and V, also referred to as Cr and Cb) values. The lossy stage includes a direct cosine transform (DCT) and a quantization that reduces the accuracy of certain frequency components.

The second stage is a lossless form of compression comprising Huffman coding and run length encoding (RLE). Alternative coding methods such as arithmetic coding can be used in place of Huffman coding.

Decompression for the lossy method includes a decoding stage, a dequantization of the compressed data, an inverse DCT, and an optional color space conversion from YUV to RGB.

The lossless form of compression includes an optional lossless color space conversion from RGB to YUV, a prediction stage, and a lossless encoding stage. This encoding stage can be identical to the entropy coding stage in the lossy form of compression. Decompression for this lossless method comprises a decoding stage, an inverse prediction step on each color component, and an optional color space conversion from YUV to RGB.

## Lossy Compression/Decompression

One specific implementation of the lossy compression method in the compression engine 414 (Figs. 9A-C) of the tiler occurs in four or five steps:

1. Convert the RGB data input to a YUV-like luminance-chrominance system (optional).
2. Perform a forward, two-dimensional discrete cosine transform (DCT) individually on each color component.
3. Order the two-dimensional DCT coefficients in approximately a monotonically increasing frequency order.
4. Quantize the DCT coefficients: Divide by either a uniform divisor or a frequency-dependent divisor.
5. Encode the resulting coefficients using Huffman encoding with fixed code tables.

Lossy decompression occurs in four or five steps:

1. Decode the compressed data input using Huffman decoding with fixed code tables.
2. Dequantize the compressed data: Multiply by the uniform multiplier or the frequency-dependent multiplier used in the quantization step of compression.
3. Reorder the linear array of data into the proper two-dimensional order for DCT coefficients.
4. Perform an inverse. two-dimensional DCT individually on each color component.
5. Convert the colors in the YUV-like luminance-chrominance system to RGB colors, if the compression process included the corresponding optional step.

*Color Space Conversion*

The color space conversion transforms the RGB colors to a brightness-color system with brightness coordinate Y and color coordinates U and V. This luminance-chrominance system is not a standard color space. Using this system improves the degree of compression because the color coordinates require only a small fraction of the bits needed to compress the brightness. The lossless, reversible conversion applies to each pixel independently and does not change the value of alpha.

RGB to YUV (for compression)

The conversion from integer RGB values to integer YUV values uses this transformation:

$$Y = (4R + 4G + 4B)/3 - 512$$

$$U = R - G$$

$$V = (4B - 2R - 2G)/3$$

YUV to RGB (for decompression)

The conversion from integer YUV values to integer RGB values uses this transformation:

$$R = (((Y + 512) - V)/2 + U + 1)/2$$

$$G = (((Y + 512) - V)/2 - U + 1)/2$$

$$B = ((Y + 512)/2 + V + 1)/2$$

*Discrete Cosine Transform*

Images and textures are pixels that contain the amplitudes for three colors and the amplitude for opacity. The pixel positions correspond to a spatial location in an image or texture map. An image or texture in this form is in the spatial domain. For images or textures, the discrete cosine transform (DCT) calculates coefficients that multiply the basis functions of the DCT. Applying the DCT to an image or texture yields a set of coefficients that equivalently represent the image or texture. An image or texture in this form is in the frequency domain.

The DCT maps the amplitude of the colors and opacity of an 8 by 8 pixel block between the spatial domain and the frequency domain. In the frequency domain, adjacent coefficients are less correlated, and the compression process can treat each coefficient independently without reducing the compression efficiency.

The forward DCT maps the spatial domain to the frequency domain, and conversely, the inverse DCT maps the frequency domain to the spatial domain. One suitable approach for the forward and inverse DCT is the approach described in Figures A.1.1 and A.1.2 in *Discrete Cosine Transform*. Rao, K. R, and P. Yip. San Diego: Academic Press, Inc., 1990.

The two-dimensional DCT produces a two-dimensional array of coefficients for the frequency domain representation of each color component. Zigzag ordering rearranges the coefficients so that low DCT frequencies tend to occur at low positions of a linear array. In this order, the probability of a coefficient being zero is approximately a monotonically increasing function of the position in the linear array (as given by the linear index). This ordering simplifies perceptual quantization and LOD filtering and also significantly improves the performance of the run-length encoding (RLE).

*Quantization*

Quantization reduces the number of different values that the zigzag-ordered DCT coefficients can have by dividing the coefficients by an integer. Depending on the value of the compression type parameter, quantization can be either uniform or perceptual. Neither case modifies the DC frequency coefficient (index = 0), but instead passes it along unaltered.

The quantization process begins with the specification of the quantization factor for an image or portion of an image. In this implementation, a quantization factor is specified for a 32 x 32 pixel chunk. A quantization index (QIndex) specifies a corresponding quantization factor (QFactor) to use for the chunk. The following table shows the relationship between QIndex and Qfactor.

| Quantization Factor | | | |
|---|---|---|---|
| **Qindex** | **QFactor** | **Qindex** | **QFactor** |
| 0 | 2 | 8 | 32 |
| 1 | 3 | 9 | 48 |
| 2 | 4 | 10 | 64 |
| 3 | 6 | 11 | 96 |
| 4 | 8 | 12 | 128 |
| 5 | 12 | 13 | 192 |
| 6 | 16 | 14 | 256 |
| 7 | 24 | 15 | 4096 |

Each color plane has a different value for the chunk QIndex. A QIndex of 15 selects a QFactor of 4096, which produces zeros during quantization and inverse quantization. The quantization process divides each coefficient in a block by a QFactor and rounds it back to an integer. The inverse quantization process multiplies each coefficient by a QFactor. Quantization and inverse quantization do not change the DC frequency component.

*Block Quantization Factor*

The QIndex, and thus the QFactor, can vary from block to block (8x8 pixels). The QIndex for a block results from incrementing the QIndex for the chunk with a value embedded in the block compression type:
Block QIndex = Chunk QIndex + (Block Compression Type - 3)
This increments the chunk QIndex by one, two, three, or four. Because the largest possible QIndex value is 15, any incremented value greater than 15 is set to 15.

The QIndex, and thus the QFactor, can also vary from coefficient to coefficient (from array index to array index) if the quantization type is perceptual.

For uniform quantization, the coefficient QIndex is equal to the block QIndex, so the corresponding QFactor either multiplies (inverse quantization) or divides (quantization) each coefficient in the block.

For perceptual quantization, the coefficient QIndex depends on the value (0...63) of the index in the linear array. The following table gives the resulting coefficient QIndex as a function of the array index value.

| Coefficient QIndex | Array Index |
|---|---|
| Block QIndex | index < 12 |
| Block QIndex + 1 | 12 ≤ index < 28 |
| Block QIndex + 2 | 28 ≤ index < 52 |
| Block QIndex + 3 | 52 ≤ index |

*Entropy Coding*

Huffman/RLE coding processes the linear array of quantized DCT coefficients by:

1. Independently encoding non-zero coefficients with the fewest possible bits (because the DCT coefficients are uncorrelated).

2. Optimally encoding continuous "runs" of coefficients with zero values—especially at the end of the linear array (because of the zigzag ordering).

One suitable approach for the Huffman/RLE coding process is the Huffman/RLE coding process used for the AC coefficients in the well known JPEG still image compression standard.

To enable random access of blocks, this particular approach does not encode the DC frequency coefficient (index = 0), but instead passes it on unaltered.

The algorithm computes a series of variable-length code words, each of which describes:

1. The length, from zero to 15, of a run of zeros that precedes the next non-zero coefficient.
2. The number of additional bits required to specify the sign and mantissa of the next non-zero coefficient.

The sign and mantissa of the non-zero coefficient follows the code word. One reserved code word signifies that the remaining coefficients in a block are all zeros.

*Encoding*

The encoding of all blocks uses the typical Huffman tables for AC coefficients from Annex K, section K.3.2 of ISO International Standard 10918. This includes Table K.5 for the luminance (Y) AC coefficients and Table K.6 for the chrominance (U and V) AC coefficients.

*Decoding*

The decoding of all blocks uses the same fixed tables as the encoding process. Therefore, it is never necessary to store or to convey the Huffman tables with the data.

**Lossless Compression\Decompression**

In the compression engine 414 in the tiler, lossless compression occurs in two or three steps:

1. Convert incoming RGB data to a YUV-like luminance-chrominance system (optional).
2. Perform a differential prediction calculation on each color component. Encode the resulting coefficients using Huffman encoding with fixed code tables.

Lossless decompression in the decompression engines 404, 450 in the tiler and gsprite engine occurs in two or three steps:

1. Decode the incoming compressed data using Huffman decoding with fixed code tables.
2. Perform an inverse, differential prediction (reconstruction) on each color component.
3. Convert the colors in the YUV-like luminance-chrominance system to RGB colors if the compression process included this corresponding optional step.

*Color Space Conversion*

The color space conversion reversibly transforms the RGB colors to a brightness-color system with brightness coordinate Y and color coordinates U and V. This is a unique color space that improves the degree of compression even more than the YUV system above because the numbers entering the Huffman/RLE encoder are smaller, and hence more compressible. The color space conversion applies to each pixel independently and does not change the value of alpha.

*RGB to YUV (for compression)*

The conversion from integer RGB values to integer YUV values uses this transformation:

$$Y = G$$

$$U = R - G$$

$$V = B - G$$

*YUV to RGB (for decompression)*

The conversion from integer YUV values to integer RGB values uses this transformation:

$$R = Y + U$$

$$G = Y$$

$$B = Y + V$$

Alpha information is not altered during the color space transform.

The color space transform can be bypassed. The decompressor is notified in cases where the color transform is bypassed by a flag in a gsprite control data structure.

The prediction stage occurs after the color space transform. Prediction is a losslessly invertible step that reduces the entropy of most source images, particularly images with lots of blank space and horizontal and vertical lines.

In the prediction stage of compression and the inverse prediction stage of decompression:

1. p(x, y) are the pixel values input to the compressor and output from the decompression engine; and
2. d(x, y) are the difference values input to the coder in the next stage of the compression engine and output from the inverse of the coder in the decompression engine.

Prediction is computed as follows:

$$d(x, y) = p(x, y) \qquad \text{for } x=0, y=0$$

$$d(x, y) = p(x, y) - p(x, y-1) \qquad \text{for } x=0, y>0$$

$$d(x, y) = p(x, y) - p(x-1,y) \text{ for } x>0$$

Inverse prediction in the decompression engine is computed as follows:

$$p(x, y) = d(x, y) \qquad \text{for } x=0, y=0$$

$$p(x, y) = p(x, y-1) + d(x, y) \qquad \text{for } x=0, y>0$$

$$p(x, y) = p(x-1,y) + d(x, y) \qquad \text{for } x>0$$

The Huffman/RLE coding and decoding is the same as for the lossy form of decompression/decompression in this implementation.

The compression methods described above compress images in independent blocks of 8 x 8 pixels. Therefore, in the chunking architecture described above, each compressed 32 x 32 pixel chunk consists of 16 such blocks. To facilitate compression of a 32 x 32 pixel chunk, the anti-aliasing engine 412 resolves pixel data into 8 x 8 pixel blocks. The 8 x 8 pixel blocks are buffered such that a first buffer is filled while a second buffer is compressed.

**Controls and Parameters**

As introduced above, the tiler (Figs. 9A-9C) renders gsprites one chunk at a time. These chunks are comprised of pixel blocks (in this case, 16 8x8 pixel blocks). For texture mapping, shadowing, and some multi-pass rendering operations, the tiler fetches gsprite or texture blocks from memory. To compose a frame. the gsprite engine (Fig. 12A-B) fetches gsprite blocks, transforms pixels to screen space, and composites pixels in a compositing buffer.

There are a number of control parameters that govern processing of gsprites, chunks. and blocks. A gsprite display list stores a list of gsprites comprising a display image. This display list includes pointers to gsprites, and more specifically, gsprite header blocks. As described further below, the gsprite header block stores a number of attributes of a gsprite including gsprite width, height, and an affine transform defined in terms of a screen space parallelogram. The gsprite header block also includes a list of its member chunks. In one implementation, this list is in the form of pointers or handles to chunk control blocks.

Chunk control blocks include per chunk and per block parameters. The per chunk parameters include a YUV color converter bypass, default Q factors, a perceptual quantization flag, pixel format, and whether the pixel data resides in memory managed in Memory Allocation Units (MAU) in linear memory. An MAU is a piece of shared memory used to allocate chunk memory. MAU managed memory includes a list of MAUs (124 bytes for example), each MAU having a pointer to the next MAU. In one specific implementation for example, the chunk control blocks are stored in sequential MAUs for each gsprite.

The per block parameters include compression type, number of MAUs the block spans, and a block pointer pointing to the first byte of pixel data for the block. The specific block format is an 8x8x4 array of pixels that encode 32 bit pixels (8bits for RGB and Alpha).

The steps for retrieving a pixel given (X,Y) coordinates in a gsprite using the above control parameters include:

1) Divide Y and X by 32 to derive the chunk row and column, respectively.
2) Form the chunk number by: (chunk row) * (width of sprite in chunks) + chunk column.
3) Form the Chunk Control Block offset by: (chunk number) * (size of chunk header block))
4) Form the Block offset within the Chunk Control Block by: (Y<4:3> * 4 + X<4:3>) * 3.
5) Send the Block pointer to the Decompressed cache logic, receive a Block.
6) Form the pixel offset within the Block by (Y<2:0> * 8) + X<2:0>

Here, a chunk offset is used to select a chunk. A block offset is then used to select a block pointer. The block pointer selects a block containing the pixel, and the pixel offset selects the pixel.

To access the block for a given pixel among compressed blocks of pixel data, the cache controls on the tiler and gsprite engine perform the following steps:

1) Form the MAU address by looking up the Block pointer value in the Chunk Control Block, and dividing by the size of the MAU.
2) Look up the number of MAUs allocated in the Chunk Control Block for this block.
3) Look up the next Block pointer address in the Chunk Control Block.
4) Form the length of the compressed block by: MAUs allocated * MAU size + 2's complement of ((Block pointer) mod MAU size) + (next Block pointer) mod (MAU size)
5) Send the block address and the length of the compressed block to the Compressed Cache logic.

The compressed cache will read the first MAU, and if the length of the transfer has not been satisfied, then the pointer contained in the MAU will be used to access the start of the next MAU. This process continues, until the transfer length has been met.

To support MIP map texture operations, the tiler supports another level of indexing. One method for indexing a MIP map level includes the following steps:

1) For a given sprite, form a table of mip chunk level offsets by:

```
mipChunkOffset[0] = 0          \\ Offset for level of detail 0
For each level of mip map:
  mipChunkOffset[level+1] = width of sprite/(2^level) * height of sprite/(2^level)
                            + mipChunkOffset[level]
```

2) Use the LOD parameter to get the mip chunk offset.

At this point, the mip chunk offset, width af spritel(2^level), and height of sprite/(2^level) can be used to find any desired chunk within the chosen level of detail for the current gsprite.

**Gsprites**

Above, we introduced the concept of a gsprite. To recap briefly, one or more objects in the view volume can be assigned to a gsprite. Gsprites can be rendered independently, which enables them to be rendered at different resolutions and updated at varying rates. To reduce rendering overhead, the system can approximate motion of an object by performing an affine transformation on the gsprite instead or re-rendering the object. To display the gsprites comprising a scene, the system composites the gsprites representing objects in the scene. We will explain these and other features in more detail below.

As described above, the system begins by assigning geometry to a gsprite. A gsprite is a two-dimensional region measured in the coordinates of the physical output device. In the implementation detailed below, the gsprite shape is a rectangle, but it can have other shapes as well. Gspntes can be affinely transformed by the gsprite engine (i.e. it can be scaled, translated, rotated, reflected, and/or sheared—any transformation possible with a 2 x 2 matrix plus translation). One application of the 2-D transform is to simulate 3-D movement. Gsprites can be instanced, such that the same gsprite image can appear multiple times on the screen with different transformations. The instancing can apply to rectangular subsets of a gsprite image as well as the entire image. It can also apply on a color component basis, e.g. alpha might come from one gsprite while the color comes from another.

In general, the image preprocessor assigns one object to a gsprite, but more than one object can also be assigned to a gsprite. The image preprocessor combines inter-penetrating or self-occluding objects in a single gsprite. It also aggregates objects based on memory and processing constraints. For instance, the image processor may not be able to composite several independent but overlapping gsprites in the time required by the refresh rate of the output device. In this case, the system can aggregate these overlapping objects into a single gsprite.

After assigning objects to gsprites, the image processor renders the gsprites for the frame. Rendering objects independently enables the system to reduce rendering overhead because it does not have to re-render each object in a scene in every frame. We will elaborate further on this feature below.

To display objects in a scene, the image processor composites gsprites including the objects in the scene. Compositing refers to the process of combining color data from gsprite layers. To support translucency, the image processor also takes into account the alpha values of transformed gsprite pixels as it composites them for display.

FIGS. 21A and 21B are flow diagrams illustrating how gsprites are processed in an embodiment. In the illustrated embodiment, the processing of gsprites spans two frame periods. Objects in a scene are allocated to gsprites and rendered in the first frame period, gsprites in the scene are then transformed and composited in a next frame period.

First, the image preprocessor determines potentially visible objects. In FIG. 21A, we illustrate this process as a series of steps. For a frame, the image processor determines potentially visible objects by traversing a list of objects (696, 698) and determining which objects are potentially visible in a scene, i.e. within a view space.

The image preprocessor then allocates, reallocates, or deallocates gsprites. Allocating a gsprite generally refers to creating a data structure to represent the gsprite in the system. If an object is not potentially visible (700), and the system has not allocated a gsprite for it (702), no additional processing is necessary. If an object is not potentially visible (702), and the system has already allocated a gspritc for it (702), then the image preprocessor deallocates the gsprite for that object (704).

The image preprocessor allocates a new gsprite data structure for potentially visible objects for which the system has not allocated a gsprite (706, 708). In this case, the image preprocessor creates a gsprite data structure and queues image data corresponding to the object for rendering (710). This "queuing" for rendering is represented as adding to a list of objects for 3-D rendering (710). The image preprocessor also calculates an affine transform for the gsprite (714). The affine transform serves two purposes in this embodiment. First, it can be used to approximate motion of the object that it corresponds to in the scene. Second, it can be used to transform a gsprite from gsprite space to the output device coordinates. Gsprite space refers to a coordinate system used in subdividing the object into chunks. The coordinate system used to subdivide the object into chunks can be optimized so that chunk regions most efficiently cover the object transformed to 2-D space.

If an object is potentially visible (700), and the system has allocated a gsprite for it (706), then the illustrated image preprocessor computes an affine transformation (714). As we will explain in further detail below, the affine transformation can be used to approximate the motion of the object. The image preprocessor evaluates the accuracy of this approximation, and if it produces too much distortion (716), the image preprocessor re-allocates a gsprite for the object (708). In this case, the image preprocessor then queues the geometry to be rendered into the gsprite for rendering (i.e. places in the 3-D list) (710), and also adds the gsprite to the display list (718).

If, however, the affine transformation can be used to accurately approximate the object's motion (716 distortion is within a preset tolerance), then there is no need to re-render the object, and the image preprocessor places the gsprite associated with the object in the display list (718).

In the next frame period, the image processor generates the display image. The frame period is illustrated by the dashed line separating steps (718) and (720). The image processor traverses the display list, and transforms the gsprites in the list to the physical output device coordinates (720). The transform to the output coordinates generally includes scanning pixel data from a warped, rotated or scaled gsprite to the pixel locations of output device. The image processor then composites this transformed or "scanned" gsprite data (722). Finally, the image processor converts the pixel data to analog values and displays the image (724).

FIGS. 5A and 5B are flow diagrams illustrating the process of rendering geometry in a chunking architecture. It is important to note that the gsprite concepts described above are not limited to a chunking architecture. FIG. 5A and the accompanying text above provide more description regarding how the image preprocessor determines gsprite configuration from the geometry in a scene. See steps (240-244) and accompanying text. Specifically, objects can be aggregated and rendered into a single gsprite or a small number of gsprites if necessary, due to processing limitations of the image processor. For example, if the tiler, gsprite engine, and compositing buffer cannot process the current assignment of objects to gsprites for a frame at the required frame refresh rate, then data can be passed back to the DSP or host processor to aggregate objects and render multiple objects in a gsprite.

FIG. 6 provides additional infotmation regarding the processing of gsprites in one embodiment. As shown in FIG. 6 and described above, the image preprocessor also determines the depth order of gsprites (280).

When the image preprocessor allocates a gsprite, it creates a data structure to represent the gsprite. The gsprite data structure includes a header for storing various attributes of the gsprite and for keeping track of where related image data is stored in memory. The data structure includes fields to store the size of the gsprite, to represent the edge equations for the edges of the gsprite, to maintain 2-D transform data, and other image attributes.

After determining the gsprite configuration for the view space, the image preprocessor determines which gsprites to render. Instead of rendering all of the objects in a scene, the system can re-use gsprites rendered from another frame. The change in position of an object from frame to frame can be approximated by performing an affine transformation on a rendered gsprite. As shown in FIG. 6, the image preprocessor loops on gsprites (282-286) and computes gsprite transforms (284). In the following section, we elaborate further on gsprite updating and warping of gsprites.

The image processing system can approximate motion of a 3-D object by performing an affine transformation on a rendered, 2-D gsprite representing the object. We refer to the process of performing an affine transformation on a rendered image as "warping," and a gsprite resulting from this process as a "warped gsprite." In one implementation, the process of simulating 3-D rendering of an object includes the following steps: 1) calculating an affine transformation matrix to approximate the geometric motion of characteristic points; 2) measuring the accuracy of the approximation in step 1; and 3) if the accuracy is sufficient, then performing an affine transformation on the gsprite at time $t_0$ to approximate its position at a later time $t$.

FIG. 22 is a flow diagram illustrating the process of performing an affine transform to simulate 3-D motion. To be complete, FIG. 22 shows "select characteristic points" as the first step (744). As will become apparent from the discussion below, characteristic points are typically not selected during image processing, but rather are specified by the author of the geometric model.

The affine transformation used to simulate the motion of an object is computed using characteristic points. Characteristic points are points selected for an object to represent its position or other important image characteristics as they change over time. Since we will refer to characteristic points in world coordinates of a 3-D model and the screen coordinates of the model transformed to screen space, it is helpful to clarify terms that we will use to describe these points. We will refer to characteristic points in screen space as "viewing characteristic points," and we will refer to characteristic points in world coordinates as "modeling characteristic points."

By selecting a representative set of characteristic points rather than considering the entire set of object points, we simplify the calculation of the affine transformation significantly. The number of characteristic points needed to obtain an accurate approximation of an object's 3-D motion varies depending on the model. If the object is a rigid body, characteristic points can be selected from a bounding box enclosing the entire object. If the points defining the bounding box are transformed with the same transformation, then the bounding box points follow the transform of the object geometry.

For objects with more complex motion, more characteristic points may be required to obtain an accurate approximation. For example, an object can be sub-divided into a number of rigid bodies, each with a bounding box approximating its position. If the object is comprised of a hierarchy of rigid bodies with individual moving transformations, then the characteristic points can be derived from the union of the moving sub-object bounding box vertices.

As another alternative, the author of the model can specify characteristic points for the model. This enables the author of the model to specifically identify characteristic points used to approximate the object's 3-D motion. As described further below, the accuracy of the affine transform can be verified according to any of a number of metrics. By enabling the author to specify the characteristic points, the author can specify points most relevant to the metric or metrics used to evaluate the accuracy of the affine transform.

Given a set of characteristic points, an affine transformation can be computed to approximate the change in position of a gsprite from time $t_0$ time $t$. This step is illustrated as step (746) in FIG. 22.

The affine transformation is computed from the viewing characteristic points at time $t_0$ and $t$. Depending on how the characteristic points are selected, the modeling characteristic points represent points on an object or on its bounding box. The position of these modeling characteristic points changes with time according to the modeling transform. To find the viewing characteristic points, the modeling characteristic points are multiplied by the viewing transform. The following discussion will help clarify the process of computing the affine transformation matrix used to transform a 2-D gsprite.

The format of the affine transformation matrix is as follows:

$$S = \begin{bmatrix} a & b & p_x \\ c & d & p_y \end{bmatrix}$$

One metric to check the accuracy of the approximation is the position metric. The position metric refers to the difference in position between the characteristic points at time $t$ and the position of the characteristic points at $t_0$ multiplied by the affine transformation matrix. The general formula for the position metric is as follows:

$$\Sigma_i \|\bar{x}^i(t) - S(t)\bar{x}^i(t_0)\|^2$$

In the case of the position metric, the position of the characteristic points in screen space is most relevant because the difference in position on the screen indicates how accurate the transformed gsprite approximates the motion of its corresponding 3-D model. For other metrics, however, the accuracy of the approximation can be computed in terms of the modeling characteristic points. For the example of the position metric, we consider the screen space points directly. Let

$$\bar{x}^i(t) = V(t)T(t)x^i(t)$$

be the screen space points, where) $V(t)$ is the viewing transform and $T(t)$ is the modeling transform. To compute the affine transformation matrix, a standard least-squares technique can be used. Solving the linear system:

$$[\bar{x}^i(t_0)\ 1]S(t) = \bar{x}^i(t)$$

the standard least-squares solution techniques produce a result that minimizes the position metric.

For the case when there are three characteristic points, the affine transformation matrix can be solved directly. For example, if three points on the axes of a bounding box are used, the result is a closed form expression for the time-dependent affine transformation matrix as shown below:

$$\begin{bmatrix} x^0 & y^0 & 1 \\ x^1 & y^1 & 1 \\ x^2 & y^2 & 1 \end{bmatrix}_{t_0} \begin{bmatrix} a & c \\ b & d \\ p_x & p_y \end{bmatrix}_t = \begin{bmatrix} x^0 & y^0 \\ x^1 & y^1 \\ x^2 & y^2 \end{bmatrix}_t$$

$$S(t) = [X(t_0)\ 1]^{-1}\ X(t)$$

$$[X(t_0)\ \ 1]^{-1} = \frac{1}{D}\begin{bmatrix} y^1 - y^2 & y^2 - y^0 & y^0 - y^1 \\ x^2 - x^1 & x^0 - x^2 & x^1 - x^0 \\ x^1y^2 - x^2y^1 & x^2y^0 - x^0y^2 & x^0y^1 - x^1y^0 \end{bmatrix}$$

where $D = x^1y^2 - x^2y^1 + x^2y^0 - x^0y^2 + x^0y^1 - x^1y^0$

In the general case, a least squares technique such as normal equations or singular value decomposition can be used to solve for the affine transformation matrix. The generalized problem is illustrated below:

$$\begin{bmatrix} x_0 & y_0 \\ x_1 & y_1 \\ x_2 & y_2 \\ . & . \\ . & . \end{bmatrix}\begin{bmatrix} a & c \\ b & d \\ t_x & t_y \end{bmatrix} = \begin{bmatrix} x_0 & y_0 \\ x_1 & y_1 \\ x_2 & y_2 \\ . & . \\ . & . \end{bmatrix}$$

To solve for the affine transformation matrix, the pseudoinverse of an N by 3 matrix has to be computed. For an arbitrary number of characteristic points, we use a least squares technique to solve for the pseudoinverse. In one embodiment, the normal equations method is used.

Let $\tilde{X}$ be the transposed matrix of characteristic points at time $t_0$, and let $X$ be the transposed matrix of characteristic points at time $t$.

$$[\tilde{X}\ 1]\, S = X$$

$$\begin{bmatrix} \tilde{x}^0 & \tilde{y}^0 & 1 \\ \tilde{x}^1 & \tilde{y}^1 & 1 \\ \vdots & \vdots & \vdots \\ \tilde{x}^{n-1} & \tilde{y}^{n-1} & 1 \end{bmatrix}\begin{bmatrix} a & c \\ b & d \\ p_x & p_y \end{bmatrix} = \begin{bmatrix} x^0 & y^0 \\ x^1 & y^1 \\ \vdots & \vdots \\ x^{n-1} & y^{n-1} \end{bmatrix}$$

To solve with the method of normal equations, both sides of the equation are multiplied by the transpose of the fitting matrix, and then the resulting square matrix is inverted. The typical weakness of normal equations is that the resulting matrix is singular, or prone to instability due to round-off error. The matrix will be singular if the characteristic points are degenerate. In the particular form of the matrix, round-off error can be controlled by normalizing the terms.

$$[\tilde{X}\ \ 1]^T\ [\tilde{X}\ 1]\, S = [\tilde{X}\ \ 1]^T\, X$$

$$\begin{bmatrix} \sum_i \tilde{x}^i\tilde{x}^i & \sum_i \tilde{x}^i\tilde{y}^i & \sum_i \tilde{x}^i \\ \sum_i \tilde{x}^i\tilde{y}^i & \sum_i \tilde{y}^i\tilde{y}^i & \sum_i \tilde{y}^i \\ \sum_i \tilde{x}^i & \sum_i \tilde{y}^i & 1 \end{bmatrix}\begin{bmatrix} a & c \\ b & d \\ p_x & p_y \end{bmatrix} = \begin{bmatrix} \sum_i \tilde{x}^i x^i & \sum_i \tilde{x}^i y^i \\ \sum_i \tilde{y}^i x^i & \sum_i \tilde{y}^i y^i \\ \sum_i x^i & \sum_i y^i \end{bmatrix}$$

There are just five terms in the resulting matrix. The 3 x 3 matrix is then inverted to obtain the affine transform. Alternately, since the sum of the x coordinates term and the sum of the y coordinates term correspond to the centroid of the characteristic points, these terms can be eliminated by a change of coordinate system to translate the centroid to 0,0. The resulting matrix is 2 x 2 and easily inverted.

After calculating the affine transformation matrix, the accuracy of the approximation is checked using one or more metrics. Decision step (748) of FIG. 18 illustrates the step of checking one or more metrics and shows generally how the logic branches based on the metric(s). As described above, the position metric is one example of how the accuracy of the affine transformation can be checked. To measure whether the affine transformation satisfies the position metric, the viewing characteristic points at time $t_0$ transformed using the computed affine transformation are compared to the viewing characteristic points at time, $t$.

Another approach is to use the internal rotation of the 3-D model as a metric. In this case, the modeling characteristic points at time $t_0$ transformed using the computed affine transformation are compared with the modeling characteristic points at time $t$.

Yet another approach is to use a lighting metric. Like the metric for internal rotation, the modeling characteristic points are used to check the accuracy of the approximation.

In addition to the metrics described above, there are a variety of other alternatives. To compute these metrics, relevant characteristic data can be maintained along with the characteristic points. A single metric, or a combination of metrics can be used depending on the desired accuracy.

If the characteristic points representing the transformed gsprite are sufficiently accurate, then the transformed gsprite can be used in place of a re-rendered gsprite. To compute the 2-D transform, the gsprite for time $t_0$ is multiplied by the affine transformation matrix (750). In contrast to rendering the gsprite, this computation consumes significantly less processing time. Simulating 3-D motion with a 2-D transform, therefore, can significantly reduce the amount of processing required to render an image.

Based on the accuracy of the approximation, the system can reduce rendering overhead as needed to stay within its rendering capacity for a name of image data. To illustrate the concept generally, FIG. 22 shows that a gsprite is re-rendered if the 2-D transform is not sufficiently accurate (754). However, as will be described in further detail below, it is not necessarily preferred to accept or reject a gsprite based on a metric. Rather, it is often useful to determine how accurate the approximation will be for a number of gsprites in a scene and then re-render as many gsprites as possible.

*Color Warping of Gsprites*

As a further optimization, the rendering system can sample the lighting changes from frame to frame and modify the color values of the gsprite to approximate these changes. This approach includes three principal steps 1) sampling the lighting change between frames; 2) determining how to modify the color values in the gsprite to approximate the lighting change (i.e., compute a color warp); and 3) if sufficiently accurate, performing a color warp on the gsprite to approximate the lighting change. If after evaluating the lighting equation the pre-processor determines that the lighting has changed more than a predefined amount, then it instructs the tiler to re-render the object.

In the first step, the rendering system samples the lighting change for an object associated with the gsprite. It samples the lighting change between a first frame in which an object is rendered to a gsprite, and a subsequent frame in which the rendering system attempts to color warp the gsprite to approximate the lighting change. One way to sample the lighting change is to sample the lighting equation at characteristic points with normals for the first frame and the subsequent frame and compare the results of sampling at each of these frames. The characteristic points should preferably be distributed on the object to provide an accurate sampling of the lighting change across the gsprite. The specific number and location of characteristic points can vary and is generally model-specific.

One example of lighting equation is:

$$I_\lambda = I_{a\lambda}k_aO_{d\lambda} + f_{att}\, I_{p\lambda}[k_dO_{d\lambda}(N \bullet L) + k,\, O_{a\lambda}(R \bullet V)^n]$$

where:

$I_{a\lambda}$ is the ambient light.
$k_a$ is the ambient reflection coefficient.
$O_{d\lambda}$ is the object's diffuse color.
$f_{att}$ is the light source attenuation factor, which describes how the light energy decreases the farther it travels from a light source.
$I_{p\lambda}$ is the light from a point source.
$k_d$ is the diffuse reflection coefficient, a constant between 0 and 1 that varies from one material to another. $O_{a\lambda}$ is the object's specular color.

$k_a$ is the material's specular-reflection coefficient, which ranges from 0 to 1.
(N • L) is the dot product between a surface normal N and the direction of the light source L.
(R • V) is the dot product between the direction of reflection R and the direction to the viewpoint V.
the superscript n is the material's specular reflection exponent, which typically varies from 1 to several hundred.
$\lambda$ indicates that a term having this subscript is wavelength dependent. One assumption to simplify the lighting equation is to assume that the RGB color model can sufficiently model the interaction of light with objects. Using this assumption, the lighting model can be applied to each R, G, and B color component.

The lighting equation above is only an example illustrating one method for computing lighting at points on the surface of an object. The lighting equation can be simplified, for example, by disregarding the light attenuation factor or the specular reflection. In the field of 3D graphics rendering, there are a variety of other conventional lighting equations used to model lighting on the surface of a graphical object. Therefore, any of a number of different lighting equations may be used to sample the lighting at characteristic points associated with a graphical object. In general, the preprocessor computes the lighting equation and determines how the resulting lighting value I (possibly for each RGB component) changes in magnitude from frame to frame.

To evaluate the change in lighting from frame to frame, the image pre-processor computes the lighting equation for characteristic points at a first and a subsequent frame using the surface normal at the characteristic point, the direction of the light source for each frame, and possibly other data associated with the particular lighting equation.

The system can sample lighting change at characteristic points on an object represented by the gsprite or at characteristic points on a bounding volume of the object. One approach to sampling the lighting change is to sample the lighting change on the surface of a bounding volumes of the object. For instance, the system can sample lighting changes at normals on the surface of a bounding sphere of the object or parts of the object. A bounding sphere allows the pre-processor to track the significant variations that might occur due to a local light source being moved within the "space" of an object. If the image pre-processor simply used a set of vectors located at the centroid of an object, the movement of a local light source might not cause significant local illumination changes but may have a significant impact on the lighting of the object as a whole. In these circumstances, the sampling of lighting changes at the surface of a bounding sphere may more accurately capture the lighting changes for the object, which would otherwise be missed by looking selectively at characteristic points on the surface of the object.

As another alternative, a combination of normals at characteristic points on the object or at the surface of a bounding sphere can be used to sample lighting changes. This approach can more effectively track lighting changes because it tracks lighting changes at characteristic points on the object and at the surface of a bounding volume for the object.

Based on the lighting changes, the system can determine how to modify the gsprite color values to approximate these lighting changes. Similar to the geometric transform performed on a gsprite, the system computes how to warp the color values of the gsprite to approximate the lighting change. One way to compute the color warp is to use a least squares fit approach as described above. The result of this step is a constant, linear or higher order warp used to modify (e.g. multiply by a scaling factor and/or add an offset) the color values at pixel locations across the gsprite.

The color warp includes a multiplier or an array of multipliers applied across the gsprite. In the simplest case, the color warp can simply be a constant scale factor applied to all pixels in the gsprite. A more accurate approach is to use a linear or higher order warp to approximate the lighting changes. Preferably, the multiplier is vector-valued so that the color components can be scaled independently. To accurately model changes from colored light sources, each color component should be scaled independently.

In addition to the multiplier, an offset value, added to a color value in the gsprite, can also be computed based on the lighting changes at the characteristic points.

One way to compute the multiplier and offset values is to solve for a multiplier and offset that represents the change in the lighting equation at each characteristic point, whether the characteristic points are located at the surface of the object, at the surface of a bounding volume, or both. The pre-processor can compute a multiplier, an offset, or both by selecting a multiplier or offset, or a combination of a multiplier and offset that causes the same or substantially the same change of the lighting equation at each characteristic point as observed during the sampling stage. Once these multipliers and/or offsets are computed, there are a number of ways to compute the multiplier and offsets applied to color values in the gsprite. One way is to average the multipliers to derive a single scale factor for the gsprite. Another way is to average the offsets to derive a single offset for the gsprite. Still another way is to perform a least squares fit on the multiplier and offsets independently to derive expressions that represents how the multipliers and offsets change with location on the surface of the object. This expression can be implemented in hardware using interpolators to compute independent multipliers and/or offsets for pixel locations in the gsprite. For example, the gsprite engine can include a rasterizer with interpolators to interpolate multipliers and/or offsets for each pixel location before multiplying a color value by the multiplier or adding an offset to a color value or a scaled color value (i.e. scaled by the corresponding multiplier computed for the pixel location).

Just as the system evaluates the accuracy of the geometric warp, the system can also evaluate the accuracy of the color warp by comparing color values computed by color warping with corresponding color values computed for the current frame using the normal rendering process. If the color values differ by more than a predefined tolerance, then the gsprite should be re-rendered.

In addition to reducing rendering overhead, warping of gsprites can reduce transport delay. In applications where the viewpoint perspective changes rapidly, it is difficult to display the rapidly changing perspective because of transport delay. Transport delay refers to the delay incurred between receiving input, which causes a change in viewpoint, and the ultimate display of the appropriate image for that new viewpoint. FIG. 23 illustrates an example of how transport delay can be reduced. The sections along the horizontal axis represent time increments corresponding to frame delay.

In this example, there is a delay of three frame periods between sampling input and displaying output on a display device. First, the input is sampled in a first frame 774. Next, the system computes the affine transforms and renders objects in the gsprites 776. Finally, the rendered image data for the frame is composited and scanned out to the display device 778. While the time required to perform each of these steps is not necessarily an entire frame delay as measured by a frame period, we use the increment of a frame period to illustrate the concept. As illustrated, there are three frame periods of delay between the input and the display of the corresponding image data.

To reduce transport delay, viewpoint data from a subsequent image can be applied at the rendering phase of the current image 782. This is illustrated by the arrow from the input phase for a subsequent image 782 to the gsprite transform and rendering phase 776 of the current image. Processing steps (782, 784, 780) for the next frame of image data are shown adjacent to steps (776, 778) as shown in FIG. 23. As illustrated, processing occurs in a pipeline fashion. Inputs are sampled for a subsequent frame while gsprite transforms are computed and rendering is performed for the current frame.

The modeling transform for the current image can be used in conjunction with the viewing transform for the subsequent image to compute a gsprite transform, which is typically in the form of an affine transformation matrix. A rendered gsprite can then be warped to simulate its position relative to the viewpoint of the subsequent image. This approach decreases the effect of transport delay on the user because it enables the system to more quickly adjust for rapid changes in the viewpoint perspective.

In addition to reducing transport delay in this context, the use of subsequent image data can be used to reduce transport delay in other contexts as well.

As outlined above, there are a number of advantages to rendering gsprites independently. Gsprites can have different update rates, and therefore, the number of gsprites that are updated in a particular frame varies. Some gsprites may need to be updated every frame while other gsprites can be updated less frequently. If a number of gsprites have to be updated in a particular frame, the rendering overhead can increase dramatically and overload the system. To address this problem, the system performs priority queuing, which enables it to distribute rendering among a number of frames and process gsprites more efficiently.

Without priority queuing, the number of gsprites that are scheduled for rendering in a particular frame can vary. For example, some gsprites can have predefined update rates. The update rate for a gsprite can vary depending on whether it is in the foreground or background of a scene. With the support for affine warps described above, the system can avoid re-rendering a gsprite by simulating a change in position with an affine transformation. In the case of affine warps, the need to re-render a gsprite can vary depending on how the scene is changing.

To implement priority queuing, the system prioritizes rendering based on the amount of distortion that would result by re-using a rendered gsprite. The distortion is computed based on one or more error thresholds. To quantify distortion of a gsprite, the system measures how close, or conversely, how far a gsprite is to its error threshold. The error threshold can vary for each gsprite and can be based on one or more factors. A distortion ordered list of gsprites is maintained to represent the relative quality of the gsprites before re-rendering. Then, as many of the gsprites are re-rendered in a frame as possible in view of the system resources. Gsprites are re-rendered starting with the most distorted gsprite and continuing in descending order to lesser distorted gsprites. Processing in this manner eliminates the possibility of a frame overload from gsprite rendering, instead providing an efficient mechanism for balancing scene complexity and motion against gsprite accuracy.

In addition to the features described above, rendering to gsprites enables the system to vary the resolution of objects in a scene. This enables the system to allocate processing and memory resources to gsprites based on their importance in a scene.

The cost of a gsprite can be measured in terms of the memory it occupies and the processing required to render it. Both of these costs are strongly dependent upon the number of pixels in the gsprite image. If gsprite images are stored and rendered at a fixed resolution, the screen resolution, the cost incurred by a gsprite is determined by its screen extent.

It is important to allocate processing and memory resources based on the type and location of an object rather than merely the size it occupies on the screen. Active objects in the foreground of a scene are typically more important to the scene than the background. However, if the gsprite is allocated resources based on size, then the processing and memory cost for the background is much larger due to its greater screen extent.

The system can decouple the screen resolution from the resolution of the gsprite so that the cost of a gsprite may be set independently of its final screen coverage. The system achieves this by choosing the appropriate resolution of the gsprite and then scaling the gsprite to an appropriate size.

The magnification or scaling factor can be derived from the screen extent of the image and the gsprite resolution. Typically, a graphics application supplies the screen extent. The graphics application can also specify the resolution. Alternatively, the image preprocessor can determine gsprite resolution based on the resources available and the relative importance of the gsprite in the scene.

In operation, the image processor renders the gsprite to a smaller area in output device coordinates than it actually occupies in the view space. The size of the area to which the gsprite is rendered is derived from the resolution and the screen extent. The rendered gsprite can then be scaled to its actual size. as defined by its screen extent. Since the gsprite has a smaller area, it consumes less memory and less processing resources for rendering. Moreover, in the illustrated embodiment gsprites of varying resolutions may still be processed in a common graphics pipeline.

One way to support this approach is to store the magnification or scaling factor in the gsprite data structure. The scaling factor can then be used to scale the gsprite before it is composited with other gsprites to generate the display image. The image preprocessor can perform the scaling of the gsprite. More specifically, in the implementation described above the DSP scales the gsprite.

Just as a gsprite can be scaled to reduce resolution, it can also be rendered to one size and then scaled to a smaller display area. This technique can be applied to objects in a scene that are fading in size. Instead of rerendering the object for every frame, the system can scale the gsprite representing the object. This approach can be implemented by storing the scaling factor in the gsprite data structure as well.

Above we have described gsprite processing through an image processing system, and we have also described how a gsprite transform can be computed and applied in an image processing system. We now describe in more detail how to transform, composite and display pixel data.

In this embodiment, the DSP 176 sets up the gsprite data structures and stores them in shared memory 216 on the image processing board 174. The DSP 176 reads and writes to the gsprite engine registers through the tiler via a memory mapped interface. The registers in the gsprite engine include a pointer to the current display list. More detail regarding the gsprite engine 436 is provided above with reference to FIG. 12.

The primary input to the gsprite engine 204 is the gsprite display list. FIG. 24 illustrates an example of the display list 800 and gsprite data structures. In this implementation, the display list 800 comprises an array of gsprite control block addresses called SCB (sprite control block) handles 804, each of which is followed by a band mask 802. The first word in the list 800 includes the number of gsprites in the list. A set bit in the band mask indicates that the gsprite is present in the band. While we provide a specific example here, the display list can be implemented in other ways. For example, the list can be comprised of separate lists for each band, where each band list enumerates gsprites that impinge upon that band. As noted above, the gsprites in the display list are sorted in depth order, and in this case. they are sorted in front to back order.

The gsprite control block (SCB) 806 includes information to scan the gsprite to output device coordinates. Rectangular gsprites map to a parallelogram in screen space under an affine transformation.

The edge equations of the gsprite have the form: $A_0x+B_0y+C_0=F_0$; $A_1x+B_1y+C_1=F_1$; $-A_0x - B_0y+C_2=F_2$; $-A_1x -B_1y+C_3=F_3$. The right hand side of these equations equals zero at the respective edges. The DSP 176 determines the value of the coefficients from the affine transformation for the gsprite. After the affine transformation, the shape of the gsprite is a parallelogram, and thus, only two sets of A and B coefficients need to be stored. The C terms are not needed at all, since the gsprite engine just needs the F values at a start point, and also needs a description of how the F values change with steps in screen space X and Y, which is given by the A and B coefficients. To support the mapping of stored gsprite data to output device coordinates, the sign of the coefficient is set such that when the coordinates of a point inside the parallelogram are evaluated in the edge equation, the result is a positive number.

Specifically, the SCB includes $A_0$, $B_0$; $A_1$, $B_1$; $F_0$, $F_1$, $F_2$, $F_3$; the left most point xs, ys; the rightmost point xf, yf; the slope of left most point to the top of the gsprite, and the slope of the left most point to the bottom; and the width and height of the parallelogram.

The start point for the scan is the leftmost point of the parallelogram, and the scan moves left-to-right column-by-column in screen space. In order to clip the gsprite to each 32-scanline screen band,the SCB also includes the dx/dy slopes from the start (leftmost) point to the top and bottom points of the gsprite, so that the leftmost point on a particular screen band can be determined.

The edge equations of the parallelogram have been normalized on the DSP 176 such that F = 0 at one edge of the parallelogram and F = the gsprite width or height at the opposite edge. Thus the F values for edges 0 and 1 of the parallelogram can be used directly to look up a particular gsprite image sample S, T at a particular screen location X, Y. Since the mapping from a screen X, Y to a gsprite S, T will rarely land directly on a gsprite image sample, the gsprite engine interpolates the nearest 4 (or 16) gsprite image samples to find the output sample.

The SCB 806 includes the size of the original gsprite (horizontal and vertical stride), and the size and location of the subgsprite to scan (width, height, start S and T). It can also include flags describing how the image chunks were compressed and what pixel format is used in the chunks.

In this chunking architecture, the gsprite is divided into 32 x 32 pixel chunks. It is not necessary to divide gsprites into chunks for rendering. However, a chunking architecture has a number of advantages as set forth above. To support the chunking architecture, the SCB includes a two-dimensional array of pointers (chunk handles), which represent the address in shared memory for the first word of the compressed chunk. Chunk memory is managed in 512 bit blocks. Each pointer or chunk handle has 18 bits, allowing a total of 16 MB of addressable memory. Since the amount of memory required to compress each chunk is variable, each 512 bit block contains an 18 bit pointer to the next block. Blocks that are no longer required are added to a linked list of free blocks so that they can be used for other chunks.

When objects allocated to a gsprite are divided into chunks, the gsprite data structure is updated to include a reference to the chunks that include image data for the gsprite.

Gsprite data can be instanced from another gsprite. In the example shown in FIG. 20, one gsprite instances image data from another. Here, the first chunk handle (808) for the SCB points to the SCB 810 of another gsprite. In an alternative implementation, chunk handles only point to locations in memory where chunks are stored.

FIG. 25 is an example illustrating how a six chunk by two chunk gsprite might map onto horizontal bands on the display. FIG. 25 shows the start 836 and end 834 points used in scanning image data from gsprite space to physical output device space. We explain how gsprite image data is mapped to the output device space in more detail below.

After rendering and calculating affine transforms for gsprites in a frame, the image processor then performs display generation. As shown in FIG. 21B, the image processor transforms gsprites to physical output coordinates and composites the gsprites. After compositing pixel data, the image processor transfers it to the display.

In this embodiment, the gsprite engine reads in the display list and maps the gsprite image to output device coordinates. As the gsprite engine transforms the gsprite data, it sends pixel data to a compositing buffer for display. The compositing buffer is preferably double buffered so that composited pixel data can be transferred from one buffer while pixel data is being composited in the other buffer.

More specifically, the gsprite engine reads gsprite AYUV format image data out of shared memory, decompresses, transforms, and filters it, converts it to ARGB format, and sends it to compositing buffer at video rates (e.g. 75 Hz). The compositing buffer composites the decompressed ARGB pixels into a 1344 x 32 frame buffers for display.

FIG. 26 is a flow diagram illustrating how the gsprite engine processes image data. Upon receipt of a frame sync signal (858), the gsprite engine loops through each band (860) for a frame and scans each gsprite in a band (862). After scanning the gsprites for a band, it then moves to the next band (860). The gsprite engine repeats the scanning process for each of the bands in the view space.

Since, in a real time application, the gsprite engine must complete the scan within a time dictated by the frame rate, it is possible that the gsprite engine will not be able to process every gsprite in every band. To help prevent this case, the gsprite engine reports back to the host each frame the free processing time for each band. Using this information, the image preprocessor can aggregate objects as necessary to prevent overloading of any particular band.

In scanning the pixels from gsprite space, the gsprite engine converts the pixel data to the output device coordinates (866). Any of a number of conventional scanning techniques can be used to scan the gsprite to output device coordinates. Either backward or forward mapping can be used. The gsprite engine uses a backward mapping approach in this embodiment.

Using the edge equation data in the SCB, the gsprite engine determines the location for starting the scan on each band by clipping the gsprite to the band. For example, FIG. 25 shows how the edges of the gsprite cross into the third band (830, 832). The intersection points are the start and stop points for the scan of the gsprite in this particular band. One approach to scanning is to scan in a zigzag pattern from the starting point. The starting point in a band can be found by taking the nearest pixel in output device coordinates to the intersection point. Once the starting point is computed, the gsprite engine steps up in increments until it steps outside the gsprite or out of the band. It then steps to the right one column and steps down until it either steps outside the gsprite or out of the band. At each step, it interpolates from pixel data in gsprite space to find a pixel value for a pixel location. As it computes this pixel value at each location, it sends the pixel data to the compositing buffers for compositing.

FIG. 27 is a block diagram illustrating how the gsprite engine and compositing buffers process bands of image data. In this diagram, the term "band" refers to the amount of time (band period) allotted to process a band of pixel data. This time can be derived, in part, from the frame rate and the number of bands in the display device. As shown in FIG. 27, the gsprite engine 204 fills the compositing buffers 210 for a band 888, and this composited image data is then scanned out to the display 892. Using double buffering, these steps can be overlapped for succeeding bands. While the gsprite engine 204 fills a compositing buffer for one band 890, the compositing buffer transfers composited image data for another band to the DAC 212, 892. In the next band period, the band that was just composited is then displayed 894. This process repeats for bands in the display. Because of this double-buffering, the process of transforming and compositing of pixels can occur simultaneously with the process of displaying a band.

Gsprites may be composited in real time to generate the image which is displayed on the output device. The gsprite pixel data generated from the gsprite addressing and imaging processing engine is passed to a compositing buffer. The compositing buffer has two 32 scanline buffers, one used for compositing into and one used for generating the video data for display. The two buffers ping-pong back and forth so that as one scanline region is being displayed, the next is being composited.

The gsprite engine passes the primary color data and alpha data to the compositing buffer for each pixel to be composited. A 32 scanline alpha buffer is associated with the scanline buffer that is being used for compositing. Since the gsprites are processed in front to back order, the alpha buffer can be used to accumulate opacity for each pixel, allowing proper anti-aliasing and transparency.

The scanline color buffer is initialized to 0.0 (all bits reset), white the alpha buffer is initialized to 1.0 (all bits set). For each pixel, the color that is loaded into the scanline buffer is calculating *color(new) = color(dst) + color(src) *alpha(src)*alpha(dst)*. The alpha value that is stored in the alpha buffer is calculated *by alpha(new) = alpha(dst) * (1 minus alpha (src))*. Preferably, the color look up table (LUT) is 256 x 10 bits: the extra bits (10 vs. 8) can be used to provided more accurate gamma correction.

**Tiling**

As outlined above, the image processor (FIG. 1) performs scan-conversion, hidden surface removal, antialiasing, translucency computation, texturing, and shading. In this section we describe scan conversion, hidden surface removal, antialiasing and translucency computation in detail.

FIG. 4B is a block diagram illustrating portions of the image processor 462 for producing rendered image data from geometric primitives. The image processor includes a rasterizer 464, a pixel engine 466, an anti-aliasing engine 468, and a rasterization buffer, which includes pixel buffers 470, and a fragment buffer 472 in this embodiment. The "rasterizer" refers to the part of the image processor that determines pixel values from the geometric primitives, i.e. polygons. The rasterizer 464 reads primitive data and produces pixel data associated with a pixel location. This pixel data includes color, alpha, and depth (distance from the viewpoint). When a pixel is not entirely covered by a polygon, the rasterizer generates pixel fragment data.

As it scan converts a polygon, the rasterizer passes pixel data to the pixel engine for processing. The pixel engine 468 reads the pixel data from the rasterizer and determines which pixel data to store in the pixel and fragment buffers. The pixel buffers 472 are two-dimensional arrays, where the elements in the arrays correspond to pixel locations and include memory for storing color, alpha and depth data. The fragment buffer 470 stores fragment data to represent partial coverage of a pixel.

The pixel engine 466 performs hidden surface removal using depth values generated by the rasterizer and also maintains pixel fragments and translucent pixels for antialiasing and translucency processing. For a given pixel location, the pixel engine retains the nearest fully covered opaque pixel, if any. In this context, "fully covered" means that the pixel is entirely covered by a polygon that is being scan convened in the rasterizer. The pixel engine also retains pixels with translucency (alpha less than 1) and pixel fragments in front of the nearest opaque pixel. The pixel engine stores the nearest opaque pixel for a pixel location in the pixel buffer, and stores in the fragment buffer any fragments or translucent pixels at this pixel location that are in front of the nearest opaque pixel.

After the pixel engine generates pixel data, the anti-aliasing engine 468 resolves the pixel data in the pixel and fragment buffers. The design of the image processor illustrated in FIG. 4B supports double buffering of pixel data and single buffering of fragment data. The pixel engine generates pixel data in one of the pixel buffers, and adds fragment information into the fragment buffer while the anti-aliasing engine resolves the pixel data from the other pixel buffer and fragment data from the fragment buffer. As each fragment is resolved, the fragment entry is added to the fragment free list for use by new pixel data.

Having provided an overview of the process of generating and resolving pixel data, we now describe an embodiment in more detail.

The components of FIG. 4B can implemented on the tiler. The tiler reads primitive data and rendering instructions from the shared memory system 216 (FIG. 4A), produces rendered image data, and stores compressed image data in shared memory. As described above, the basic 3-D graphics primitives in the system are triangles. Triangle rendering provides numerous simplifications in hardware used for graphics generation since the triangle is always planar and convex. However, alternatively n-sided polygons can also be used.

Above we explained the components of the tiler 200. Here we describe the data flow through the tiler in more detail.

Since the tiler receives inputs from the DSP, we begin with a recap of functions of the DSP 176 (FIG. 4). As described above, the DSP 176 can perform front end geometry and lighting calculations required for 3-D graphics. The DSP 176 calculates model and viewing transformations, clipping, lighting, etc. Rendering commands are stored in main memory buffers and DMAed (Direct Memory Accessed) to the image processing board over a PCI bus. The rendering commands are then buffered in the shared memory 216 (FIG. 4A) until needed by the DSP. The rendering commands are read by the tiler 200 (FIG. 4A) when it is ready to perform image processing operations.

As is shown in the flowchart in FIGS. 28A and 28B, the setup block processes primitive rendering instructions read from the shared memory. The vertex input processor parses the input stream (914) (FIG. 28A), and stores the information necessary for primitive triangle processing in the vertex control registers (916).

The two vertex control registers store six vertices, three for each triangle in each register. The two vertex control registers allow for double buffering of triangle information to assure that the setup engine always has triangle information to process.

The setup engine then calculates the linear equations (918) which determine the edge, color, and texture coordinate interpolation across the surface of the triangle. These linear equations are used to determine which texture blocks will be required to render the triangle. The edge equations are also passed to the scan convert block (920) and are stored in the primitive registers within the scan convert block until required by the scan convert engine. The primitive registers are capable of storing multiple sets of edge equations.

The setup engine also passes texture addresses to the texture read queue (922), which buffers requests for texture chunks. The texture address generator then determines the address in memory of the requested texture chunks (924) and sends the texture read requests to the command and memory control block (926) (FIG. 28B), which will fetch the texture data (928) used by the scan convert block.

Texture data is stored in the shared memory (216) (FIG. 4A) in a compressed image format which may be the same format as the image data. The compression format is performed on individual 8 x 8 pixel blocks. The 8 x 8 blocks are grouped together in 32 x 32 blocks for memory management purposes to reduce memory management overhead.

As texture blocks are needed, they are fetched into the tiler, decompressed by the decompression engine (930), and cached in an on-chip texture cache (932). A total of 32 8 x 8 pixel blocks can be cached, although each block stores only one color component. The texture data is cached in an R G B and Alpha format.

The scan convert engine then reads the edge equations from the primitive registers (934) to scan convert the triangle edge information. The scan convert engine includes interpolators for walking the edges of the triangles, interpolating colors, depths, translucency, etc.

The scan convert engine passes texture addresses to the texture filter engine (936). The texture filter engine calculates texture data for the polygons that are being rendered. The texture filter engine computes a filter kernel based on the Z-slope and orientation of the triangle, and on the s and t coordinates. The texture cache attached to the texture filter engine store texture data for sixteen 8 x 8 pixel blocks. The texture cache is also in communication with the decompression engine which will decompress texture data (which is stored in a compressed format) for use by the texture filter engine.

When the texture filtering is completed, the texture filter engine passes the information back to the scan convert engine (938), so it can be used by the scan convert engine for further processing. Along with texture processing, the scan convert engine scan converts the triangle edge data (940) and the individual pixel addresses along with color and depth information are passed to the pixel engine for processing (942).

The method illustrated in FIGS. 28A and 28B varies for the alternative methods described in connection with FIGS. 10 and 11. FIGS. 28C and 28D illustrate a method for accessing image data corresponding to FIG. 10 and 9B. Similarly, FIGS. 28E and 28F illustrate a method for accessing image data corresponding to FIG. 11 and 9C.

Referring first to FIGS. 28C and 28D, this implementation of the method begins in the set-up block 381 in FIG. 9B. The vertex input processor 384 processes the input data stream (947). Next, the vertex control registers 386 buffer triangle data from the input data stream (948). The set-up engine 388 then calculates the edge equations (949) and passes them to the scan convert block 395 (950).

The scan convert block 395 reads edge equations stored in the primitive registers (951) and scan converts triangle data (952). The scan convert engine 398 then writes pixel data including the pixel address, color and alpha data, and coverage data to an entry in the texture reference data queue 399 (953) (FIG. 28D). In the case of texture mapping operations, this entry also includes texture reference data, namely, the coordinates of the texture centerpoint. The entry may also include texture filter data such as level detail or anisotropic filter control data.

From the texture reference data, the texture cache control 391 determines which texture blocks to fetch and causes the appropriate texture block or blocks to be fetched from memory (954).

The texture address cache control 391 sends texture read requests to the command and memory control block 380 (955). The texture read queue 393 buffers read requests for texture blocks to the shared memory system. The memory control 380 fetches the texture data from shared memory, and if it is compressed. places the compressed block or blocks in the compressed cache 416 (956). The decompression engine 404 decompresses compressed image data and places it in the texture cache 402 (957, 958). As described above in connection with FIG. 10, the replacement of blocks in the texture cache proceeds according to a cache replacement algorithm.

To carry out texture mapping or other pixel operations requiring image data in the texture cache, the texture filter engine 401 reads texture addresses from the texture reference data queue 399 (959). The texture filter engine 401 accesses the image data in the texture cache 402, computes the contribution from texture, and combines this contribution with the color and possibly alpha data from the texture reference data queue 399.

The texture filter engine 401 passes pixel data to the pixel engine 406, which then performs hidden surface removal and controls storage of the pixel data to a rasterization buffer.

FIGS. 28E and 28F illustrate a method for accessing image data blocks from memory corresponding to the approach in FIG. 11. In this alternative implementation, the method begins by queuing primitives in the set-up block 383. The vertex input processor 384 parses the input data stream and queues triangle data in the vertex control registers 387 (961, 962). When image data blocks need to be accessed from memory, as in the case of a texture mapping operation, the pre-rasterizer 389 scan converts primitives queued in the vertex control registers 386 to generate read requests for texture data blocks in shared memory (963).

As the pre-rasterizer scans a primitive queued in the set-up block, it passes texture read requests to the texture cache control 391 (964). The texture cache control 391 determines the appropriate texture blocks (965) and transfers read requests to the command and memory control block 380 (989) (FIG. 28F) via the texture read queue 393. The memory control block fetches the requested texture data, and if it is compressed, stores it in the compressed cache 416 (990). The decompression engine decompresses texture blocks in the compressed cache 416 and writes the decompressed image data to the texture cache 402 (991, 992). The texture cache control manages the flow of texture blocks from the compressed cache 416, through the decompression engine 404, and into the texture cache 402

The scan convert block 397 reads the geometric primitives queued in the set-up block. The scan convert block 397 performs pixel generation operations as soon as requested texture data is available in the texture cache 402. In the process of performing these pixel operations, the scan convert engine 398 reads edge equations from the primitive registers (993) and passes texture addresses to the texture filter engine 403 (994). The texture filter engine accesses the appropriate image data stored in the texture cache 402 and then returns filtered data to the scan convert block 397 (995). The scan convert block 397 converts the triangle data and computes output pixel data from converted triangle data and the filtered data (996). It then passes this output pixel data to the pixel engine 406.

The pixel engine 406 performs pixel level calculations including hidden surface removal and blending operations. To perform hidden surface removal, the pixel engine 406 compares depth values for incoming pixels (fully covered pixels or pixel fragments) with pixels at corresponding locations in the pixel or fragment buffers. In shadowing operations, the pixel engine 406 performs depth compare operations to determine the first and second closest primitives to the light source at locations in a shadow map and updates the first and second closest depth values where necessary. After performing the pixel level calculations, the pixel engine stores the appropriate data in the pixel or fragment buffers.

The tiler implements a high quality anti-aliasing algorithm for dealing with non-opaque pixels. The pixel buffer stores the pixel data for the front-most non-transparent pixel for pixel locations in a chunk. The fragment buffer stores pixel fragments for translucent pixels and for partially covered pixels closer to the viewpoint than the pixels in the pixel buffer for corresponding pixel locations. More than one fragment for a pixel location can be stored using a fragment list structure. In a process referred to as resolving, the anti-aliasing engine processes the fragment lists to compute color and alpha values for pixel locations.

To reduce the number of fragments that are generated, the pixel engine implements a method for merging pixel fragments which compares the fragment that is being generated with fragment(s) currently stored in the fragment buffer. If the new and previous fragment's attributes (color and depth) are similar to within a preset tolerance, the fragments are combined on the fly and no additional fragment is generated.

If a combined fragment is found to be fully covered (with a full coverage mask and opaque alpha), then the fragment is written into the color buffer and that fragment location is freed up to use for subsequent polygons within the current chunk.

Once all the polygons for the chunk are rendered, the pixel buffers are swapped. While the anti-aliasing engine resolves the pixel data in the fragment buffer and one of the pixel buffers, the pixel engine writes pixel data for the next chunk in the other pixel buffer and the remaining free locations in the fragment buffer. In general, pixel resolution comprises computing a single color (and possibly alpha) value for a pixel location based on the pixel data in the pixel and fragment buffers corresponding to the location. We provide additional detail addressing these issues below.

In the implementations of the tiler shown in Figs. 9A-9C the pixel engine and anti-aliasing engine have access to a single fragment buffer and a pair of pixel buffers. The two 32 x 32 pixel buffers are provided for double buffering between the pixel engine and the anti-aliasing engine. The pixel buffer entry includes the following data:

| R | G | B | $\alpha$ | Z | P |
|---|---|---|---|---|---|

where R, G, B are the red, green, and blue color components respectively, a is the alpha component which represents the translucency of the pixel, and Z is the depth component which represents the depth of the pixel from the eye point. The x,y address is fixed and implicit in the pixel buffer addressing. Eight bits are used per color component (i.e. Red, Green, and Blue), eight bits are used for the $\alpha$ component, and twenty-six bits are used to store the Z-value, stencil value, and a priority value. Out of this 26 bits, up to 24 can be used as Z values, up to 3 can be used as stencil planes and up to three can be used as priority values. As described above with reference to FIG. 9, the buffer also includes a 9 bit fragment buffer pointer.

The priority value is fixed per primitive and is used to help resolve objects which are coplanar, such as roads on top of terrain, by using priority relationships which are used by the tiling engine to margin the incoming pixel Z-value, as compared to the stored Z-value, during the Z compare operation.

The fragment buffer is used to store information about pixel fragments for polygons whose edges cross a given pixel or for polygons with translucency. Each entry in the fragment buffer provides color, $\alpha$, Z and coverage data associated with the surface.

Multiple fragment buffer entries can be associated with a single pixel (via a linked list mechanism) for cases in which multiple polygons have partial coverage for the same pixel location.. The fragment buffer is dual ported so that it can be operated on by the anti-aliasing engine and the pixel engine in parallel. In one implementation the fragment buffer is a one-dimensional array of fragment records and includes a total of 512 fragment record entries. The memory management of the fragment buffer is performed using a linked list structure. Each fragment buffer entry includes the following data:

| | | | | | | | |
|---|---|---|---|---|---|---|---|
| R | G | B | $\alpha$ | Z | M | P | S |

where R G, B are the red, green, and blue color components respectively, a is the alpha value which represents the translucency of the pixel, and Z is the Z-value which represents the depth of the pixel from the eye point. M is a 4 x 4 pixel coverage bitmask for each pixel which is partially covered. P is a pointer to the next fragment buffer entry, and S is used to represent a fragment stencil. Eight bits are used per color component (i.e. Red, Green, and Blue), eight bits are used for the a component, twenty-six bits are used to store the Z-value plus stencil and priority, and nine bits are used for the fragment pointer P.

The pixel coverage mask is computed by determining a coverage mask value for each edge and bitwise ANDing them together. The computation of the coverage mask is a two step process. The first step is to determine how many of the subpixel bits in the coverage mask are to be turned on, and the second step is to determine which specific bits are to be enabled.

The first step uses the area of the pixel which is covered by the edge to determine how many of the coverage mask bits are to be switched on. This area is computed by a table lookup indexed by the edge slope and distance from the pixel center. The second step uses the edge slope to determine the order in which the sample bits are to be switched on. The set of bit orders is stored in a pre-computed tabled called the 'Coverage Order' table. Each coverage order table entry consists of a specific ordering of the sample bits which is correct for a range of slope values. The edge slope is tested against the set of slope ranges, and the index associated with the range containing this slope value is used as the index into the coverage order table.

A method for computing the coverage mask is described in *Schilling. A.* "*A New Simple and Efficient Anti-Aliasing with Subpixel Masks*", *Computer Graphics*, *Vol. 25*, No. 4, July 1991, pp. 133-141.

### Hidden Surface Removal and Fragment Merging

Above, we indicated that the pixel engine performs hidden surface removal by performing depth compare operations on incoming pixel data. We also noted that pixel fragments can be merged to free up fragment memory. Fragment merging reduces the storage requirements to anti-alias a given scene, and speeds fragment resolution to produce a final image. We now describe an implementation for hidden surface removal which includes merging an incoming pixel fragment with a stored pixel fragment when the incoming fragment is within pre-determined color and depth tolerances of the stored fragment.

Fig. 4B is a block diagram illustrating components in the tiler 462, including a rasterizer 464, pixel engine 466, pixel and fragment buffers 470 and 472. The pixel and fragment buffers serve as rasterization buffers for storing selected pixel data. As the rasterizer scans across a geometric primitive, it generates instances of pixel data. The pixel engine controls Z buffering and also determines whether an incoming pixel fragment can be merged with a pixel fragment stored in the fragment buffer at a corresponding pixel location. The illustrations of tilers shown in Figs. 9A-9C and accompanying text above provide further detail regarding specific implementations of the tiler. The method and hardware for merging pixel fragments described below can be implemented in these tiler designs and alternative designs as well.

As described above, the scan convert block (rasterizer) in the tiler generates instances of pixel data representing: 1) fully covered, opaque pixels; 2) fully covered translucent pixels; 3) partially covered, opaque pixels; or 4) partially covered, translucent pixels.

The pixel buffer stores color, and depth (Z) of the front-most, fully covered opaque pixel. The pixel buffer also stores a pointer to a fragment list, including fragments that have a coverage mask that is not fully covered, or have an alpha that is not fully opaque. The head, or first fragment in the fragment list, is the most recent pixel fragment processed. In this particular implementation, the pixel engine attempts to merge incoming pixel fragments with the most recent pixel fragment. Since there is a certain amount of spatial coherence when rendering polygons, attempting to merge with the most recent fragment generated for a given pixel location increases the probability that the merge will be successful.

The fragment lists for each pixel location are kept in an unsorted form, with the head fragment being the most recent fragment generated for a particular pixel location. The pixel fragments behind the head fragment are left unsorted, but can also be sorted if additional computational time is available to help optimize the fragment resolve phase.

In one alternative implementation, the pixel engine includes additional logic to search fragment lists for a pixel fragment that meets fragment merge criteria. This approach is not preferred because the overhead of the search logic does not justify the incremental improvement in identifying more merge candidates. This is especially true in a real time system where additional clock cycles consumed in the merge process increase the time required to render a frame of animation.

In another implementation, the pixel engine maintains a depth sorted list of pixel fragments and attempts to merge with the fragment closest to the viewpoint for a given pixel location. This last approach is not preferred, however, since it is less likely to find successful merge candidates, i.e. fragments with Z and color values within pre-determined tolerance to the incoming fragment. It does have the potential benefit of simplifying the freeing of additional fragment memory. If a merged pixel is completely covered and opaque, all pixel fragments at that pixel location can be freed since the merged pixel is the closer to the viewpoint than the other pixel fragments stored for the pixel location.

Fig. 29 is a flow diagram illustrating one implementation of hidden surface removal and fragment merging in the tiler. Processing begins with the generation of a new instance of pixel data having color, Z, and coverage mask (968) for a pixel location. If the pixel buffer Z for this pixel location is closer than the Z of a new instance of pixel data (a fully or partially covered pixel)(970), then the new instance of pixel data is completely obscured and is discarded (972). Processing then continues with the next instance of pixel data, as long as the rasterizer has not generated all pixels for the current set of primitives being rendered.

If the pixel buffer Z is not closer than the Z of the new instance of pixel data (i.e. the Z of the new instance of pixel data is closer to the viewpoint), then the pixel engine checks the coverage mask of the incoming pixel (974). In cases where the coverage mask for the incoming pixel is full, the pixel engine replaces the pixel buffer color and Z with the new color, and Z (976). No new pixel data is added to the fragment list in this case, and memory is conserved.

If the coverage mask of the new instance of pixel data is not full, then the pixel engine performs a merge test to determine whether the new color and Z are within pre-determined tolerances of the head fragment color and Z (978). This merge test can also include determining whether the alpha (translucency) of the incoming pixel is within a pre-determined tolerance of the alpha in the head fragment. If the new fragment color and Z are not within the pre-determined tolerances. then a new pixel fragment is added to the fragment buffer at the head of the fragment list (980).

If the new fragment color and Z are within the pre-determined tolerances and the new coverage mask is not full, then the incoming pixel fragment is merged into the head fragment in the fragment list (982). The pixel engine merges the pixel fragments by performing an OR operation on the head coverage mask and the new coverage mask, leaving the result in the head coverage mask.

After combining the coverage masks, the merged head coverage mask is checked to determine whether it represents a fully covered pixel (984), If the merged head coverage mask is not full, then processing continues with the next instance of pixel data (966). If the merged head coverage mask is full, the merged head coverage mask has resulted in full pixel coverage. Therefore, the storage used for the head fragment is freed (986), and the head fragment color. Z, and coverage mask are replaced with the new fragment color, Z, and coverage mask (976).

In cases where the pixel engine replaces an entry in the pixel buffer with a new, fully covered pixel, the pixel engine also frees all pixel fragments in the corresponding fragment list with depth values greater than this fully covered pixel (988). This occurs when an incoming fully covered, opaque pixel has a lower Z value than the pixel buffer entry at the same pixel location. It also occurs when a merged fragment is fully covered, opaque, and has a lower Z value lower than the pixel buffer entry at the same pixel location. In these circumstances, the pixel engine traverses the fragment list, compares the Z of the new fully covered pixel with the Z of the fragments in the list, and frees each fragment with a Z greater than the Z of the new fully covered pixel. Alternatively, the Z buffer could be saved for the packing process. eliminating the need to scan the fragment list and improving real-time performance.

The approach shown in Fig. 29 reduces the memory storage requirements to anti-alias a given scene, and speeds fragment resolution to produce a final graphics image by discarding pixel fragments which are not used. Adjusting the color and Z tolerance allows the number of generated fragments discarded to be balanced against anti-aliasing accuracy depending on the needs of the user. If color and Z are evaluated at the edge of the polygon nearest the pixel center, tighter color tolerances and Z tolerances can be used and still conserve memory.

Fig. 30 is a block diagram illustrating one implementation of fragment merge circuitry used to perform a merge test on incoming pixel fragments. In this implementation, the pixel engine compares the incoming color (RGB), alpha, and depth values with the color. alpha and depth values of the most recent pixel fragment for the pixel location of the incoming pixel. The color, depth and alpha components represented as "new" refer to an incoming or "newly" generated instance of pixel data, while the components represented as "prev." refer to the most recent pixel fragment for a pixel location.

In an alternative embodiment where the pixel engine traverses the fragment list to find a pixel fragment within color and depth tolerances, the components represented as "prev." refer to each of the pixel fragments in the fragment list for the pixel location that are analyzed using the merge test.

The merge test blocks 1000-1008 compare the depth, color and alpha components for new and previous pixel fragments, and if the new and previous values are within a pre-determined tolerance, they output a bit indicating that the new pixel fragment is a merge candidate. The pixel engine then performs a bitwise AND (1010) to determine whether each of the merge tests has passed. If so, the pixel engine merges the new and previous pixel fragments. The pixel engine computes a new coverage mask for the previous fragment by OR-ing the new and previous coverage masks. If any of the merge tests fail, the pixel engine adds the new pixel fragment to the head of the fragment list. This new pixel fragment becomes part of the linked list and points to the previous head of the fragment list.

Fig. 31 is a block diagram illustrating a merge test module 1012 in more detail. The merge test module computes the absolute value of the difference between a new and previous value 1014. A comparator 1016 in the merge test module compares the difference with a reference value stored in a tiler register 1018 and yields a boolean value indicating whether or not the new and previous values are within the pre-determined tolerance. The boolean values output from the merge test modules are input to the bitwise AND block 1010 as shown in Fig. 30. The output of the bitwise AND indicates whether each of the colors, the alpha, and the depth value are within pre-determined tolerances. If so, the pixel engine merges the incoming and head pixel fragments as described above.

As noted above, there are a number of possible variations to the method for merging pixel fragments. In an alternative implementation, the pixel engine can search a fragment list and perform a merge test on each pixel fragment until it: 1) reaches the end of the list; or 2) finds a stored pixel fragment that satisfies the merge test. In another implementation, the pixel engine can maintain the pixel fragments in a sorted form by, for example, performing an insertion sort with each incoming fragment. The pixel engine can attempt to merge an incoming pixel fragment only with the pixel fragment closest to the viewpoint (with lowest z value) or can attempt to merge with several pixel fragments stored for a pixel location.

### Sub-Dividing Image Regions to Prevent Pixel Memory Overflow

As it rasterizes geometric primitives, the tiler stores pixel data in the pixel and fragment buffers. The tiler then resolves this pixel data in a post-processing step. Because the tiler uses a fixed sized memory to store this pixel data, it is possible that it will exceed the memory capacity. To address this problem, the tiler monitors memory capacity and, if necessary, reduces the size of the image portion that is currently being rendered to avoid overflowing the fragment memory.

In one embodiment, the tiler builds the graphics output image by processing a number of 32 x 32 pixel chunks. Fig. 32 is a diagram illustrating a portion of the pixel and fragment buffers. As shown in this example, the tiler resolves 32 x 32 pixel buffer (1118) using an associated 512 entry fragment buffer (1120). In this implementation, the fragment buffer can store up to 512 pixel fragments, which are combined in a later processing stage to form the 32 x 32 pixel output buffer. In using a 512 entry fragment buffer to create a 32 x 32 output pixel buffer, there exists a distinct possibility of running out of fragment memory when rasterizing finely tessellated graphical objects or objects including significant translucency. In these cases, more fragment memory is required to store pixel fragment data for partially covered or translucent pixels. A fragment buffer with 512 pixel entries stores only one half as many pixels as the 32 x 32 output buffer which stores 1024 (32 x 32 = 1024) pixels.

To alleviate the impact of this memory limitation, the pixel memory format in the tiler is structured to support 2 levels of hierarchical decomposition. Fig. 33 is a diagram depicting this hierarchical decomposition. If the fragment memory is exhausted in processing a 32 x 32 pixel buffer, the tiler flushes the pixel and fragment buffers and reprocesses the input stream of primitives for a set of four 16 x 16 pixel sub-buffers (1122). Processing a 16 x 16 pixel buffer with the 512 fragment entry memory system gives two times more fragment entries than desired output pixels, which will handle a vast majority of cases with numerous partially covered or translucent pixels.

If the fragment memory is exhausted in processing any of the 16 x 16 pixel sub-buffers, the tiler flushes the pixel and fragment buffers and reprocesses the input stream of primitives for a set of four 8 x 8 pixel sub-buffers (1124). Each 16 x 16 pixel sub-buffer can be split into four 8 x 8 pixel sub-buffers for a total of sixteen 8 x 8 sub-buffers. Processing a 8 x 8 pixel buffer with the 512 fragment entry memory system gives eight times more pixel entries than output pixels desired, which will handle most conceivable, complex graphics objects. An additional benefit of the 8 x 8 sub-buffers is that they are in the format required by the compression engine used to compress pixel data, so no further pixel buffer decomposition is required before compression.

As each pixel sub-buffer (i.e. either the 16 x 16 or 8 x 8) is successfully processed, the pixels are resolved and sent to the compression engine. Since the tiler processes the 16 x 16 and 8 x 8 sub-buffers in the order of resolving and compression of a complete 32 x 32 pixel buffer, completion of all the sub-buffer processing results in a complete 32 x 32 pixel buffer stored in system memory in a compressed format, without any additional processing requirements.

The buffer decomposition process is applied recursively on-the-fly, to handle demanding cases (e.g. overlapping finely tessellated objects with significant translucency, shadows, and illumination by more than one light source). The following description will illustrate the method.

Fig. 34A-B is flow diagram illustrating a method for buffer decomposition in the tiler. In a pre-processing phase, the DSP generates the input data stream including rendering commands and polygons sorted among image regions called chunks. The DSP then passes an input data stream to the tiler for processing. In response to rendering commands in the input data stream, a rasterizer within the tiler rasterizes polygons in the input data stream to generate pixel data (1130, 1132, 1136).

In this particular example, the flow diagram illustrates that polygons are processed in a serial fashion. However, there are a number of ways to render primitives. The manner in which the primitives are rasterized is not critical to the decomposition process.

As the rasterizer generates pixel data, it monitors the capacity of the fragment buffer. In this implementation, the rasterizer increments a buffer counter for each entry added to the fragment memory and checks the value of the counter as it generates pixel data (1138, 1142). If the value of the buffer counter reaches 512, then the fragment memory is full. At this point, the tiler checks the current chunk size to determine how to sub-divide it (1144, 1150).

In the specific implementation described and illustrated here, memory decomposition is triggered when the fragment memory reaches its capacity, 512 pixel fragments. However, it is also possible to initiate decomposition before the fragment memory reaches full capacity.

If the chunk size is 32 x 32 pixels (1144), then the tiler splits the chunk size into four 16 x 16 pixel chunks (1146). The tiler then clears the pixel and fragment buffers (1146) and starts to rasterize the input stream for the current chunk to the four 16 x 16 sub-chunks (1158). In this implementation, the DSP resends the input data stream for the chunk. Rather than re-sort polygons among the sub-chunks, the tiler processes the input stream of polygons repeatedly for each sub-chunk and rejects polygons that fall outside the respective sub-chunks. As an alternative, the DSP can reprocess the input data stream, sorting the polygons in the stream among the respective sub-chunk regions. This alternative reduces the number of polygons for each sub-chunk, but increases processing overhead in the DSP.

The tiler processes 16 x 16 sub-chunks in a similar fashion (1150, 1152). If the current chunk size is 16 x 16 pixels, then the tiler splits the chunk into four 8 x 8 pixels and clears the pixel and fragment buffers (1152). In this implementation, the tiler does not sub-divide chunks into smaller than 8 x 8 blocks. The capacity of the fragment memory, in this case 512 elements, should be sufficient to handle even finely tessellated and/or translucent objects by sub-dividing image chunks into 8 x 8 blocks. However. the tiler described here is only one possible implementation; the need to sub-divide the size of the image can vary depending on such factors as the complexity of the scene, the form of anti-aliasing and translucency supported, and the memory capacity of the fragment buffer.

If the buffer counter reaches 512 for an 8x8 pixel block, the tiler resolves the pixel fragments associated with the 8 x 8 pixel chunk and performs a buffer swap (1154). After the 8 x 8 chunk is resolved, the tiler checks to see if there are more 8 x 8 pixel chunks (1156). If there are additional 8 x 8 pixel chunks, then processing continues by restarting the polygon processing for the next 8 x 8 sub-chunk (1158).

If no more 8 x 8 chunks remain, then the tiler checks to determine whether there are additional 16 x 16 pixel chunks (1148). When additional 16 x 16 pixel chunks remain, then the tiler restarts polygon processing for any remaining 16 x 16 pixel sub-chunks (1158). If there are no more additional 16 x 16 pixel chunks, then tiler gets the input data stream for the next chunk (1160) and proceeds to process the polygons in it (1158).

If the capacity of the fragment buffer is not exceeded while processing the input data stream for chunk or sub-chunk, the tiler proceeds to resolve the pixel data in the pixel and fragment buffers (1132. 1134). If the tiler completes processing of the input data stream for the current chunk, it then initiates the resolve phase for the chunk or sub-chunk. For instance, if the chunk size is 32 x 32 pixels (1162), then the 32 x 32 pixel chunk is resolved and the buffers are swapped (1164). Processing then continues by obtaining the next chunk (1160) (Fig. 34A).

If the chunk size is 16 x 16 pixels (1166), then the 16 x 16 pixel chunk is resolved and the buffers are swapped (1168). The tiler then proceeds to check whether further 16 x 16 chunks remain (1148). If so, it restarts polygon processing by resending the polygons for the next sub-chunk (1158): If not, it fetches the input stream for the next chunk and starts processing the polygons for that chunk (1160).

If the chunk size is not 16 x 16 pixels, then it is 8 x 8 pixels by default. The tiler proceeds by resolving the 8 x 8 pixel chunk and swapping buffers (1154). The tiler then processes any remaining 8 x 8 sub-chunks, and then any remaining 16 x 16 sub-chunks. After completing processing of any remaining sub-chunks, the tiler proceeds to the next chunk. Processing ultimately terminates when there are no further chunks in the input data stream.

During the chunk processing, data is collected to determine the maximum number of pixel fragments each chunk generates. The number of entries free in the 512 fragment buffer after processing each chunk is also collected. This data is used to help determine when the buffer decomposition should be performed automatically when re-processing an object. For example, if a complex object is being re-drawn a number of times during the course of a game, processing the complex object would automatically turn on buffer decomposition based on the pixel buffer data collected to avoid continuously re-processing the input stream of pixel information.

The buffer decomposition into 16 x 16 or 8 x 8 sub-buffers can also be requested when a known complex (i. e. finely tessellated, etc.) pixel chunk is sent to the tiler. This eliminates the determination of a need for buffer decomposition, flushing the pixel and fragment buffers and reprocessing the input stream when a pixel chunk is already known to be complex and requires intensive processing.

There are at least two alternative methods for re-starting the scan convert process when an overflow is detected. In one method, the pixel engine can instruct the scan convert block to stop when an overflow is detected and then clear all fragment lists in pixel memory for pixel locations outside the sub-chunk to be processed. To accomplish this, the pixel engine finds fragment lists outside the sub-chunk by reading the fragment list pointers in the pixel buffer at the pixel locations outside the sub-chunk and freeing the fragments in the fragment buffer associated with these pixel locations. The scan convert block then continues rasterizing the current set of geometric primitives for the chunk where it left off.

In a second method, the scan convert block starts over after clearing the entire fragment memory. In this case, the scan convert block starts over and begins rasterizing geometric primitives at the beginning of the set of primitives for a chunk.

On-the-fly buffer decomposition provides a way to use a small pixel output buffer, a small amount of fragment buffer memory, and reduce fragment data memory overflow during the processing of graphics objects, even when processing graphics objects that have very complex characteristics (e.g. multiple lighting sources, fine tessellation, translucency, etc.).

Though we have described decomposition in terms of specific embodiments, it should be understood that the invention can be implemented in a variety of alternative ways. It is not necessary to divide image regions in the specific manner described. Rather, image regions can be divided into sub-regions of different sizes. Though a chunking architecture is especially well-suited for image sub-division, a full frame buffer can also be decomposed into smaller regions to reduce fragment memory requirements. The specific types of logic or software used to track memory consumption can also vary. In short, there are a number of possible alternative implementations within the scope of the invention.

### Pixel Post Processing

After the image processor generates fragment data for a pixel location, it then sorts and resolves this fragment data to compute color at that location. As described above, the image processor generates and maintain fragments for partially covered pixels. A pixel is partially covered by a polygon if one or more of the polygon's edges cross the pixel, or if the polygon has translucency. Maintaining fragment data to perform both antialiasing and translucency computations can require a significant amount of memory. As the number of rendered polygons increases, the amount of memory to store pixel data and fragments also increases.

In addition to the increased memory requirements, the amount of processing required to resolve fragments can be significant as well. In a Z-buffer approach, fragment data is depth sorted. In general, the primitive data is not sorted in depth order as it arrives for rendering. Since primitive data arrives in arbitrary depth order, the image processor has to sort the fragment data after generating it. The sorted data is then processed to determine the color and possibly the alpha at a pixel location. At each pixel location, several fragments can contribute to the color. If alpha is also computed the number of fragments and the complexity of processing increases as well.

For the reasons highlighted above, the memory and processing requirements to support advanced antialiasing and translucency can be substantial. There is a conflict between supporting sophisticated antialiasing and translucency computations, on one hand, and reducing memory requirements on the other. To reduce the cost of the system, the use of memory should be minimized, yet advanced antialiasing and translucency features usually require more memory. It is even more difficult to support these advanced features in a real time system while still minimizing memory requirements.

In one embodiment, our system renders primitives one chunk at a time, which reduces memory and allows for fragment resolution in a post processing step. While pixel data is generated for one chunk, pixel data of another chunk can be resolved. A number of benefits impacting fragment sorting and pixel resolution follow from the chunking concept. Memory requirements are significantly reduced because much of the data generated during the rasterizing process does not have to be retained after the image processor has resolved the pixels in a chunk. The image processor only needs to retain the resolved color portion after resolving a chunk.

Another advantage to rendering chunks in a serial fashion is that the pixel and fragment memory can be implemented to reduce the overhead of memory accesses. Typical graphics systems use external memories to implement color, depth and fragment buffers. It is very difficult to organize this external memory to satisfy the rigorous bandwidth requirements of real time image processing. The pixel and fragment memory needed to support rendering of a chunk, such as a 32 x 32 pixel region, does not have to be located in external memory. Instead, it can be implemented on the same hardware that performs rasterizing and antialiasing functions. For example, in the implementation described above, the fragment and pixel buffers can be implemented on a single integrated circuit chip.

The use of on-chip memories simplifies the bandwidth problems associated with external memory. On-chip memories enable efficient use of multiple memory banks. For example, one bank can be used for the pixel buffer, and another bank can be used for fragment records.

Another advantage of on-chip memory is that it is less expensive and easier to implement multi-port memories. The performance of the pixel and fragment buffers can be enhanced through the use of multi-port memories, which allow simultaneous reads and/or writes to achieve one clock per pixel processing rate. Since the fragment buffer is much smaller when chunks are rendered separately, it can be implemented on chip. Both the smaller size of the memory and its presence on-chip make it feasible and cost effective to use multi-port memory. External multi-port memories on the other hand, are expensive due to the higher per bit cost and connections between chips.

Another important advantage related to chunking is that pixels for one portion of a frame can be generated while pixels for another portion are resolved. Thus, instead of generating pixels for an entire frame and then resolving those pixels, our approach can overlap the processes of generating and resolving pixels, reducing system transport delay.

In one embodiment of our system, the image processor resolves fragments in a post processing step. While the pixel engine generates pixel data for part of an image, the anti-aliasing engine resolves fragments for another part of an image. As noted above, the pixel data is double buffered: the pixel engine can access one buffer while the anti-aliasing engine accesses the other. After the pixel engine has generated pixels for a chunk, the tiler performs a buffer swap. The pixel engine then generates pixels for the next chunk, and the anti-aliasing engine resolves the pixels for the previous chunk.

Although it could also be double buffered, in the preferred embodiment, the fragment buffer is dual ported so that the pixel engine and anti-aliasing engine can access it simultaneously. The pixel engine can then write fragment data to the fragment buffer through one port while the anti-aliasing engine accesses fragment data through another port.

In this embodiment, the double buffered and dual-ported memory systems enable the image processor to overlap pixel data generation and pixel resolution. There are a number of alternative ways to implement a double buffering scheme as well.

The image processor sorts the fragment data in depth order before completing the resolve process. In general, the image processor can sort pixel data as it generates pixels. and after it has generated pixels for a portion of an image to be rendered. For instance, the pixel engine can perform an insertion sort as it writes fragment data to the fragment buffer. In addition, the pixel engine can sort fragment data after it has completed generating pixel data for all or part of an image. The pixel engine can also sort fragments in cases where it rejects incoming pixel data. Since the pixel engine does not have to write to the fragment buffer when the incoming pixel data is rejected, it can then perform a sort of fragments before the next incoming pixel arrives. We refer to this latter approach as "background sorting" of fragments.

An insertion sort refers to depth sorting an incoming fragment with other fragments in the fragment buffer. In a real time system, an insertion sort may not be preferred because it can potentially slow down the process of generating pixel data. Searching the fragment buffer to find the proper insertion point for an incoming fragment can cause undesirable overhead. Additionally, in hardware implementations, it requires additional hardware and complicates the design of the pixel engine.

As an alternative to an insertion sort, fragments can be sorted after the image processor has completed pixel generation for a portion of an image. Some systems render an entire frame of image data at once. In such systems, sorting fragments for every pixel location in the view space can require substantial processing time and add undesirable delay, especially for a real time system. The amount of time required to perform the sorting can vary depending on the number of fragments per pixel, and depending on the degree to which insertion sorting is already performed. The sorting operation, therefore, can hold up other pixel operations from occurring, thereby decreasing performance.

By rendering a portion of the view space at a time, the fragment sorting for one part of an image can occur while a next portion is being rastcrized. In essence, the anti-aliasing engine can perform fragment sorting in a post-processing step. In one embodiment, the anti-aliasing engine sorts fragments for one chunk as fragments for the next chunk are being generated.

Even in cases where pixel generation and resolution are overlapped in this manner, it still may be advantageous to perform some sorting of fragments for part of an image as the pixel engine generates pixels for that part of the image. Background sorting of pixel fragments reduces the overhead of sorting fragments after the pixel engine completes generating pixels for a set of primitives.

In one embodiment, background sorting is performed concurrently with pixel operations being performed on the pixels to reduce, and in some cases eliminate the latency required for sorting of fragments. The design takes advantage of the fact that many of the pixels are not partially covered, and therefore do not make use of the fragment buffer. The background sorting uses this spare bandwidth to perform a sort of a set of fragments in the fragment buffer.

After sorting, the image processor resolves the fragments for a pixel location to determine the color for that pixel location. If alpha is not considered, the image processor computes color accumulation based on the color and coverage data for fragments in a depth sorted list for a pixel location. If alpha is considered in addition to coverage data, the image processor computes color accumulation based on color, coverage, and alpha of the fragments in a depth sorted list for a pixel location.

In general, the image processor can resolve fragments for pixel locations corresponding to the entire view space or for only part of the view space at a time. In the embodiment described above; the image processor resolves pixel locations in a portion of the view space called a chunk. Fragment resolution occurs after fragments have been generated and sorted.

Fragment resolution is the process during which all of the fragments for a pixel are combined to compute a single color and alpha value. This single color and alpha are written into the color buffer (and then compressed and stored to a gsprite).

Computing the resolved color includes accumulating a correctly scaled color contribution from each layer while computing and maintaining coverage information with which to scale subsequent layers. This accumulation can be performed in front-to-back, or in back-to-front depth order. In a front-to-back approach, as opposed to back-to-front, spatial coverage data can be used to determine coverage for succeeding layers. Unlike coverage, alpha data applies equally to the entire pixel area.

For front to back, the equations for computing color and alpha for sorted fragment records are:

Alpha initialized to maximum value (inverse alpha). Color initialized to 0.
Anew = Aold - (Aold * Ain);
Cnew = Cold + (Cin * (Aold * Ain));

For back to front, the equations for computing color and alpha for sorted fragment records are:

Alpha and Color initialized to 0.
Anew = Ain + (( 1 - Ain) * Aold);
Cnew = (Cin * Ain) + ((1 - Ain) * Cold);

For a hardware implementation, front to back is preferable because the resolve process is less hardware intensive.

A pseudocode example of accumulating fragments with depth, color, and coverage only (no alpha), is set-forth below:

```
NUM_CVG_BITS is the number of bits in the coverage mask
MAX_ALPHA is the maximum alpha value
for (each fragmented pixel location) {
        ColorAccum = 0;
        CoverageAccum = 0;
        while (fragment list is not empty) {
                scan fragment list and extract closest fragment (coverage, color);
                ColorScale = CountSetBits(coverage & ~(CoverageAccum))/NUM_CVG_BITS;
                ColorAccum += ColorScale * color;
                CoverageAccum |= coverage
        }
        ColorAccum is pixel color
}
```

Accumulating fragments with depth, color, coverage, and alpha requires that an alpha value be computed and maintained for each subsample. This is due to the combination of coverage masks and alpha values for each fragment. It is generally the case that the accumulated alpha at any layer during accumulation is a function of all of the alpha values of previous layers. With coverage masks, each subsample can potentially have a different set of 'previous' alpha values. since a layer for which the coverage bit is clear does not contribute to that subsample.

One approach to resolving fragments with both alpha and coverage is to compute color for each subpixel in a layer separately, and then add the contribution from each subpixel location to determine the total color contribution. The alpha scale for each subpixel is determined from the alpha at that layer in addition to the alpha accumulated from other layers. This alpha scale is then multiplied by the color for the subpixel to determine the color contribution of the subpixel. The color for a layer is then determined by summing the color contributions from the subpixels.

One example of accumulating color and alpha for subpixels separately is:

```
for (each fragmented pixel location) {
        ColorAccum = 0;
        AlphaAccum[NUM_CVG_BITS] = { MAX_ALPHA, MAX_ALPHA, ..., MAX_ALPHA };
        while (fragment list is not empty) {
                scan fragment list and extract closest fragment (coverage, color, alpha);
```

```
for (i=0; i<NUM_CVG_BITS; i++) {
        //      if this bit is set in coverage mask
        if (coverage >> I) & 0x1 {
                //      compute alpha scale value - contribution for this color
                AlphaScale = (alpha * AlphaAccum[i]);
                //      add color scaled by alpha
                ColorAccum += (color*AlphaScale)*(1/NUM_CVG_BITS));
                //      compute accumulated alpha for the subsample
                //      AlphaAccum = AlphaAccum*(MAX_ALPHA-alpha) =
                //      AlphaAccum - AlphaAccum*alpha
                AlphaAccum[i] -= AlphaScale;
        }
    }
}
ColorAccum is pixel color
}
```

An example using 4 sub-pixel locations will help illustrate fragment resolution. In this example, we consider three fragments, each having a coverage mask, alpha and color value. The initial state is illustrated in table below. In this example, we accumulate color and alpha using a front to back approach. The initial alpha is set to 1, meaning full transparency. The data for each layer is as follows: fragment 0, alpha=0.5, coverage mask (cm)=0011, and color =$C_0$; fragment 1, alpha=0.3, cm=1000, color=$C_1$; fragment 2, alpha=0.8, cm=0101, color=$C_2$. The data for each fragment is provided in tables below.

With the alpha values initialized to one, the alpha coverage array is shown below.

| | |
|---|---|
| 1 | 1 |
| 1 | 1 |

To compute color, the color values for each subpixel location are multiplied by the new alpha and the alpha from the coverage array. The result for the subpixel locations is then divided by four (one divided by the number of subpixel locations). Finally, the contribution from all of the subpixel locations is summed to find the accumulated color.

| coverage mask | color | alpha for new frag. | alpha from coverage array alpha | subpixel contribution |
|---|---|---|---|---|
| 1 | $C_0$ | 0.5 | 1 | 1/4 |
| 1 | $C_0$ | 0.5 | 1 | 1/4 |
| 0 | $C_0$ | 0.5 | 1 | 1/4 |
| 0 | $C_0$ | 0.5 | 1 | 1/4 |

Using the formula, Alpha'=Alpha * (Max_alpha - new_alpha), the image processor computes the new alpha separately for each pixel location and stores it in the alpha coverage array in the table below.

| | |
|---|---|
| 0.5 | 0.5 |
| 1 | 1 |

The contribution of fragment 1 is set forth in the table below.

| coverage mask | color | alpha for new frag. | alpha from coverage array alpha | subpixel contribution |
|---|---|---|---|---|
| 0 | $C_1$ | 0.3 | 0.5 | 1/4 |
| 0 | $C_1$ | 0.3 | 0.5 | 1/4 |
| 0 | $C_1$ | 0.3 | 1 | 1/4 |
| 1 | $C_1$ | 0.3 | 1 | 1/4 |

The new alpha coverage array is as follows:

| | |
|---|---|
| 0.5 | 0.5 |
| 0.7 | 1 |

The contribution of fragment 2 is set forth in the table below.

| coverage mask | color | alpha for new frag. | alpha from coverage array alpha | subpixel contribution |
|---|---|---|---|---|
| 1 | $C_2$ | 0.8 | 0.5 | 1/4 |
| 0 | $C_2$ | 0.8 | 0.5 | 1/4 |
| 1 | $C_2$ | 0.8 | 1 | 1/4 |
| 0 | $C_2$ | 0.8 | 0.7 | 1/4 |

The alpha coverage array for the fragments after fragment 2 is as follows:

| | |
|---|---|
| 0.5 | 0.1 |
| 0.7 | 0.2 |

This method requires 2 * NUM_CVG_BITS multiplies (2* 16=48 in the 4 x 4 case) per fragment for the computation of alpha and the color contribution. Note that the (1/NUM_CVG_BITS) scaling can be done with a shift if the number of bits in the coverage mask is a 2**n size (which is typically the case).

FIG. 35 is a schematic diagram illustrating a hardware implementation of the approach described above for a pixel divided in 4 x 4 subpixel regions (1224). The resolve hardware includes a set of 16 identical processing and storage units called alpha and color accumulators (ACA) (1226), each ACA dedicated to one subpixel region of the pixel. During processing of the fragment list for each pixel location, the coverage masks of each fragment are used as a processing mask for the resolve hardware. The ACA performs a multiply for the alpha scale, color accumulation, and alpha accumulation. The (1/NUM_CVG_BITS) scaling is performed with a shift as set forth above. Once all fragments have been processed for a given pixel location, the output section combines the color and alpha values for all of the 16 subpixels in a hierarchical fashion (1228). The processors in the output combine the two incoming values and divide by 2. With hardware pipelining, the pixel resolve process uses only a single hardware clock per fragment entry.

An alternative technique reduces hardware requirements by treating subpixels having the same accumulated alpha similarly at each layer. This technique is based on the observation that the state in which subsamples have unique accumulated alpha values occurs gradually. Initially, all of the subsample alphas are set to zero (transparent). The first fragment accumulation can add at most one unique alpha value, resulting in one group of subsamples retaining the initial alpha value and the other group having the same new alpha value. The second fragment accumulation can result in no more than four unique alpha values. Overall, the number of unique subsample alpha values possible after 'n' fragment accumulations is 2**n (or, more accurately, MIN(2**n,NUM_CVG_BITS)).

This alternate technique uses this characteristic to reduce the number of accumulations required by only performing the color scale and accumulation for each unique alpha value within the subsamples rather than for every subsample. With this technique, at most one accumulate needs to occur for the first fragment. two for the second fragment four for the third fragment, and so on, up to the number of subsamples in the pixel (e.g., with a 4 x 4 subsample array the worst case is 16 accumulations per fragment).

The foundation of the technique is to maintain the set of unique alpha values and their associated coverage masks during fragment accumulation, the intent of which is to perform a minimum number of color accumulations.

The alpha and coverage masks are stored in NUM_CVG_BITS element arrays of which some subset of these entries is actually valid (or 'in-use') at any time. The 'in-use' entries are those which hold the current set of unique alpha values. The in-use entries are identified by a NUM_CVG_BITS bit mask where a set bit indicates that the array element at that bit index is in-use. A convention is used in which the first set bit in the coverage mask of a {unique alpha, coverage mask} pair defines which array element that pair is stored in. Consider the following example of how the array is initialized and updated with the accumulation of three fragments (using 4 subsamples):

```
Initial state (X implies a 'don't care' value):
0b0001 // in-use mask
{ 1., 0b1111 } // alpha, coverage pairs
{ X, 0bXXXX }
{ X, 0bXXXX }
{ X, 0bXXXX }

Accumulate fragment { .5 /* alpha */, 0b0011 /* coverage mask */}
    0b0101 // in-use mask
    { .5, 0b0011 } // alpha, coverage pairs
    { X, 0bXXXX }
    { 1., 0b1100 }
    { X, 0bXXXX }

Accumulate fragment { .3, 0b1000 }
    0b1101 // in-use mask
    { .5, 0b0011 } // alpha, coverage pairs
    { X, 0bXXXX }
    { 1., 0b0100 }
    { .7, 0b1000 }

Accumulate fragment { .8, 0b0101 }
    0b1111 // in-use mask
    { .1, 0b0001 } // alpha, coverage pairs
    { .5, 0b0010 }
    { .2, 0b0100 }
    { .7, 0b1000 }
```

The initial alpha coverage array is set forth below:

| | |
|---|---|
| x | 1 |
| x | x |

The in use mask is 0001, which specifies the location where the array mask is stored. The corresponding array mask is as follows:

| | |
|---|---|
| xxxx | 1111 |
| xxxx | xxxx |

After fragment 0, the alpha coverage mask appears as follows.

| | |
|---|---|
| x | 0.5 |
| x | 1 |

The in use mask is 0101, and the array mask is as follows:

| | |
|---|---|
| xxxx | 0011 |
| xxxx | 1100 |

For elements in the in use mask that are set, the array mask is ANDed with the coverage mask for the new fragment to determine whether there is a change in alpha value. If there is a new alpha, the new value for the array mask is computed by: array mask AND NOT coverage mask. If there is a new value for the array mask, it is stored in the appropriate location.

After fragment 1, the alpha coverage mask appears as follows.

| | |
|---|---|
| x | 0.5 |
| 0.7 | 1 |

The in-use mask is 1101, and the array mask is as follows:

| | |
|---|---|
| xxxx | 0011 |
| 1000 | 0100 |

After fragment 2, the alpha coverage mask appears as follows.

| | |
|---|---|
| 0.5 | 0.1 |
| 0.7 | 0.2 |

The in-use mask is 1111, and the array mask is as follows:

| | |
|---|---|
| 0010 | 0001 |
| 1000 | 0100 |

The number of unique alpha values at any time is equal to the number of set bits in the in-use mask. The complete solution includes two steps. The first step is performing the necessary color accumulations, where one accumulation is required per 'in-use' entry in the coverage/alpha array. The second step is to update the coverage/alpha array with the new fragment's values.

A complete implementation of this technique (for 4 x 4 subsamples) is as follows.

```
for (each fragmented pixel location) {

    //        initial state (per pixel)
    InUseMask = 0x0001;
```

```
CoverageArrayMask[16] = { 0xffff, 0, ..., 0 };
CoverageArrayAlpha[16] = { MAX_ALPHA, MAX_ALPHA, ..., MAX_ALPHA };
ColorAccum = 0;

while (fragment list is not empty) {
        scan fragment list and extract closest fragment (coverage, color, alpha);

        // accumulate this fragment's color into ColorAccum for each in-use element
        InUseMaskScratch = InUseMask;
        while (InUseMaskScratch != 0x0000) {
                //      find first set bit in scratch in-use mask
                Index = FindFirstSetBit(InUseMaskScratch);
                //      clear this bit in scratch mask
                InUseMaskScratch &= ~(0x1 << Index);

                //      read old (or current) alpha for this entry - this is used
                //      in updating the non-covered area (which may be newly 'in-use')
                AlphaOld = CoverageArrayAlpha[Index];

                //      alpha scale factor - used for scaling color for accumulation and
                //      to compute alpha for subsequent layers
                AlphaScale = AlphaOld * alpha;

                //      compute alpha for next layer - use this for updating alpha array
                //      AlphaNext = AlphaOld*(MAX_ALPHA-alpha) = AlphaOld-
AlphaOld*alpha
                AlphaNext = AlphaOld - AlphaScale;

                //      compute mask for overlapped coverage - this is the portion of this
                //      array entry which is covered by the new fragment, so accumulate the
                //      color and update the array with new alpha value
                AccumCvgMask = coverage & CoverageArrayMask[Index];
                if (AccumCvgMask != 0x0000) {

                        //      accumulate the color
                        nCoverageBits = CountSetBits(AccumCvgMask);
                        ColorAccum += color*(AlphaScale * nCoverageBits/NUM_CVG_BITS));
```

```
                    // update alpha for covered portion (this may result in a 'new'
                    //          in-use element or just overwrite the old one)
                    Index2 = FindFirstSetBit(AccumCvgMask);
                    InUseMask |= (0x1 << Index2);
                    CoverageArrayMask[Index2] = AccumCvgMask;
                    CoverageArrayAlpha[Index2] = AlphaNext;
                }

                //      compute the mask for the non-covered area - this is the portion
                //      of this array entry which is unobscured by the new fragment, so
                //      just update the coverage (the alpha stays the same)
                UpdateCvgMask = ~coverage & CoverageArrayMask[Index];
                if (UpdateCvgMask!= 0x0000) {
                    Index2 = FindFirstSetBit(UpdateCvgMask);
                    InUseMask |= (0x1 << Index2);
                    //      update for the non-covered area - this may result in a 'new'
                    //      in-use element or just overwrite the old one (thus copy the
                    //      alpha value in case it is new...)
                    CoverageArrayMask[Index2] = UpdateCvgMask;
                    CoverageArrayAlpha[Index2] = AlphaOld;
                }
            }
        }
        ColorAccum is pixel color
    }
```

The core arithmetic operation is the color accumulation, which requires a total of three multiplies per unique alpha value:

ColorAccum += color*(alpha*AlphaOld*(nCoverageBits/NUM_CVG_BITS));

Note that the third multiply may be somewhat simplified by the number of subsamples. For 16 subsamples, the third multiply involves 0.4 fixed point value, thus this multiplier can be a 8 x 4 (where the other multipliers are likely to be 8 x 8). Also note that, for 2**n sized coverage masks, the division shown above is merely a shift.

This technique requires a worst case total of:

$$\sum_{n=1}^{NumFrags} MIN(2^n, 16)$$

accumulations. The typical case can be much less than this because the worst case occurs only when a new fragment's coverage has both set and unset values in each 'in-use' array element.

One useful optimization is to track coverage mask locations which have fully opaque alpha value. This is useful in the case in which fragments are being generated due to partial geometric coverage and not due to non-opaque transparency values. These fragments will normally have a fully opaque transparency value. Implementing this optimization is done by maintaining an additional mask value, the OpaqueAlphaMask. The OpaqueAlphaMask is set by O-Ring in coverage masks of fragments for which the alpha is fully opaque (this is done after accumulating the fragment's contribution). This mask is then used to disregard bits in,the masks of subsequent fragments, since there can be no further color contribution to the corresponding subsamples.

Another possible optimization is to consolidate locations with identical alpha values, but this is significantly more expensive to implement, and the occurrence of identical alpha values which are not either 0 or MAX_ALPHA is not likely.

The example and pseudocode given above use a front-to-back depth sorting. It is equally possible to perform the same computations in a back-to-front depth sorting. Also, the computations given above use color components which have not been pre-multiplied by the alpha component. The same technique applies to pre-multiplied color components, with slightly different arithmetic computations (and identical control flow).

Fig. 36 is a block diagram illustrating an implementation of the hardware optimized fragment resolve subsystem in the anti-aliasing engine. The input to the sub-system is a stream of depth sorted fragment records. As shown, a fragment record includes RGB color values, an alpha value A, and a coverage mask (Cov mask). This particular fragment resolve sub-system processes fragment records in front to back order and accumulates color values for the pixel location as it processes each fragment layer. This sub-system minimizes the hardware necessary to accumulate color values because it keeps track of unique pixel regions having a common alpha. This enables the fragment resolve sub-system to scale and accumulate color once for each unique pixel region rather than separately for each sub-pixel region.

As set forth in the pseudo code above, the fragment resolve system initializes an in-use mask 1236, an array of coverage masks 1230, and an array of accumulated alpha values 1230 before resolving a list of fragment records. The elements in the in-use mask 1236 represent pixel regions, each including one or more sub-pixel regions having a common accumulated alpha. The coverage masks give the sub-pixel locations covered by a pixel region. The array of accumulated alpha stores the unique accumulated alpha values for corresponding pixel regions having a common alpha. This particular coverage array 1236 stores the accumulated alpha values and coverage masks.

After initializing the in-use mask, coverage array mask and coverage array alpha, the sub-system begins processing a fragment record, starting with the fragment record closest to the view point. In one implementation of the anti-aliasing engine 412 on the tiler, the anti-aliasing engine sorts the fragment lists in a post-processing stage after the scan convert block 395 and texture filter engine 401 have completed rasterizing a chunk. The anti-aliasing engine reads each fragment in a fragment list, starting with the head, and as it does so places entries in sorted array of indices and depths. Each index in this array points to a fragment buffer location storing the RGB, alpha and coverage data for a pixel fragment in the list. As the anti-aliasing engine reads pixel fragments, it performs an insertion sort such that the array entries comprise a depth sorted array of indices to pixel fragments and corresponding depth values. Once the list is sorted, the fragment resolve subsystem retrieves depth sorted fragments by reading each entry in the sorted array in the order that these entries are stored in the array. This enables the fragment resolve system to retrieve the RGB color values, alpha and coverage masks for the pixel fragments in a list in a depth sorted order.

As it processes each fragment record in the list, the sub-system keeps track of the pixel regions having a common alpha. The sub-system determines whether each fragment record in the list overlaps each pixel region having a common alpha. If so, the sub-system computes the accumulated color for the portion of the current pixel region that overlaps with the current fragment. If there is an overlap with the current pixel region, the sub-system also determines the new pixel region or regions caused by this overlap and keeps track of them.

For a current fragment (1232), the sub-system loops through each element in the in-use mask. The coverage array loop control 1234 maintains the in-use mask (1236) and updates it as necessary as it processes each fragment record. As it loops through the entries in the in-use mask, the coverage array loop control communicates with and controls the operation of the new coverage control 1238. The new coverage control 1238 updates the coverage array mask and alpha 1230 as necessary when the current fragment overlaps the current pixel region.

The new coverage control 1238 reads the stored accumulated alpha (Aold) from the coverage array alpha associated with the current entry in the in-use mask and computes the alpha scale factor (A * Aold) used for scaling color and used to compute alpha for subsequent fragment layers, Anext (1-A*Aold). The new coverage control 1238 transfers the alpha scale factor (A*Aold) to the scale and accumulation control 1246 for use in scaling the color data of the current fragment. The new coverage control 1238 also computes the alpha for subsequent layers, Anext (1-A*Aold), and stores it in along with its corresponding coverage array mask in the coverage array 1230.

For each pixel region with a common accumulated alpha, the fragment resolve sub-system determines whether the current fragment overlaps the current pixel region by finding the intersection of the coverage masks of the fragment and pixel region.

If the current fragment overlaps the current pixel region, the sub-system 1) computes the accumulated color for the overlapped portion of the pixel region 2) updates the in-use element and corresponding coverage array mask and alpha (coverage array alpha) for this in-use element.

The scale and accumulation control 1246 computes the accumulated color for each unique pixel region covered by the current fragment. The scale and accumulation control includes a coverage scaler 1240, a color scaler 1242, and a color accumulator 1244. The coverage scaler 1240 computes a coverage scale factor (number of sub-pixel locations in current pixel region overlapped by current fragment/ total sub-pixel locations * A * Aold). The color scaler 1242 then reads the color values (RGB) for the current fragment (1232) and multiplies them by the coverage scale factor from the coverage scaler 1240. Finally, the color accumulator 1244 adds the scaled colors with the accumulated colors to compute updated accumulated color values.

When the current fragment overlaps the current pixel region, the coverage array loop control 1234 updates the in-use mask 1236 so that it includes an entry corresponding to the new pixel region. This may merely overwrite the existing in-use element or create a new one. The coverage array loop control also instructs the new coverage control 1238 to update the coverage array mask 1230 to the coverage of the new pixel region, and to set the accumulated alpha for this new pixel region. The new coverage control 1238 sets a new alpha coverage array entry corresponding to the new pixel region to Anext.

When the current fragment only covers a portion of a pixel region (rather than overlapping it entirely), then the new coverage control 1238 creates two new pixel regions: 1) a portion of the pixel region that the current fragment overlaps; and 2) a portion of the pixel region un-obscured by the current fragment. In this case, the sub-system computes the coverage for the un-obscured portion and sets the alpha for it, which remains the same as the original pixel region. To accomplish this, the coverage array loop control 1234 updates the in-use mask 1236, and instructs the new coverage control 1238 to update the coverage array mask 1230. The coverage array alpha entry corresponding to this second pixel region remains the same as the current pixel region (Aold) because it is unchanged by the current fragment.

Repeating the approach described above, the sub-system loops through each in-use entry for the current fragment, and computes the effect, if any, of the current fragment on each pixel region. It then repeats the process for subsequent fragments in the list until the list is empty.

The clamp and adjust block 1248 performs the clamping of the accumulated color to the proper range (this is needed due to rounding in the Coverage Scaler block which can result in colors or alphas which exceed the 8 bit range) and an adjustment for errors introduced by scaling a value by an 8 bit binary number representing 1. An adjustment for this type of error may be necessary in some circumstances because a value of I is actually represented by the hex value "FF." In other words. an alpha range of 0 to 1 is represented by a range of 8 bit numbers from 00 to FF. Therefore, when multiplying a number x by FF. the result must by x. The adjustment ensures that the result of multiplying by FF is properly rounded to x.

The feedback path 1250 to the pixel buffers exists to support a mode where resolved pixel values are stored back into the pixel buffers. This enables multi-pass rendering on resolved pixel data without transfering a chunk of resolved data to the shared memory off the tiler.

If the fragment resolve subsystem is not in the feedback mode, then the clamp and adjust block 1248 transfers the resolved pixel data to block staging buffers via the data path 1252 shown in Fig. 36. These block staging buffers are used to buffer resolved pixel data before it is compressed in 8 x 8 pixel blocks.

### Texture Mapping

The image processing system includes a number of advanced texture mapping features. Its support for texture mapping includes anisotropic filtering of texture data. The system can perform anisotropic filtering of texture data in real time.

We begin by describing some concepts that form the foundation for our approach for anisotropic filtering, and then describe an implementation in more detail.

Texture mapping refers to mapping an image onto a surface. Intricate detail at the surface of an object is very difficult to model using polygons or other geometric primitives, and doing so can greatly increase the computational cost of the object. Texture mapping enables an image processing system to represent fine detail efficiently on the surface of an object. A texture map is a digital image, which we will also refer to as the "source image." The texture map is typically rectangular in shape and has its own (u, v) coordinate space. Individual elements of the texture map are referred to as "texels." In texture mapping, a texture or "source image" is mapped to a target image.

As digital images, the source and the target images are sampled at discrete points, usually on a grid of points with integer coordinates. In the source image, texels are located at integer coordinates in the (u,v) coordinate system. Similarly, in the target image, pixels are located at integer coordinates in the (x,y) coordinate system.

A geometric transformation describes how a point from the source image maps into the target image. The inverse of this transformation describes how a point in the target maps back into the source image. The image processor can use this inverse transform to determine where in the source array of texels a pixel intensity should come from. The intensity at this point in the source image can then be determined based on neighboring texel data. A point in the target mapped back into the source image will not necessarily fall exactly on the integer coordinates of a texel. To find the intensity at this point, the image data is computed from neighboring texels.

Since the source image intensities are only known at discrete values, values from neighboring texels are interpolated and the resulting data then is passed through a low pass filter. In general, the approach occurs as follows. First, a point is mapped from the target image into the source image. Then, texel data is interpolated to reconstruct the intensity at the point mapped into the source image. Finally, a low pass filter is applied to remove spatial frequencies in the source image that will transform to too high a range to be resampled properly in the discrete target image. This low pass filter is sometimes referred to as an anti-aliasing filter because it removes high frequencies that will masquerade or "alias" as waves of lower frequency in the target because of resampling. We describe this concept in more detail below.

Fig. 37 is a example illustrating how a pixel 1300 on the surface 1302 of the target image maps to the surface of the texture map 1304. In this example, the pixel from the target image is represented as a square 1306. The backward mapping of this pixel 1300 onto the texture map 1304 is a quadrilateral 1308 that approximates the more complex shape into which the pixel may map due to the curvature of the destination surface 1302. After mapping the pixel 1300 to the texture, an intensity value is computed from texel samples within the quadrilateral. For instance in one approach, the intensity value of a pixel is computed by taking a weighted sum of texels in the quadrilateral.

Both the interpolation and low-pass filtering functions can be combined into a single filter that is implemented by taking a weighted average of points surrounding each inverse transformation point in the source that maps to a discrete point in the target. We refer to the region of points that contribute to that weighted average as the footprint of the filter. In general, the footprint will have a different shape in the source for each target point. Since the footprint can vary for each point, it is difficult to find the correct shape of the footprint and the weighting factors to apply to the points inside the footprint. Some conventional systems make the approximation of using the same shape for the filter at every point, although they may allow the size of the filter to vary. This approach, however, can lead to distortion in the final image.

We refer to filters that produce either square or circular footprints of variable size as isotropic filters. A circle is truly isotropic since it has the same length in all directions. We also consider a square to be essentially isotropic, since it has equal dimension horizontally and vertically.

Isotropic filtering can produce distortion because it uses rather rough approximations. In areas of the source image where the actual footprint is highly elongated, an essentially isotropic shape such as a square or a circle is a poor substitute for the footprint, even if the size is adjustable. Since an isotropic filter only has one shape, it can not accurately capture texels in an elongated footprint. For example, a square filter cannot accurately sample texel values from a quadrilateral footprint elongated in one direction. Sampling texels outside the actual footprint can cause blurring. Not sampling texels in the footprint, on the other hand, can cause the final image to sparkle due to aliasing.

In one approach called MIP (multum in parvo - many things in a small place) mapping, a number of texture maps are stored at different resolutions. For example, if the one texture is at 512 x 512 texels, the system also stores textures at 256 x 256, 128 x 128, 64 x 64, etc. An image processing system can use these texture maps at varying resolution to find the best fit for an isotropic filter on the footprint of the pixel mapped into the texture. The image processor first finds the two textures where the footprint is closest in size to the size of the filter. It then performs interpolation for the two textures that fit the footprint most closely to compute two intermediate values. Finally, it interpolates between the two intermediate values to find a value for the pixel.

While MIP mapping can provide improved results for isotropic filters, it will still produce distortion, especially where the footprint is elongated in one direction. A more accurate filter for the actual footprint at each point can be produced by the cascade of an essentially isotropic reconstruction filter convolved with an essentially isotropic resampling filter whose shape has been distorted by the inverse of the geometric transform. This distortion can produce a high degree of anisotropy of a filter. If the transformation contracts the image in one direction much more than in another direction, then the inverse transformation will expand or elongate the footprint in the source along the direction of maximum contraction in the target. This can occur when viewing a planar surface from a perspective close to the edge. In isotropic filtering, the final image would appear distorted in this example because the filter cannot properly sample texel values in the elongated footprint.

One embodiment of our anisotropic filtering method includes the following two steps: 1) finding an approximate direction of maximum elongation of the filter footprint; and 2) applying a resampling filter along that direction to the output of a reconstruction filter to produce a composite filter that more closely matches the actual footprint.

The direction of maximum elongation can be derived from the backward mapping of a filter from the target image to the texture map. For example in perspective mapping (where an object fades toward the vanishing point), the mapping of an n x n pixel footprint from the target image to the texture is a quadrilateral. The line of anisotropy is defined as a line having the direction of maximum elongation and passing through a point from the target mapped back into the source image.

In this embodiment, the image processor backward maps the filter footprint to the texture to find the direction of maximum elongation. It then sweeps an interpolating filter (the reconstruction filter outlined above) along the direction of maximum elongation. To compute a pixel value for the target image, it applies a resampling filter to the output of the interpolating filter.

In one implementation, the resampling filter is a one dimensional digital filter applied along the line of anisotropy. A variety of one dimensional filters can be used for this filter. Therefore, we do not intend to limit the scope of our invention to a specific one-dimensional filter.

In this implementation, the interpolating filter is a two dimensional isotropic filter. As with the resampling filter, we do not intend to limit the scope of our invention to a specific type of interpolating filter. The two dimensional isotropic filter is only one possible implementation. The interpolating filter provides values at positions along the line of anisotropy by interpolating these values from neighboring texel data. The discrete positions at which the interpolating filter is applied to the source image can be determined by stepping either vertically or horizontally in increments and interpolating a value at the line of anisotropy at each position. For instance, if the line of anisotropy is more vertical than horizontal, one approach would be to step in the vertical or V direction in the (u, v) coordinate system of the texture. Similarly, if the line of anisotropy is more horizontal than vertical, another approach would be to step in the horizontal or U direction in the (u, v) coordinate system of the texture.

One possible method for stepping along the line of anisotropy is to apply the interpolating filter at discrete locations along this line, evenly spaced at approximately the length of minimum elongation. Specifically, the sample locations along the line of anisotropy can be evenly spaced at a distance approximately equal to the length of minimum elongation with the center sample located at the point where the pixel center maps into the texture map. Once these sample locations are computed, an isotropic filter can be repetitively applied at each location. For example, an isotropic filter can be applied at the sample locations to perform interpolation on neighboring texture samples to each sample, with the size of the filter dependent on the length of minimum elongation. One specific way to implement this method is to perform tri-linear interpolation at each discrete location along the line of anisotropy.

After applying the outputs of the interpolating filter to the digital filter, the resulting pixel value is a weighted average of the outputs of the interpolating filter along the line of anisotropy. While we describe specific types of filters here, the types of filters used to approximate the reconstruction and resampling functions can vary.

Figs. 38A-D illustrate an example the process of anisotropic filtering. Figs. 38A-D illustrate the texels in a texture map (1400A-D) and show how an anisotropic filter can be generated. The first step is to compute a filter footprint in the source image by performing an inverse transform on the filter footprint for a pixel location in the target image. In this example, the filter footprint in the texture 1400A is illustrated as a quadrilateral 1402.

The next step is to approximate the inverse transformation matrix at a point mapped into the source image. In this example shown in Fig. 38B, this approximation is represented by a parallelogram 1404. This parallelogram approximates the quadrilateral-shaped footprint. In general. this approximation can be found by computing the Jacobian matrix for the inverse geometric transform. While we have simplified the example for purposes of illustration, the same concept can be extended to cases where the inverse transformation is more complex. This will become apparent from additional detail provided below.

Referring again to the example in Fig. 38, the size of the reconstruction and resampling filters can be derived from the Jacobian matrix. In Fig. 38B, we represent the Jacobian matrix as a parallelogram 1404. The length of the parallelogram can be used to determine the size of the resampling filter. In this example, the length is measured along the direction of maximum elongation 1406, which we also refer to as the direction of anisotropy. Similarly, the height of the parallelogram can be used to determine the size of the reconstruction filter. The height is the direction of minimum elongation 1408.

Fig. 38C shows a rectangle 1406 that approximates the parallelogram. The dimensions of this rectangle correspond to the height and length of the parallelogram. The rectangle represents the "bar shaped" filter used to approximate the anisotropy of the actual filter footprint.

Fig. 38D illustrates how this "bar shaped" filter can be computed. The footprint of the reconstruction filter is represented by the square 1408. In this example, the reconstruction filter has a square footprint, and is thus essentially an isotropic filter. To compute values along the line of anisotropy represented by the line 1410 in Fig. 38D, values are interpolated from texels (1400D) surrounding the line of anisotropy 1410. The reconstruction filter is, therefore, an interpolating filter as noted above. The output of this filter is then applied to a one dimensional filter, which represents the resampling filter. The line of anisotropy 1410 represents the orientation of the resampling filter. The values computed as the reconstruction filter is passed along the line of anisotropy are summed to compute the pixel value for the target image.

The approach described above can be implemented in a variety of ways. It can be implemented in hardware or software. To support real time anisotropic filtering, the method is preferably implemented in hardware. One embodiment of this approach is implemented on the Tiler chip.

In the tiler illustrated in Figs. 9A-C, anisotropic filtering is supported in the scan convert block and texture filter engine. The scan convert block computes control parameters for the resampling and reconstruction filters by taking the Jacobian matrix of partial derivatives of the inverse geometric transformation at a point in the source image. The Jacobian matrix represents the linear part of the best locally affine approximation to the inverse transformation. More specifically, it is the first order portion of the Taylor series in two dimensions of the inverse transformation centered around the desired source point.

The linear part of the affine transformation from texture coordinates to screen coordinates has a two-by-two Jacobian matrix J; the inverse transformation from screen coordinates to texture coordinates has a Jacobian matrix $J^{-1}$. The lengths of the two column-vectors of the matrix $J^{-1}$ are the lengths of the two sides of the parallelogram for a unit-sized pixel. The components of the two column-vectors in the inverse Jacobian matrix determine the lengths of the two sides of the parallelogram.

The transformations take the form of attribute edge equations that the scan convert block evaluates as it scans each primitive. The following equation is typical:

$$F_{s/w} = A_{s/w}\, x + B_{s/w}\, y$$

where, at pixel location (x, y):

1) $F_{s/w}$ is the value of the texture coordinate (s) divided by the homogeneous coordinate (w).
2) $A_{s/w}$ is the value of the gradient of the texture coordinate (s) divided by the homogeneous coordinate (w) with respect to the x coordinate.
3) $B_{s/w}$ is the value of the gradient of the texture coordinate (s) divided by the homogeneous coordinate (w) with respect to the y coordinate. F, A, and B are all normalized relative to the scan start point of the primitive. The scan convert block evaluates edge equations for l/w, s/w, and t/w.

The inverse Jacobian matrix elements yield the lengths of the sides and the area of the parallelogram. The area of the approximating rectangle and the long side of the rectangle are the same; the short side of the rectangle is the short side of the parallelogram multiplied by the sine of the angle between the x and y axis in the (s, t) coordinate system.

The derivatives for the inverse Jacobian matrix derive directly from the Fs, As, and Bs of the edge equations at each texture coordinate (s, t).

$$w = \frac{1}{1/w} = \frac{1}{F_{t/w}}$$

$$s = w(s/w) = wF_{s/w}$$

$$t = w(t/w) = wF_{t/w}$$

$$\frac{\partial s}{\partial x} = w\left(\frac{\partial(s/w)}{\partial x} - s\left(\frac{\partial(1/w)}{\partial x}\right)\right) = w\left(A_{s/w} - sA_{1/w}\right) \qquad \frac{\partial s}{\partial y} = w\left(\frac{\partial(s/w)}{\partial y} - s\left(\frac{\partial(1/w)}{\partial y}\right)\right) = w\left(B_{s/w} - sB_{1/w}\right)$$

$$\frac{\partial t}{\partial x} = w\left(\frac{\partial(t/w)}{\partial x} - t\left(\frac{\partial(1/w)}{\partial x}\right)\right) = w\left(A_{t/w} - tA_{1/w}\right) \qquad \frac{\partial t}{\partial y} = w\left(\frac{\partial(t/w)}{\partial y} - t\left(\frac{\partial(1/w)}{\partial y}\right)\right) = w\left(B_{t/w} - tB_{1/w}\right)$$

$$LengthXSquared = \left(\frac{\partial s}{\partial x}\right)^2 + \left(\frac{\partial t}{\partial x}\right)^2$$

$$LeagthYSquared = \left(\frac{\partial s}{\partial y}\right)^2 + \left(\frac{\partial t}{\partial y}\right)^2$$

$$Area = Abs\left(\left(\frac{\partial s}{\partial x}\right)\left(\frac{\partial t}{\partial y}\right) - \left(\frac{\partial s}{\partial y}\right)\left(\frac{\partial t}{\partial x}\right)\right) = L \times S \sin\theta$$

After finding the Jacobian matrix, the scan convert block finds the longer of the two column vectors. The direction of this vector represents the direction of the line of maximum elongation or line of anisotropy. The ratio of the length of this column vector to the length of the other is referred to as the ratio of anisotropy. The length of the one dimensional anisotropic filter is determined from this ratio. The length of the longer vector divided by the anisotropy ratio controls the width of the reconstruction filter.

The longer side becomes the major axis and can be used to determine the screen coordinate to be incremented when stepping (*clocking*) in texture coordinates. It can also be used to determine the sizes of the increments.

```
// DsDx is the partial derivative of s with respect to x, etc.
// (DsDc, DtDc) are steps in (s, t) along axis of anisotropy.

if (LengthXSquared >= LengthYSquared) {
   MajorSquared = LengthXSquared
   InverseMajor = 1./sqrt(MajorSquared)
   DsDc = DsDx * InverseMajor
   DtDc = DtDx * InverseMajor
} else {
   MajorSquared = LengthYSquared
   InverseMajor = 1./sqrt(MajorSquared)
   DsDc = DsDy * InverseMajor
   DtDc = DtDy * InverseMajor
}
```

The step sizes DsDc and DtDc are basic inputs to the texture filter engine, which performs the sampling and filtering. These steps produce an orientation that is incorrect by (at most) seven degrees, which occurs in the case of an equilateral parallelogram.

In this implementation, the length of the shorter vector usually approximates the width of the reconstruction filter, unless the anisotropy ratio exceeds a preset limit. If the limit is exceeded, then the anisotropy ratio is replaced by this preset limit in the calculation. Limiting the ratio in this manner prevents the filter from using more than a predetermined number of texel points to compute a value. Thus, the limit on the ratio places a bound on how long the reconstruction filter requires to compute an output value.

Another limiting case occurs if the length of either vector is less than one. In this case, the actual length of the vector is replaced by a length of one. This insures that the filter lengths are never too short to perform interpolation.

After the scan convert block computes the control parameters for the filters, it then computes a pixel value. The one dimensional digital filter computes a weighted average of the output from the interpolating filter. The interpolating filter computes this output by interpolating texel data from the source image that neighbors the line of anisotropy.

The size of the interpolating filter can be adjusted to approximate the true footprint width measured in a direction perpendicular to that of maximum elongation. When the footprint is large, which occurs in areas of the image that the transformation is shrinking, many points of the source image must be multiplied by filter weighting coefficients to produce a single output point, which results in a very slow or costly implementation.

As introduced above, existing isotropic filtering systems reduce computation time by using MIP mapping. MIP mapping refers to forming an image pyramid based on the source image, and then using the images in this pyramid to find the best fit for an isotropic filter on a source image. Each level of the pyramid is reduced in sampling density by a factor of two in each dimension compared to the one below it. The bottom of the pyramid is the original source image. Interpolating an image of reduced sampling density produces a similar effect to filtering the original image with an isotropic filter whose footprint is enlarged relative to that of the interpolator by the ratio of the original sampling density to the reduced density. Thus, power of two enlargements of the footprint can be achieved by selecting the proper level of the pyramid to interpolate. Any ratio of enlargement can be obtained by blending the results of interpolations of the two pyramid levels that bracket the desired ratio.

In one embodiment, the size of the isotropic filter can be modified to more closely fit the length of minimum elongation by using a MIP mapping approach. The isotropic filter size determined from analyzing the Jacobian matrix can be used to select the bracketing pyramid levels and blend factor. In one implementation, the base pyramid level is the integer part of the log base 2 of the filter size, and the blend factor is the fractional part.

A specific example will help illustrate the operation of the specific implementation described above. If the desired isotropic size is 3, then $\log_2 3$ equals 1.585. The integer part of the result is 1, which selects levels 1 and 2 with a density reductions of 2 and 4 respectively. Level 0 is the original source image with no reduction. The blend factor is 0.585.

In one implementation, the texture filter engine postpones the blending. First, the texture filter engine applies 1-D filters of length proportional to the anisotropy ratio centered on the desired point at each level. It then blends the output from each level.

In an alternative implementation; the texture filter engine steps along the line of anisotropy and performs a tri-linear interpolation at discrete samples along this line. The texture filter engine then applies the one dimensional filter to the result of tri-linear interpolation at each sample.

In addition to controlling the size of the interpolating filter. the size of the resampling filter can also be controlled. In one implementation, the texture filter engine uses tables of coefficients for 1-D resampling filters of various sizes and blends between them to make a filter of a size between those specified in the table. An especially useful implementation for high speed hardware is to choose the filter lengths as powers of two and the filter impulse profiles to have a triangular or trapezoidal shape. The individual filters then have very simple coefficients and the effort of multiplication is reduced to a few adds and shifts in hardware.

The following is a table of coefficients for these filters for the first four powers of 2:

| | | | | | | | | | | | | | | | | |
|---|---|---|---|---|---|---|---|---|---|---|---|---|---|---|---|---|
| 0 | | | | | | | | 1 | | | | | | | | /1 |
| 1 | | | | | | | 1 | 2 | 1 | | | | | | | /4 |
| 2 | | | | | 1 | 2 | 3 | 4 | 3 | 2 | 1 | | | | | /16 |
| 3 | 1 | 2 | 3 | 4 | 5 | 6 | 7 | 8 | 7 | 6 | 5 | 4 | 3 | 2 | 1 | /64 |
| 4 | 1 | 1 | 1 | 1 | 1 | 1 | 1 | 1 | 1 | 1 | 1 | 1 | 1 | 1 | 1 | /15 |

In this example, the log base 2 of the anisotropy ratio is used to select a level and blend factor. If the level goes beyond 4, then the texture filter engine uses the last filter and does not blend. In this example, all the filters have unity gain, meaning all their coefficients add to one. Multiplication by 1, 2, 4 and 8 can be performed by shift operations. Multiplication by 3, 5 and 6 can be performed by a single addition plus a shift operation. Finally, multiplication by 7 can be performed by a single subtraction and shift operations. The divisions by the powers of two are just shifts. The division by 15 can be approximated very closely by multiplication by 1.00010001 base 2 followed by a shift of 4 places (division by 16). The multiplication is just two additions.

The approach described above enables two degrees of freedom in the control of the composite filter. In the embodiment described above, the degrees of freedom are the sizes of the filter in the directions of minimum and maximum elongation. This approach produces an image with much less aliasing and blurring without the expense of calculating the true footprint at each point, which may be the result of a highly nonlinear mapping. This approach approximates a continuous filter that sweeps the actual footprint filter along the line of anisotropy. It achieves a much better fit of the actual footprint than a circle or square because it yields a "bar-shaped" filter along the line of anisotropy. We have implemented this method in a real time graphics rendering system. This method, therefore, supports high quality texture mapping with anisotropic filtering while still achieving real time rates, i.e. computing a new frame of image data at a rate greater than 10 Hz and specifically at refresh rates of the display device (e.g., 75 Hz).

Fig. 39 is a block diagram illustrating one implementation of the texture filter engine (401, Fig. 9B). The texture filter engine reads instances of texture reference data from a pixel queue (texture reference data queue 399 in Fig. 9B) and computes alpha and color values (alpha, and RGB color factors) or shadow coefficients for these instances. This implementation supports both texture and shadow filtering. For texture mapping operations, the texture filter engine computes texture colors and alpha, and filters the texture colors to compute alpha and color factors. For shadowing operations, the texture filter engine performs depth compares and filters the resulting values to compute shadow attenuation coefficients (s).

The pixel queue receives texture reference data from a rasterizer (such as the scan convert block 395 in Fig. 9B) and acts as a FIFO buffer to the texture filter engine 401. The "sample valid" data specifies which samples in a set of texture or shadow map elements fetched from the texture cache are valid for the current filtering operation.

For a texture mapping operation, the texture reference data includes the coordinates of a pixel location mapped into the texture, (s,t). To support tri-linear MIP-mapping, the inputs include the (s,t) coordinates for the two closest MIP map levels (hi, to) and the level of detail (LOD). The "accumulate scale" data is used to control weighting factors applied to the output of the color component interpolators. The "extend control" data are data bits that control texture extend modes. The texture extend modes instruct the texture filter engine to perform either a clamp, wrap, or reflect operation when a texture request is outside the texture map area.

For shadowing operations, the inputs include a sample index, (s,t) coordinates of a pixel location mapped into the shadow map, and a beta, which represents the depth of the geometric primitive from the light source for a given pixel location. The sample index relates to the specific manner in which the shadow filter operates on shadow map elements or "samples." In this specific implementation, the texture filter engine operates on 8 samples per clock cycle. In the case of shadow filtering, these samples correspond to a 4x2 grid. For example, the shadow filter operates on a total of 2 sets of samples for 4x4 mode (4x2+4x2=4x4) and 8 sets for the 8x8 mode. In the case of 4x4 mode, the shadow filter applies a 3x3 filter four times, one each to the upper left, upper right, lower left, and lower right 3x3 blocks in the 4x4 overall footprint. In the first clock cycle, it processes the upper 4x2 grid and in the second clock it processes the lower 4x2 grid in the 4x4 block. The sample index is an index used to identify the set of 8 samples currently being processed. The sample index steps through 2 clock cycles for the 4x4 case and 8 clock cycles for the 8x8 case and identifies which 4x2 subset is currently being processed.

As shown in Fig. 41, the texture filter engine includes a key generator 1310, fraction control 1312, color component interpolator 1314, shadow filter accumulator 1316, and accumulator and post-processor 1318.

In a texture mapping operation, the key generator 1310 reads the (s,t) coordinates and LOD and generates the cache keys to fetch corresponding texture data from the texture cache. The texture cache returns alpha and the RGB components in response to the texture requests. The fraction control 1312 receives the (s,t) coordinates as input and controls the operation of bi-linear and/or tri-linear interpolators in the color component interpolator 1314. The color component interpolator 1314 interpolates the texel samples to compute interpolated alpha and RGB components. The accumulator and post-post processor 1318 then scales the alpha and RGB components, accumulates the scaled components, and outputs alpha and color factors corresponding to a pixel location currently being processed. These alpha and color factors are color and alpha values input to the pixel engine, as input to the texture modulation process.

In anisotropic texture mapping, the color component interpolators 1314 walk along the line of anisotropy and perform tri-linear interpolation at each step. The accumulator 1318 acts as a one dimensional filter, scaling the alpha and color components and then accumulating the scaled components. In one specific embodiment, the accumulator 1318 scales the alpha and color components using trapezoidal or triangle filtering based on the ratio of anisotropy. In either case, the accumulator scales components at the far edges of the resampling filter to approximate a roll-off at the filter edges. To achieve trapezoidal filtering, the scale factor corresponds to a linear roll-off at the filter edges and is a constant at steps between the filter edges.

In one specific implementation, the scale factors for steps along the line of anisotropy are computed as follows. For an anisotropy ratio from 1 to 1 up to 2 to 1, the accumulator applies a weighting factor of 0.5 at each step of the anisotropic walker. For an anisotropy ratio of 2 to 1 and greater: the accumulator weights components by 1./anisotropy for steps n<(artisotropy-1)/2; and weights components by 0.5(anisotropy-2n)/anisotropy for n greater than or equal to (anisotropy-1)/2. The anisotropy ratio in this specific example is the ratio of the long to the short side of the best fit rectangle for an inverse Jacobian matrix. The inverse Jacobian matrix is a matrix of partial derivatives of the geometric transform from view space coordinates to texture coordinates (i.e., from (x,y) to (s,t) coordinates). The line of anisotropy is a line through the (s,t) coordinates in the direction of the longer column vector of the inverse Jacobian matrix.

For shadowing operations, the key generator 1310 reads the (s,t) coordinates of the pixel location mapped into the shadow map and generates cache keys. The texture cache returns shadow map elements (shadels) to the shadow filter accumulator 1316. The shadow filter receives the shadow index and beta as input, and compares the depth of the current instance of pixel data in light space with the depth values in the filter footprint to generate a shadow mask. The shadow filter accumulator sums elements in the shadow mask and divides the sum by the number of samples. In this implementation, the texture filter engine achieves the smooth roll off at the edges of the filter footprint by applying a trapezoidal filter to the result of the depth compare step. To implement the trapezoidal filter, the shadow accumulation filter computes four preliminary shadow coefficients by applying a 3x3, or 7x7 box filter four times to a 4x4 or 8x8 filter footprint, respectively and passes the four preliminary coefficients to one of the color interpolators 1314. This color interpolator 1314 performs bilinear interpolation on the preliminary coefficients to compute a final shadow coefficient.

As introduced above, the key generator 1310 reads (s,t) coordinates from the pixel queue and generates cache keys to fetch texture data from the texture cache. Fig. 40 is a block diagram illustrating the key generator in more detail. Based on the (s,t) coordinates in the hi and lo MIP maps (the two closest MIP maps), the key generator computes the texture sample locations in the hi and lo MIP maps (1340). The key generator then computes the cache keys from these samples (1342). The key generator transfers the cache keys, (s,t) coordinates and LOD for the hi and lo MIP map levels to the texture cache, which returns the requested texture samples. Of course, if only one texture map level of detail is used, the key generator only generates keys for one texture map.

The fraction control 1312 in Fig. 39 controls the interpolation between samples in a texture or shadow map, and between MIP map levels for tri-linear interpolation. To support bi-linear interpolation, the fraction control controls weighting between samples in a texture or shadow map. To support tri-linear interpolation, the fraction control instructs the interpolators to interpolate between the four nearest samples to a point mapped into the two closest MIP map levels (bi-linear interpolation) and then instructs a linear interpolator to blend the result from the two MIP map levels. The fraction control receives the LOD and (s,t) coordinates for the hi and lo MIP map levels as input and controls interpolation between samples at each MIP level and between MIP map levels.

The color component interpolator 1314 includes interpolators for alpha and RGB color components. Fig. 41 is a block diagram illustrating one of the four interpolators in more detail. This interpolator handles color component interpolation for one component and performs bi-linear interpolation on shadow coefficients. The other color component interpolators handle only a color component.

The color component interpolator receives texels or shadow map elements from the texture cache and applies them to a bank of multiplexers 1350. When input to the bank of multiplexers 1350, the sample valid data specifies which of the samples are valid, i.e. those that should be used for the current texture or shadowing operation. Based on the sample valid control signals, the multiplexers select either the incoming sample or a texture background color 1352. For shadowing operations, the color component interpolator 1314 passes shadow elements to the shadow filter accumulator 1316. The three color channels are used to form a single 24 bit wide shadow map element, and the alpha channel is ignored in shadowing operations. For texture mapping operations, the color component interpolator transfers texture samples to the stages of linear interpolators 1354, 1356 and 1358.

In tri-linear interpolation, the color component interpolator uses three stages of linear interpolators, two to interpolate between samples at each MIP map level (1354 and 1356), and another to blend the result from each MIP level (1358). The color component interpolator performs bi-linear interpolation to combine shadow coefficients computed from 4 filter footprints. As shown in Fig. 43, it uses the last two stages (1356 and 1358) to perform this bi-linear interpolation. A second bank of multiplexers 1360 selects between four shadow coefficients and the output of the first stage of linear interpolators 1354. In both texture mapping and shadowing operations, the color component interpolator transfers the output of the interpolator stages to the accumulator and post-processor 1318.

The shadow filter accumulator 1316 receives a sample index and light depth value (beta) from the pixel queue, compares the light depth value with shadow map elements returned from the texture cache to generate shadow masks, and filters the shadow masks to compute preliminary shadow coefficients. Fig. 44. is a block diagram illustrating the shadow filter accumulator in more detail. Depth comparators in the shadow filter accumulator compare the depth of the shadow elements in the filter footprint and generate a shadow mask. In this particular case, the shadow mask is 8 bits with boolean values corresponding to a 4x2 section of the filter footprint.

The footprint control 1372 selects the current 4 x 2 section of the overall footprint based on the sample index value from the pixel queue. The footprint control transfers a footprint mask to each of four shadow contribution blocks based on the clock cycle and the filtering mode (2x2, 4x4 or 8x8). The footprint mask indicates which of the 8 shadow mask elements are valid at the current clock cycle for each of four box filters, in the 4x4 and 8x8 modes. In the two by two mode, the shadow filter accumulator outputs four booleans indicating whether each of the four nearest samples are in shadow or not.

The shadow filter accumulator applies four box filters (3x3 or 7x7, e.g.) to the samples in the filter footprint. Each of the shadow contribution blocks combine the footprint mask and the shadow mask to determine which elements of the shadow mask are valid for the current clock cycle and then sum the valid elements. After accumulating the valid elements in the shadow mask for the entire filter footprint, the shadow contribution blocks divide the sum by the number of samples to compute preliminary shadow coefficients, which are transferred to a bi-linear interpolation stage in the color interpolator. The color interpolator then interpolates between the four preliminary shadow coefficients to compute a final shadow coefficient.

The accumulator and post-processor 1318 receives alpha and color components from the color component interpolator 1314 and computes color and alpha factors for each instance of texture reference data. For shadowing operations, the texture filter engine uses one channel (alpha or RGB) to compute a shadow attenuation coefficient. The shadow filtering logic can also be implemented separately. Fig. 43 is a block diagram illustrating the accumulator and post-processor in more detail. As shown, each color component (alpha and RGB) has a scale and accumulator. The scale and accumulator 1380 for each component receives the accumulation scale and a color component as input, and in response. scales the color component and adds it to an accumulated component value in the component sum block 1382. For example, in anisotropic filtering, the scale and accumulate blocks 1380 weight the output of the reconstruction filter (tri-linear interpolator), as the texture filter engine walks along the line of anisotropy. After the last step, the scale and accumulators for alpha and RGB components output the final color component factors.

For shadowing operations, the scale and accumulate block bypasses the multiply operation but adds an ambient offset. The ambient offset ensures that even objects totally in shadow will still be visible. For example, a shadow coefficient of 1 means totally illuminated, a shadow coefficient of 0 means totally in shadow. If colors were multiplied by a coefficient of zero, the object would not be visible at that pixel location. Thus, an offset is added and the shadow coefficients are clamped to 1 such that the offset shadow coefficients range from the offset value to 1.

The shadow post processor 1384 does the replication of the scalar shadow attenuation 's' to all 3 color channels and (conditionally) to the alpha channel. There is also a conditional complimenting (s = 1-s) of the shadow attenuation for to compute a shadow image. A shadow image is an array of shadow coefficients or an array of the compliments of shadow coefficients which may be used to shadow a gsprite.

Finally, the multiplexer stage 1386 selects either the shadow coefficients, for a shadowing operations, or RGB and alpha components for texture mapping operations. In sum, the texture filter engine 401 performs both shadowing and texturing operations. It passes the result of texture mapping operations to a texture modulation stage. Texture modulation typically includes multiplying the RGB color values from the texture filter by an interpolated color or color values computed in the scan convert block. In addition for graphical objects with translucency, texture modulation can also include multiplying the alpha value from the texture filter by an interpolated alpha value from the scan convert block. Depending on the implementation, texture modulation can be implemented in the texture filter engine (element 401 in Fig. 9B) or the pixel engine (element 406 in Fig. 98). It may also be implemented in the scan convert block (element 394 in Fig. 9A or element 397 in Fig. 9C). In one implementation, the texture filter engine 401 combines an interpolated value with the filtered value to compute a composed value. The pixel engine 406 then determines whether to store or combine a composed value with a corresponding RGB component or alpha component stored in the pixel or fragment buffers for a corresponding pixel location.

In the case of shadowing operations, the shadow coefficients can be applied to the RGB and alpha values at corresponding pixel locations in the pixel or fragment buffers, or to interpolated RGB or alpha values generated during the current pass and buffered in a queue. For example, if an object does not have a texture associated with it, the texture modulator in the texture filter engine 401 can multiply interpolated and unresolved RGB and alpha values representing the lit image and stored in the texture reference data queue 391 (Fig. 9B) by the shadow attenuation coefficients from the accumulator and post processor.

We have described various aspects of an image processing system, its architecture, and associated methods with references to several embodiments. While we have described several embodiments in detail, we do not intend to limit our invention to these specific embodiments. For example, our novel architecture can be applied to a variety of hardware implementations, including but not limited to: computer systems ranging from hand held devices to workstations, game platforms, set-top boxes, graphics processing hardware, graphics processing software, and video editing devices. Variation of our systems and methods can be implemented in hardware or software or a combination of both.

In view of the many possible embodiments to which the principles of our invention may be put, we emphasize that the detailed embodiments described above are illustrative only and should not be taken as limiting the scope of our invention. Rather, we claim as our invention all such embodiments as may come within the scope and spirit of the following claims and equivalents to these claims.

Various aspects of the invention are described below in the following numbered list of preferred features of the invention.

LIST OF PREFERRED FEATURES OF THE INVENTION:

1. In a system for generating images in a view space at a computational rate, a method of generating images comprising:

    assigning objects in a view volume for a current image to at least two gsprites;

independently rendering the objects to the at least two gsprites, including rendering a first 3-D object to a first gspritc;
compositing the at least two gsprites to generate the current image at the computational rate;
repeating the above steps to generate subsequent images for subsequent computational periods;
in a subsequent computational period. computing an affine transform to simulate the motion of the first 3-D object; and
performing an affine transformation on the first gsprite using the affine transform, rather than re-rerendering the first gsprite in the subsequent computational period to reduce rendering overhead.

2. The method of feature 1 further including:

computing the affine transform using characteristic points of the first object;
determining whether an affine transformation of the first gsprite using the affine transform is within a predefined error tolerance;
if the affine transformation is within the predefined error tolerance, then performing an affine transformation on the first gsprite to simulate motion of the first object.

3. A method according to feature 1 including the steps of:

comparing characteristic points for the first object in a first computational period with characteristic points for the first object in a second computational period; and
re-rendering the first object when changes in the characteristic points are not within a predefined tolerance.

4. A method according to feature 1 in which the rendering step comprises the step of updating gsprites rendered in previous computational periods at varying rates.
5. An image processing system for generating a display image using gsprites, the system comprising:

gsprite memory;
an image pre-processor receiving input describing location of objects and a viewpoint, for determining which of the objects intersect with a view volume, for assigning objects intersecting with the view volume to gsprites, and for computing affine transforms used to transform the gsprites to simulate motion of the objects that the gsprites represent; and
an image processor coupled to the image pre-processor for rendering the objects to respective gsprites, for storing the gsprites to the gsprite memory, for reading the gsprites from the gsprite memory and transforming the gsprites to physical output device coordinates according to the affine transforms, and for compositing the rendered gsprites for display on the physical output device.

6. The system of feature 5 wherein the image pre-processor comprises a programmed processor in a computer system.
7. The system of feature 5 wherein the image pre-processor comprises a programmed digital signal processor.
8. The system of feature 5 wherein the image pre-processor comprises a programmed processor in a computer system and a programmed digital signal processor coupled to the programmed processor.
9. The system of feature 5 wherein the image processor includes a tiler for rendering the objects to the gsprites and storing the gsprites in the gsprite memory.
10. The system of feature 5 wherein the image processor includes a gsprite engine for reading the gsprites from the gsprite memory and for transforming the gsprites to the physical output device coordinates.
11. The system of feature 10 wherein the image processor includes a compositing buffer coupled to the gsprite engine for compositing the gsprites for display on the physical output device.
12. A pixel resolution circuit comprising:

a fragment buffer for storing depth sorted fragment records, the fragment records including color data and pixel coverage data corresponding to n sub-pixel regions, where n is an integer;
color accumulators corresponding to the n sub-pixel regions, the color accumulators coupled to the fragment buffer for receiving the color data, and for separately accumulating and storing the color data for each sub-pixel region;
logic for adding the accumulated color from each of the color accumulators and computing a color value for a pixel.

13. The pixel resolution circuit of feature 12 wherein the color accumulators include circuitry for performing a multiplication operation to compute accumulated color for fragment records.
14. The pixel resolution circuit of feature 12 wherein the fragment records include alpha data and the color accumulators include circuitry for performing a first multiplication operation to compute alpha scale, a second multiplication operation to compute accumulated color, and a third multiplication operation to compute accumulated alpha.
15. The pixel resolution circuit of feature 12 further including logic for scaling the accumulated color from each of the sub-pixel locations.
16. The pixel resolution circuit of feature 12 wherein the logic for adding the accumulated color is pipelined to compute the color value at a rate of one clock cycle per pixel.
17 A method for resolving pixel data comprising:

successively processing fragment records, the fragment records including color data and pixel coverage data corresponding to n sub-pixel regions, where n is an integer,
separately accumulating color for the n sub-pixel regions;
storing the accumulated color for the n sub-pixel regions; and
combining the accumulated color for the n sub-pixel regions to compute a color value for a pixel location.

18. The method of feature 17 wherein the fragment records further include alpha data, the method further including the steps of:

storing accumulated alpha for the n sub-pixel regions: and
accumulating alpha data from the fragment records separately for the n sub-pixel regions.

19. The method of feature 17 further including:

scaling the accumulated color for the n sub-pixel regions by l/n.

20. The method of feature 17 wherein the coverage data includes coverage masks corresponding to the fragment records, the method further including:

using the coverage masks for the fragment records as a processing mask such that color is accumulated for sub-pixel regions for which there is coverage.

21. A pixel resolution circuit for resolving pixel data for a pixel location having n sub-pixel regions, where n is an integer comprising:

a fragment buffer storing depth-sorted fragment records for a pixel location, each fragment record including color data, an alpha value, and pixel coverage data indicating which of the n sub-pixel regions the fragment record covers;
a new coverage control in communication with the fragment buffer, the new coverage control for analyzing pixel coverage data, for identifying unique pixel regions including sub-pixels having common accumulated alpha values, and for storing the common accumulated alpha values for the pixel regions; and
a scale and accumulation control in communication with the new coverage control and the fragment buffer, the scale and accumulation control coupled to the fragment buffer for receiving the color, alpha, and pixel coverage data, the color accumulation circuitry having color scale and color accumulation circuitry for computing accumulated color for the unique pixel regions having common accumulated alpha values.

22. The pixel resolution circuit of feature 21 wherein the scale and accumulation control includes a coverage scaler for multiplying accumulated alpha for a pixel region. alpha of a fragment record, and a coverage scale factor, where the coverage scale factor is m/n and m is the number of sub-pixels in the pixel region.
23. The pixel resolution circuit of feature 21 further including a coverage array including an array of coverage masks and corresponding accumulated alpha values representing the unique pixel regions, and wherein the new coverage control includes circuitry for comparing pixel coverage data of a new fragment record with the coverage masks to determine how the new fragment record overlaps the unique pixel regions, and for computing new unique pixel regions.
24. The pixel resolution circuit of feature 21 wherein the new coverage control includes circuitry for identifying opaque sub-pixel regions, for storing location of the opaque sub-pixel regions in an opaque sub-pixel mask, and for using the opaque sub-pixel mask to disregard color or alpha data from other fragments.

25. A method for resolving pixel data for a pixel location having n sub-pixel regions, where n is an integer, the method comprising:

reading a current fragment record from a depth sorted list of fragment records, each fragment record including color data, an alpha value, and pixel coverage data identifying which of the n sub-pixel regions that the fragment record covers;
analyzing the pixel coverage data of the current fragment to identify one or more unique pixel regions, each having one or more sub-pixel regions having a common accumulated alpha;
for each of the one or more unique pixel regions, scaling the color data for the current fragment by multiplying the color data for the current fragment by the common accumulated alpha for the pixel region, the alpha value of the current fragment, and a coverage scale factor, where the coverage scale factor is m/n and m is the number of sub-pixel regions in the pixel region;
adding the scaled color data with accumulated color data for the pixel location; and
repeating analyzing, scaling and adding steps for subsequent fragments in the depth sorted list.

26. In a graphics rendering system for rendering geometric primitives to generate an image, a method for merging pixel fragments comprising:

rasterizing geometric primitives to generate pixel fragments having depth, color, and coverage data;
storing lists of selected pixel fragments in a fragment buffer, each list corresponding to a pixel location in the image;
for a first generated pixel fragment at a first pixel location. determining whether a selected pixel fragment in a corresponding list is within a predefined color tolerance, and determining whether the selected pixel fragment is within a predefined depth tolerance;
merging the generated pixel fragment with a first selected pixel fragment within the predefined color tolerance, and the predefined depth tolerance; and
storing the merged pixel fragment in the corresponding list structure.

27. The method of feature 26 wherein the selected fragment in the corresponding list is the most recently added fragment to the corresponding list, and wherein the determining step comprises only determining whether the most recently added fragment is within a predefined color tolerance.
28. The method of feature 26 comprising the steps of:

rasterizing the geometric primitives to generate fully covered pixels having depth and color data; and
storing selected fully covered pixels in a pixel buffer.

29. The method of feature 26 comprising the steps of:

rasterizing the geometric primitives to generate pixel data including fully covered pixels having depth and color data;
performing a depth compare operation on the generated fully covered pixels to identify selected fully covered pixels; and
storing selected fully covered pixels in a pixel buffer.

30. The method of feature 26 further including:

rasterizing the geometric primitives to generate pixel data including fully covered pixels having depth and color data;
performing a depth compare operation on the generated fully covered pixels to identify selected fully covered pixels;
storing selected fully covered pixels in a pixel buffer; and
performing depth compare operations between the generated pixel fragments and corresponding selected fully covered pixels in the pixel buffer to identify the selected pixel fragments to store in the fragment buffer.

31. The method of feature 26 wherein the coverage data includes a coverage mask, and the merging step comprises:

combining the coverage mask of the generated pixel fragment with the first selected pixel fragment within the predefined color tolerance, and the predefined depth tolerance; and
storing the combined coverage mask in the merged pixel fragment.

32. The method of feature 31 further including:

determining whether the merged pixel fragment has become a fully covered pixel as a result of the merging step; and if so,
storing color and depth of the merged pixel fragment at a corresponding location in the pixel buffer.

33. The method of feature 26 further including:

resolving the lists of selected pixel fragments in the pixel buffer;
repeating the rasterizing and resolving steps to generate a display image; and
generating the display image and subsequent images at rate greater than 10 Hz.

34. A system for rendering geometric primitive data to generate an image for a view space, the system comprising:

a rasterization buffer;
a rasterizer operable to receive geometric primitives and operable to rasterize the geometric primitives to produce pixel fragments including color, depth, and coverage data;
a pixel engine in communication with the rasterizer to receive the pixel fragments, operable to perform a depth compare operation to determine whether to store the pixel fragments in the rasterization buffer, the pixel engine in communication with the rasterization buffer to read stored pixel fragments, operable to compare a pixel fragment generated by the rasterizer with at least a first pixel fragment stored in the rasterization buffer to determine whether the generated pixel fragment is within a color tolerance, and operable to merge the generated pixel fragment with one of the pixel fragments stored in the rasterization buffer.

35. The system of feature 34 wherein the rasterization buffer includes a pixel buffer operable to store color and depth data for fully covered pixel locations in the view space, and a fragment buffer operable to store color, depth, and coverage data for partially covered pixel locations in the view space.
36. The system of feature 35 wherein the fragment buffer is operable for storing lists of the pixel fragments, the lists corresponding to one of the pixel locations in the view space.
37. The system of feature 34 wherein the pixel engine includes a comparator circuit to perform the depth compare operation.
38. The system of feature 34 wherein the pixel engine includes a comparator circuit to compare a pixel fragment generated by the rasterizer with at least a first pixel fragment stored in the rasterization buffer to determine whether the generated pixel fragment is within a color tolerance.
39. The system of feature 34 wherein the pixel engine includes a first comparator circuit to compare the pixel fragment generated by the rasterizer with at least the first pixel fragment stored in the rasterization buffer to determine whether the generated pixel fragment is within a color tolerance, and a second comparator circuit to compare the pixel fragment generated by the rasterizer with at least the first pixel fragment stored in the rasterization buffer to determine whether the generated pixel fragment is within a depth tolerance.
40. The system of feature 34 wherein the pixel engine is operable to maintain the most recent fragment stored in the rasterization buffer for each pixel location in the image, and wherein the pixel engine is operable to merge only the most fragment stored in the rasterization buffer for a pixel location corresponding to a pixel location of the generated fragment.
41. A system for rendering geometric primitive data to generate an image for a view space, the system comprising:

a rasterization buffer including a pixel buffer operable to store pixel records having color and depth data for pixel locations in the view space, and a fragment buffer operable to store lists of fragment records corresponding to the pixel locations, the fragment records including color, coverage and depth data for partially covered pixel locations;
a rasterizer operable to receive geometric primitives and operable to rasterize the geometric primitives to produce pixel data including color, depth, and coverage data;
a pixel engine in communication with the rasterizer to receive the pixel data, operable to perform a depth compare operation to determine whether to store the pixel data as pixel records or fragment records in the rasterization buffer, the pixel engine in communication with the rasterization buffer to read stored fragment records, operable to compare color data for a partially covered pixel location generated by the rasterizer with at least a first fragment record stored in the fragment buffer to determine whether the color data is within a color tolerance, and operable to merge the color data with one of the fragment records stored in the fragment buffer.

42. In an image processing system, a method for texture mapping a source image to a destination image where a mapping of a point from the destination image to the source image is described by an inverse transform, the method comprising:

mapping a filter footprint into the source image using the inverse transform to compute a mapped filter footprint;
determining a line of anisotropy from the mapped filter footprint;
repetitively applying a filter along the line of anisotropy to sample texel values from the source image; and
filtering outputs of the repetitive filtering step to compute a pixel value for the destination image.

43. The method of feature 42 wherein the filter is an interpolating filter and the step of applying the filter comprises:

applying the interpolating filter along a direction of maximum elongation of the mapped filter footprint to interpolate texel values from the source image.

44. The method of feature 43 wherein the processing step includes:

applying a resampling filter to the outputs of the interpolating filter and summing outputs of the resampling filter to compute the pixel value for the destination image.

45. The method of feature 44 wherein the resampling filter is a one dimensional filter.
46. The method of feature 42 including:

computing a Jacobian matrix for the inverse transform to approximate the mapped filter footprint.

47. The method of feature 46 wherein the direction of maximum elongation is determined from a vector in the Jacobian matrix.
48. The method of feature 42 wherein the step of mapping the filter footprint includes:

computing a derivative of the inverse transform at a point mapped into the source image.

49. The method of feature 42 including:

computing the Jacobian matrix of partial derivatives of the inverse transform at a point in the source image to approximate the mapped filter footprint.

50. The method of feature 43 wherein a footprint of the interpolating filter is two dimensional, and further including:

adjusting size of the footprint of the interpolating filter to fit the mapped filter footprint.

51. The method of feature 50 wherein the adjusting step includes using MIP mapping of the source image to adjust the size of the footprint of the interpolating filter.
52. The method of feature 42 wherein the filter is an interpolating filter, and further including:

computing a Jacobian matrix of the inverse transform at a point mapped into the source image to approximate the mapped filter footprint, the Jacobian matrix including a first and second vector;
determining the direction of maximum elongation from a direction of one of the first or second vectors; and
applying a resampling filter to the outputs of the interpolating filter and summing outputs of the resampling filter to compute the pixel value for the destination image.

53. The method of feature 52 including:

determining size of the interpolating filter from a length of one of the first or second vectors; and
using MIP mapping of the source image to adjust the size of the interpolating filter relative to the source image.

54. The method of feature 52 including:

determining size of the resampling filter from a length of the first or second vector; and
adjusting the size of the resampling filter based on the length of the first or second vector.

55. A system for performing texture mapping of a texture to surfaces of geometric primitives, the system comprising:

texture memory;
a set-up processor for receiving commands and the geometric primitives, for parsing the commands, for computing inverse transform data from the geometric primitives, for computing texture addresses from the geometric primitives, and for retrieving texture data into the texture memory corresponding to the texture addresses; and
a texture filter engine in communication with the set-up processor and the texture memory for receiving the inverse transform data and the texture addresses and computing a line of anisotropy through a point mapped into the texture, the texture filter engine including a filter for computing a weighted sum of texel values sampled along the line of anisotropy.

56. The system of feature 55 wherein the inverse transform data is a matrix representing an inverse transform of a point on a surface of a geometric primitive mapped to the source image, and wherein the texture filter engine includes circuitry for determining the direction of the line anisotropy from the matrix.
57. The system of feature 55 wherein the filter includes interpolating filter circuitry for sampling the texel values from the source image.
58. The system of feature 57 wherein the filter is a two-dimensional interpolating filter.
59. The system of feature 55 wherein the filter includes an interpolating filter for sampling texel values along the line of anisotropy and a one dimensional digital filter applied to outputs of the interpolating filter.
60. In a graphics rendering system, a method of rendering geometric primitives, the method comprising:

rasterizing a first set of the geometric primitives for a first image region of size $S_t$ to generate pixel fragments;
storing the pixel fragments as fragment entries in a fragment buffer;
determining whether a number of fragment entries in the fragment buffer exceed a predetermined value;
in response to determining that the number of fragment entries exceed the predetermined value, dividing the first image region into two or more image regions of a size $S_2$;
rendering serially the two or more image regions of size $S_2$ including rasterizing a first sub-set of the first set of geometric primitives for a first image region of size $S_2$ to generate first corresponding pixel fragments, resolving the first corresponding pixel fragments, and repeating the rasterizing and resolving steps for subsequent image regions of size $S_2$.

61. The method of feature 60 wherein the dividing step includes:

evaluating the size $S_1$ of the first image region, and based on the size of the first image region, determining the size of $S_2$; and
dividing the first image region of size $S_1$ into image regions of size $S_2$.

62. The method of feature 60 wherein the dividing step includes hierarchically dividing the image region of size $S_1$ into four image regions, each of the four image regions being one-fourth the size of the size of the first image region $S_1$.
63. The method of feature 60 further including sorting the geometric primitives among image regions of size $S_1$.
64. The method of feature 60 further including clearing the fragment buffer in response to determining that the fragment entries exceed the predetermined value.
65. The method of feature 60 further including:

clearing the fragment buffer in response to determining that the fragment entries exceed the predetermined value; and
and wherein the step of rasterizing the first sub-set of the first set of geometric primitives for the first image region of size $S_2$ includes reading the first set of geometric primitives and rejecting any primitives that do not project onto the first image region of size $S_2$.

66. The method of feature 60 including:

clearing the fragment buffer in response to determining that the number of fragment entries exceed the predetermined value;

sorting the first set of geometric primitives among the two or more image regions of size $S_2$ to produce two or more corresponding sub-sets of the first set of geometric primitives; and

wherein the step of rasterizing the first sub-set of the first set of geometric primitives for the first image region of size $S_2$ includes rasterizing one of the corresponding sub-sets of the first set of geometric primitives.

67. The method of feature 60 including:

incrementing a fragment buffer counter to keep track of the number of fragment buffer entries in the fragment buffer; and

wherein the determining step includes evaluating a value of the fragment buffer counter.

68. The method of feature 60 further including:

storing the first corresponding set of pixel fragments in the fragment buffer;

determining whether a number of fragment entries in the fragment buffer exceed a predetermined value as the first corresponding set of pixel fragments are added to the fragment buffer; and

in response to determining that the number of fragment entries in the fragment buffer exceed the predetermined value while rasterizing the first sub-set of the first set of geometric primitives, dividing the image regions of size $S_2$ into two or more image regions of size $S_3$.

69. The method of feature 60 wherein the pixel fragments include color, coverage, and depth data.

70. The method of feature 60 wherein the pixel fragments include color, coverage, opacity, and depth data.

71. Apparatus for rendering geometric primitives to compute a display image, the apparatus comprising:

a fragment memory;

a rasterizer operable to read the geometric primitives, and operable to generate pixel data for image regions of size $S_1$, and for image sub-regions of size $S_2$;

a pixel engine in communication with the rasterizer, the pixel engine operable to receive the pixel data and operable to control transfer of selected pixel data to the fragment memory, the pixel engine in communication with fragment memory to store the selected pixel data in the fragment memory; and

buffer control circuitry in communication with the fragment memory, the buffer control circuitry operable to determine whether memory usage of the fragment memory has attained a predetermined value, and in communication with the rasterizer to cause the rasterizer to rasterize a sub-set of the geometric primitives for one of the sub-regions when the memory usage of the fragment memory has attained the predetermined value.

72. The apparatus of feature 71 further including a pixel memory having a size $S_1$ and including sub-regions of size $S_2$;

wherein the pixel engine is operable to control transfer of the selected pixel data to the fragment and pixel memories, wherein the pixel engine is communication with the fragment and pixel memories to store the selected pixel data in the pixel or fragment memories;

and wherein the buffer control circuitry is in communication with the rasterizer to cause the rasterizer to rasterize a sub-set of the geometric primitives for an image region of size $S_2$ to a corresponding sub-region of the pixel memory when the memory usage of the fragment memory has attained the predetermined value.

73. The apparatus of feature 71 wherein the rasterizer is operable to generate pixel data for image regions of size $S_1$, and for image sub-regions of size $S_2$, which are sub-regions of the image regions of size $S_1$, and for image sub-regions of size $S_3$, which are sub-regions of the image regions of size $S_2$.

74. The apparatus of feature 73 wherein the pixel memory has a size $S_1$ and has sub-regions of sizes $S_2$ and $S_3$; and wherein the rasterizer is operable to generate the pixel data for the image regions of size $S_1$, $S_2$, or $S_3$ to corresponding regions of the pixel memory.

75. The apparatus of feature 74 wherein the rasterizer is operable to sub-divide the pixel memory hierarchically when the memory usage of the fragment memory has attained the predetermined value.

76. Apparatus for accessing texture data in a graphics rendering system, the apparatus comprising:

a primitive queue operable to store primitives;

a pre-rasterizer in communication with the primitive queue, and operable to receive primitives from the primitive queue and convert the primitives into texture data requests;

a texture request queue in communication with the pre-rasterizer and operable to store the texture data requests;
a texture cache;
a texture fetch unit in communication with the texture request queue, the texture fetch unit operable to retrieve texture data from memory, and operable to store the texture data in the texture cache;
a post-rasterizer in communication with the primitive queue, operable to receive the primitives from the primitive queue, the post-rasterizer in communication with the texture cache, and the post-rasterizer operable to rasterize the primitives using texture data retrieved from the texture cache.

77. The apparatus of feature 76 wherein the texture data requests comprise a list of texture blocks.
78. The apparatus of feature 76 wherein the pre-rasterizer is operable to control texture block replacement in the texture cache to prevent exceeding the memory capacity of the texture cache.
79. The apparatus of feature 76 wherein the pre-rasterizer is operable to compress texture data requests to a single request for each texture block retrieved from the memory. ,
80. The apparatus of feature 76 wherein the post-rasterizer is operable to remove the primitives from the queue after the post-rasterizer completes rasterizing each of the primitives.
81. The apparatus of feature 76 further including a decompression engine in communication with the memory, the decompression engine operable to receive compressed texture data and to decompress the compressed texture data and transfer the decompressed texture data to the texture cache.
82. The apparatus of feature 81 further including a compressed cache in communication with the memory and the decompression unit, the compressed cache operable to temporarily store the compressed texture data retrieved from memory as the decompression unit decompression unit decompresses compressed blocks of the compressed texture data.
83. The apparatus of feature 81 wherein the decompression unit is operable to perform decompression on texture blocks compressed using a discrete cosine transform form of compression.
84. The apparatus of feature 81 wherein the decompression unit is operable to perform decompression on texture blocks compressed using a lossless form of compression that includes Huffman and run length encoding.
85. A method for accessing texture data from memory during rendering operations performed in a graphics rendering system, the method comprising:

queuing geometric primitives;
converting the queued geometric primitives into texture references;
queuing the texture references;
fetching texture data blocks from memory;
caching the texture data blocks in a texture cache;
rasterizing the queued geometric primitives to generate output pixel data, the rasterizing step including accessing the texture data blocks as the texture blocks become available in the texture cache.

86. The method of feature 85 further including:

decompressing compressed texture blocks fetched from the memory.

87. Apparatus for accessing texture data in a graphics rendering system, the apparatus comprising:

a rasterizer operable to receive geometric primitive data, and operable to generate pixel data including a texture request;
a texture reference data queue in communication with the rasterizer. and operable to receive the pixel data;
a texture fetch unit in communication with the texture reference data queue, operable to convert the texture requests into addresses of texture blocks in memory, and operable to fetch the texture blocks from the memory;
a texture cache in communication with the texture fetch unit, and operable to store the texture blocks; and
a texture filter engine in communication with the texture cache and the texture reference data queue, and operable to read the pixel data from the texture reference data queue and to read texture samples from the texture cache and generate output pixels.

88. The apparatus of feature 87 further including a decompression unit in communication with the memory, the decompression unit operable to decompress blocks of compressed texture data.
89. The apparatus of feature 88 wherein the decompression unit includes two parallel decompression blocks.
90. The apparatus of feature 88 wherein the decompression unit is operable to perform a discrete cosine transform form of decompression.

91. The apparatus of feature 90 wherein the decompression unit is operable to perform a lossless Run Length decoding or a Huffman decoding.

92. The apparatus of feature 87 wherein the texture fetch unit is operable to control replacement of the texture blocks stored in the texture cache so that the memory capacity of the texture cache is not exceeded.

93. The apparatus of feature 87 wherein the texture request comprises a center of a texture sample area in coordinates of a texture map.

94. The apparatus of feature 87 wherein the texture reference data queue is operable to store the pixel data including interpolated color, an address for a destination pixel, and texture reference data.

95. A method for accessing texture data from memory during rendering operations performed in a graphics rendering system, the method comprising:

rasterizing geometric primitives to generate pixel elements, the pixel elements each including a pixel address, color data, and a texture request;
queuing the pixel elements in a queue;
reading a texture request from the queue;
converting the texture request into address of a texture block stored in memory;
fetching the texture block stored in memory;
caching the texture block in a texture cache;
repeating the reading, converting and fetching steps for additional pixel elements in the queue;
generating an output pixel by retrieving a pixel element from the queue, retrieving texture sample data from the texture cache, and combining the texture sample data with the color data for the pixel element; and
repeating the generating step to generate additional output pixels.

96. The method of feature 95 wherein the fetching step includes:

retrieving a compressed texture block from the memory;
decompressing the compressed texture block; and
storing the decompressed texture block in the texture cache.

97. The method of feature 96 wherein the fetching step further includes:

caching the compressed texture block.

98. The method of feature 96 wherein the compressed texture block is compressed using discrete cosine transform compression.

99. The method of feature 96 wherein the compressed texture block is compressed using Huffman and run length encoding.

100. The method of feature 95 including:

keeping track of the texture blocks cached in memory to avoid generating requests for the texture blocks already stored in the texture cache.

## Claims

**1.** A method for texture mapping a source image to a destination image in an image processing system where a mapping of a point from the destination image to the source image is described by an inverse transform, the method comprising:

mapping a filter footprint into the source image using the inverse transform to compute a mapped filter footprint;
determining a line of anisotropy from the mapped filter footprint;
repetitively applying a filter along the line of anisotropy to sample texel values from the source image; and
filtering outputs of the repetitive filtering step to compute a pixel value for the destination image.

**2.** The method of claim 1 wherein the filter is an interpolating filter and the step of applying the filter comprises:

applying the interpolating filter along a direction of maximum elongation of the mapped filter footprint to interpolate texel values from the source image.

**3.** The method of claim 2 wherein the processing step includes:

applying a resampling filter to the outputs of the interpolating filter and summing outputs of the resampling filter to compute the pixel value for the destination image.

**4.** The method of claim 3 wherein the resampling filter is a one dimensional filter.

**5.** The method of claim 1 including:

computing a Jacobian matrix for the inverse transform to approximate the mapped filter footprint.

**6.** The method of claim 5 wherein the direction of maximum elongation is determined from a vector in the Jacobian matrix.

**7.** The method of claim 1 wherein the step of mapping the filter footprint includes:

computing a derivative of the inverse transform at a point mapped into the source image.

**8.** The method of claim 1 including:

computing the Jacobian matrix of partial derivatives of the inverse transform at a point in the source image to approximate the mapped filter footprint.

**9.** The method of claim 2 wherein a footprint of the interpolating filter is two dimensional, and further including:

adjusting size of the footprint of the interpolating filter to fit the mapped filter footprint.

**10.** The method of claim 9 wherein the adjusting step includes using MIP mapping of the source image to adjust the size of the footprint of the interpolating filter.

**11.** The method of claim 1 wherein the filter is an interpolating filter, and further including:

computing a Jacobian matrix of the inverse transform at a point mapped into the source image to approximate the mapped filter footprint, the Jacobian matrix including a first and second vector;
determining the direction of maximum elongation from a direction of one of the first or second vectors; and
applying a resampling filter to the outputs of the interpolating filter and summing outputs of the resampling filter to compute the pixel value for the destination image.

**12.** The method of claim 11 including:

determining size of the interpolating filter from a length of one of the first or second vectors; and
using MIP mapping of the source image to adjust the size of the interpolating filter relative to the source image.

**13.** The method of claim 11 or 12 including:

determining size of the resampling filter from a length of the first or second vector; and
adjusting the size of the resampling filter based on the length of the first or second vector.

**14.** A system for performing texture mapping of a texture to surfaces of geometric primitives, the system comprising:

a texture memory;
a set-up processor for receiving commands and the geometric primitives for parsing the commands, for computing inverse transform data from the geometric primitives, for computing texture addresses from the geometric primitives, and for retrieving texture data into the texture memory corresponding to the texture address; and
a texture filter engine in communication with the set-up processor and the texture memory for receiving the inverse transform data and the texture addresses and computing a line of anisotropy through a point mapped into the texture, the texture filter engine including a filter for computing a weighted sum of texel values sampled along the line of anisotropy.

**15.** The system of claim 14 wherein the inverse transform data is a matrix representing an inverse transform of a point on a surface of a geometric primitive mapped to the source image, and wherein the texture filter engine includes circuitry for determining the direction of the line anisotropy from the matrix.

**16.** The system of claim 14 or 15 wherein the filter includes interpolating filter circuitry for sampling the texel values from the source image.

**17.** The system of claim 16 wherein the filter is a two-dimensional interpolating filter.

**18.** The system of claim 14 wherein the filter includes an interpolating filter for sampling texel values along the lines of anisotropy and a one dimensional digital filter applied to outputs of the interpolating filter.

FIG. 1

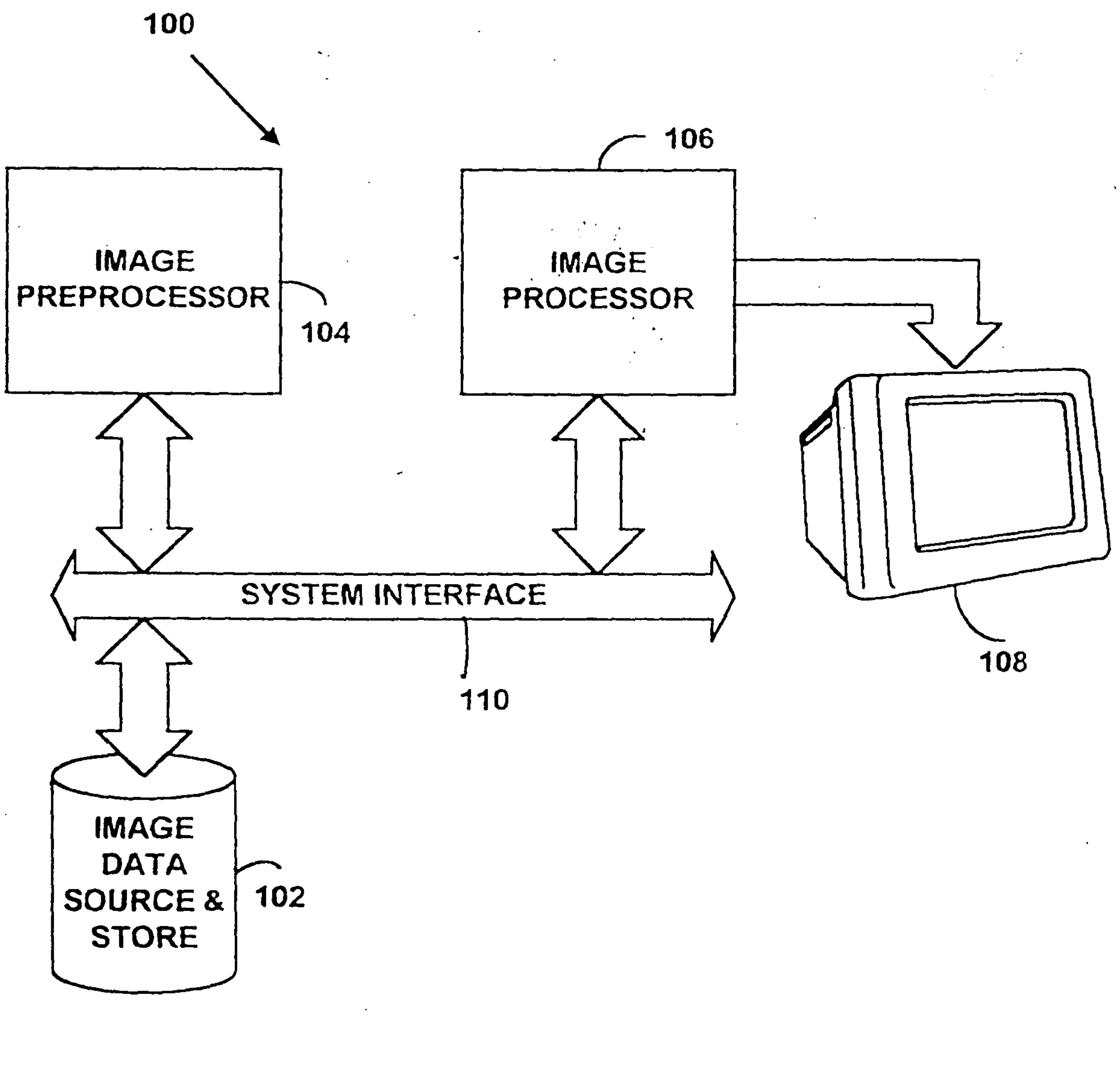
100
106
IMAGE PREPROCESSOR
104
IMAGE PROCESSOR
SYSTEM INTERFACE
110
108
IMAGE DATA SOURCE & STORE
102

FIG. 2

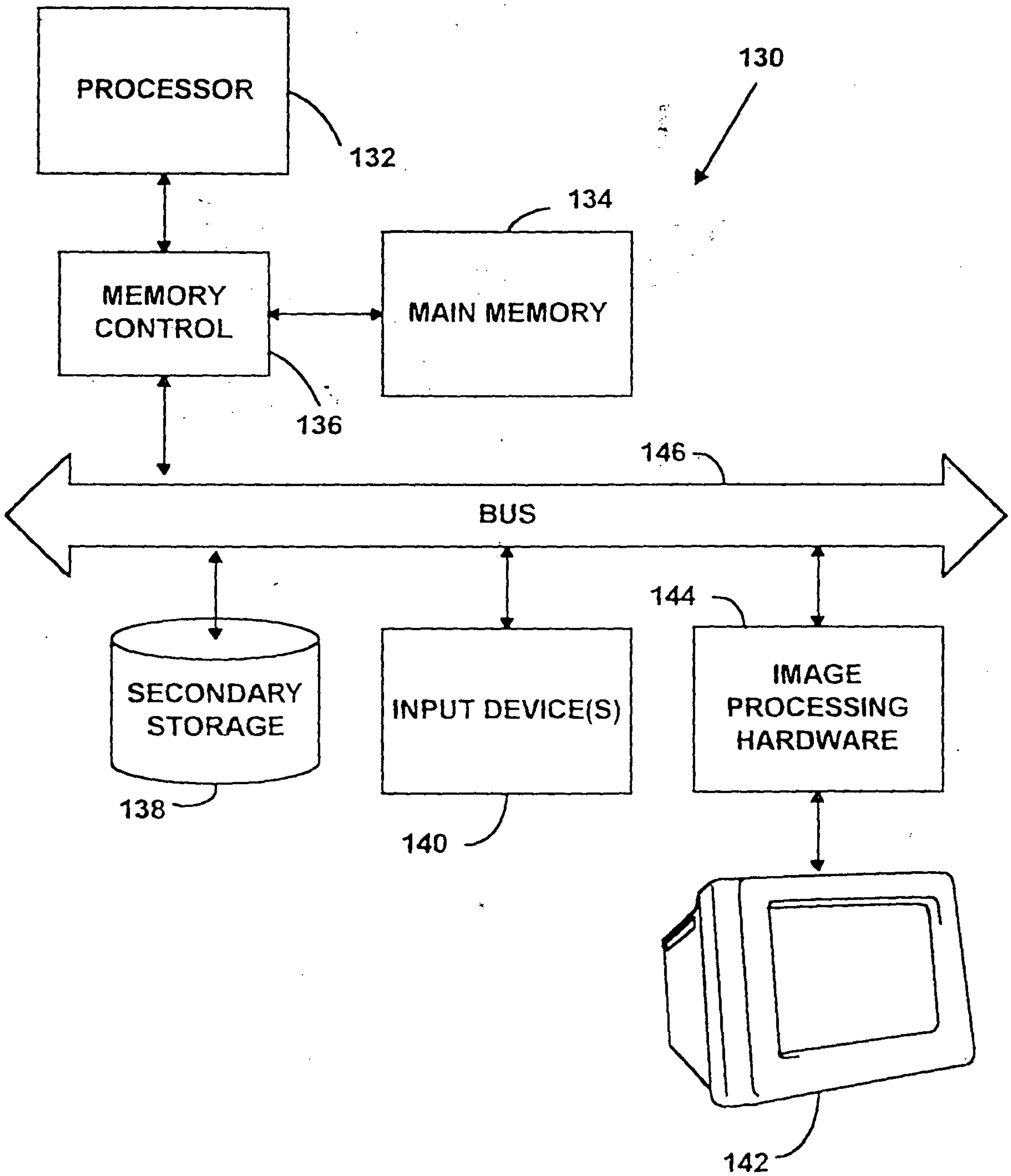
PROCESSOR
132
130
134
MEMORY CONTROL
MAIN MEMORY
136
146
BUS
144
SECONDARY STORAGE
INPUT DEVICE(S)
IMAGE PROCESSING HARDWARE
138
140
142

FIG. 3

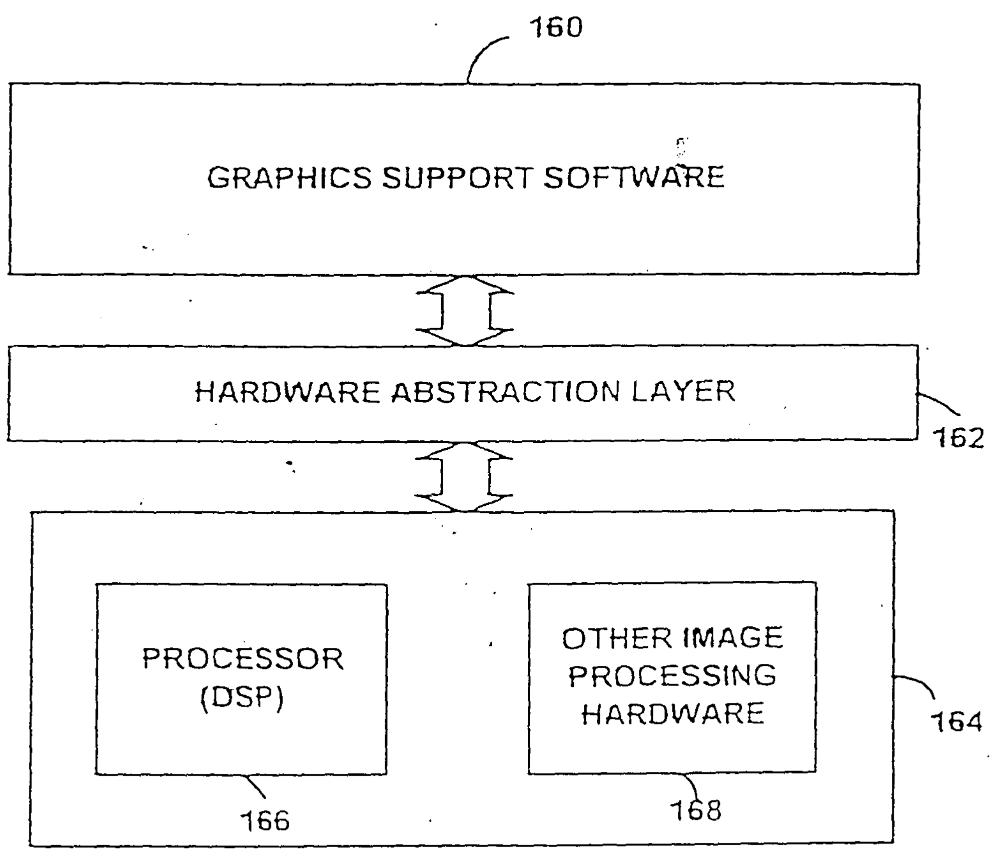
160
GRAPHICS SUPPORT SOFTWARE
HARDWARE ABSTRACTION LAYER
162
PROCESSOR
(DSP)
OTHER IMAGE
PROCESSING
HARDWARE
164
166
168

FIG. 4A

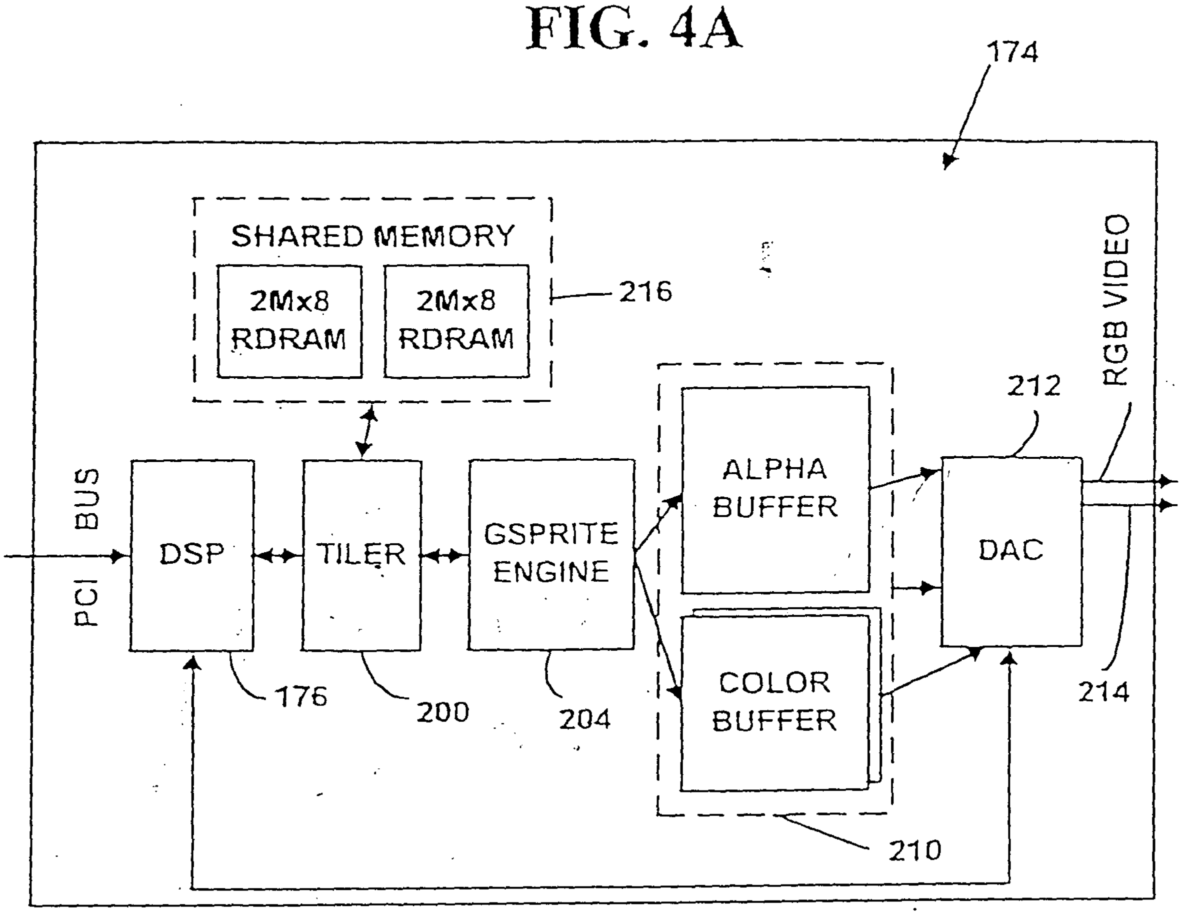
174
SHARED MEMORY
2Mx8 RDRAM
2Mx8 RDRAM
216
RGB VIDEO
212
PCI BUS
DSP
TILER
GSPRITE ENGINE
ALPHA BUFFER
COLOR BUFFER
DAC
176
200
204
214
210

FIG. 4B

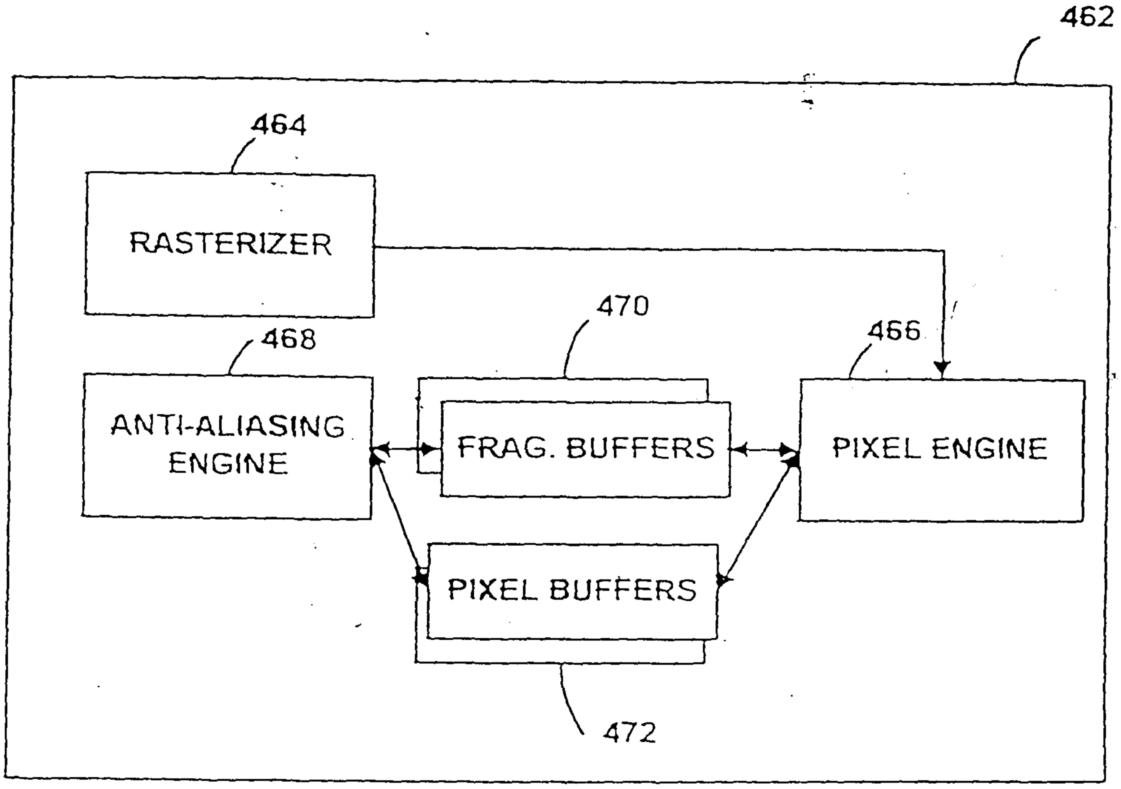
462
464
RASTERIZER
470
468
466
ANTI-ALIASING ENGINE
FRAG. BUFFERS
PIXEL ENGINE
PIXEL BUFFERS
472

FIG. 5A

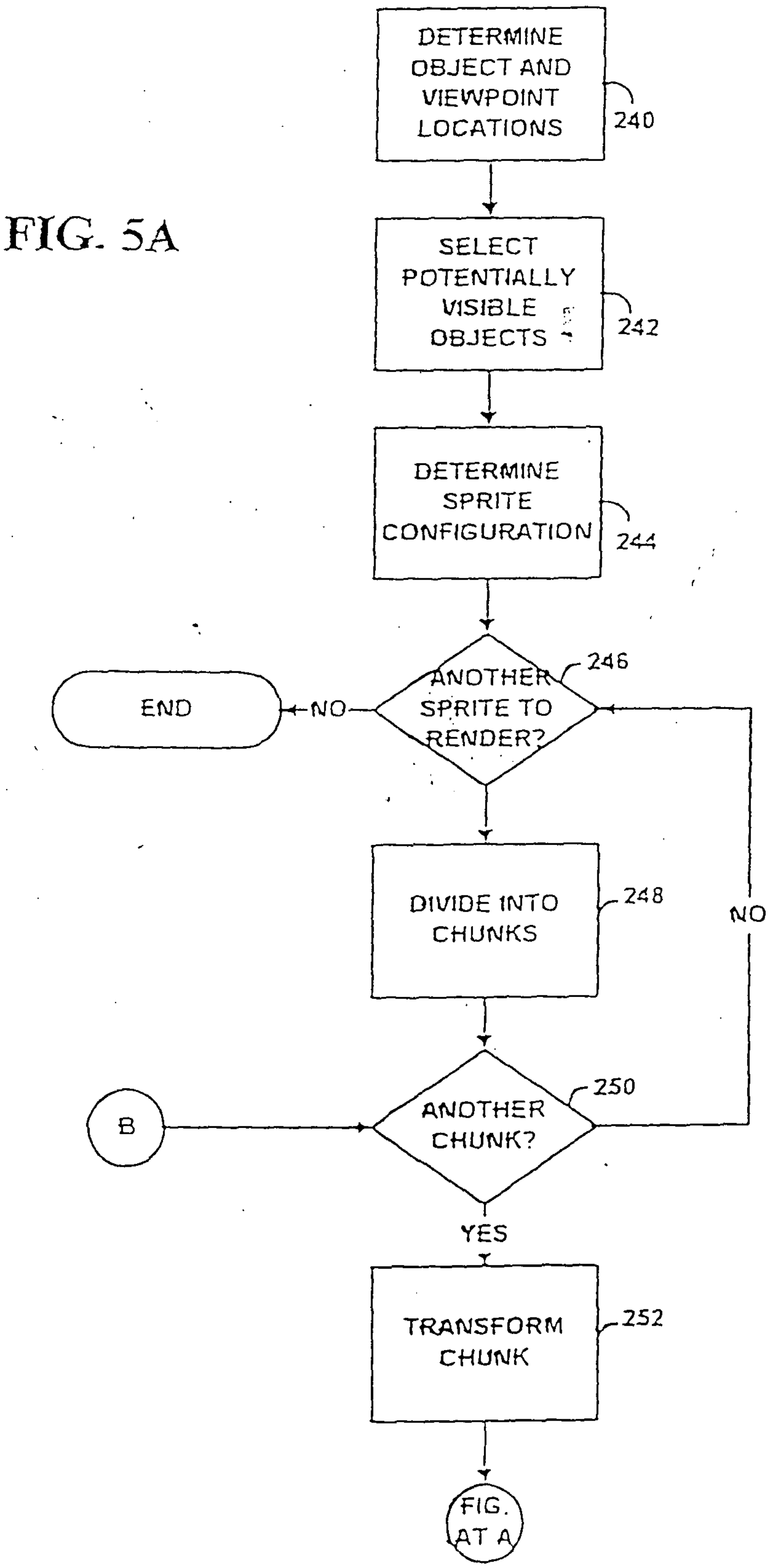
DETERMINE OBJECT AND VIEWPOINT LOCATIONS
240
SELECT POTENTIALLY VISIBLE OBJECTS
242
DETERMINE SPRITE CONFIGURATION
244
ANOTHER SPRITE TO RENDER?
246
END
NO
DIVIDE INTO CHUNKS
248
NO
B
ANOTHER CHUNK?
250
YES
TRANSFORM CHUNK
252
FIG. AT A

FIG. 5B

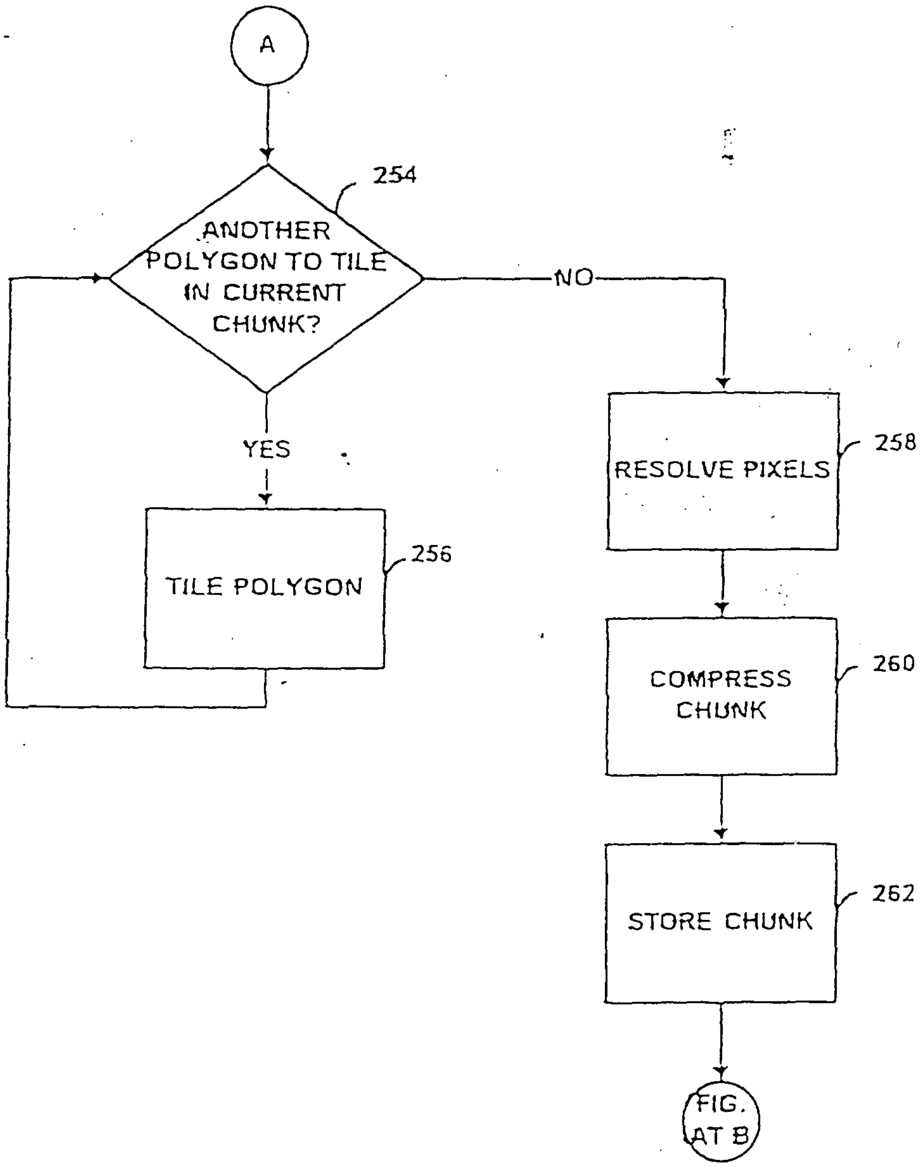
A
ANOTHER POLYGON TO TILE IN CURRENT CHUNK?
254
NO
YES
TILE POLYGON
256
RESOLVE PIXELS
258
COMPRESS CHUNK
260
STORE CHUNK
262
FIG. AT B

FIG. 6

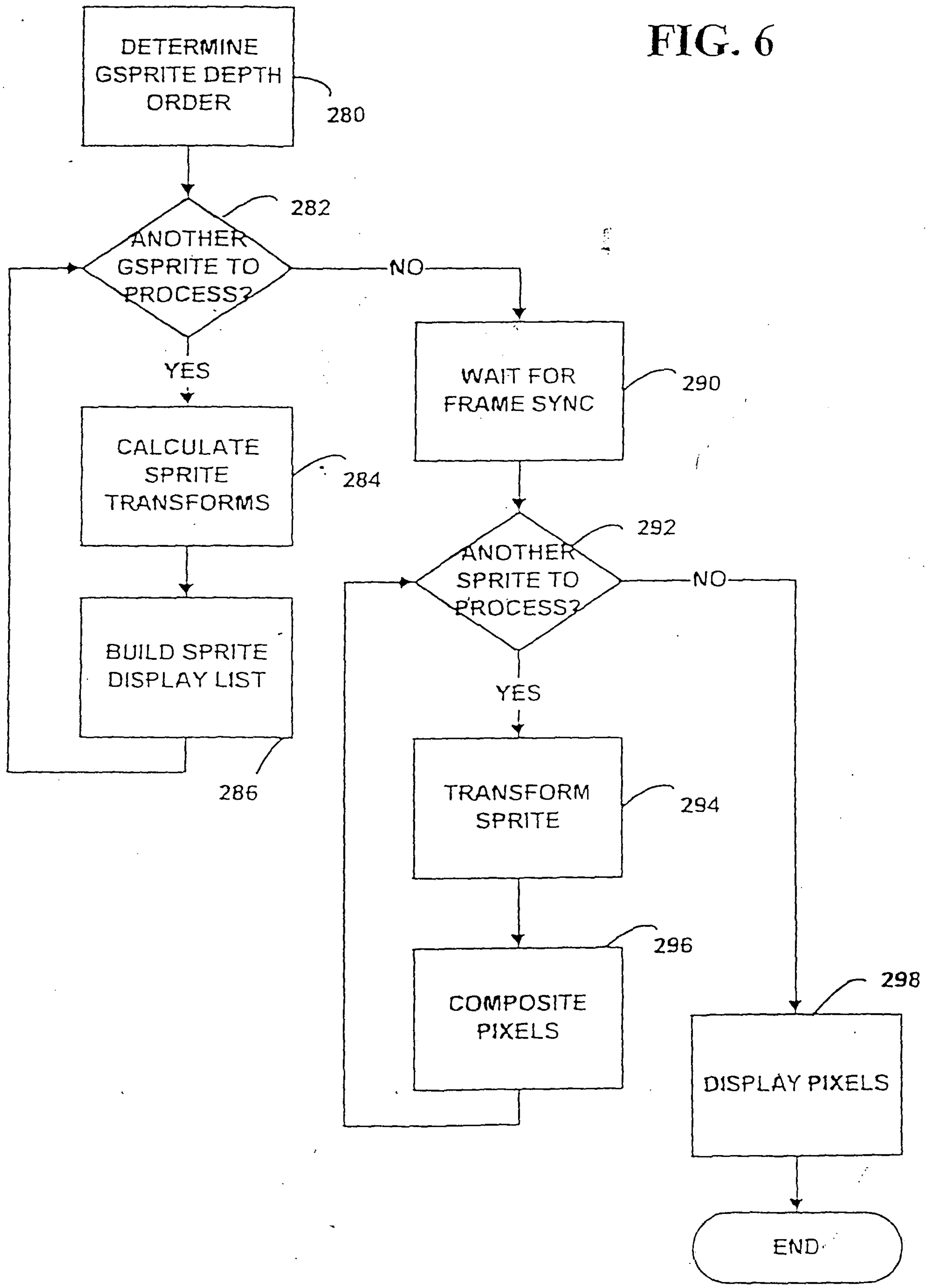
DETERMINE GSPRITE DEPTH ORDER
280
282
ANOTHER GSPRITE TO PROCESS?
NO
YES
CALCULATE SPRITE TRANSFORMS
284
BUILD SPRITE DISPLAY LIST
286
WAIT FOR FRAME SYNC
290
292
ANOTHER SPRITE TO PROCESS?
NO
YES
TRANSFORM SPRITE
294
296
COMPOSITE PIXELS
298
DISPLAY PIXELS
END

FIG. 7

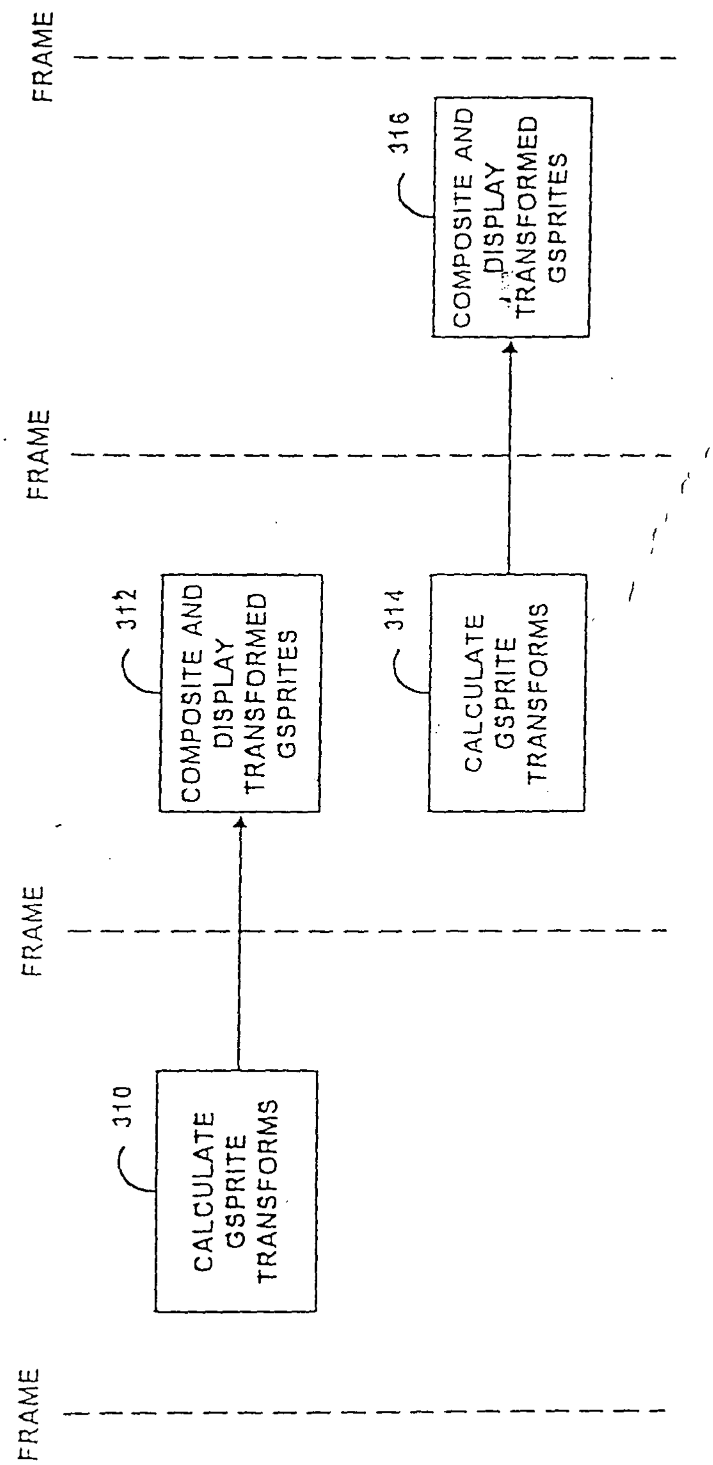
FRAME
CALCULATE GSPRITE TRANSFORMS
310
FRAME
COMPOSITE AND DISPLAY TRANSFORMED GSPRITES
312
CALCULATE GSPRITE TRANSFORMS
314
FRAME
COMPOSITE AND DISPLAY TRANSFORMED GSPRITES
316
FRAME

FIG. 8

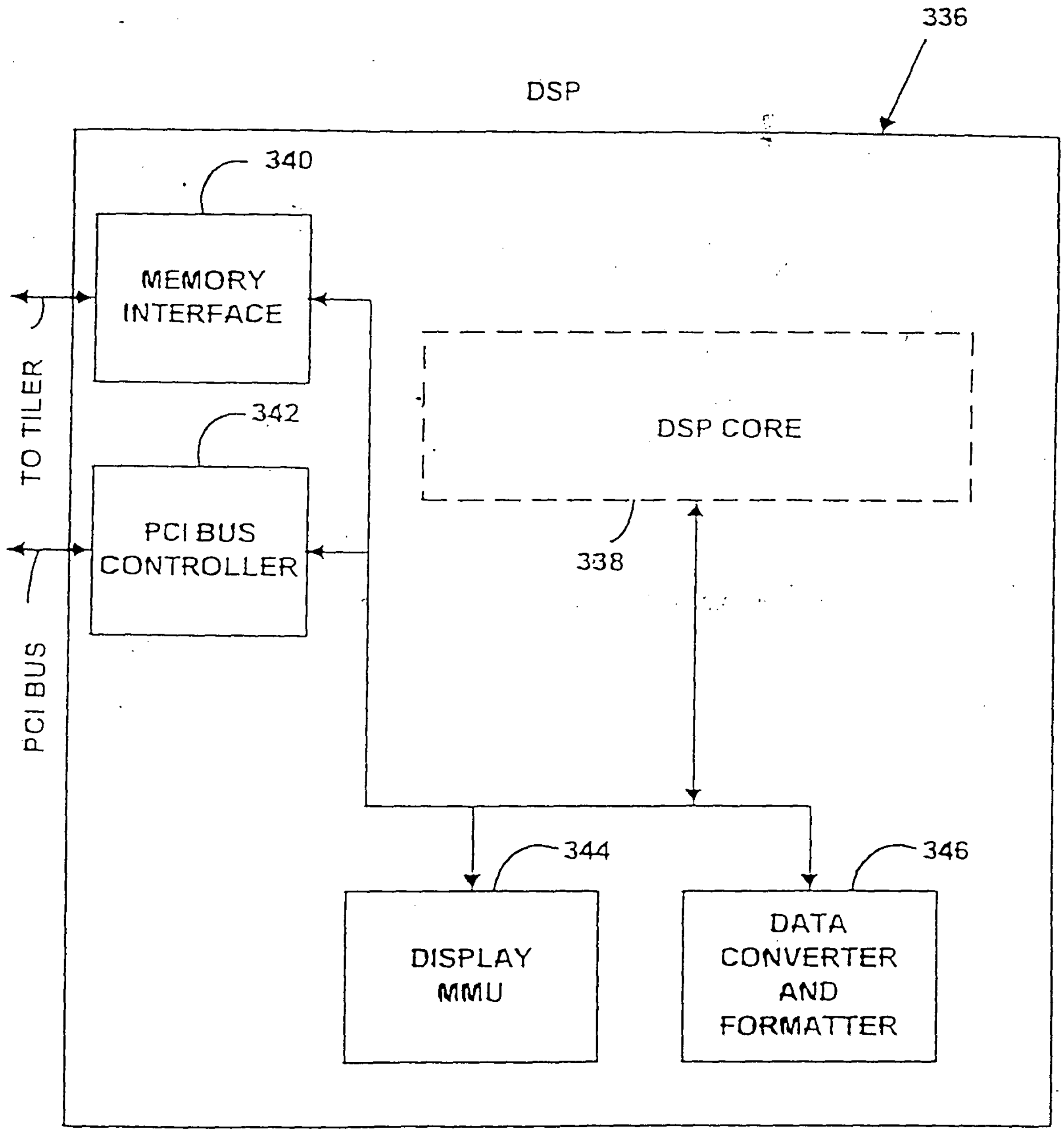
336
DSP
340
MEMORY INTERFACE
TO TILER
342
PCI BUS CONTROLLER
PCI BUS
DSP CORE
338
344
DISPLAY MMU
346
DATA CONVERTER AND FORMATTER

FIG. 9A

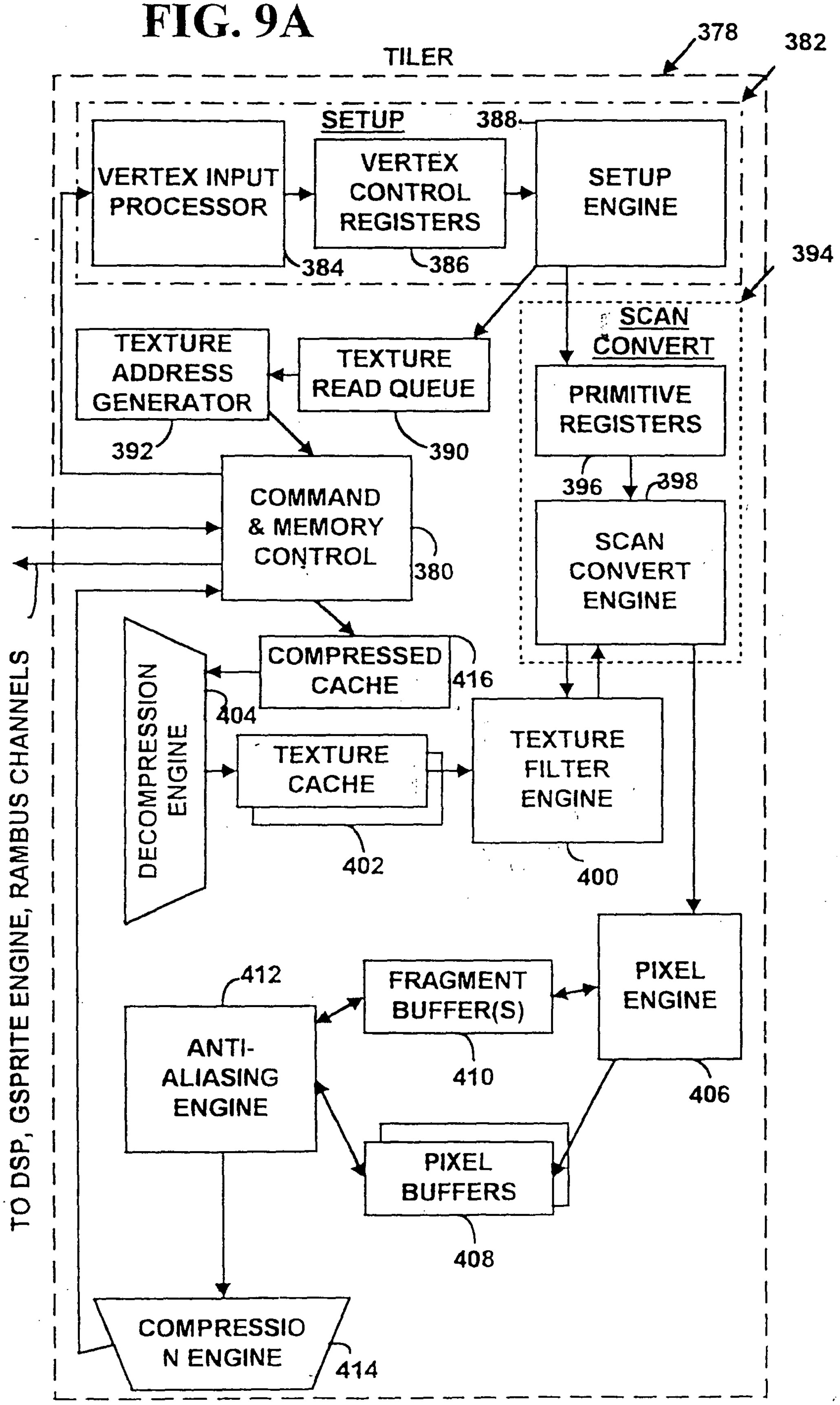

TILER
378
382
SETUP
388
VERTEX INPUT PROCESSOR
VERTEX CONTROL REGISTERS
SETUP ENGINE
384
386
394
SCAN CONVERT
TEXTURE ADDRESS GENERATOR
TEXTURE READ QUEUE
PRIMITIVE REGISTERS
392
390
396
398
COMMAND & MEMORY CONTROL
380
SCAN CONVERT ENGINE
TO DSP, GSPRITE ENGINE, RAMBUS CHANNELS
DECOMPRESSION ENGINE
COMPRESSED CACHE
416
404
TEXTURE CACHE
TEXTURE FILTER ENGINE
402
400
PIXEL ENGINE
412
FRAGMENT BUFFER(S)
ANTI-ALIASING ENGINE
410
406
PIXEL BUFFERS
408
COMPRESSIO N ENGINE
414

FIG. 9B

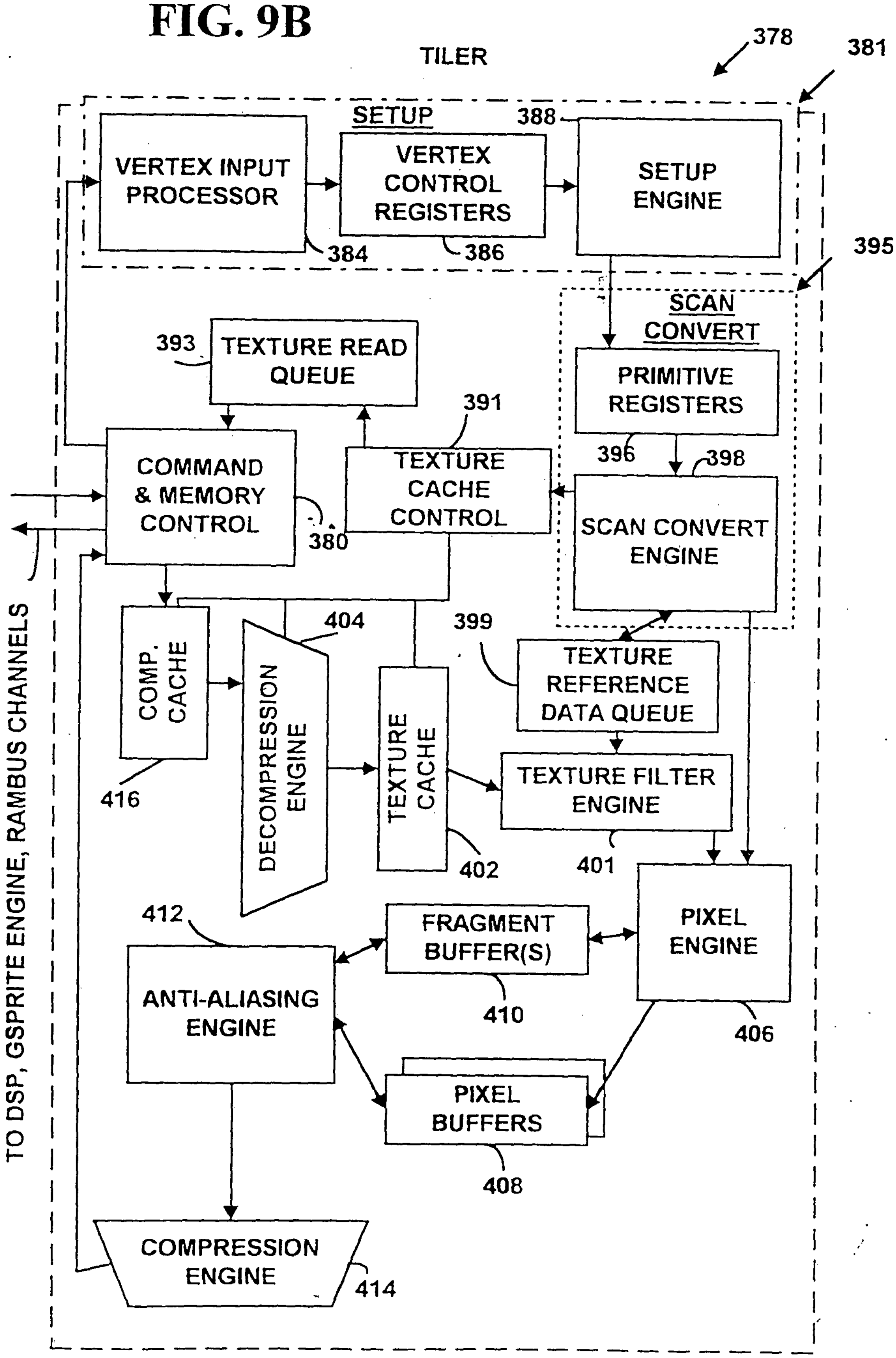
TILER
378
381
SETUP
388
VERTEX INPUT PROCESSOR
VERTEX CONTROL REGISTERS
SETUP ENGINE
384
386
395
SCAN CONVERT
393
TEXTURE READ QUEUE
PRIMITIVE REGISTERS
391
COMMAND & MEMORY CONTROL
TEXTURE CACHE CONTROL
396
398
SCAN CONVERT ENGINE
380
TO DSP, GSPRITE ENGINE, RAMBUS CHANNELS
404
399
COMP. CACHE
DECOMPRESSION ENGINE
TEXTURE CACHE
TEXTURE REFERENCE DATA QUEUE
TEXTURE FILTER ENGINE
416
402
401
412
FRAGMENT BUFFER(S)
PIXEL ENGINE
ANTI-ALIASING ENGINE
410
406
PIXEL BUFFERS
408
COMPRESSION ENGINE
414

FIG. 9C

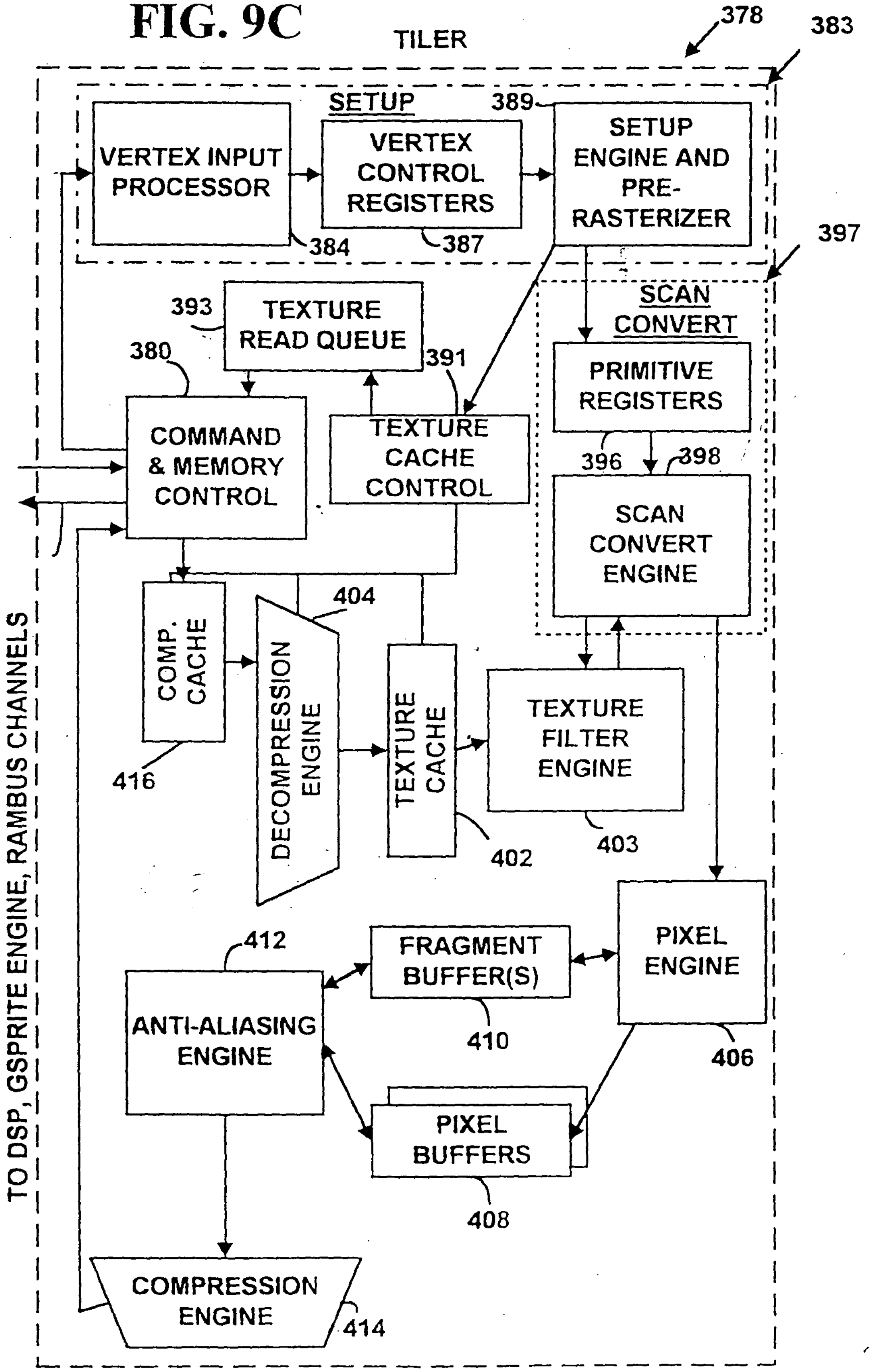
TILER
378
383
SETUP
389
VERTEX INPUT PROCESSOR
384
VERTEX CONTROL REGISTERS
387
SETUP ENGINE AND PRE-RASTERIZER
397
SCAN CONVERT
393
TEXTURE READ QUEUE
380
391
PRIMITIVE REGISTERS
COMMAND & MEMORY CONTROL
TEXTURE CACHE CONTROL
396
398
SCAN CONVERT ENGINE
404
COMP. CACHE
DECOMPRESSION ENGINE
TEXTURE CACHE
TEXTURE FILTER ENGINE
416
402
403
TO DSP, GSPRITE ENGINE, RAMBUS CHANNELS
412
FRAGMENT BUFFER(S)
PIXEL ENGINE
ANTI-ALIASING ENGINE
410
406
PIXEL BUFFERS
408
COMPRESSION ENGINE
414

# FIG. 10

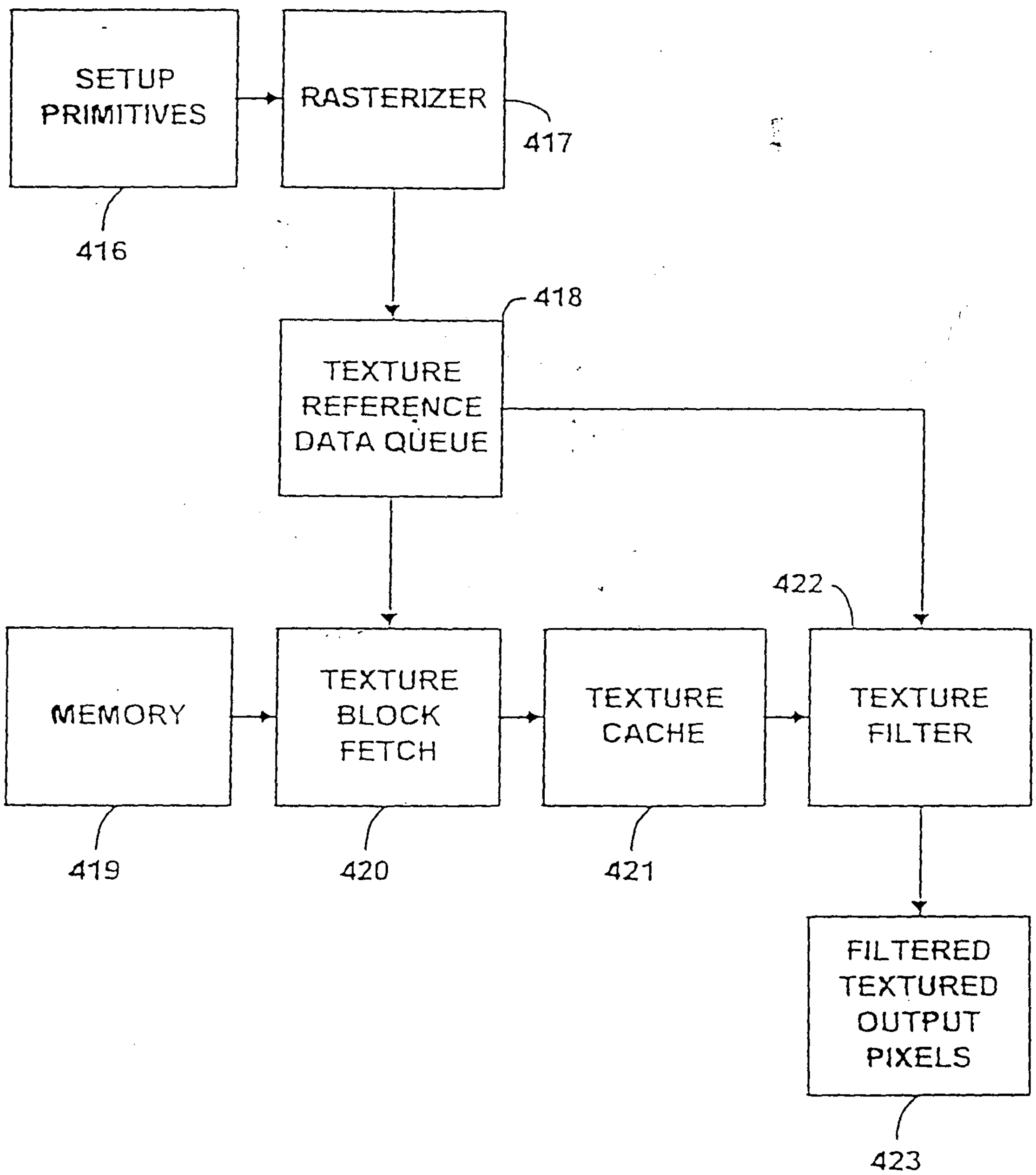
SETUP PRIMITIVES
416
RASTERIZER
417
TEXTURE REFERENCE DATA QUEUE
418
MEMORY
419
TEXTURE BLOCK FETCH
420
TEXTURE CACHE
421
TEXTURE FILTER
422
FILTERED TEXTURED OUTPUT PIXELS
423

FIG. 11

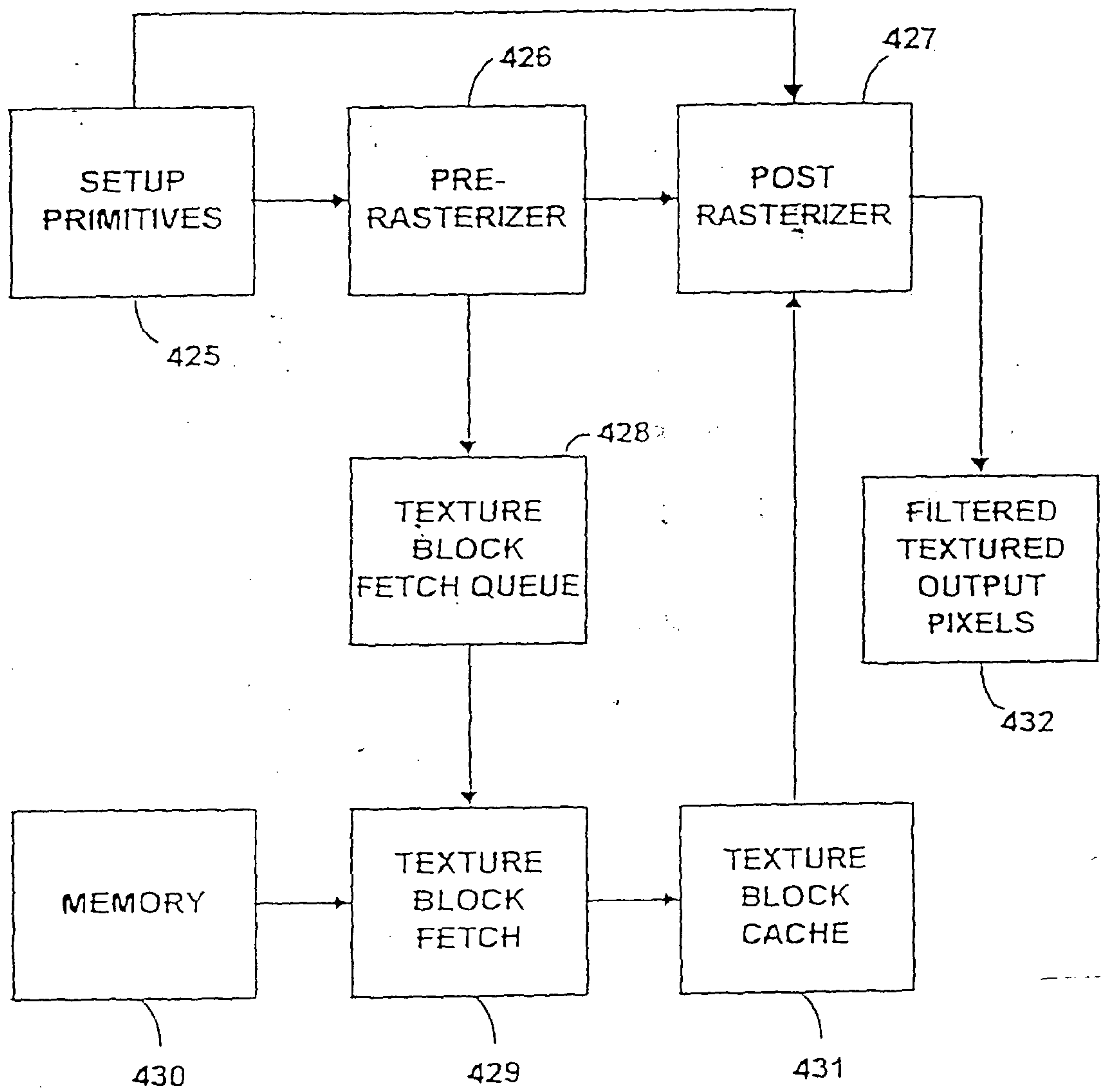
SETUP PRIMITIVES
425
PRE-RASTERIZER
426
POST RASTERIZER
427
TEXTURE BLOCK FETCH QUEUE
428
FILTERED TEXTURED OUTPUT PIXELS
432
MEMORY
430
TEXTURE BLOCK FETCH
429
TEXTURE BLOCK CACHE
431

FIG. 12A

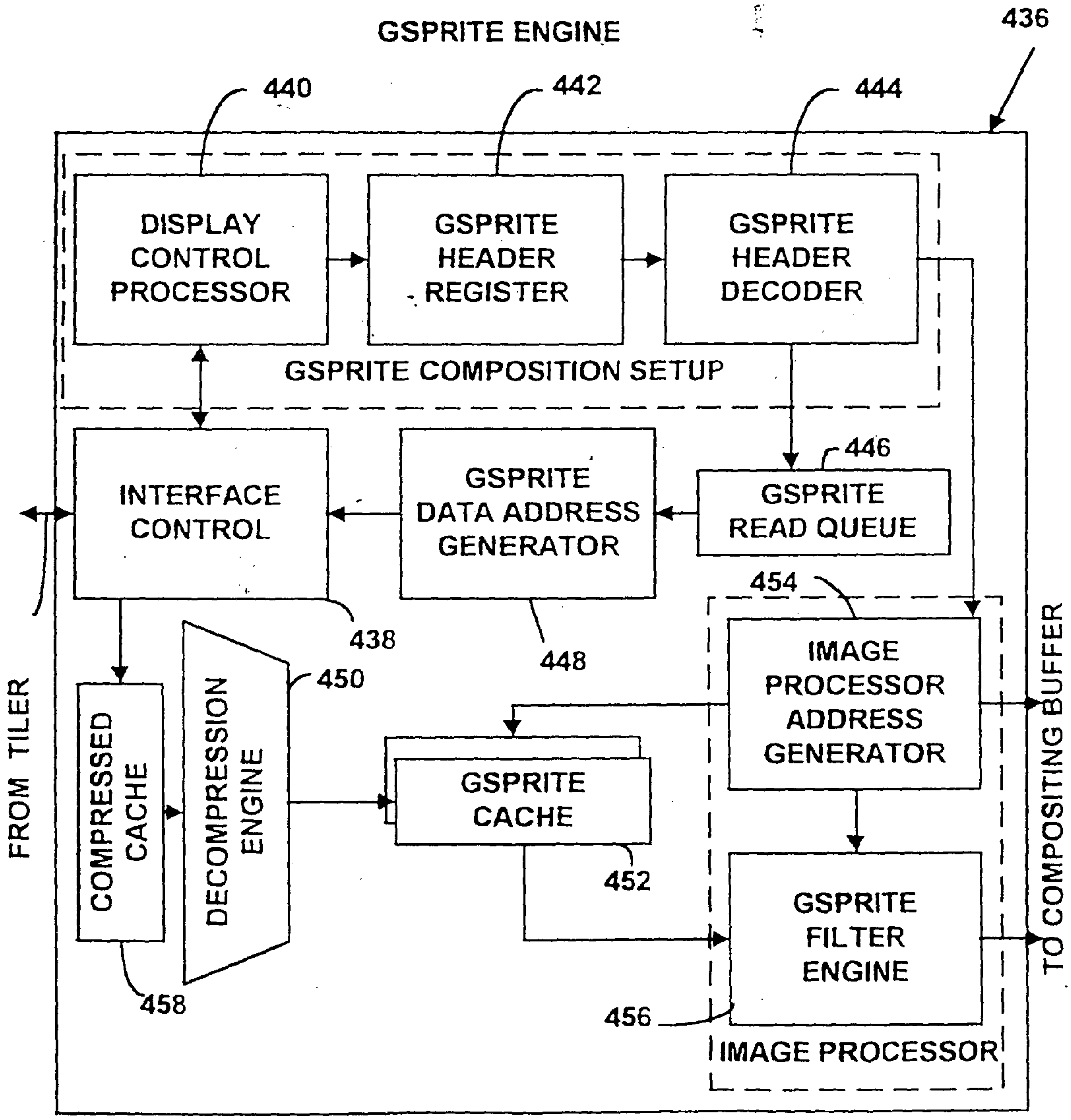
GSPRITE ENGINE
436
440
442
444
DISPLAY CONTROL PROCESSOR
GSPRITE HEADER REGISTER
GSPRITE HEADER DECODER
GSPRITE COMPOSITION SETUP
INTERFACE CONTROL
GSPRITE DATA ADDRESS GENERATOR
446
GSPRITE READ QUEUE
454
438
448
450
FROM TILER
COMPRESSED CACHE
DECOMPRESSION ENGINE
IMAGE PROCESSOR ADDRESS GENERATOR
GSPRITE CACHE
452
GSPRITE FILTER ENGINE
TO COMPOSITING BUFFER
458
456
IMAGE PROCESSOR

FIG. 12B

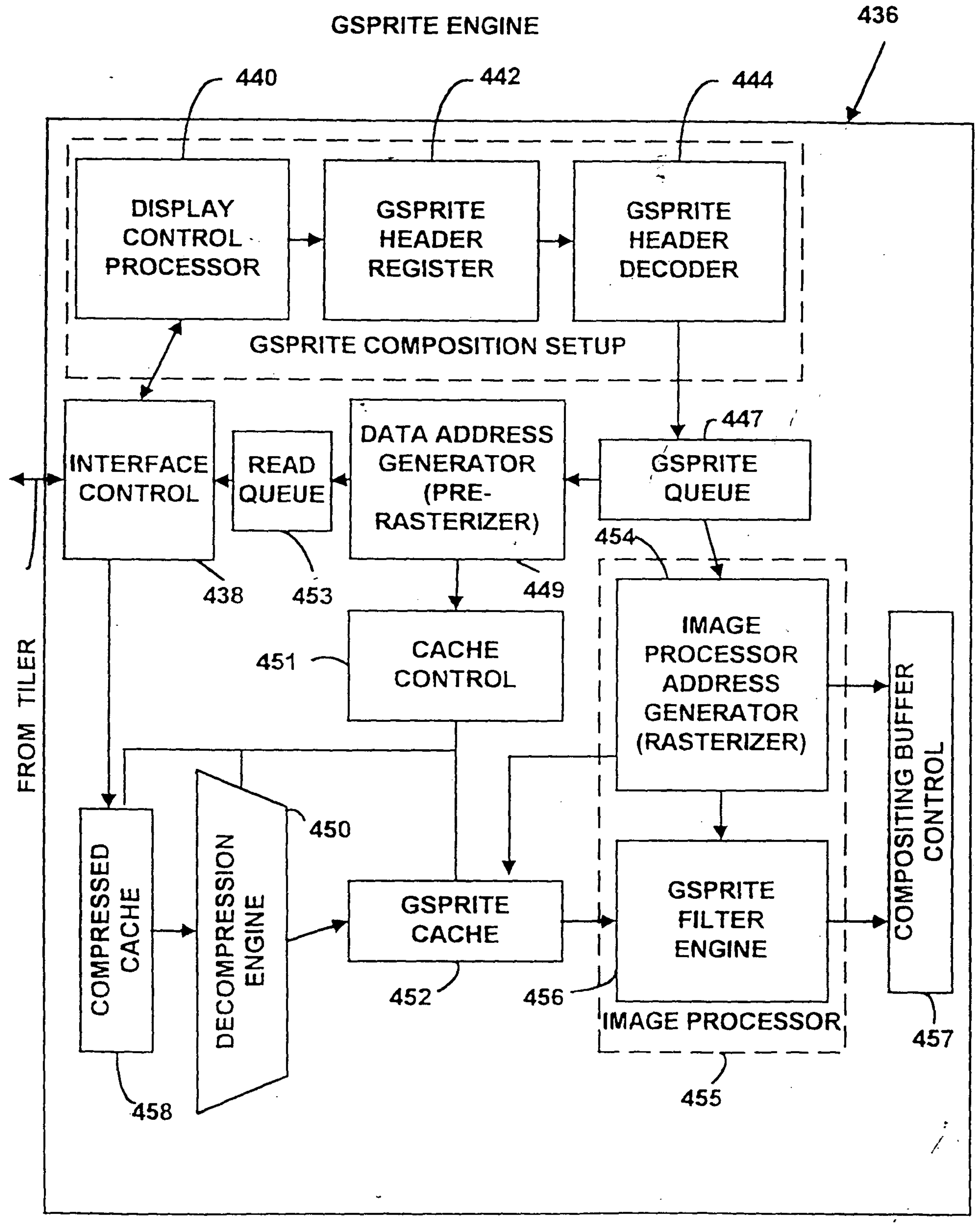
GSPRITE ENGINE
436
440
442
444
DISPLAY CONTROL PROCESSOR
GSPRITE HEADER REGISTER
GSPRITE HEADER DECODER
GSPRITE COMPOSITION SETUP
447
INTERFACE CONTROL
READ QUEUE
DATA ADDRESS GENERATOR (PRE-RASTERIZER)
GSPRITE QUEUE
454
438
453
449
FROM TILER
451
CACHE CONTROL
IMAGE PROCESSOR ADDRESS GENERATOR (RASTERIZER)
COMPOSITING BUFFER CONTROL
450
COMPRESSED CACHE
DECOMPRESSION ENGINE
GSPRITE CACHE
GSPRITE FILTER ENGINE
452
456
IMAGE PROCESSOR
457
458
455

FIG. 13

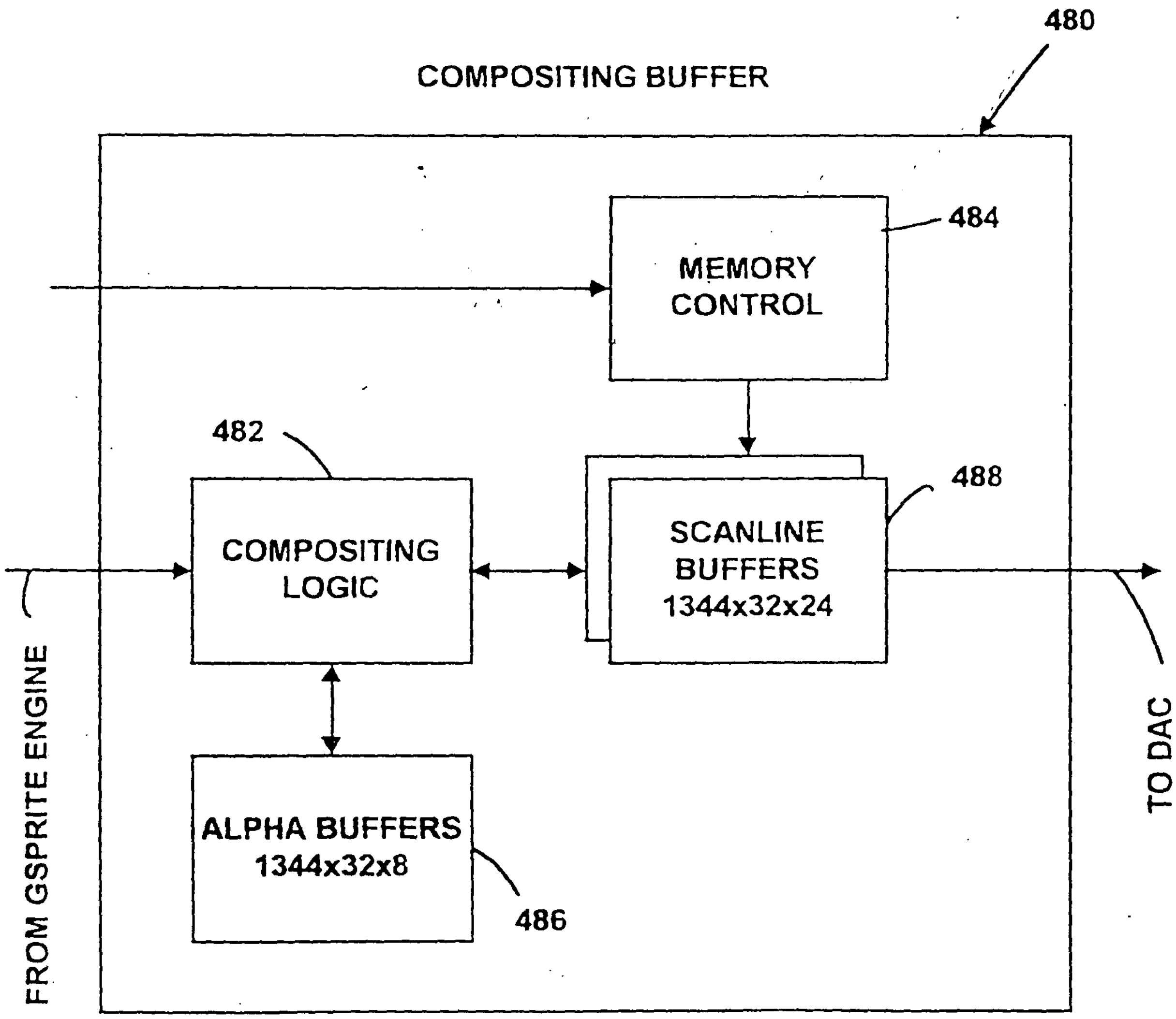
480
COMPOSITING BUFFER
484
MEMORY CONTROL
482
COMPOSITING LOGIC
488
SCANLINE BUFFERS 1344x32x24
ALPHA BUFFERS 1344x32x8
486
FROM GSPRITE ENGINE
TO DAC

FIG. 14

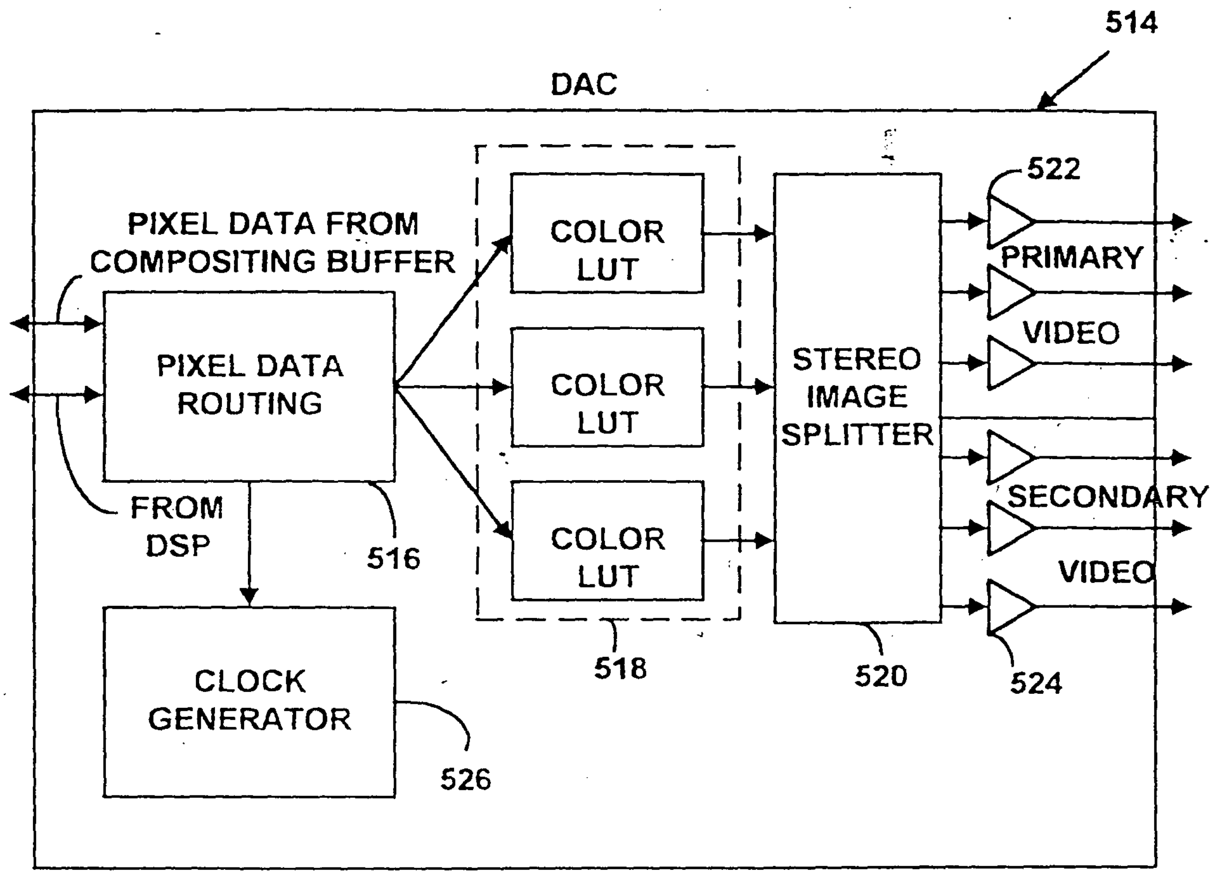
514
DAC
PIXEL DATA FROM
COMPOSITING BUFFER
PIXEL DATA
ROUTING
FROM
DSP
516
COLOR
LUT
COLOR
LUT
COLOR
LUT
518
STEREO
IMAGE
SPLITTER
520
522
PRIMARY
VIDEO
SECONDARY
VIDEO
524
CLOCK
GENERATOR
526

FIG. 15A

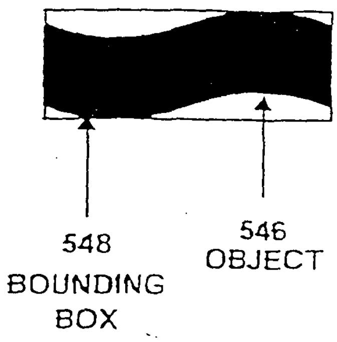


FIG. 15B

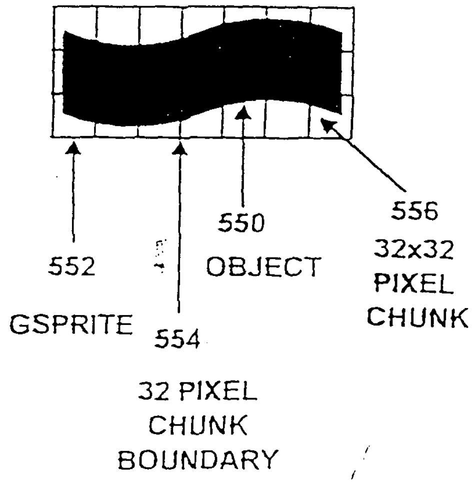


FIG. 15C

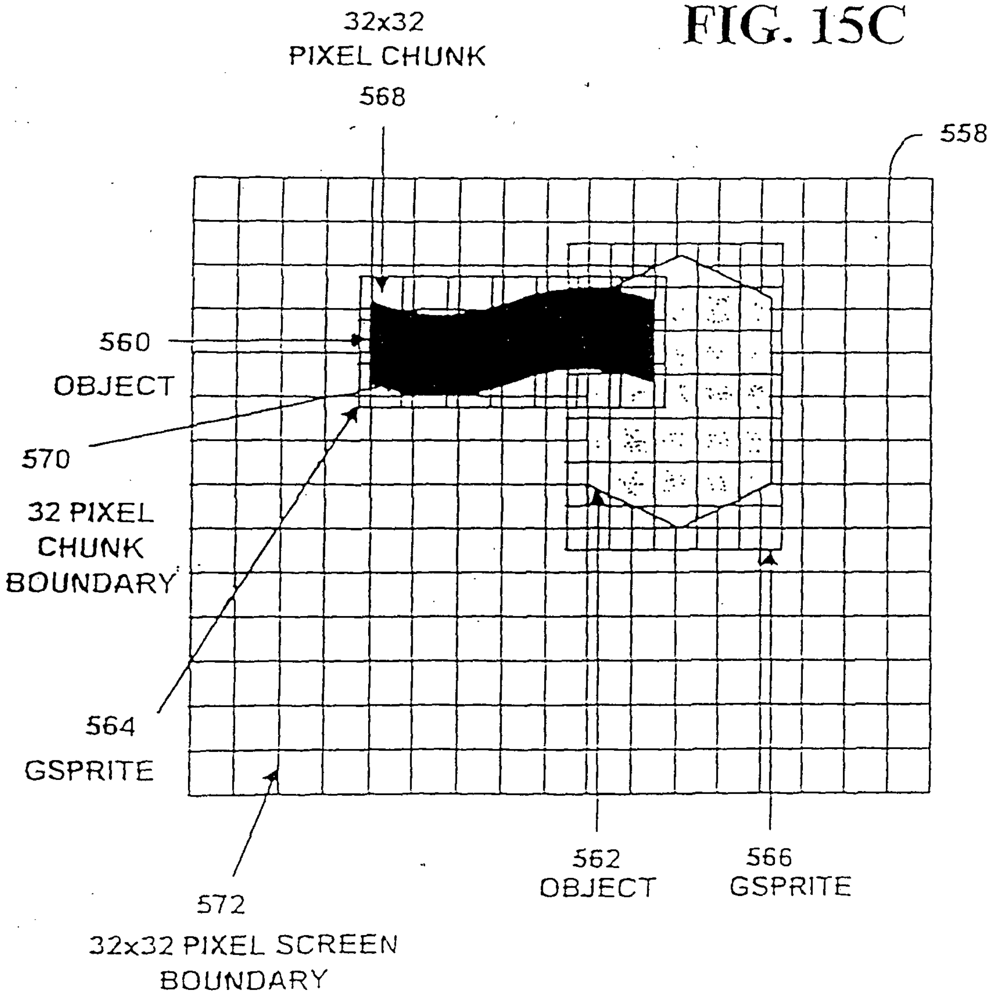

FIG. 16A

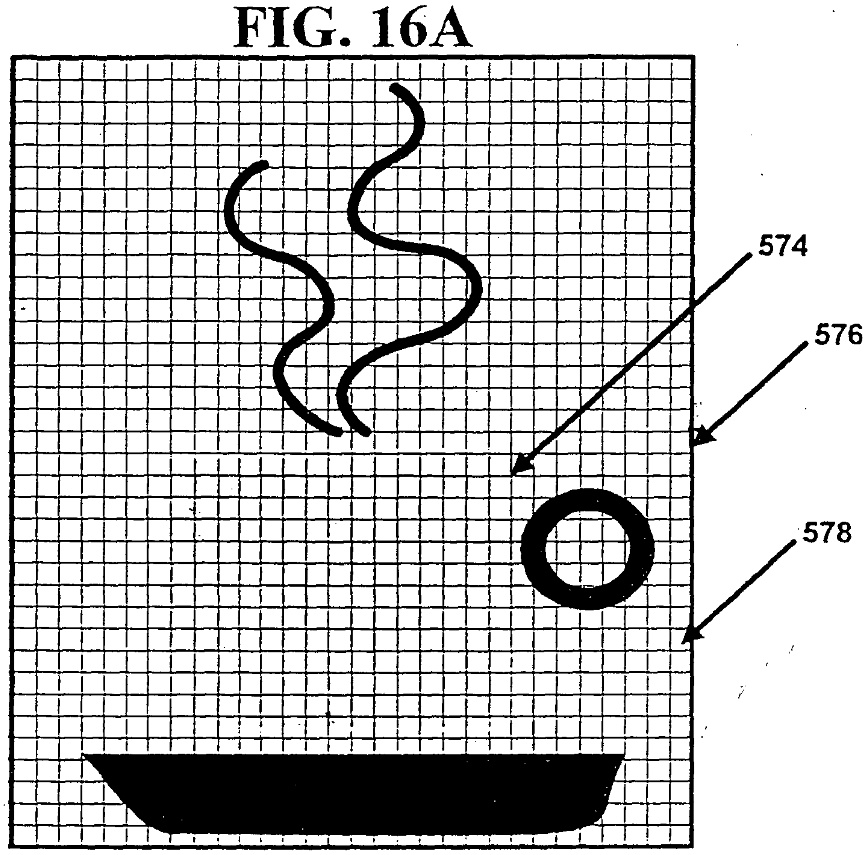


FIG. 16B

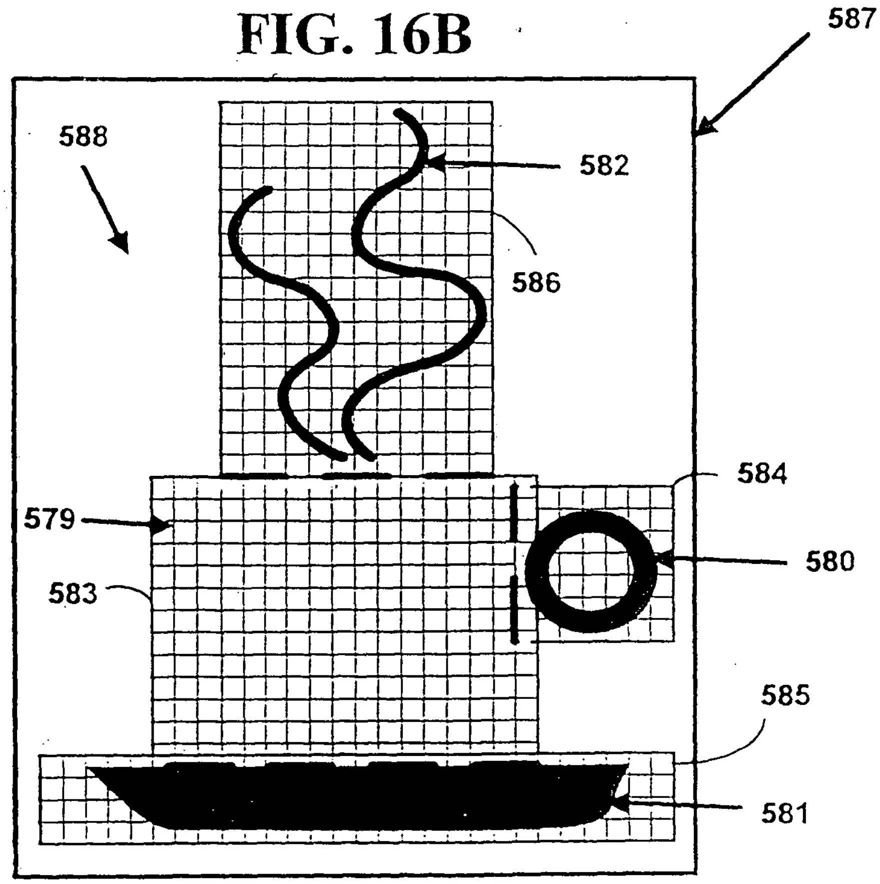

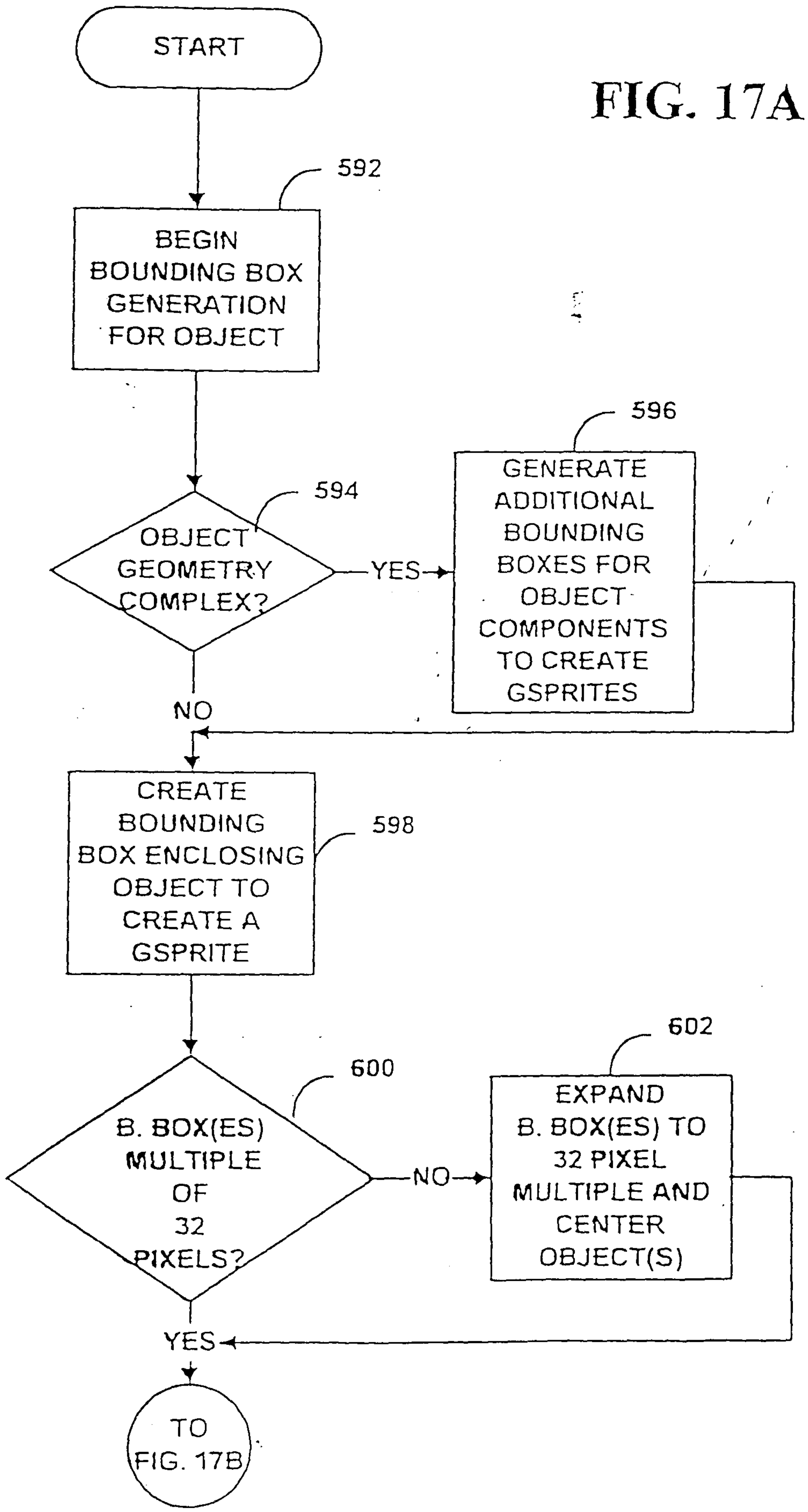
START
592
BEGIN BOUNDING BOX GENERATION FOR OBJECT
594
OBJECT GEOMETRY COMPLEX?
YES
596
GENERATE ADDITIONAL BOUNDING BOXES FOR OBJECT COMPONENTS TO CREATE GSPRITES
NO
CREATE BOUNDING BOX ENCLOSING OBJECT TO CREATE A GSPRITE
598
600
B. BOX(ES) MULTIPLE OF 32 PIXELS?
NO
602
EXPAND B. BOX(ES) TO 32 PIXEL MULTIPLE AND CENTER OBJECT(S)
YES
TO FIG. 17B

FIG. 17A

FIG. 17B

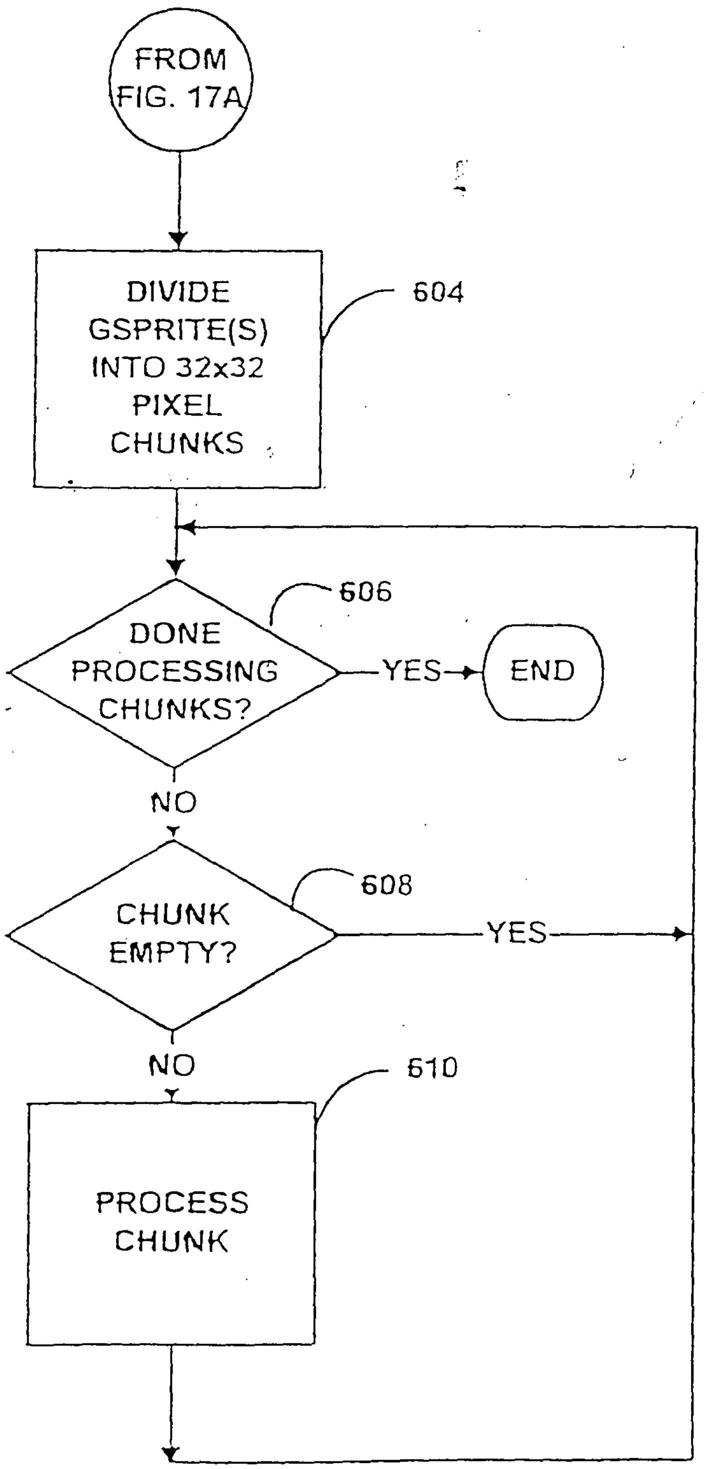
FROM
FIG. 17A
DIVIDE
GSPRITE(S)
INTO 32x32
PIXEL
CHUNKS
604
DONE
PROCESSING
CHUNKS?
606
YES
END
NO
CHUNK
EMPTY?
608
YES
NO
610
PROCESS
CHUNK

FIG. 18A

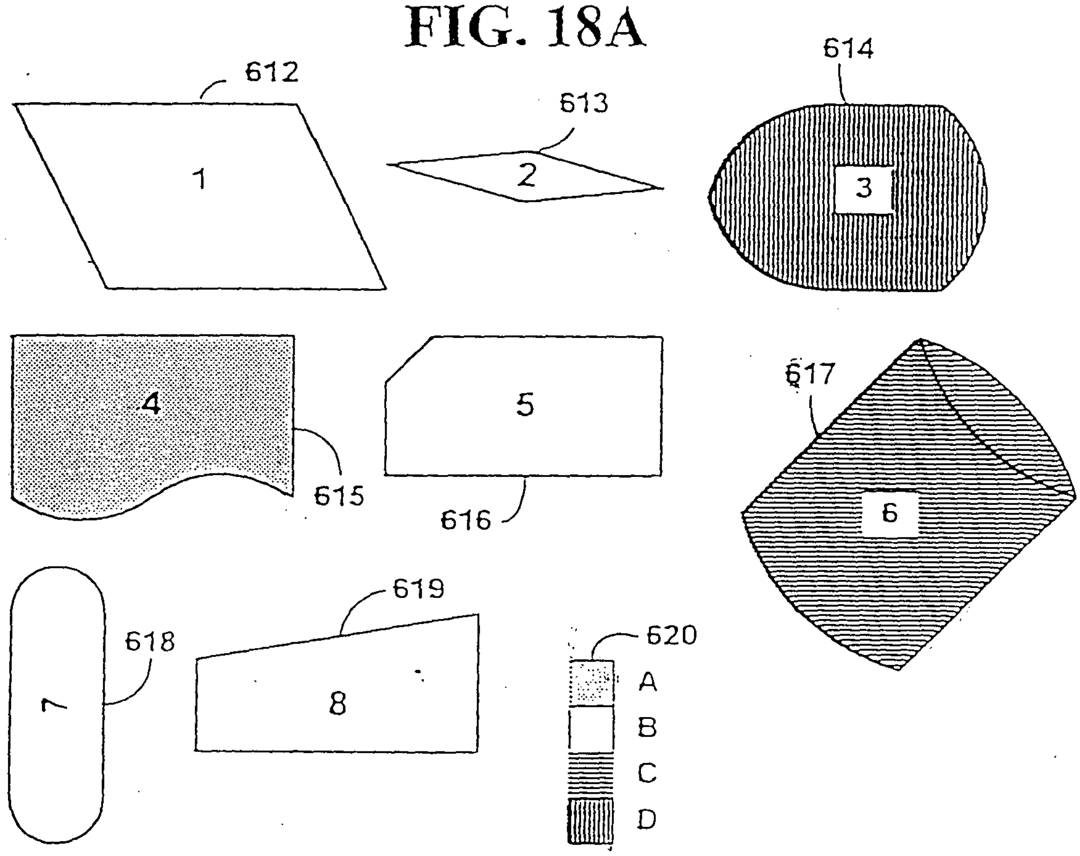


FIG. 18B

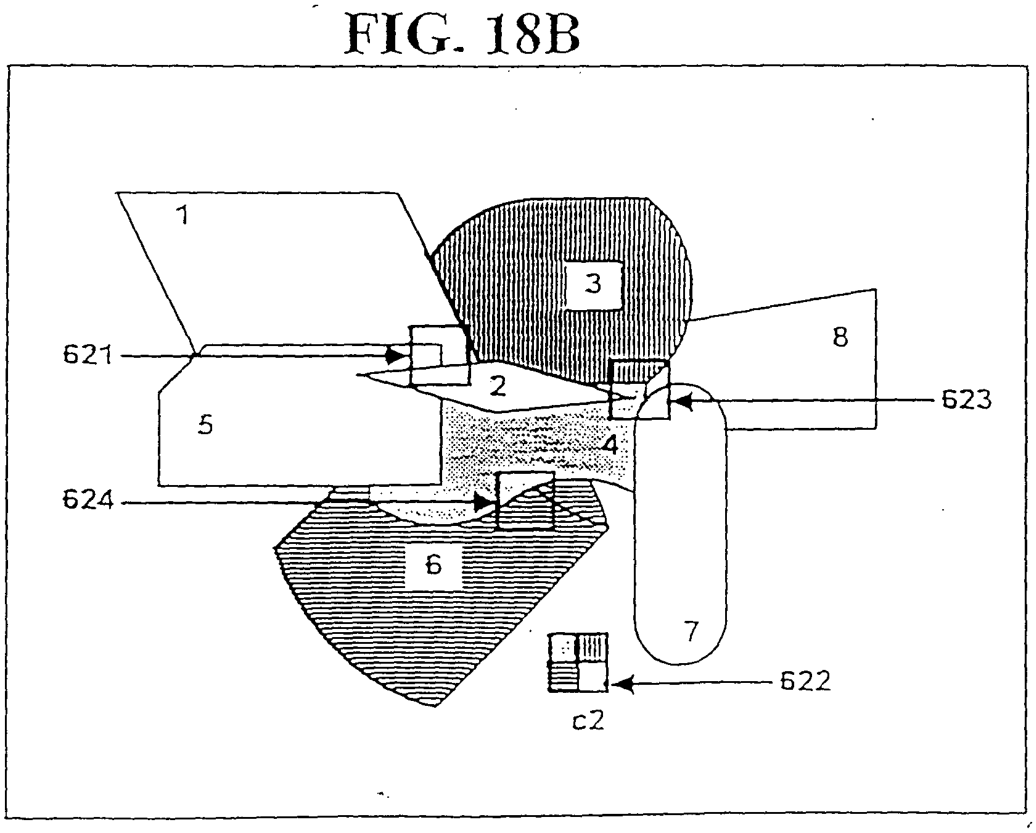

FIG. 19A

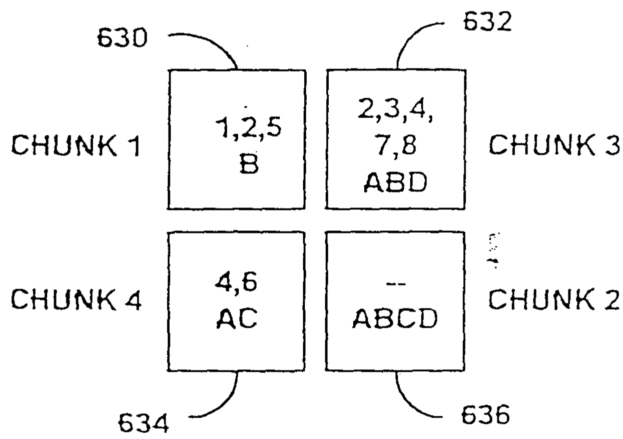


FIG. 19B

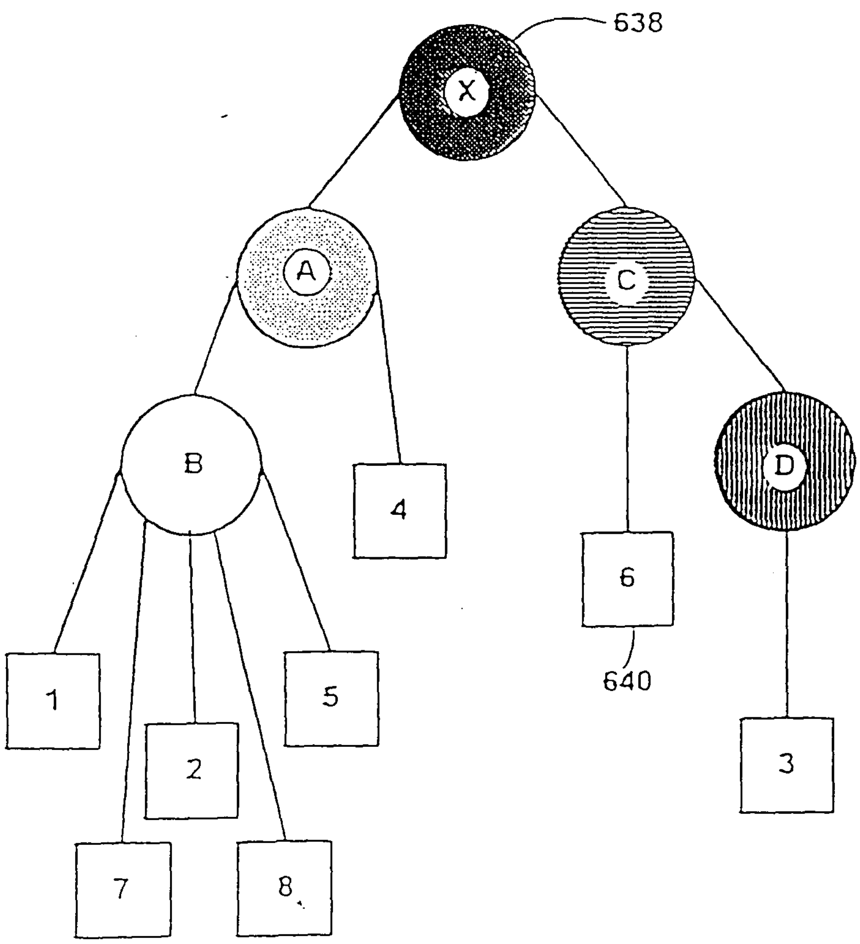

FIG. 20

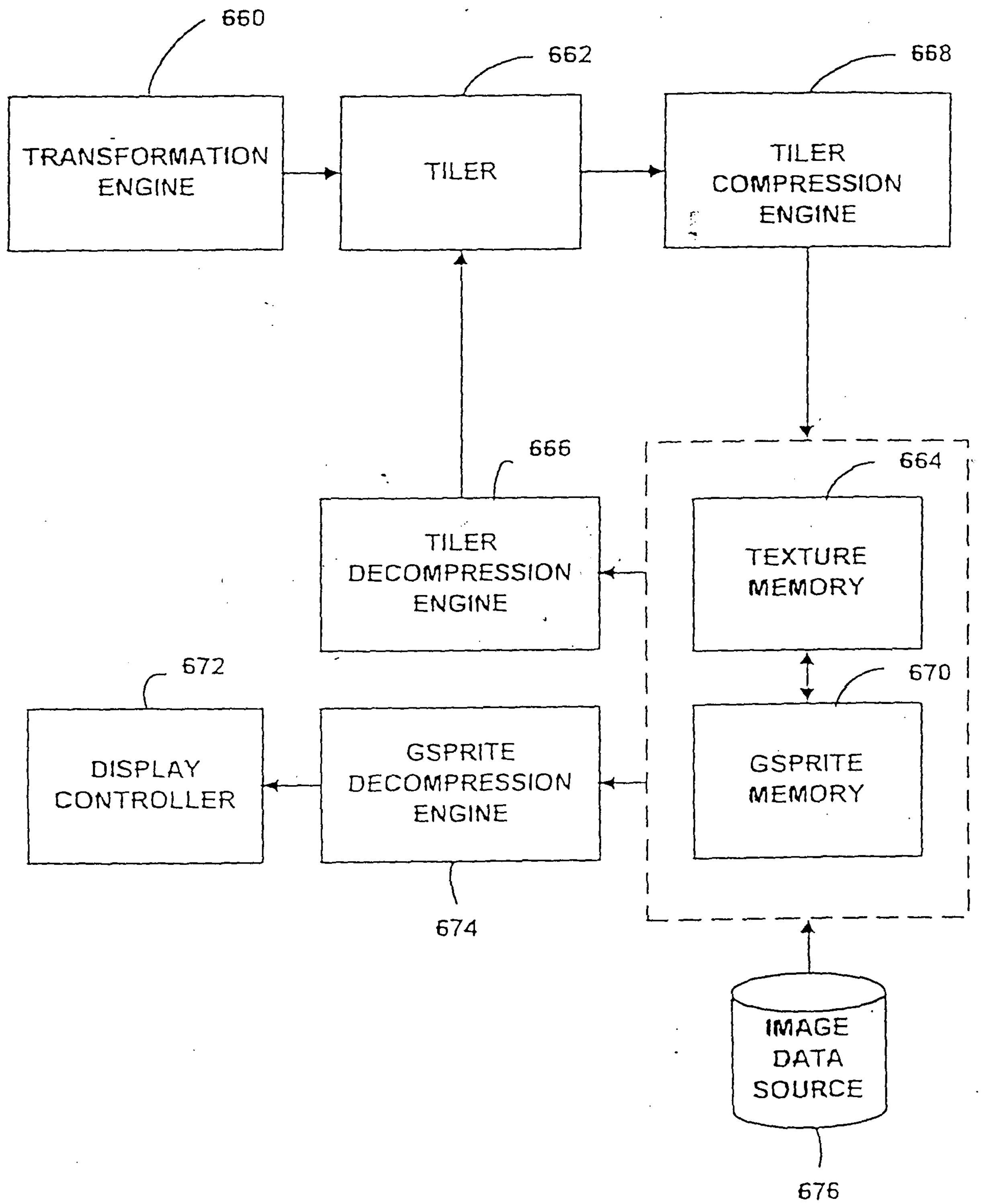
660
662
668
TRANSFORMATION ENGINE
TILER
TILER COMPRESSION ENGINE
666
664
TILER DECOMPRESSION ENGINE
TEXTURE MEMORY
672
670
DISPLAY CONTROLLER
GSPRITE DECOMPRESSION ENGINE
GSPRITE MEMORY
674
IMAGE DATA SOURCE
676

FIG. 21A

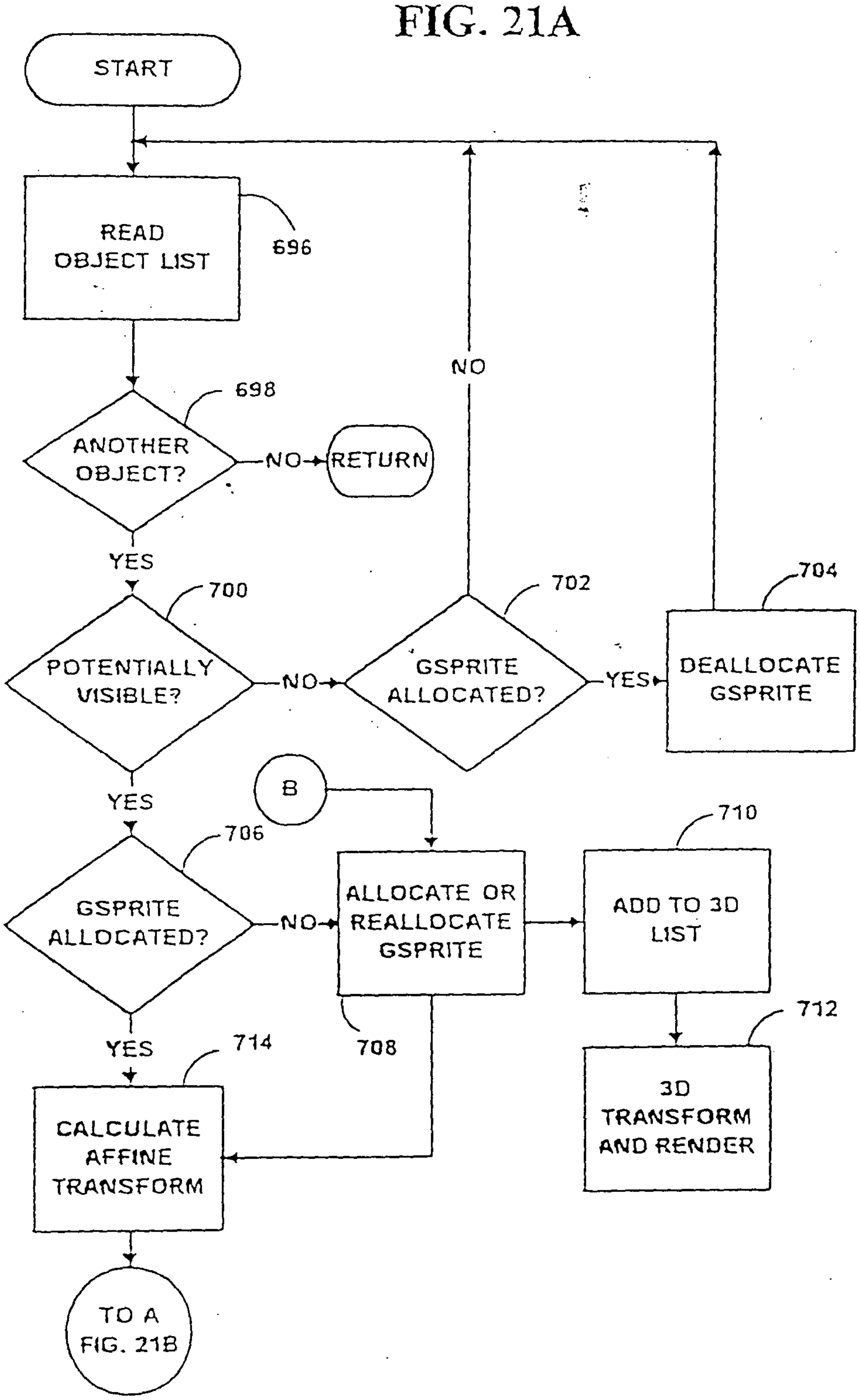
START
READ OBJECT LIST
696
698
ANOTHER OBJECT?
NO
RETURN
YES
700
POTENTIALLY VISIBLE?
NO
702
GSPRITE ALLOCATED?
NO
YES
704
DEALLOCATE GSPRITE
YES
B
706
GSPRITE ALLOCATED?
NO
ALLOCATE OR REALLOCATE GSPRITE
710
ADD TO 3D LIST
708
712
3D TRANSFORM AND RENDER
YES
714
CALCULATE AFFINE TRANSFORM
TO A FIG. 21B

FIG. 21B

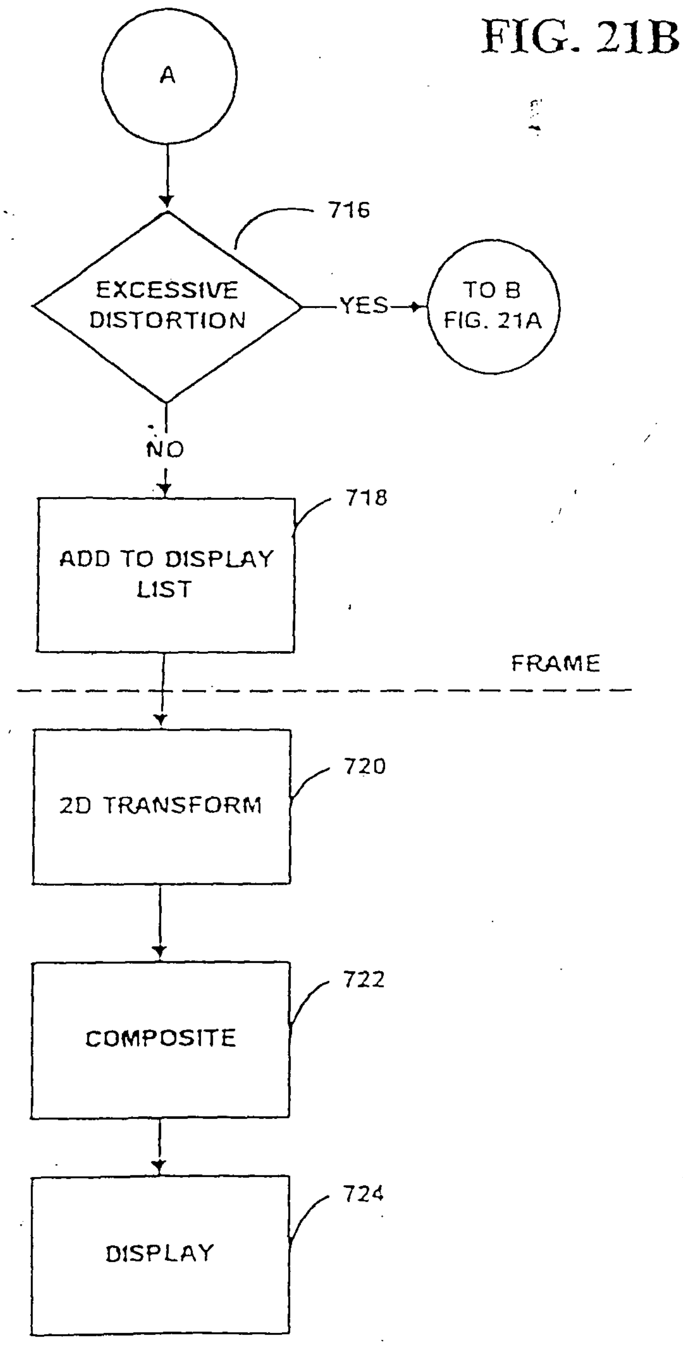
A
716
EXCESSIVE DISTORTION
YES
TO B FIG. 21A
NO
718
ADD TO DISPLAY LIST
FRAME
720
2D TRANSFORM
722
COMPOSITE
724
DISPLAY

FIG. 22

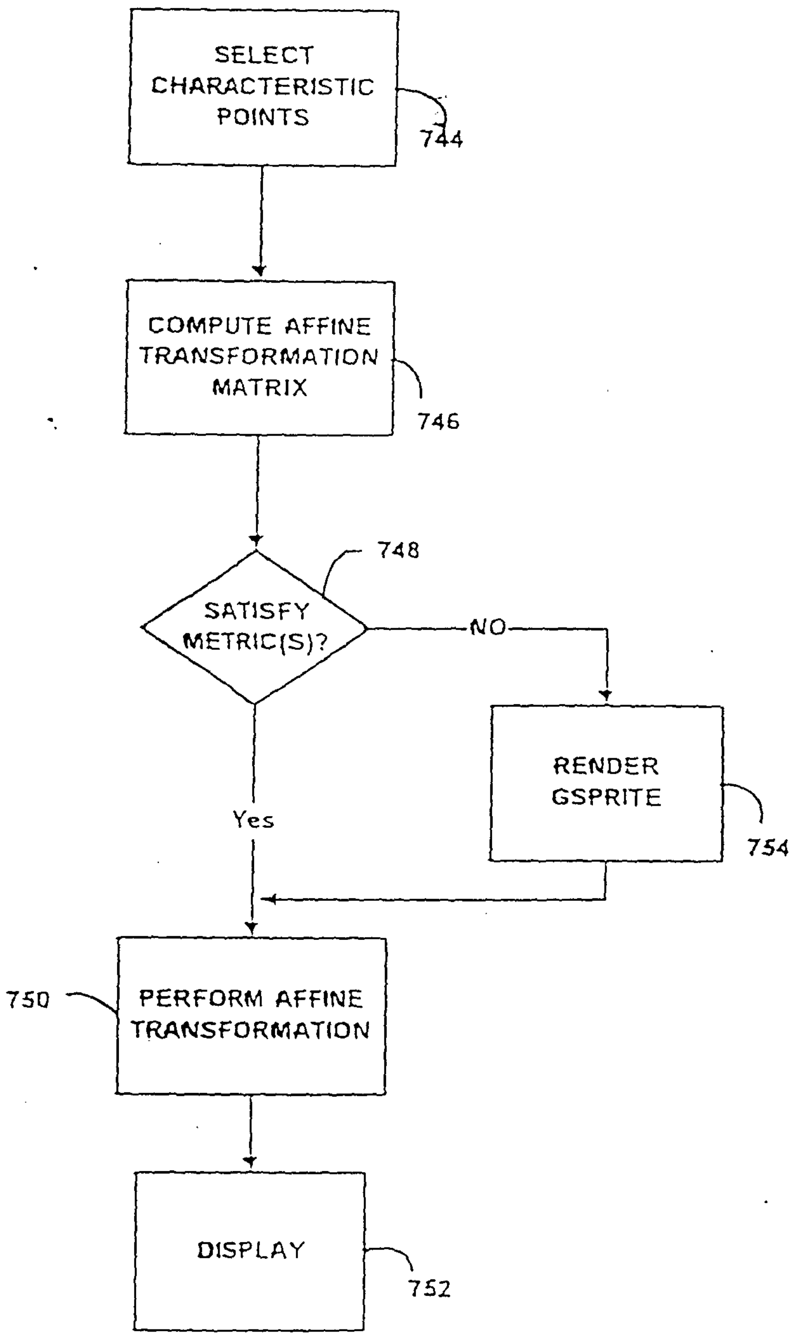
SELECT CHARACTERISTIC POINTS
744
COMPUTE AFFINE TRANSFORMATION MATRIX
746
748
SATISFY METRIC(S)?
NO
RENDER GSPRITE
754
Yes
750
PERFORM AFFINE TRANSFORMATION
DISPLAY
752

FIG. 23

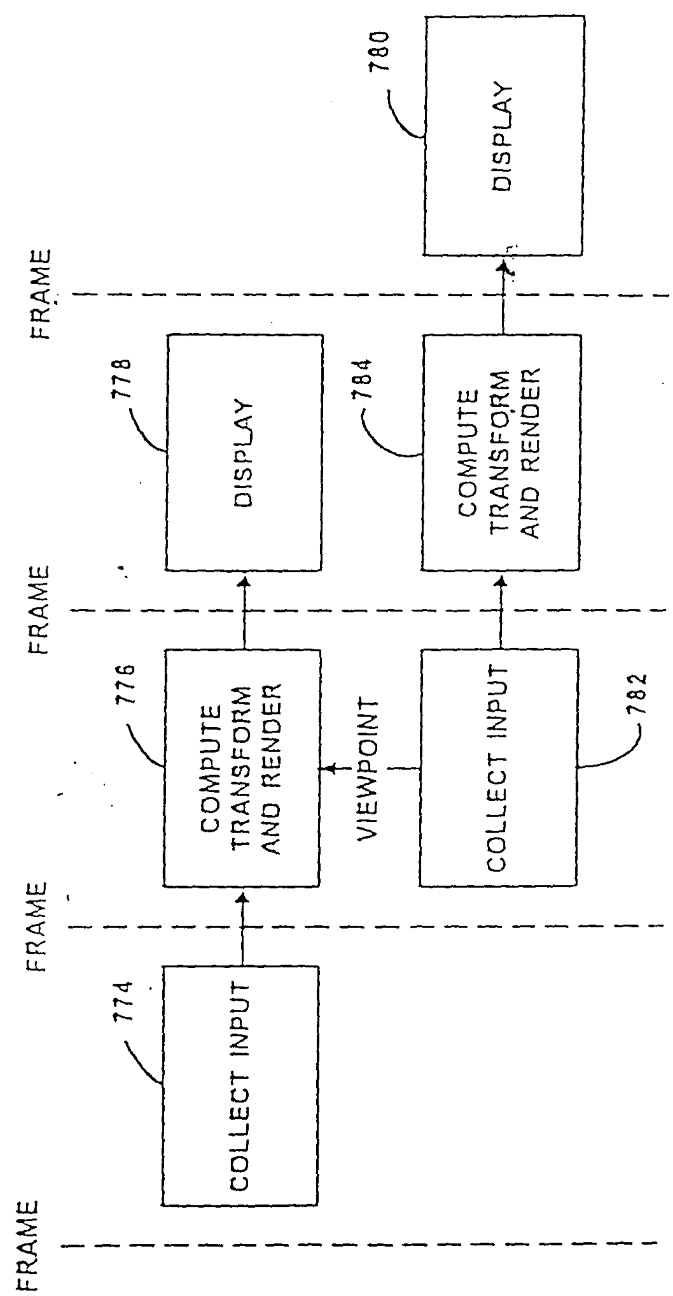
FRAME
COLLECT INPUT
774
FRAME
COMPUTE TRANSFORM AND RENDER
776
VIEWPOINT
COLLECT INPUT
782
FRAME
DISPLAY
778
COMPUTE TRANSFORM AND RENDER
784
FRAME
DISPLAY
780

# FIG. 24

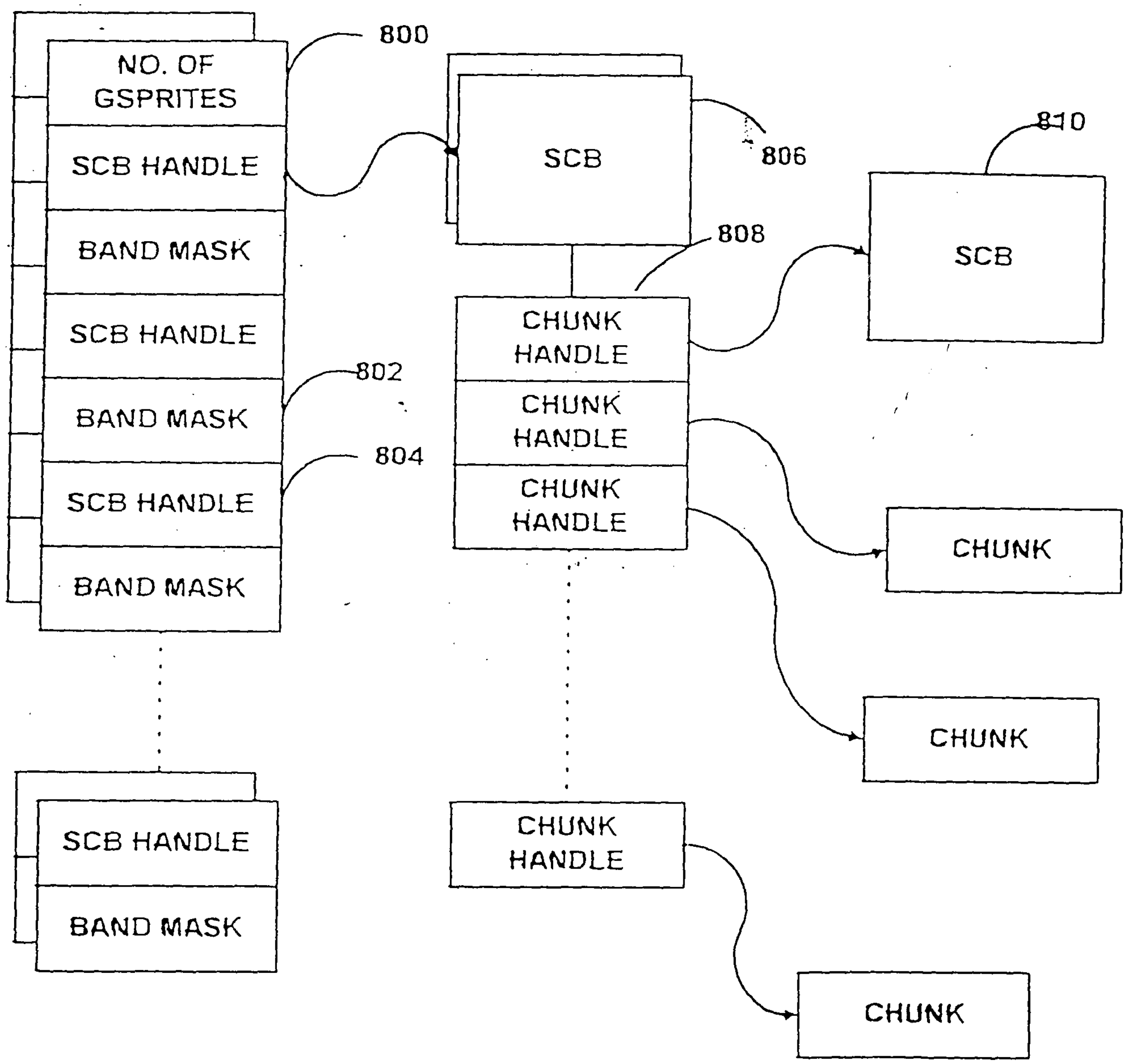
800
NO. OF GSPRITES
SCB HANDLE
BAND MASK
SCB HANDLE
BAND MASK
SCB HANDLE
BAND MASK
802
804
SCB HANDLE
BAND MASK
SCB
806
808
CHUNK HANDLE
CHUNK HANDLE
CHUNK HANDLE
CHUNK HANDLE
810
SCB
CHUNK
CHUNK
CHUNK

FIG. 25

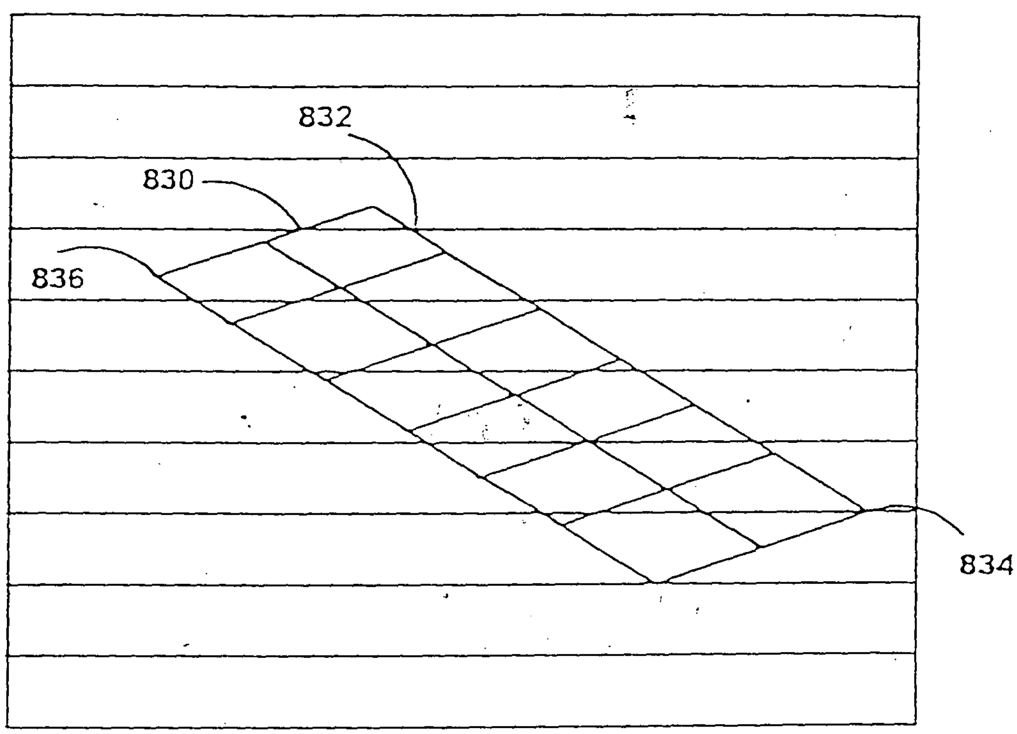

FIG. 26

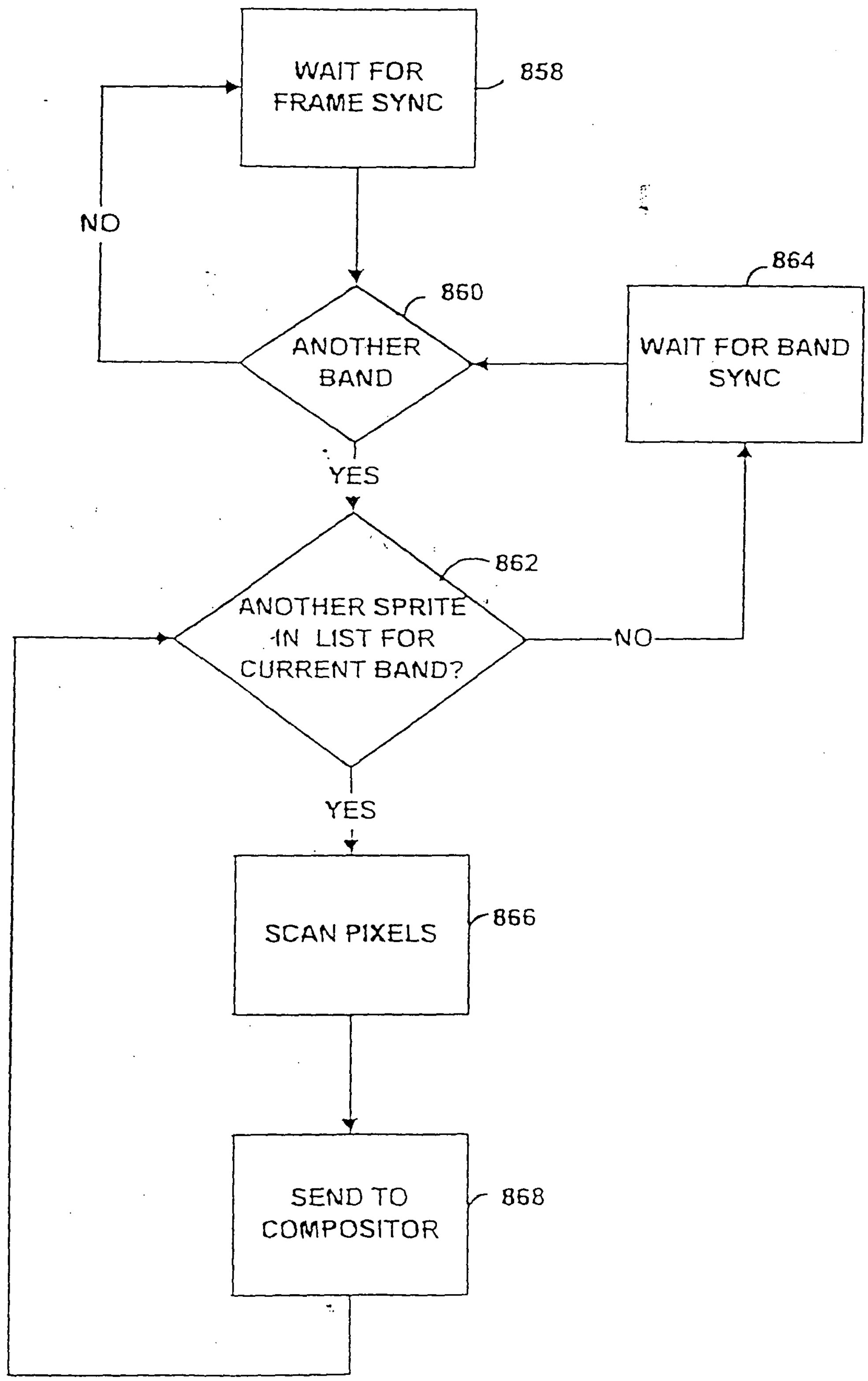
WAIT FOR FRAME SYNC
858
NO
860
ANOTHER BAND
864
WAIT FOR BAND SYNC
YES
862
ANOTHER SPRITE IN LIST FOR CURRENT BAND?
NO
YES
SCAN PIXELS
866
SEND TO COMPOSITOR
868

FIG. 27

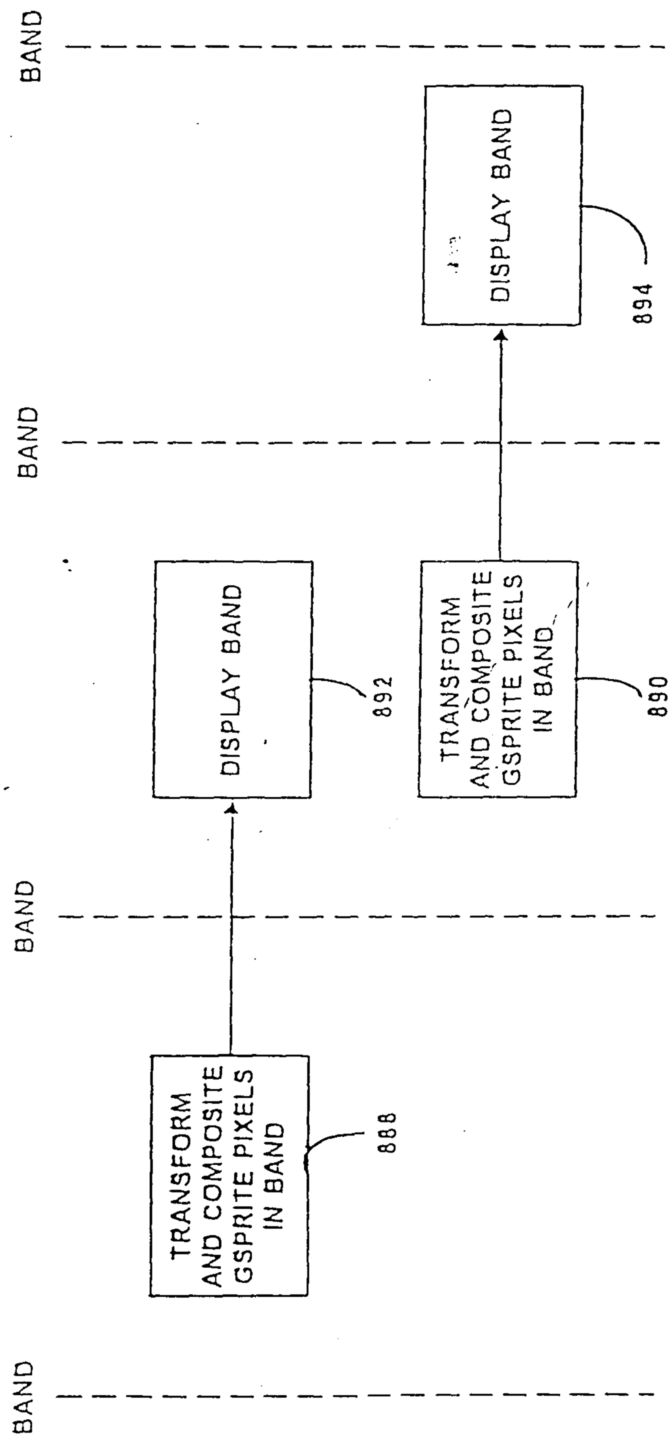
BAND
TRANSFORM AND COMPOSITE GSPRITE PIXELS IN BAND
888
BAND
DISPLAY BAND
892
TRANSFORM AND COMPOSITE GSPRITE PIXELS IN BAND
890
BAND
DISPLAY BAND
894
BAND

FIG. 28A

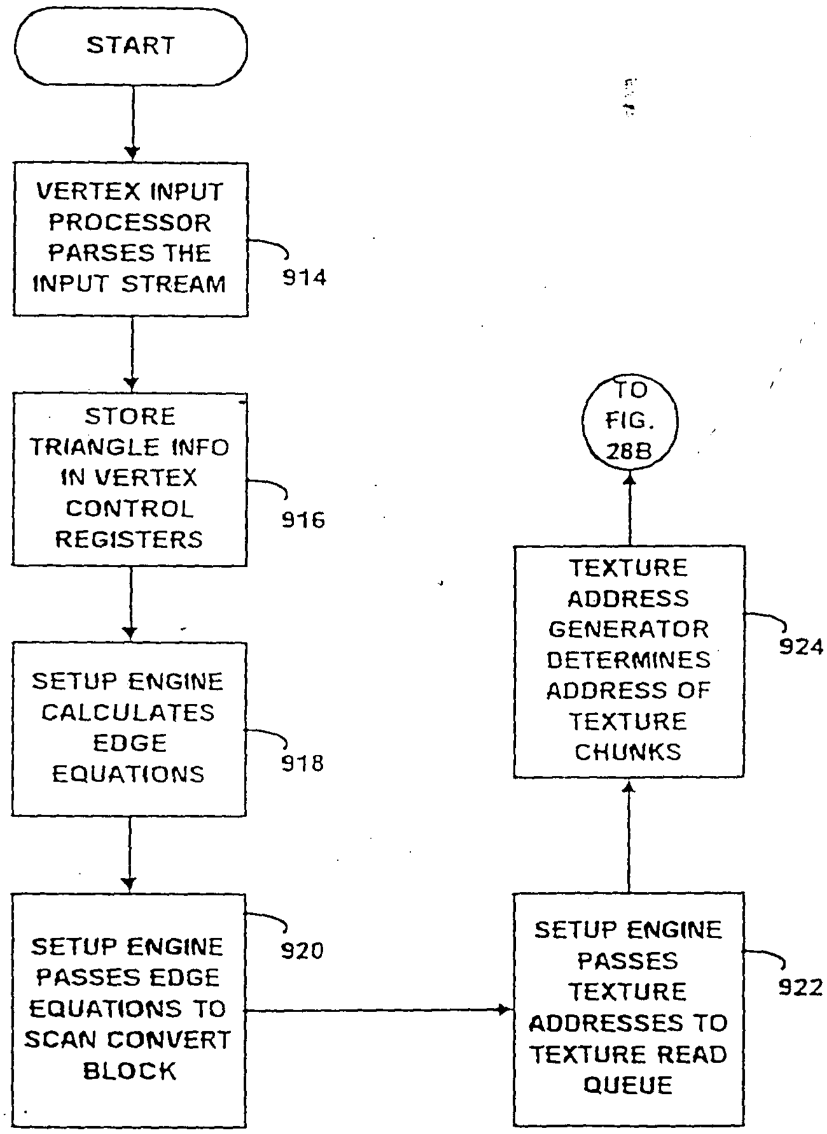
START
VERTEX INPUT PROCESSOR PARSES THE INPUT STREAM
914
STORE TRIANGLE INFO IN VERTEX CONTROL REGISTERS
916
SETUP ENGINE CALCULATES EDGE EQUATIONS
918
SETUP ENGINE PASSES EDGE EQUATIONS TO SCAN CONVERT BLOCK
920
SETUP ENGINE PASSES TEXTURE ADDRESSES TO TEXTURE READ QUEUE
922
TEXTURE ADDRESS GENERATOR DETERMINES ADDRESS OF TEXTURE CHUNKS
924
TO FIG. 28B

FIG. 28B

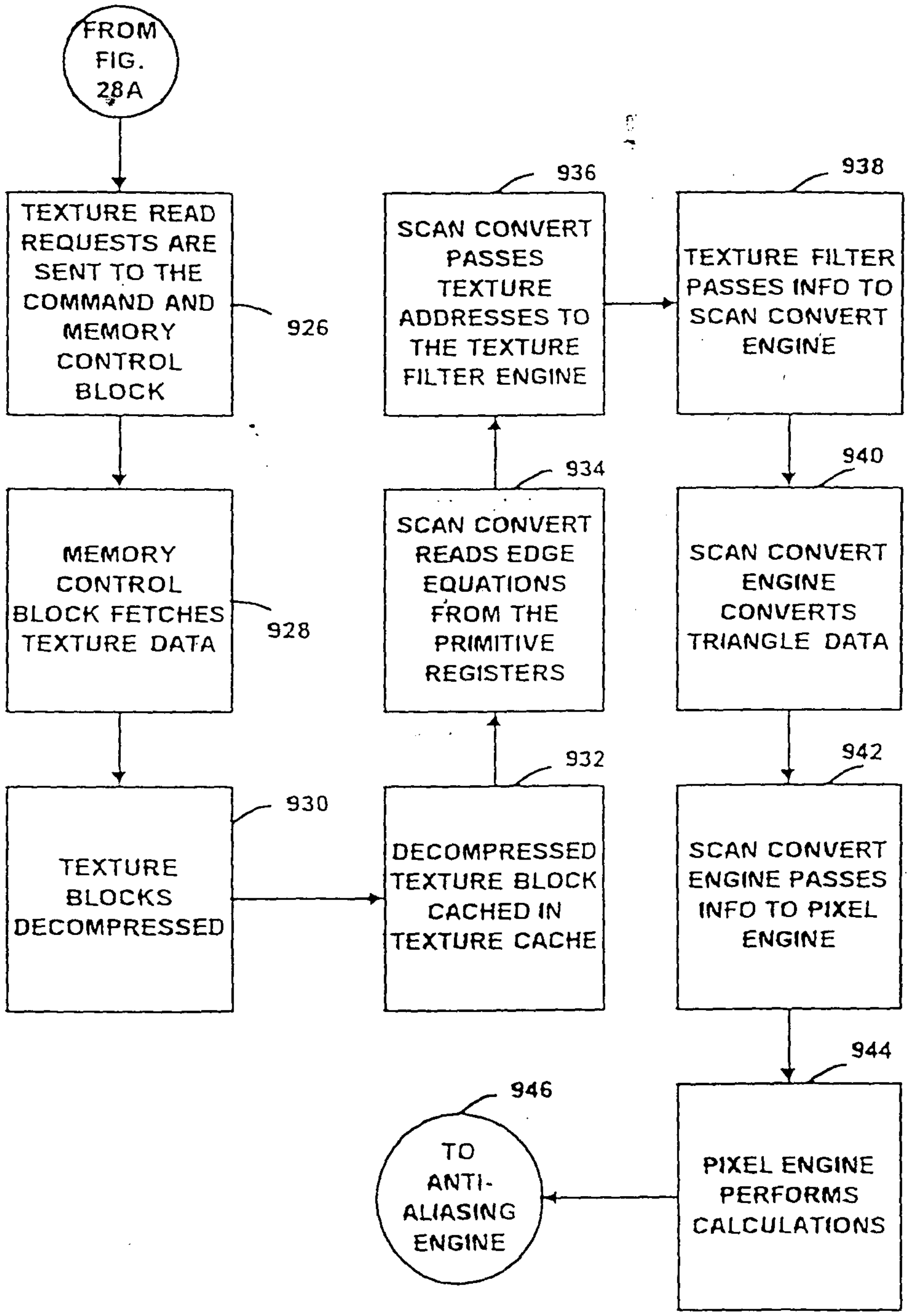
FROM FIG. 28A
TEXTURE READ REQUESTS ARE SENT TO THE COMMAND AND MEMORY CONTROL BLOCK
926
MEMORY CONTROL BLOCK FETCHES TEXTURE DATA
928
TEXTURE BLOCKS DECOMPRESSED
930
DECOMPRESSED TEXTURE BLOCK CACHED IN TEXTURE CACHE
932
SCAN CONVERT READS EDGE EQUATIONS FROM THE PRIMITIVE REGISTERS
934
SCAN CONVERT PASSES TEXTURE ADDRESSES TO THE TEXTURE FILTER ENGINE
936
TEXTURE FILTER PASSES INFO TO SCAN CONVERT ENGINE
938
SCAN CONVERT ENGINE CONVERTS TRIANGLE DATA
940
SCAN CONVERT ENGINE PASSES INFO TO PIXEL ENGINE
942
PIXEL ENGINE PERFORMS CALCULATIONS
944
TO ANTI-ALIASING ENGINE
946

FIG. 28C

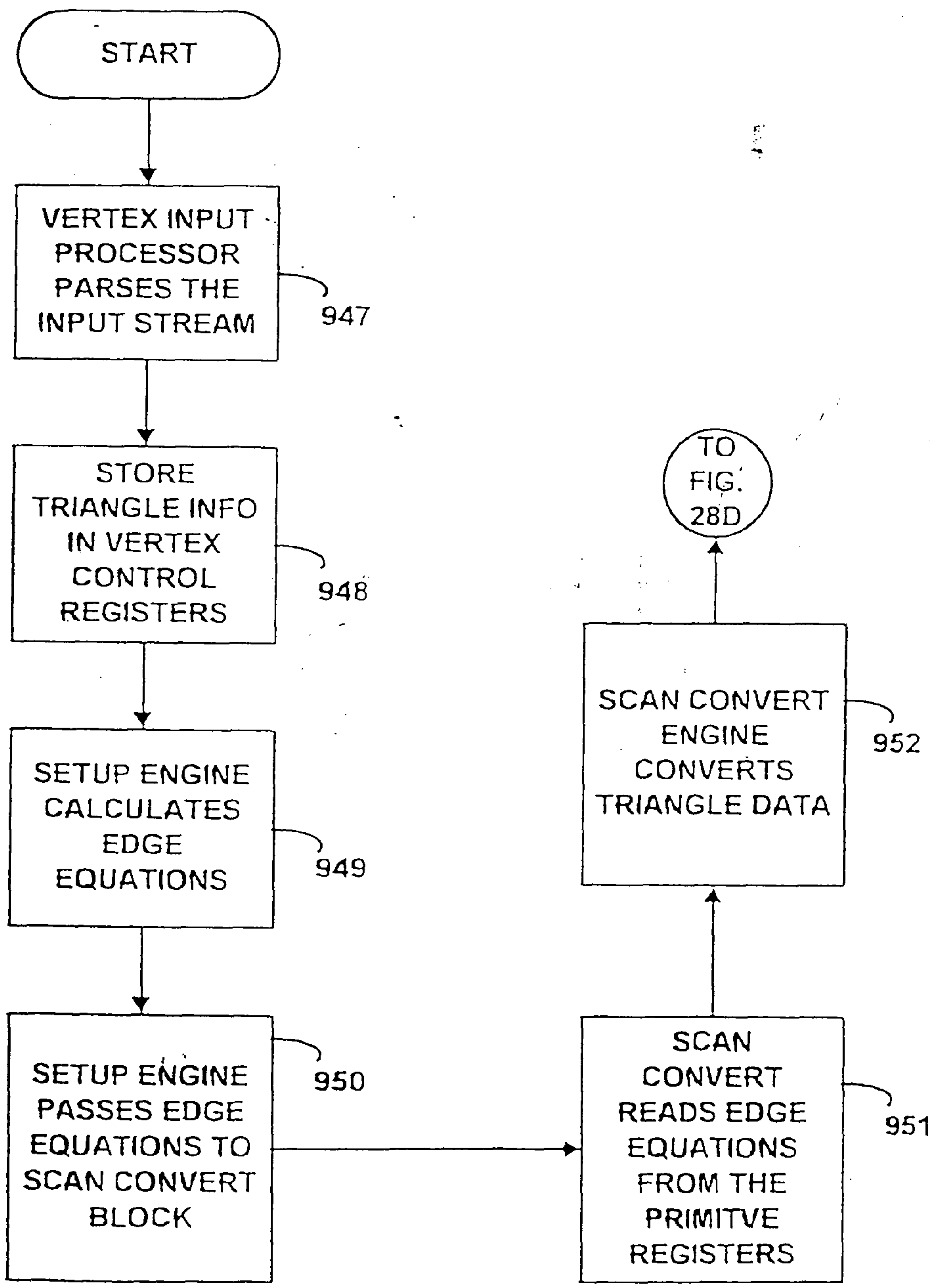
START
VERTEX INPUT PROCESSOR PARSES THE INPUT STREAM
947
STORE TRIANGLE INFO IN VERTEX CONTROL REGISTERS
948
SETUP ENGINE CALCULATES EDGE EQUATIONS
949
SETUP ENGINE PASSES EDGE EQUATIONS TO SCAN CONVERT BLOCK
950
SCAN CONVERT READS EDGE EQUATIONS FROM THE PRIMITVE REGISTERS
951
SCAN CONVERT ENGINE CONVERTS TRIANGLE DATA
952
TO FIG. 28D

FIG. 28D

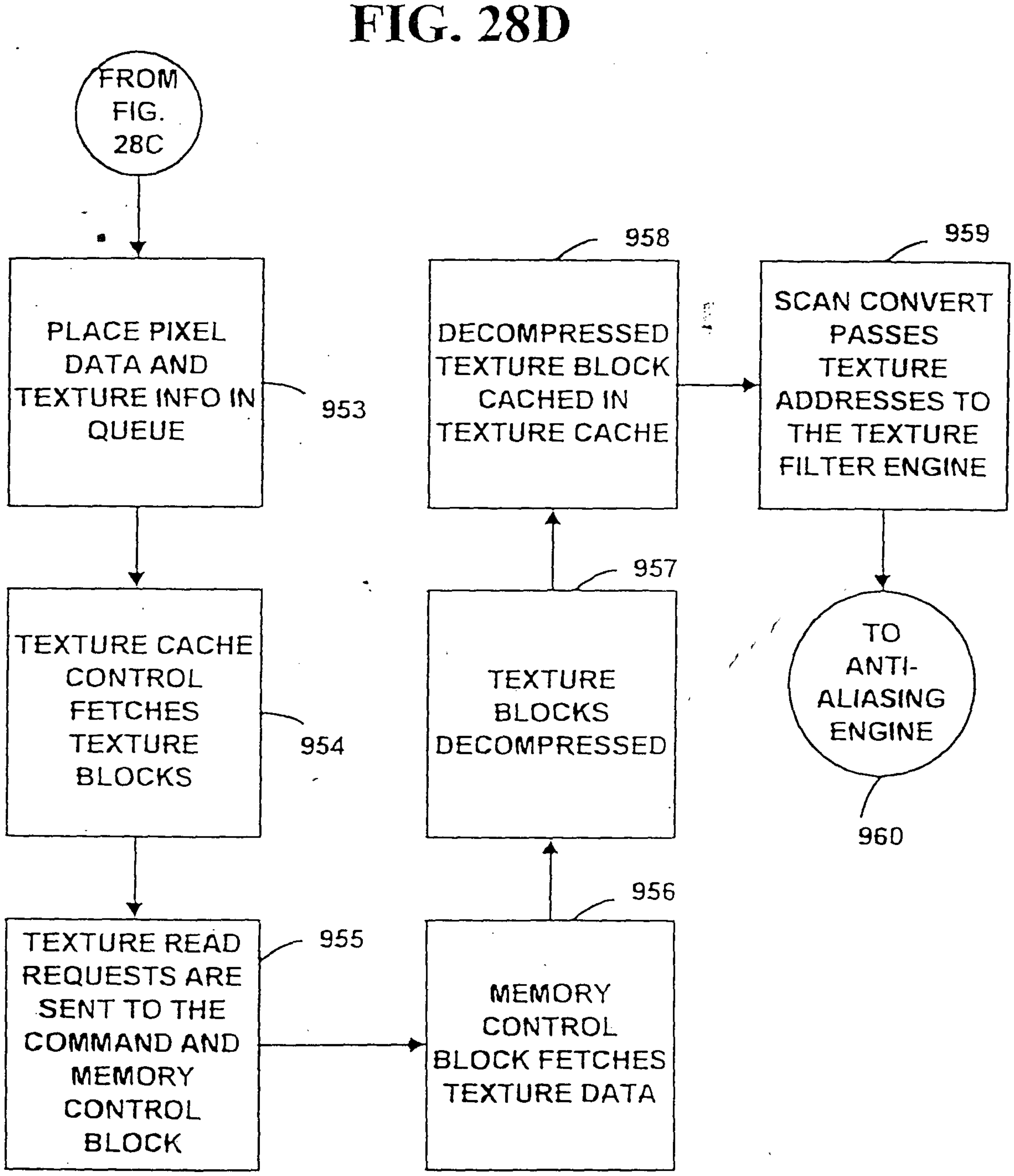
FROM FIG. 28C
PLACE PIXEL DATA AND TEXTURE INFO IN QUEUE
953
TEXTURE CACHE CONTROL FETCHES TEXTURE BLOCKS
954
TEXTURE READ REQUESTS ARE SENT TO THE COMMAND AND MEMORY CONTROL BLOCK
955
MEMORY CONTROL BLOCK FETCHES TEXTURE DATA
956
TEXTURE BLOCKS DECOMPRESSED
957
DECOMPRESSED TEXTURE BLOCK CACHED IN TEXTURE CACHE
958
SCAN CONVERT PASSES TEXTURE ADDRESSES TO THE TEXTURE FILTER ENGINE
959
TO ANTI-ALIASING ENGINE
960

FIG. 28E

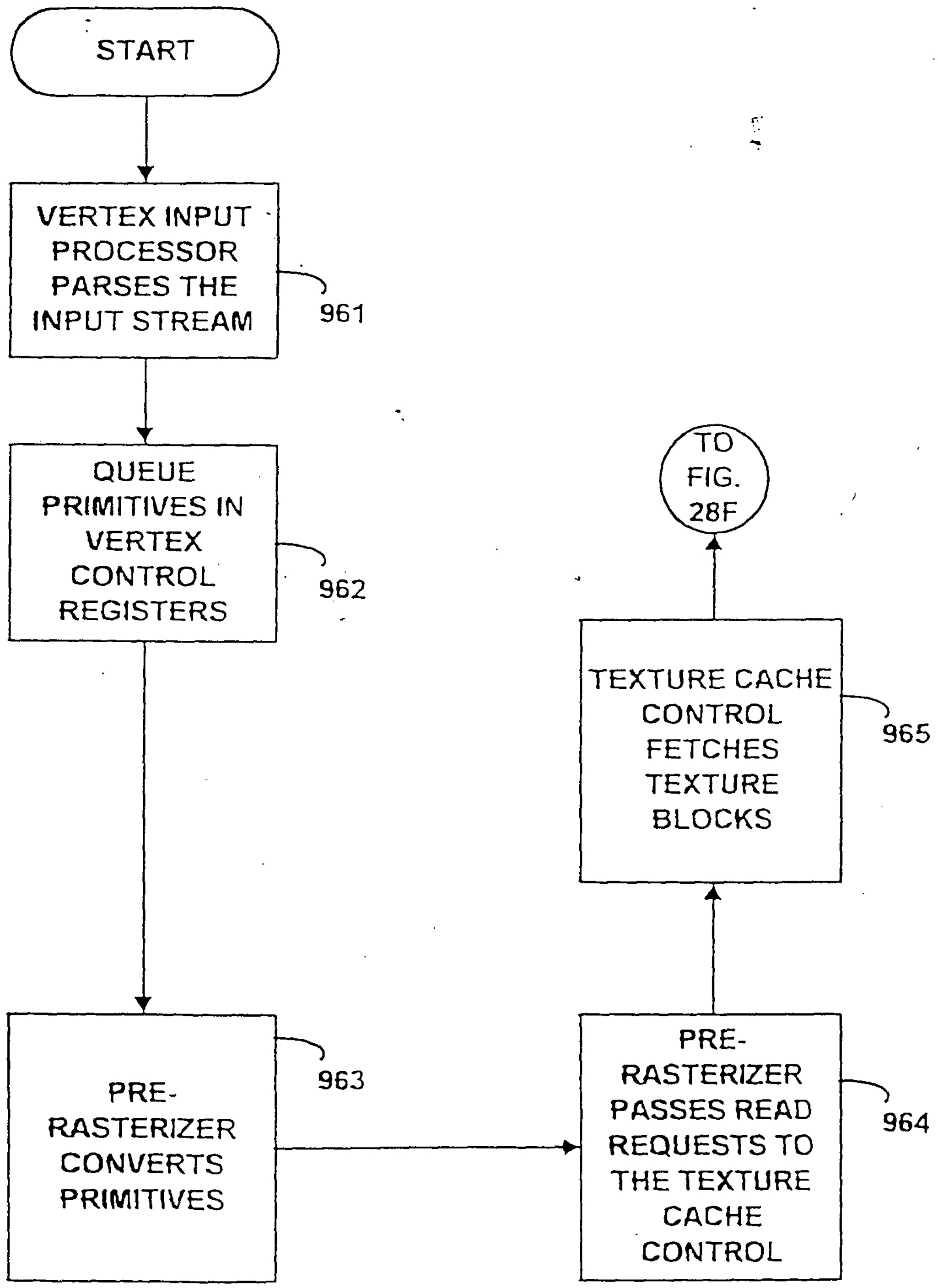
START
VERTEX INPUT PROCESSOR PARSES THE INPUT STREAM
961
QUEUE PRIMITIVES IN VERTEX CONTROL REGISTERS
962
PRE-RASTERIZER CONVERTS PRIMITIVES
963
PRE-RASTERIZER PASSES READ REQUESTS TO THE TEXTURE CACHE CONTROL
964
TEXTURE CACHE CONTROL FETCHES TEXTURE BLOCKS
965
TO FIG. 28F

FIG. 28F

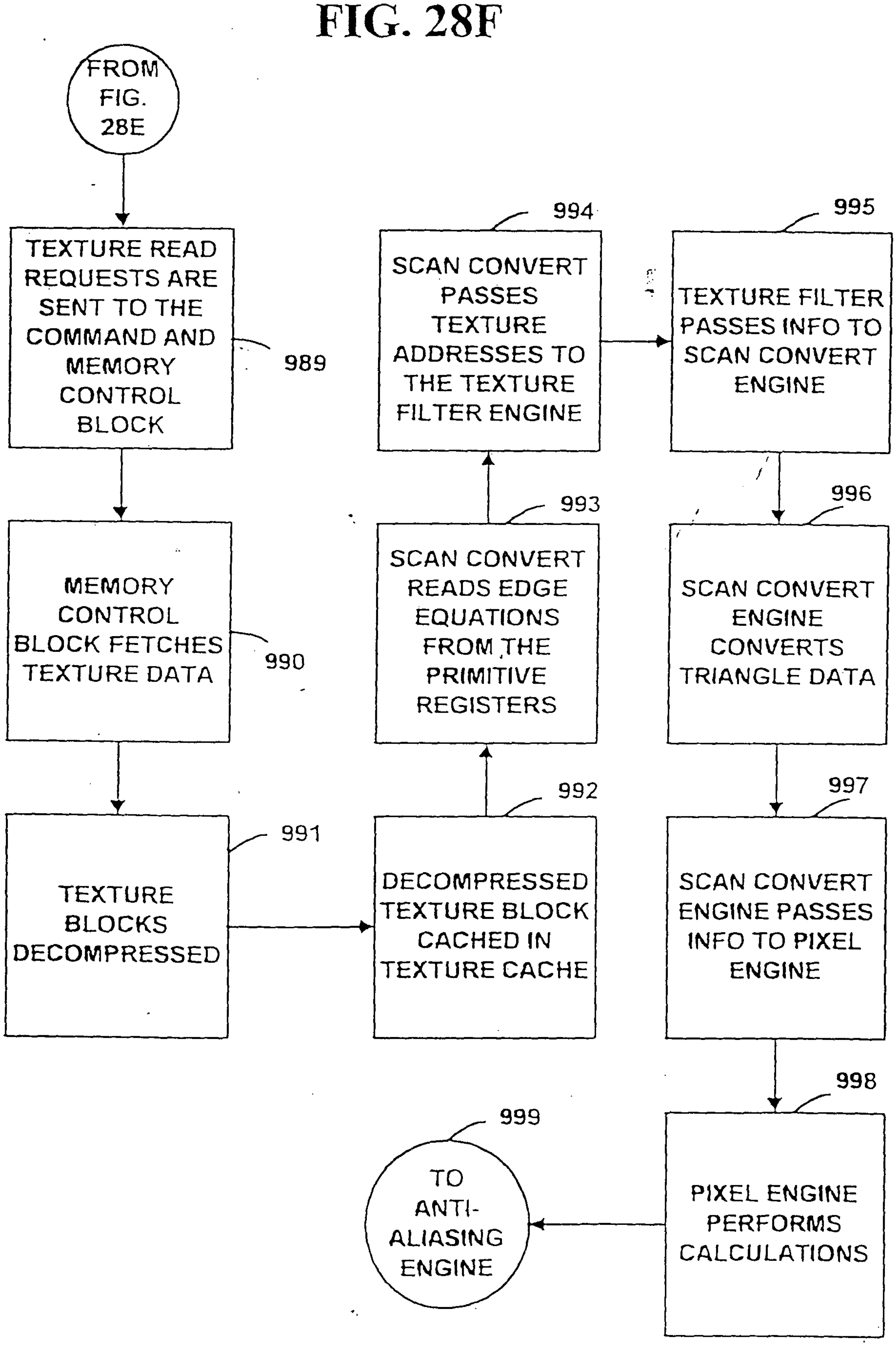
FROM FIG. 28E
TEXTURE READ REQUESTS ARE SENT TO THE COMMAND AND MEMORY CONTROL BLOCK
989
MEMORY CONTROL BLOCK FETCHES TEXTURE DATA
990
TEXTURE BLOCKS DECOMPRESSED
991
DECOMPRESSED TEXTURE BLOCK CACHED IN TEXTURE CACHE
992
SCAN CONVERT READS EDGE EQUATIONS FROM THE PRIMITIVE REGISTERS
993
SCAN CONVERT PASSES TEXTURE ADDRESSES TO THE TEXTURE FILTER ENGINE
994
TEXTURE FILTER PASSES INFO TO SCAN CONVERT ENGINE
995
SCAN CONVERT ENGINE CONVERTS TRIANGLE DATA
996
SCAN CONVERT ENGINE PASSES INFO TO PIXEL ENGINE
997
PIXEL ENGINE PERFORMS CALCULATIONS
998
TO ANTI-ALIASING ENGINE
999

FIG. 29

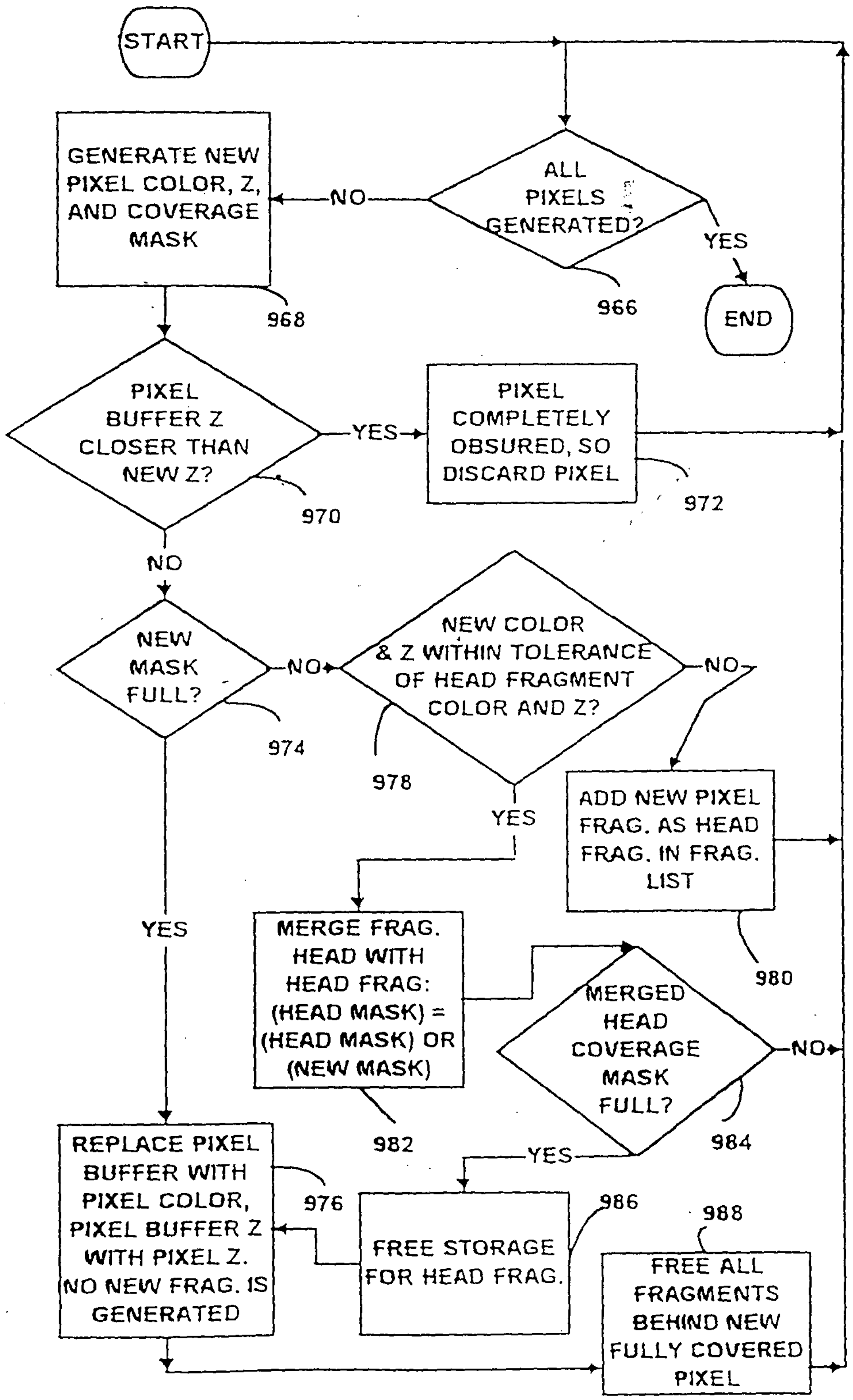
START
ALL PIXELS GENERATED?
NO
YES
END
966
GENERATE NEW PIXEL COLOR, Z, AND COVERAGE MASK
968
PIXEL BUFFER Z CLOSER THAN NEW Z?
970
YES
PIXEL COMPLETELY OBSURED, SO DISCARD PIXEL
972
NO
NEW MASK FULL?
974
NO
NEW COLOR & Z WITHIN TOLERANCE OF HEAD FRAGMENT COLOR AND Z?
978
NO
ADD NEW PIXEL FRAG. AS HEAD FRAG. IN FRAG. LIST
980
YES
MERGE FRAG. HEAD WITH HEAD FRAG: (HEAD MASK) = (HEAD MASK) OR (NEW MASK)
982
MERGED HEAD COVERAGE MASK FULL?
984
NO
YES
YES
REPLACE PIXEL BUFFER WITH PIXEL COLOR, PIXEL BUFFER Z WITH PIXEL Z. NO NEW FRAG. IS GENERATED
976
FREE STORAGE FOR HEAD FRAG.
986
988
FREE ALL FRAGMENTS BEHIND NEW FULLY COVERED PIXEL

FIG. 30

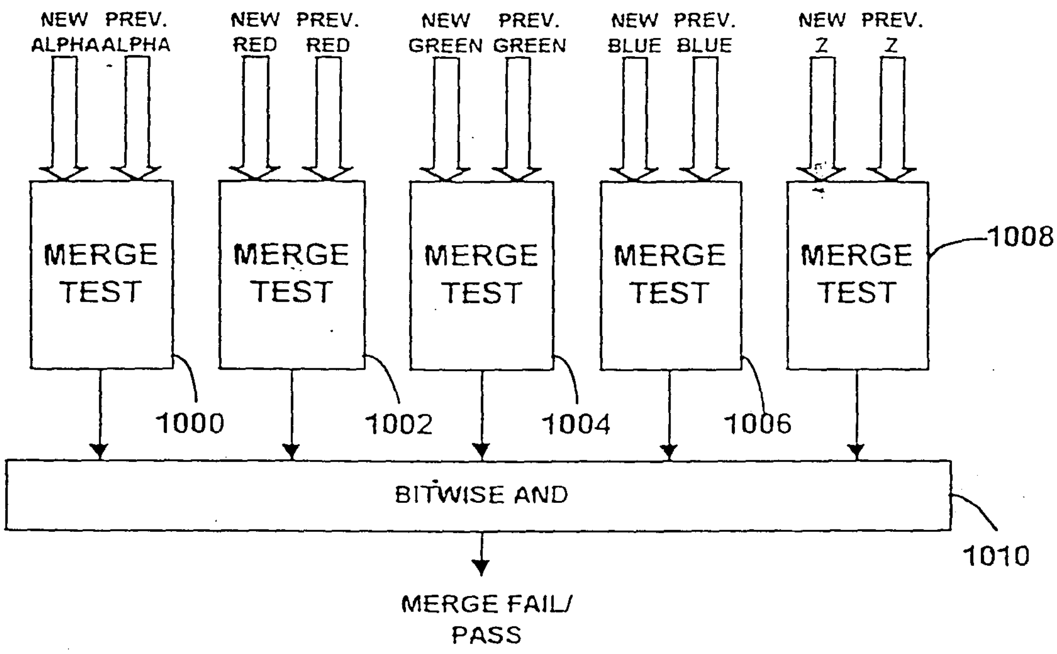
NEW ALPHA
PREV. ALPHA
NEW RED
PREV. RED
NEW GREEN
PREV. GREEN
NEW BLUE
PREV. BLUE
NEW Z
PREV. Z
MERGE TEST
MERGE TEST
MERGE TEST
MERGE TEST
MERGE TEST
1008
1000
1002
1004
1006
BITWISE AND
1010
MERGE FAIL/ PASS

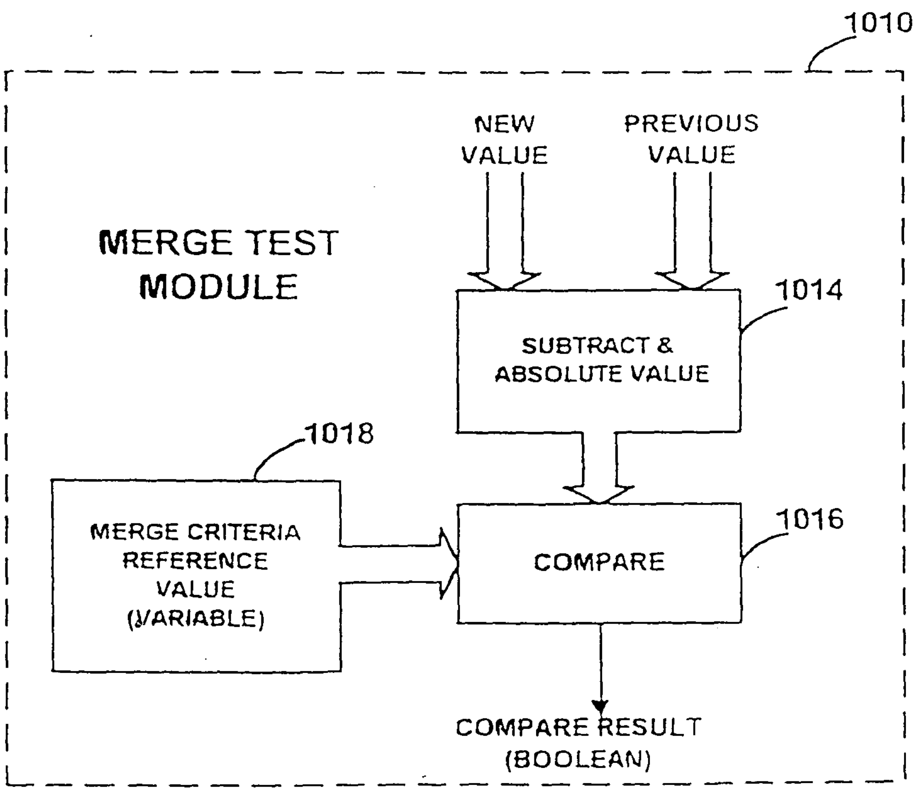
1010
NEW VALUE
PREVIOUS VALUE
MERGE TEST MODULE
1014
SUBTRACT & ABSOLUTE VALUE
1018
MERGE CRITERIA REFERENCE VALUE (VARIABLE)
1016
COMPARE
COMPARE RESULT (BOOLEAN)

FIG. 31

# FIG. 32

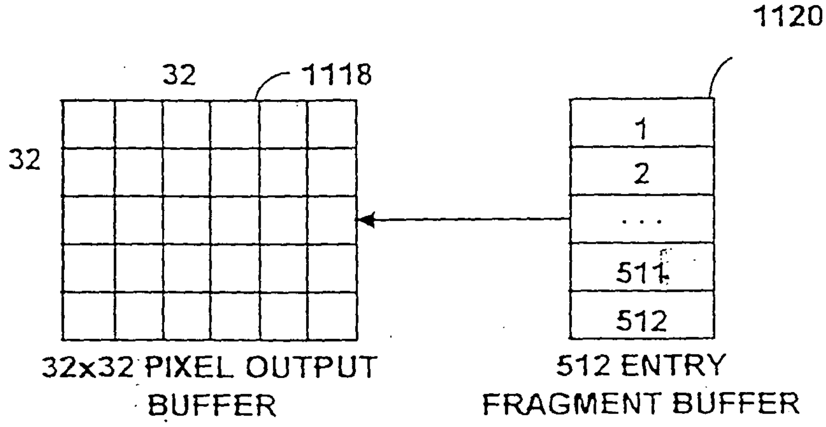
32
1118
32
1120
1
2
...
511
512
32x32 PIXEL OUTPUT BUFFER
512 ENTRY FRAGMENT BUFFER

# FIG. 33

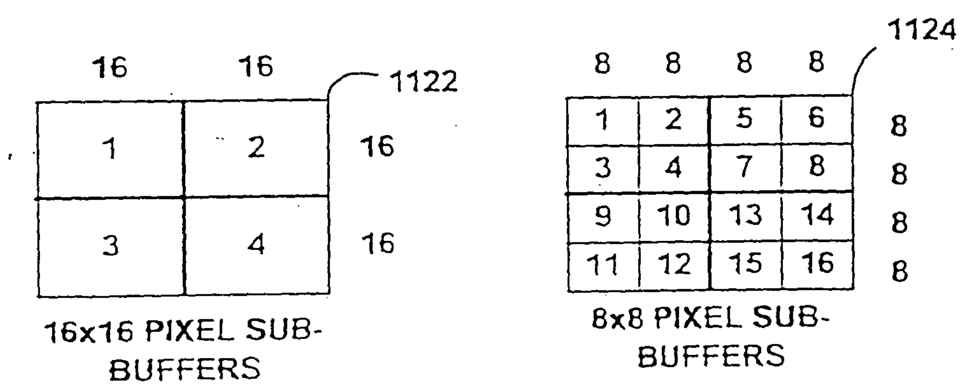
16
16
1122
1
2
16
3
4
16
16x16 PIXEL SUB-BUFFERS
1124
8 8 8 8
1 2 5 6
3 4 7 8
9 10 13 14
11 12 15 16
8
8
8
8
8x8 PIXEL SUB-BUFFERS

FIG. 34A

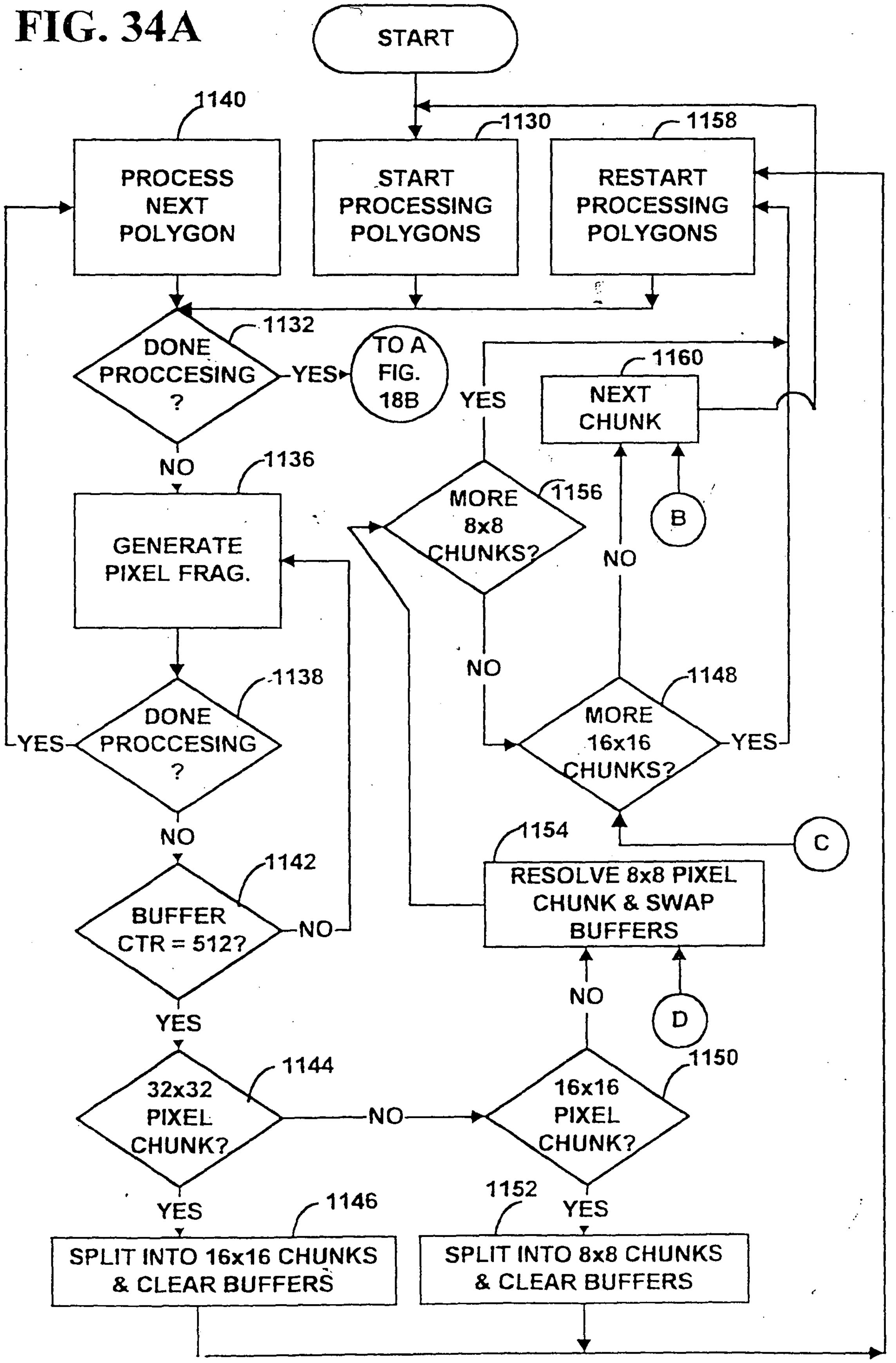
START
1130
START PROCESSING POLYGONS
1140
PROCESS NEXT POLYGON
1158
RESTART PROCESSING POLYGONS
1132
DONE PROCCESING ?
YES
TO A FIG. 18B
NO
1136
GENERATE PIXEL FRAG.
1138
DONE PROCCESING ?
YES
NO
1142
BUFFER CTR = 512?
NO
YES
1144
32x32 PIXEL CHUNK?
NO
YES
1146
SPLIT INTO 16x16 CHUNKS & CLEAR BUFFERS
1150
16x16 PIXEL CHUNK?
YES
NO
1152
SPLIT INTO 8x8 CHUNKS & CLEAR BUFFERS
1154
RESOLVE 8x8 PIXEL CHUNK & SWAP BUFFERS
D
C
1148
MORE 16x16 CHUNKS?
YES
NO
1156
MORE 8x8 CHUNKS?
YES
NO
1160
NEXT CHUNK
B

FIG. 34B

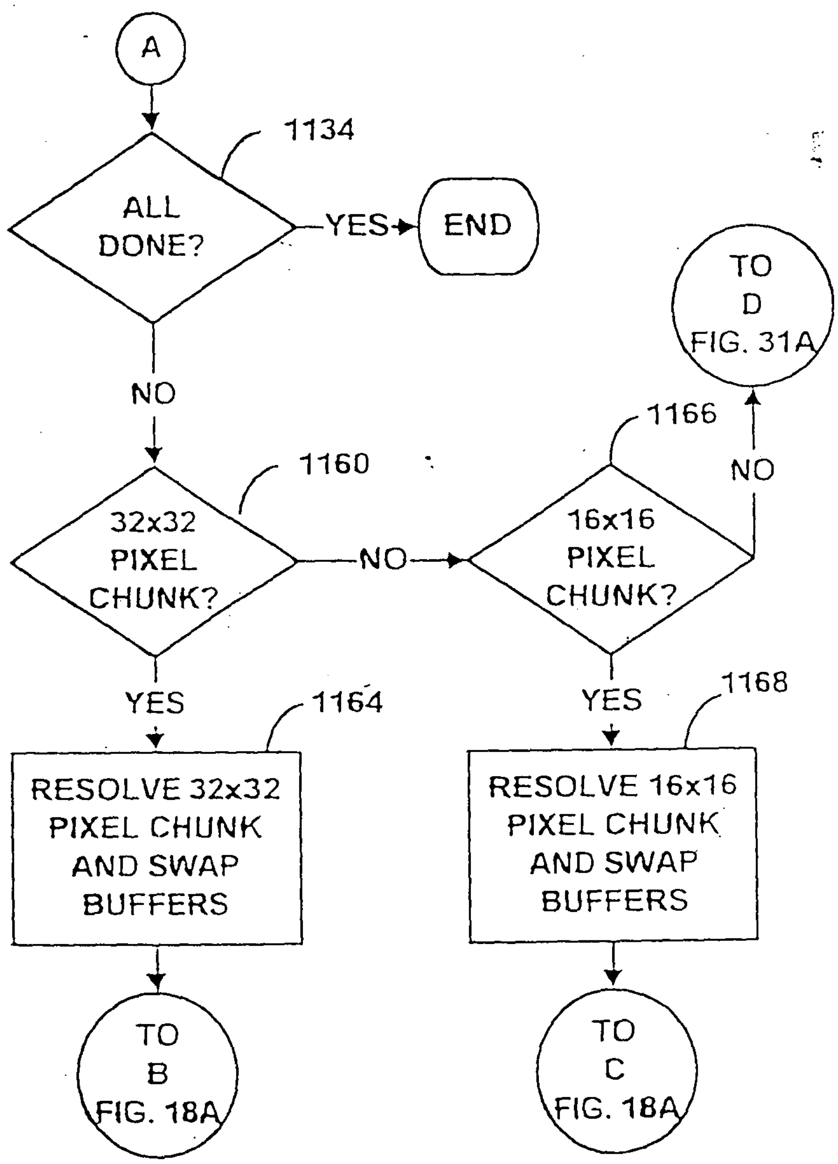
A
1134
ALL DONE?
YES
END
NO
1160
32x32 PIXEL CHUNK?
NO
1166
16x16 PIXEL CHUNK?
NO
TO D FIG. 31A
YES
1164
RESOLVE 32x32 PIXEL CHUNK AND SWAP BUFFERS
YES
1168
RESOLVE 16x16 PIXEL CHUNK AND SWAP BUFFERS
TO B FIG. 18A
TO C FIG. 18A

FIG. 35

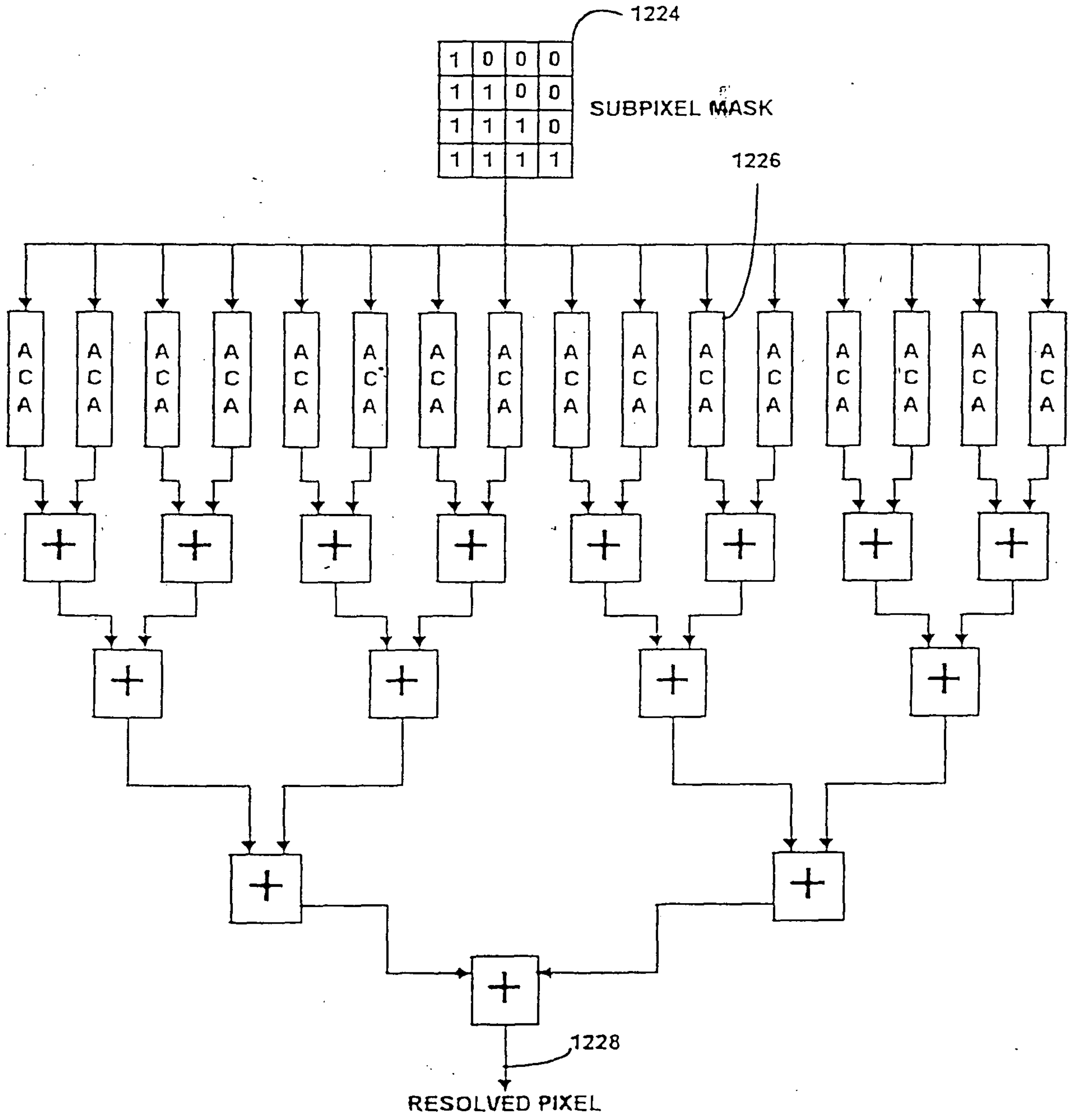
1224
1 0 0 0
1 1 0 0
1 1 1 0
1 1 1 1
SUBPIXEL MASK
1226
ACA
+
1228
RESOLVED PIXEL

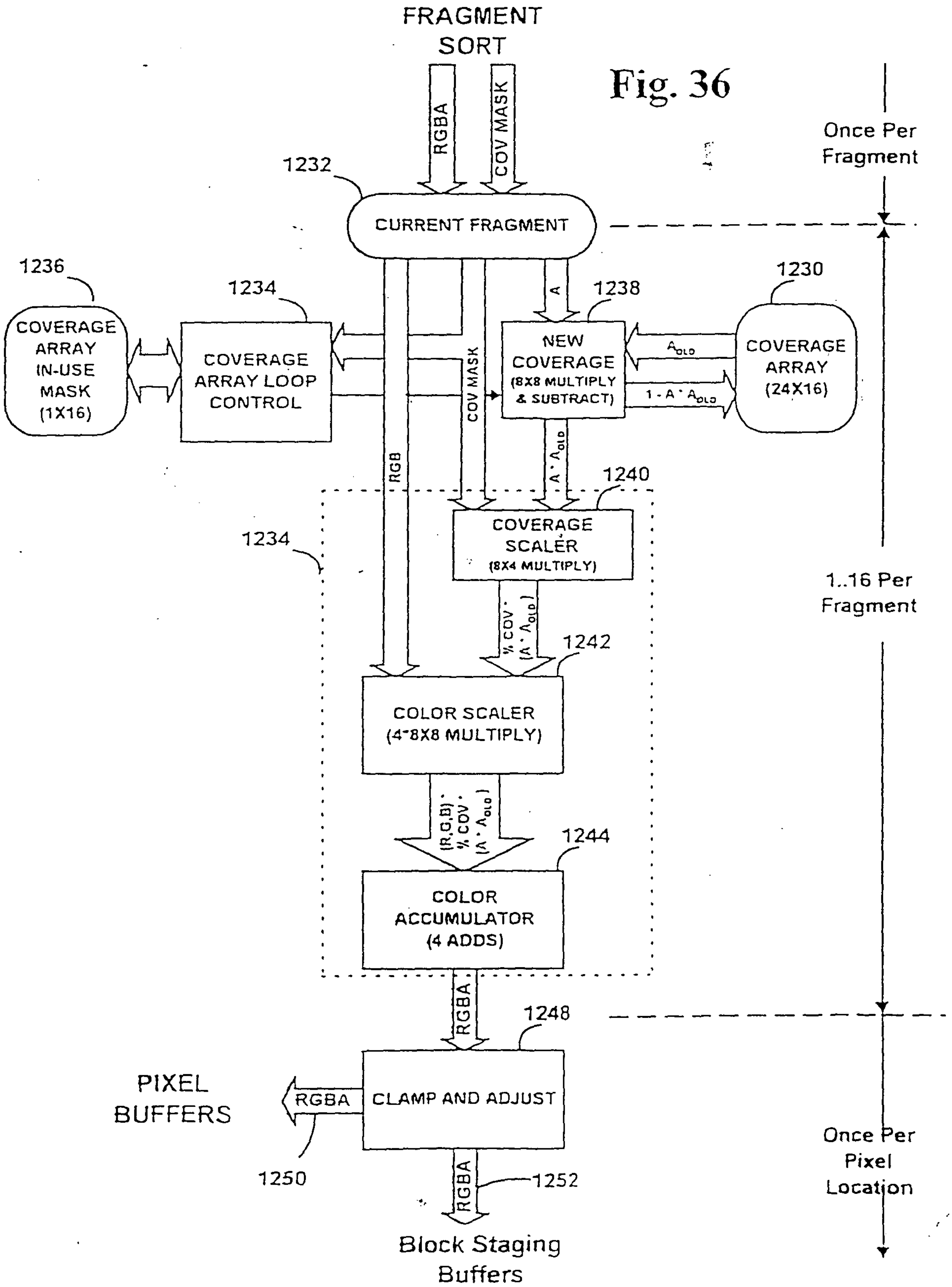
FRAGMENT SORT
RGBA
COV MASK
Fig. 36
Once Per Fragment
1232
CURRENT FRAGMENT
1236
COVERAGE ARRAY IN-USE MASK (1X16)
1234
COVERAGE ARRAY LOOP CONTROL
A
1238
NEW COVERAGE (8X8 MULTIPLY & SUBTRACT)
1230
COVERAGE ARRAY (24X16)
A_OLD
1 - A * A_OLD
COV MASK
RGB
A * A_OLD
1240
COVERAGE SCALER (8X4 MULTIPLY)
1234
1..16 Per Fragment
% COV * (A * A_OLD)
1242
COLOR SCALER (4*8X8 MULTIPLY)
(R,G,B) * % COV * (A * A_OLD)
1244
COLOR ACCUMULATOR (4 ADDS)
RGBA
1248
PIXEL BUFFERS
RGBA
CLAMP AND ADJUST
1250
RGBA
1252
Once Per Pixel Location
Block Staging Buffers

FIG. 37

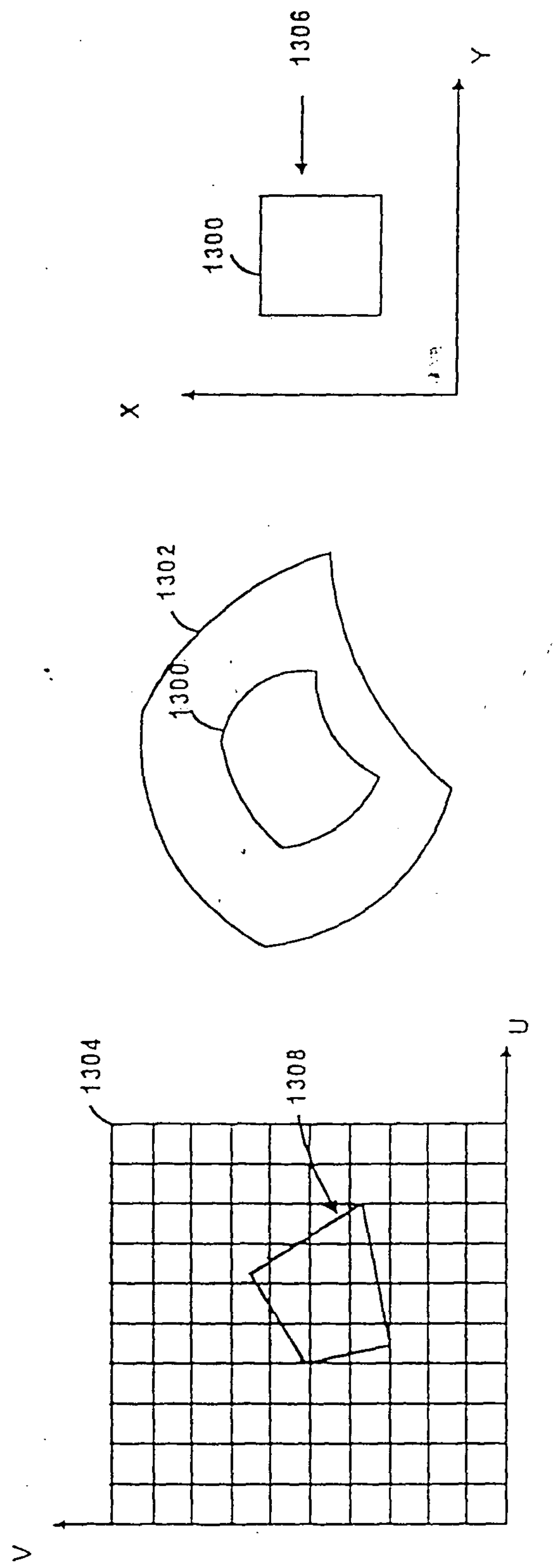

# FIG. 38

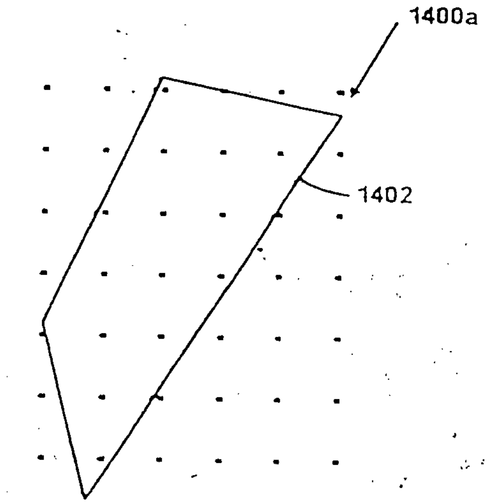


FIG. 38A

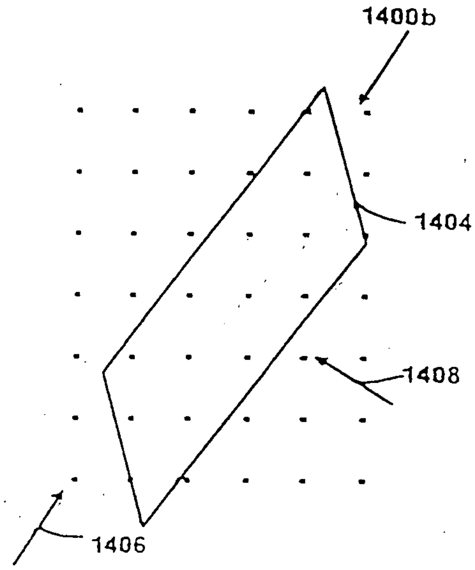


FIG. 38B

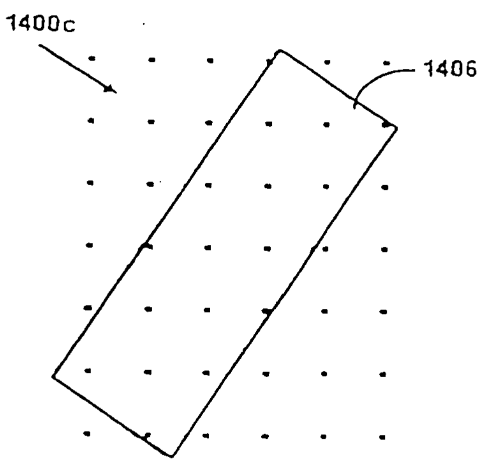


FIG. 38C

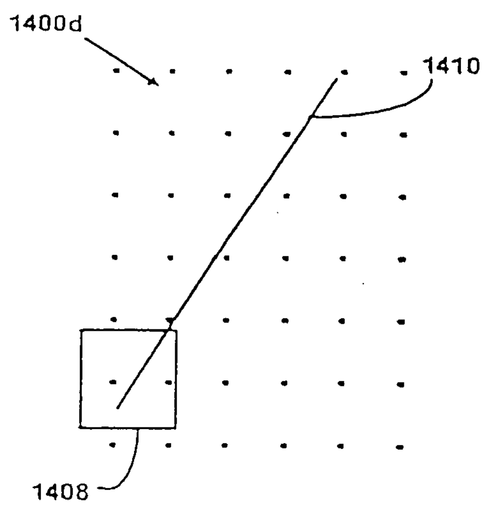


FIG. 38D

FIG. 39

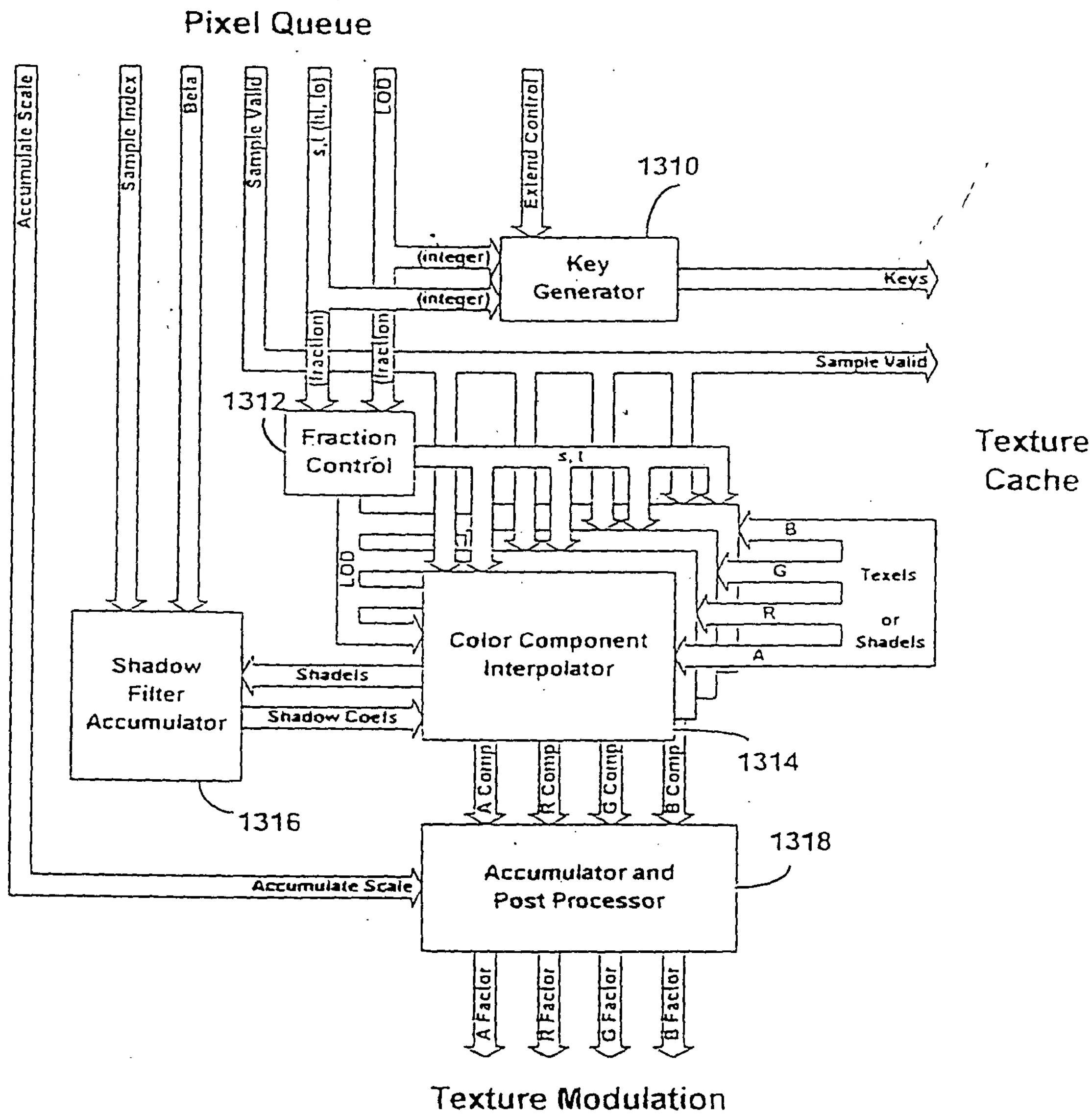
Pixel Queue
Accumulate Scale
Sample Index
Beta
Sample Valid
s, t (hi, lo)
LOD
Extend Control
1310
(integer)
(integer)
Key Generator
Keys
(fraction)
(fraction)
Sample Valid
1312
Fraction Control
s, t
Texture Cache
LOD
B
G
R
A
Texels or Shadels
Color Component Interpolator
Shadels
Shadow Coefs
Shadow Filter Accumulator
1314
1316
A Comp
R Comp
G Comp
B Comp
1318
Accumulator and Post Processor
Accumulate Scale
A Factor
R Factor
G Factor
B Factor
Texture Modulation

FIG. 40

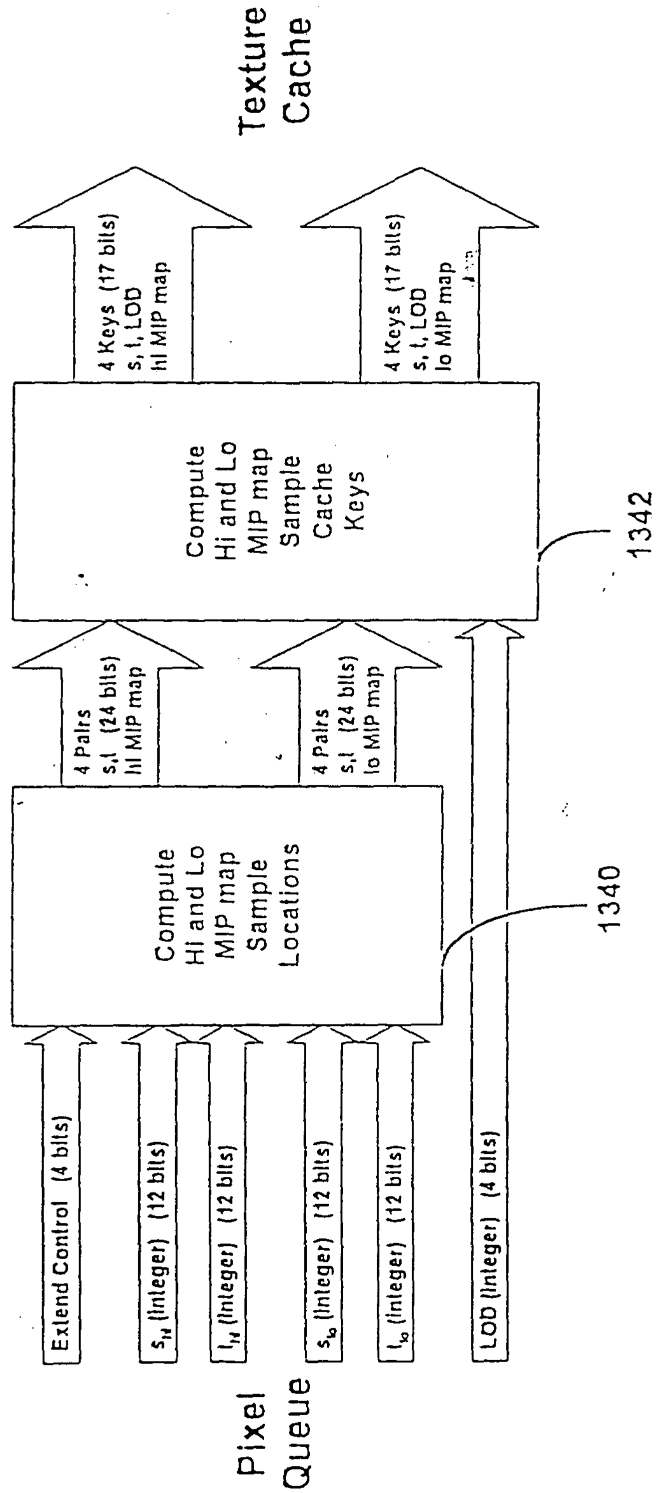
Pixel Queue
Extend Control (4 bits)
$s_{hi}$ (Integer) (12 bits)
$t_{hi}$ (Integer) (12 bits)
$s_{lo}$ (Integer) (12 bits)
$t_{lo}$ (Integer) (12 bits)
LOD (Integer) (4 bits)
Compute Hi and Lo MIP map Sample Locations
1340
4 Pairs s,t (24 bits) hi MIP map
4 Pairs s,t (24 bits) lo MIP map
Compute Hi and Lo MIP map Sample Cache Keys
1342
4 Keys (17 bits) s, t, LOD hi MIP map
4 Keys (17 bits) s, t, LOD lo MIP map
Texture Cache

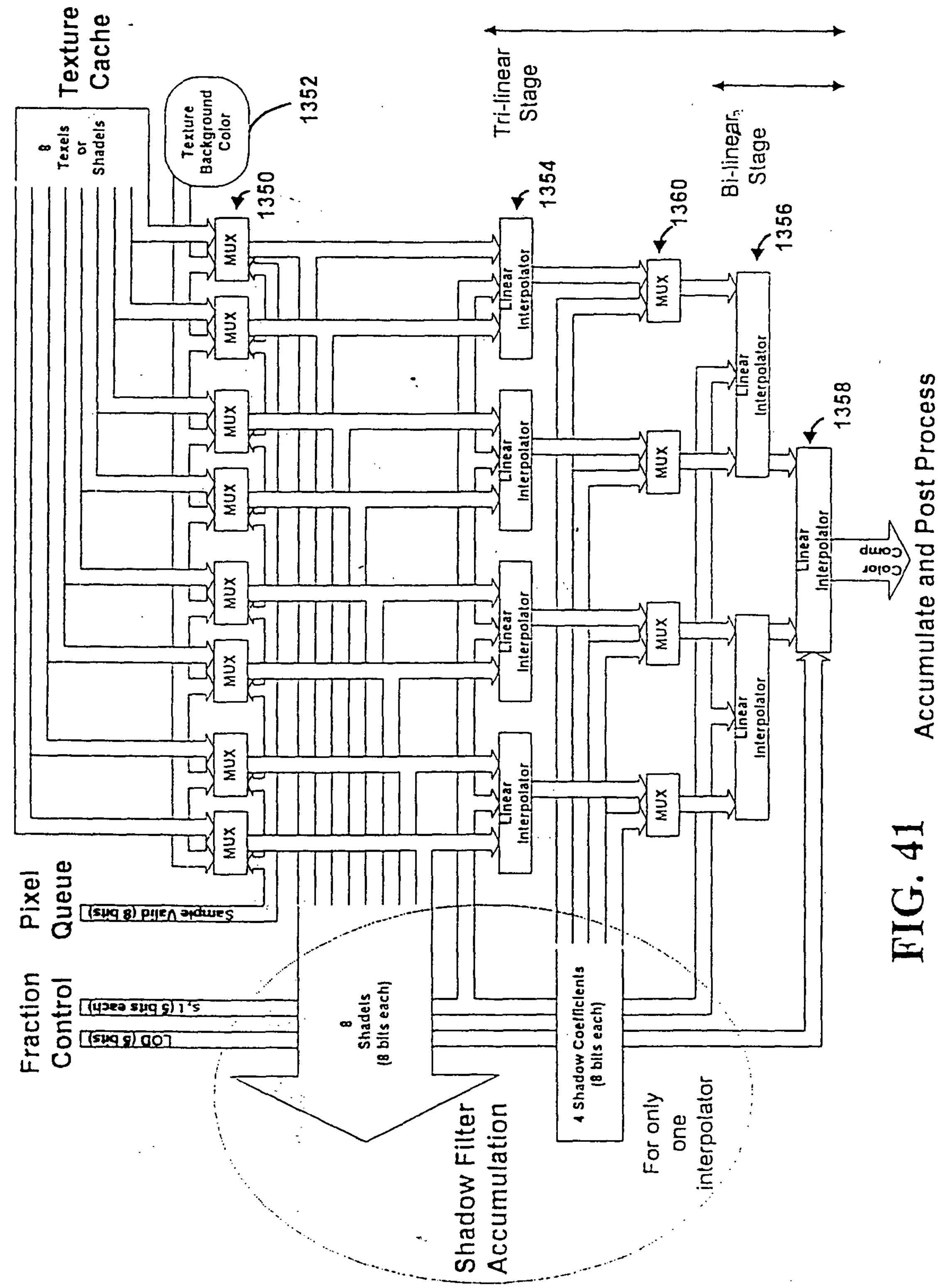
Texture Cache
8 Texels or Shadels
Texture Background Color
1352
1350
1354
1360
1356
1358
MUX
Linear Interpolator
Tri-linear Stage
Bi-linear Stage
Color Comp
Accumulate and Post Process
Pixel Queue
Sample Valid (8 bits)
Fraction Control
s,t (5 bits each)
LOD (5 bits)
8 Shadels (8 bits each)
4 Shadow Coefficients (8 bits each)
For only one interpolator
Shadow Filter Accumulation

FIG. 41

# FIG. 42

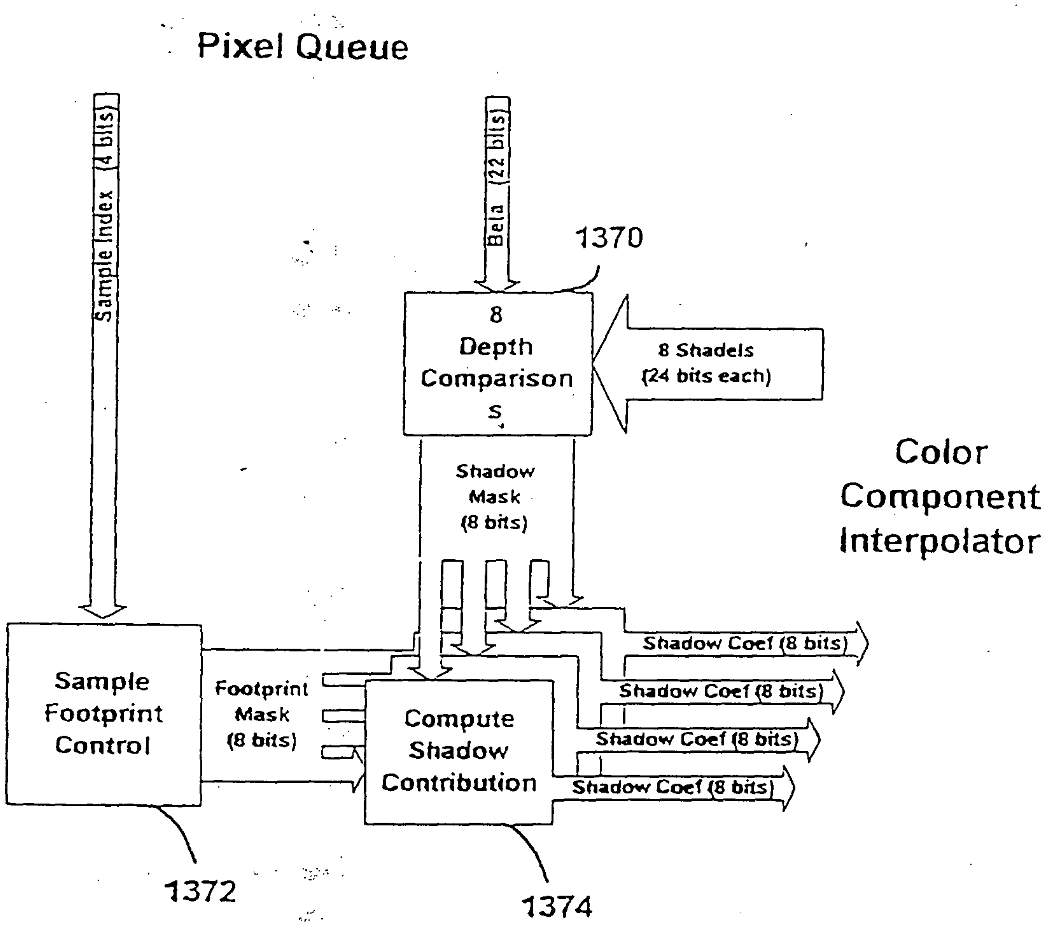
Pixel Queue
Sample Index (4 bits)
Beta (22 bits)
1370
8 Depth Comparisons
8 Shadels (24 bits each)
Color Component Interpolator
Shadow Mask (8 bits)
Sample Footprint Control
Footprint Mask (8 bits)
Compute Shadow Contribution
Shadow Coef (8 bits)
Shadow Coef (8 bits)
Shadow Coef (8 bits)
Shadow Coef (8 bits)
1372
1374

FIG. 43

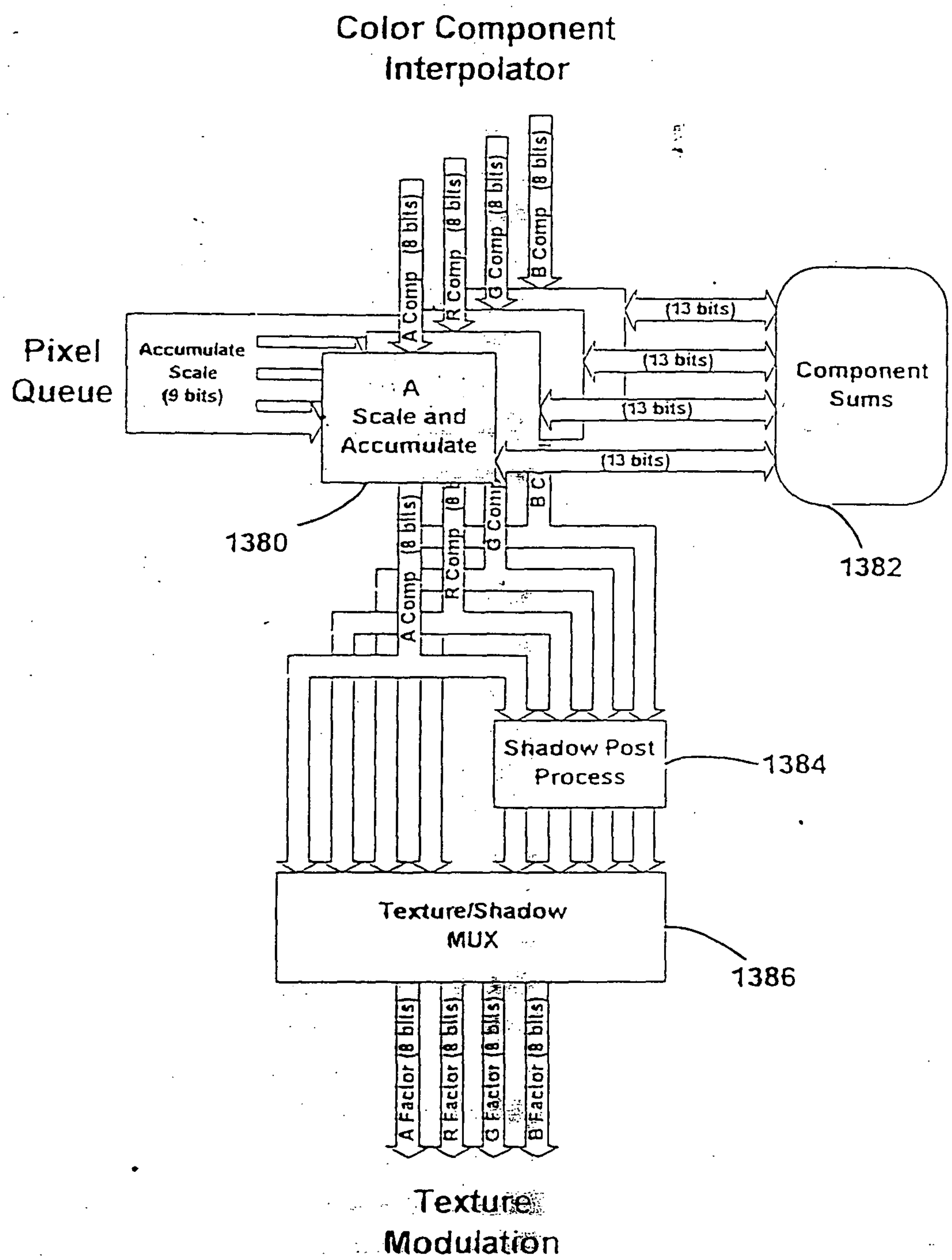
Color Component
Interpolator
A Comp (8 bits)
R Comp (8 bits)
G Comp (8 bits)
B Comp (8 bits)
Pixel
Queue
Accumulate
Scale
(9 bits)
A
Scale and
Accumulate
(13 bits)
(13 bits)
(13 bits)
(13 bits)
Component
Sums
1380
1382
Shadow Post
Process
1384
Texture/Shadow
MUX
1386
A Factor (8 bits)
R Factor (8 bits)
G Factor (8 bits)
B Factor (8 bits)
Texture
Modulation